# EUROPEAN PATENT APPLICATION

(11) **EP 1 603 035 A2**
(43) Date of publication of application: **07.12.2005**
(21) Application number: 05253441.9
(22) Date of filing: 03.06.2005
(51) Int. Cl.: G06F 9/44

(54) **Methods and apparatus for visual application design**

(30) Priority: 03.06.2004 US 576882 P; 28.04.2005 US 676086 P
(71) Applicant: MDL Information Systems, Inc., San Leandro, CA 94577 (US)
(72) Inventor: Olson, John Bernhard, San Leandro, CA 94577 (US); Thomas, Wilhelm, Alameda, CA 94501 (US)
(74) Representative: Dunlop, Hugh Christopher

(57) **Abstract**

A preferred embodiment comprises a visual language configured to utilize the infrastructure of a mainstream platform and take advantage of effects associated with a large network of users and component providers. In various aspects, systems and methods of the present invention enable translation of the primitives of a modem object-oriented language into a visual form and provide component composition facilities through a graphic interface.

A preferred language is based on Microsoft's .NET platform, permits dataflow and event connections between.NET objects, and enables integration of a variety of disparate components such as query systems, browsers, and web services. Various aspects include the use of reflection to discover and expose object members, the use of the .NET type system to constrain and guide users' choices, and propagation algorithms that use heuristics to make the system conform to users' expectations.

## Description

### CROSS-REFERENCE TO RELATED APPLICATIONS

This application claims the benefit of U.S. Provisional Application No. 60/576,882, filed June 3, 2004 and U.S. Provisional Application No. 60/676,086, filed April 28, 2005. The entire contents of the above applications are incorporated herein by reference.

### FIELD

This invention relates to the fields of form creation and programming, and database querying and browsing.

### BACKGROUND

Programming languages, if they are to go beyond the stage of research prototype, need a large community of developers to sustain their growth. Languages with small communities tend to wither. This is especially true in the modem context where languages must interconnect with a rapidly-changing landscape of other technologies. Visual languages, which tend to be aimed at small domain-specific audiences, have had a hard time achieving the critical mass necessary to become mainstream tools. Unless they find a suffciently large niche to fill they remain curiosities. Further, currently available client applications are not typically usable for simple data and workflows as well as for complex workflows and/or unique data types.

### SUMMARY

One aspect of the present invention is directed to solving the above adoption problem. Additionally, another aspect of the present invention is directed to providing users with the ability to customize a running application by dropping in any component or class and wiring the methods, properties and events of that component into the running application using visual wiring. Additionally, the present invention is directed to providing XML definitions for the user interfaces and the underlying logic. Additionally, the present invention is directed at providing a mechanism for allowing forms within an application to alter both the look and behavior of the hosting application whenever they are in view. Additionally, the present invention is directed at providing a new paradigm for interacting with a history of queries and the results of those queries.

A preferred embodiment comprises a visual language configured to utilize the infrastructure of a mainstream platform and take advantage of economic effects associated with a large network of users and component providers. In various aspects, systems and methods of the present invention enable translation of the primitives of a modem object-oriented language into a visual form and provide component composition facilities through a graphic interface.

A preferred language is based on Microsoft's . NET platform, permits dataflow and event connections between.NET objects, and enables integration of a variety of disparate components such as query systems, browsers, and web services. Various aspects include the use of reflection to discover and expose object members, the use of the .NET type system to constrain and guide users' choices, and propagation algorithms that use heuristics to make the system conform to users' expectations. A preferred visual language is part of Visual Dataflow Language Base ("VDL Base" or "Base"). VDL Base can be implemented to assist in pharmaceutical drug discovery.

In one embodiment, the present invention provides a visual wiring language allowing forms and applications to be customized while they are still running. In another embodiment, the present systems and methods can automatically create "references" to any "part" (component) in the hierarchy of components that constitutes the running application. These references can be added to a form to provide an affordance for wiring the "part" being referenced to the rest of the form. As will be recognized, an affordance can be an object that suggests and permits a particular action. For example, a doorknob can be an affordance that suggests and permits the acts of turning and pulling; a button on a screen can be an affordance that suggests and permits clicking.

In an embodiment, Base operates as an integration of the visual dataflow paradigm with the techniques of modem-day IDEs, language platforms and XML-based page description languages.

In an aspect, the present invention is directed to a computer system comprising a display component operable to display a visual application design; a first visual programming component with an exposed first programming attribute; a second visual programming component with an exposed second programming attribute; and a wiring component operable to automatically generate a first visual connector between first visual programming component and the second visual programming component based on one or more relationships between the first visual programming component and the second visual programming component.

In various embodiments, the first visual connector is a wire; the first visual connector is generated further based on user input data; the first visual connector is generated between the exposed first programming attribute and the exposed second programming attribute; the first visual connector is generated in response to data indicating that a user has dragged the first visual programming component onto the second visual programming component; the first visual connector connects the exposed first programming attribute and the exposed second programming attribute; the first visual connector is generated in response to data indicating that a user has dragged a mouse pointer from the first visual programming component to the second visual programming component; the first visual connector connects the exposed first programming attribute and the exposed second programming attribute; the second visual programming component has been added to the visual application design in response to user input; the exposed first programming attribute comprises a first component pin; the first component pin is displayed to a user; the first component pin is not displayed to a user; the exposed second programming attribute comprises a second component pin; the second component pin is displayed to a user; the second component pin is not displayed to a user; at least one of the first visual programming component and the second visual programming component is a standard component; the standard component is not a member of a particular class; the standard component is added during runtime; at least one of: (a) the first visual programming component, (b) the second visual programming component, and (c) the first visual connector is added during runtime; a second visual connector connects a first user interface to at least one of the first and second visual programming components; each of the exposed first and exposed second programming attributes are members of an existing platform; the platform is .NET; the first visual connector is at least one of a data connector and an event connector; the visual application design is at least one of: (a) an application, (b) a form, and (c) a workflow comprising a plurality of forms; at least one of the first visual programming component and the second visual programming component is added by dragging and dropping a corresponding component from a component library onto the visual application design; the first programming attribute comprises at least one of: a class, system, element, control, function, and object; the second programming attribute comprises at least one of a class, system, element, control, function, and object; the system further comprises a part manager component; the part manager component is operable to make the visual application design conform to users' expectations; the visual application design is made to conform to users' expectations based on heuristics; the part manager component is operable to allow event activations after a threshold of data has arrived at a component; the part manager component is operable to sequentially order events; the part manager is operable to manage transfer of data between components; the transfer comprises depth-first propagation; the transfer comprises breadth-first propagation; at least one of the first visual and second visual programming components is a bottle; the bottle stores a data value and provides access to the data value.

In another aspect, the present invention is directed to a system for modifying a visual application design comprising a first visual programming component with an exposed first programming element, wherein the first visual programming component corresponds to a member of a first class; a second visual programming component linked to the first visual programming component, wherein the second visual programming component corresponds to a member of a second class related to the first class; a modifying component operable to modify the first visual programming component in response to data indicating that the second visual programming component has been modified.

In various embodiments, the first visual programming component is modified in response to data indicating that the second visual programming component has been modified only while the first visual programming component is in scope; the first visual programming component returns to an unmodified state when the first visual programming component is no longer in scope; the second visual programming component has been added to the virtual application design in response to data indicating that a user has dragged and dropped the second visual programming component into the visual application design; the first visual programming component is modified in response to data indicating a user has dragged and dropped components from a component library onto the second visual programming component; the modifying component is operable to modify the first visual programming component during runtime in response to data indicating that the second visual programming component; the visual application design is one of: (a) an application, (b) a form, and (c) a workflow comprising a plurality of forms.

In another aspect, the present invention is directed to a system for displaying database queries and results comprising a display component operable to display a search history tree comprising one or more nodes and one or more arrows; and a query component operable to add a first arrow pointing to a first node to the search history tree, the first arrow representing a first search query and the first node representing results of the first search query, wherein the first arrow and the first node are added to the search history tree in response to data indicating that a user has dragged a search element onto a second node representing results of a second search query, and wherein the results of the first search query are based in part on (a) the search element and (b) the results of the second search query.

In various embodiments, the data indicating that a user has dragged a search element onto a second node comprises data indicating that a user has dragged a third node representing results of a third search query onto the second node; the results of the second search query and the results of the third search query are logically combined to produce the results of the first search query; the results of the second search query and the results of the third search query are logically combined based on data indicating that a user has selected at least one of: a logical OR, a logical AND, a logical NOT, a logical NOR, and a logical NAND; the data indicating that a user has dragged a search element onto a second node comprises data indicating that a user has dragged a second arrow representing a second search query onto the second node; the results of the second search query are modified based in part on the second search query to produce the results of the first search query; the search element comes from a library of search elements; the search element is at least one of: a filter, a query, and a search result.

In another aspect, the present invention is directed to a system comprising means for displaying a visual application design; means for displaying a first visual programming component with an exposed first programming attribute; means for displaying a second visual programming component with an exposed second programming attribute; and means for automatically generating a first visual connector between first visual programming component and the second visual programming component based on one or more relationships between the first visual programming component and the second visual programming component.

In another aspect, the present invention is directed to a system for modifying a visual application design comprising means for displaying a first visual programming component with an exposed first programming element, wherein the first visual programming component corresponds to a member of a first class; means for displaying a second visual programming component linked to the first visual programming component, wherein the second visual programming component corresponds to a member of a second class related to the first class; means for modifying the first visual programming component in response to data indicating that the second visual programming component has been modified.

In another aspect, the present invention is directed to a system for displaying database queries and results comprising means for displaying a search history tree comprising one or more nodes and one or more arrows; and means for adding a first arrow pointing to a first node to the search history tree, the first arrow representing a first search query and the first node representing results of the first search query, wherein the first arrow and the first node are added to the search history tree in response to data indicating that a user has dragged a search element onto a second node representing results of a second search query, and wherein the results of the first search query are based in part on the search element and the results of the second search query.

### FIGURES

Fig. 1 is a screen shot illustrating how a user browses the results of a query against a database of molecules;
Fig. 2 illustrates a Component Use case description
Fig. 3 is a diagram illustrating a propagation sequence;
Fig. 4 illustrates various part constructions;
Fig. 5 illustrates a gate part;
Fig. 6 illustrates various pin constructions;
Fig. 7 illustrates the wiring of a currency exchange web service;
Fig. 8 illustrates how a database query is wired in an embodiment;
Fig. 9 is a block diagram illustrating components of the present systems and methods;
Fig. 10 illustrates a depth-first propagation;
Fig. 11 illustrates reference parts;
Fig. 12 illustrates gates as used in accordance with the present systems and methods;
Fig. 13 illustrates a typical search history tree;
Figs. 14-21 illustrate typical user interface windows during form design; and
Fig. 22 depicts an illustrative VDL Base workflow.

### DETAILED DESCRIPTION

The following definitions are used in this description, but should not be construed as limitations to the scope of the described invention.

A **Child** refers to a parameter or data that is related to parameters or data at a higher level. Additionally, a child can also refer to the hierarchical relations of parts, or to fields in a hierarchical recordset. A Parent refers to a parameter or data that is related to parameters or data at a lower level.

**Data Mapping** refers to the process of defining how one data source is linked to another for the purpose of both importing and exporting data to and from a data source.

**Data normalization** is converting data to consistent units of measure. This is necessary because the same field in different databases might be stored using different units. For example, one database might uses milliliters, another microliters, and the display may be requested in nanoliters. So converting units of measure is required when querying, retrieving, or displaying data. Sometimes, data normalization means "convert the data's range to [0:1]." Sometimes it means "show the data in a Gaussian distribution." Sometimes it means using consistency in units of measure. In all of these cases, data values are converted to facilitate the comparison of disparate data.

A **Data Source** provides access to a Database. Examples of databases are: corporate structure repository, ACD (VDL content database), document repository, forms repository, and XDFILE. (A Target Data Source is the Data Source in use for a particular operation, at a particular point in time.)

A **Document** can exist on the screen, on paper, or in the Document Repository. A Document appears on the screen when VDL Base displays a RecordSet in a Form. Users can print, save and retrieve documents.

**Document navigation** is moving through a document on the screen with the purpose of viewing graphic objects and text that are displayed via a Form. (See Form and Form Navigation.)

The Document Repository stores Documents that the user saves.

A **Filter** is a set of search criteria that can be used to refine a record set to include only the records that you want. Filtering is the process of refining search results by applying additional search criteria. Filtering can be accomplished in either of two ways: (1) Modifying the original query to include the additional criteria (for example, by adding querylets), and then rerunning the query; (2) Applying a previously stored filter object to the search results. Both methods create a new node in the History.

A **Form** is a definition for how data is visually presented to users. For example, a form can bring together information in a Query, a View, and a RecordSet so that users can see it-on the screen or on paper.

**Form Navigation** is examining a list of available forms and selecting one for use.

**Form Object** is an item an end-user can add to a form and manipulate the properties. Objects include drawing objects, text, fields from a data source and tables from a data source.

**Home Page** is a VDL Base form created by an administrator or advanced form designer which provides high level views of the user's workflow, enabling the user to quickly navigate within VDL Base to the area of interest.

A **List** is an object that represents the rows (but not the data) that is returned by a Search. These rows comprise either a list of primary search keys (a Static List) or the Query object and the Data Source (Dynamic List, for use in a subsequent Search).

**Normalization -** see Data Normalization; Schema Normalization and Structure Normalization.

A **Parent** refers to a parameter or data that is related to parameters or data at a lower level. A Child refers to a parameter or data that is related to parameters or data at a higher level.

A **Pin** refers to an exposed attribute of a part or an encapsulated object. For example, an exposed attribute may be visually presented as a pin which may represent an exposed property, event, method, function, coding element, data item, or similar object member. As will be recognized, pins may be visible or invisible.

**Preferably** is used herein to mean "preferably but not necessarily." A **Query** is an object that defines the *where* clause of an SQL search command. It can be applied multiple times, can be combined with other Query Objects, and it can be saved and retrieved in a Query library.

A **Querylet** is a fragment of a Query. It contains the search criteria for a single field in the database. (It provides users with a quick way to search without having to create a form.)

A **RecordSet** contains the data that is returned from a Search as well as metadata that describes the View, which is used to display the data.

**Rgroup decomposition** is the identification of Rgroup structures (also called generic structures and Markush structures) in a molecule by "decomposing" or collapsing a set of real structures into a single generic structure. When drawing a molecule, Rgroups are represented as an "R."

Rgroup decomposition is the opposite of Rgroup enumeration, where you take a generic structure and enumerate all of its possible real values.

A **SAR table** (Structure Activity Relationship table) shows the results of measuring a series of related compounds with respect to a certain property of interest. For example, a SAR table might show a series of related compounds that were measured with respect to their effectiveness as an inhibitor. Compounds in a SAR table are related in that they share the same core structure but have different Rgroup values.

**Schema normalization** is changing a database schema to make it more usable. This can be done in various ways according to rules set out in the literature. One schema might be more efficient at storing than another. One schema may be more efficient at searching than another. Conversion from one schema to another is sometimes necessary to optimize performance.

To Search is to perform a systematic search of database, using search criteria that the user specifies.

**Structure normalization** is converting chemical representations to a standardized form. Structure normalization makes it possible to consistently query, retrieve, and display structures.

A **Target Data Source** is the Data Source in use for a particular operation, at a particular point in time. A Data Source can provide access to a Database. Examples of databases are: corporate structure repository, ACD (VDL content database), document repository, forms repository, and XDFILE..

The **Template Repository** contains templates for these objects: Form, Query, Report, View.. Users can select templates from this repository, and modify them to create customized Forms, Queries, Reports and Views. Users can save their customized templates in the Template Repository.

A **View** defines how to retrieve data. A View describes the *select* clause of an SQL search command.

A **Visual Programming Component** is any part or component that is visually represented on a form, application, workflow, or related displayed item (also referred to herein as a part or a component).

A **Vocabulary** is a list of text or numerical values that are valid for querying (or registering to) a given data source. Users pick values from a Vocabulary list when they construct a search, or when they register information.

**Widget** is an item an administrator or advanced form designer can add to a form that has special properties and events associated. A widget can include custom buttons, advanced form options and templates, time stamps, advanced tables.

**Workflow** is how work flows through a system or component.

In one embodiment, a system implementing VDL Base comprises a client-side interface for allowing users to query a database of compounds by molecular structure and other characteristics, view the results, and send a selected subset of the results on for future processing (for instance, by another application that orders compounds to be delivered from a catalogued inventory). Other workflows can be implemented in VDL Base as well. For example, a form designer or end user could use VDL Base's visual wiring language to create a series of forms for the user to fill out to populate a database.

A preferred embodiment enables customization of forms and applications while they are still running. For example, users can modify the user interface and logic of an existing VDL Base application using visual wiring. They also can add new components (e.g., a .NET class or control) to a form or application and "wire" its methods, properties, and events to the rest of the application. As will be recognized, a .NET component does not have to implement any particular interface or extend any particular class in order to be integrated. This allows users to extend the system with standard classes that can be obtained commercially as well as custom written. As will be further recognized, although many of the descriptions below discuss operation with Microsoft's® .NET platform, any suitable platform can be used.

A preferred embodiment can automatically create "references" to any "part" in the hierarchy of parts that constitutes the running framework and application. These references can be added to a form to provide an affordance for wiring the "part" being referenced to the rest of the form. For example, users can drop a menuitem "part" on a reference to a menu and that menuitem will automatically be added to the menu being referenced. Similarly a user can change a property on a reference and the property will be changed on the object of that reference. Wiring to the methods, properties, and events of a reference is just like wiring to the methods, properties, and events of the object being referenced. Preferably, changes made to an object through the use of a reference to that object remain in effect only as long as that reference is currently in scope (*i*.*e*., the current form level has not changed, the current parent window is still active, or the hierarchical level has not changed, etc.) For example, if a user were to add a reference to the File menu of an application to the current form and then set the "visible" property of the reference to "false," the "File" menu of the application would disappear. Once the user navigated away from the active form (e.g., by going to another form) the "File" menu would reappear, since the reference gets "unapplied" when its parent form is no longer in scope.

In one preferred embodiment, references to parts can be applied across forms or windows on the same hierarchical level as the forms or windows using those parts. An example would be a tabbed pane of windows each using a reference to a part. In such cases, it is convenient to call the first window displaying the part the "parent" and each subsequent window displaying the reference a "child." References to parts can be applied in forms or windows lower in the hierarchy of forms or windows using those parts. An example would be a child window or form referencing a part in a parent window or form. As will be recognized, a child window may be an independent window, or a frame within a parent window. As will be further recognized, where a workflow comprises of a number of forms, a referenced part can be a part originating in a previous form (*i.e.*, one that is higher in the workflow hierarchy,) or a form that appears on a display window first.

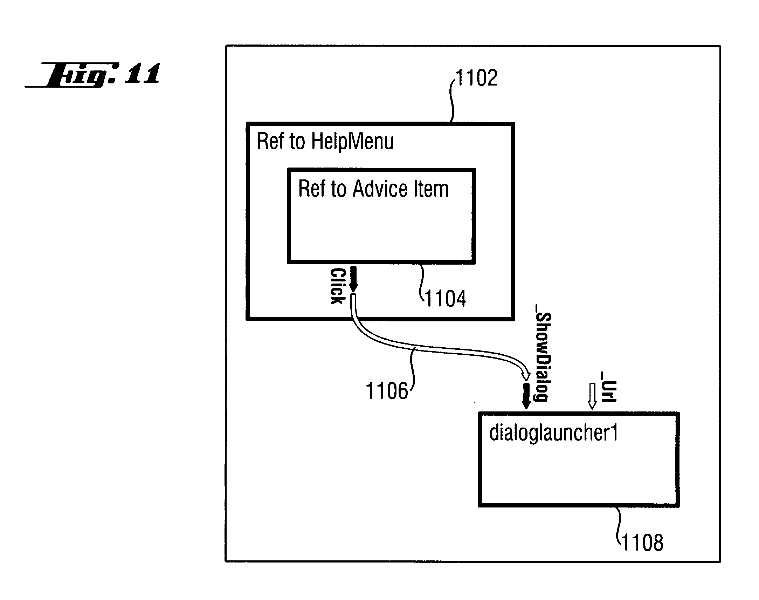

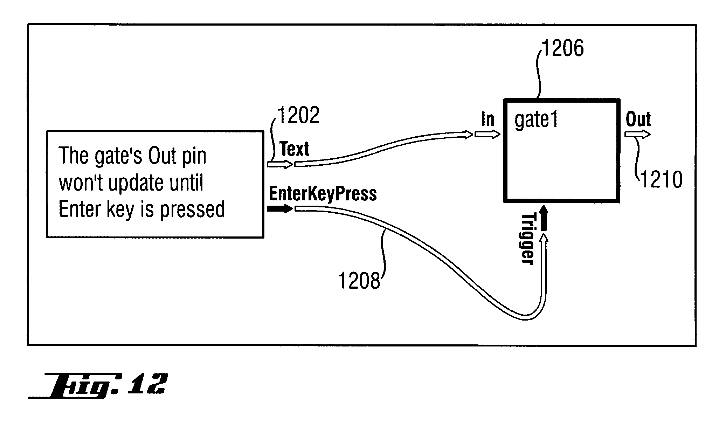

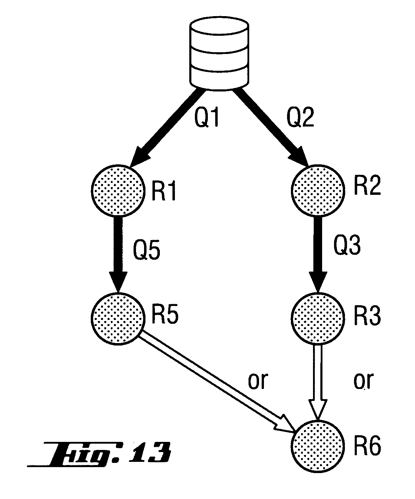

A referenced part may represent a part that is displayed or was created in a parent form or a parent window. In an embodiment, a child form or window can reference the part from the parent window, e.g., the part can be added to the child window or form by reference without the need to create a new part. Further modification of the referenced part may be implemented by adding items to the referenced part. Such modifications will appear on the child form (window). Preferably, modifications made to the referenced part also are reflected on the parent part. Such reflected changes on the parent part may be temporary, (*i*.*e*., until the parent part is no longer in scope.) As will be recognized, references to parts may be generated automatically within the hierarchy, or may be created manually when a reference is desired. A further discussion of references is provided below in connection with Fig. 11.

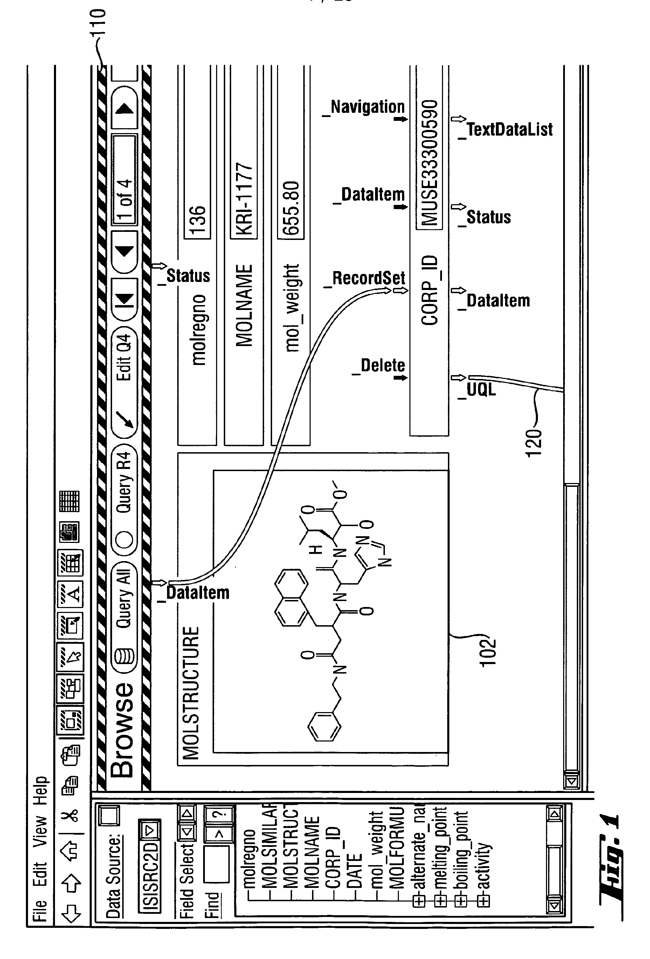

Fig. 1 is a screen shot preferably displayed to a user browsing the results of a query (102) against a database of molecules. When a user is browsing a form in design mode, various indicators preferably signal that design mode is active. For example, graphics indicating construction (110) or warning signs may be presented. Additionally, in one embodiment, wiring may be exposed (120) when in design mode. In one embodiment, VDL Base uses a box-and-wire visual metaphor. One benefit is the way in which a visual dataflow paradigm is integrated with a non-visual underlying platform.

A preferred VDL Base application comprises a set of forms or screens, each of which comprises a hierarchical structure of components. Forms may be described by XML documents. Components may be connected by wires that provide data and event flows. A "wiring component" is software operable to create one or more visual connectors ("wires") between components. As will be recognized, any programming object (such as a .NET object), can be added to a form including both user interface components and internal objects that are normally invisible. The members of an object may be translated into visual affordances and may be connected with wires.

In an embodiment, the wiring language is intended to connect components on a single form and between forms ("workflow"). Typical applications will be managing user interfaces and establishing dataflows between parts of a complex form.

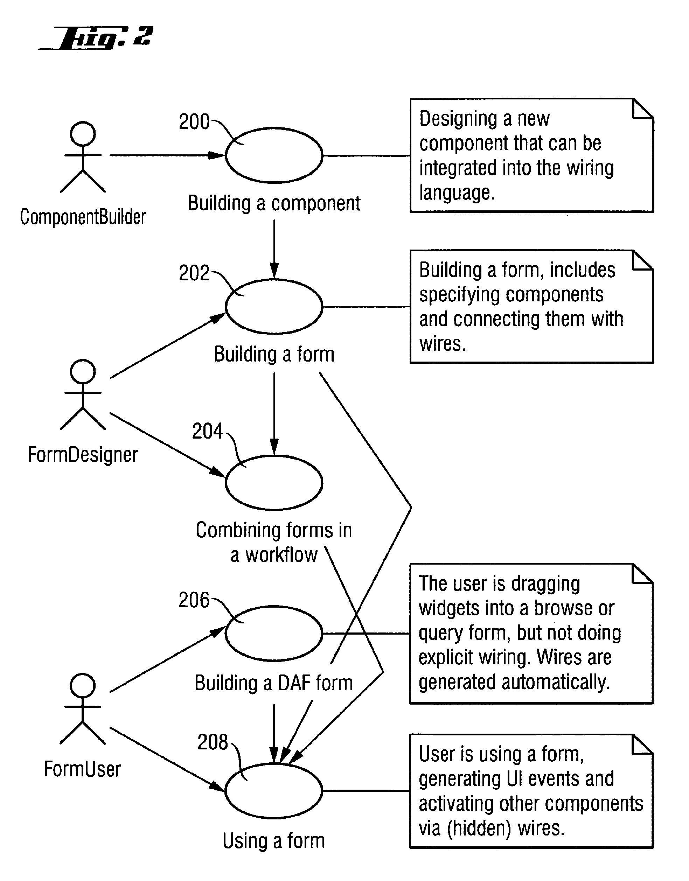

Fig. 2 illustrates a Component Use case description. In a preferred embodiment, a component builder builds a component that can be integrated into the wiring language (step 200). Components, pins, wires, etc., are described in detail below. In step 202, a form designer builds a form including components, and connects them with wires. When more than one form is used, a workflow is created (step 204). In steps 206 and 208, a user utilizes a created form, and may place new widgets in the form to generate the results desired. Other components can be included, and may be incorporated using hidden wires on the form. Details of the elements described in connection with Fig. 2 are below.

As will be recognized, components may be stored in a component library and may be added to a form by a "drag and drop" by a user.

### Parts, Pins, and Wires

The wiring language of a preferred embodiment may be used to provide component-based visual programming. Parts (components) expose some of their values, events, or methods via pins. The pins are connected via wires. This provides a simple visual method for specifying relationships between the components that make up a form. Parts can include both visible widgets (controls) and invisible components that provide computational or other services.

The part system preferably works by forming a hierarchical tree that parallels and extends the existing graphic containment hierarchy (for example, as provided by .NET's user interface package, e.g., Windows Forms). A typical part can encapsulate another object. Parts can be named so they can be referenced by other parts in XML definition files and elsewhere, and they can provide a framework to keep track of pins, serialization, and any other information necessary to extend an object so that it can operate in the visual framework as disclosed.

A fragment of an XML form definition is provided below (geometry information has been omitted for brevity):
<form_Name="form1">
<textbox_Name="text1" Text="(cons 'a 'b)">
<expose Member="Text" Mode="output" />
</textbox>
<button _Name="button1" Text="Eval" >
<expose Member="Click" Mode="output" />
</button>
<object_Name="obj1" Class="DotLisp.Interpreter">
<expose Member="Eval(System.Object)" />
</object>
<wire From="text1.Text" To="obj1.Eval?str" />
<wire From="button1.Click" To="obj1.Eval" />
<wire From="obj1.Eval?result" To="text3.Text" />
</form>

As will be recognized, this XML format is similar to that provided by languages like XAML. The <form>, <textbox>, <button>, and <object> tags all can define parts that form a hierarchy. However, various embodiments provide clear advantages over prior art languages. For example, such embodiments can provide the ability to encapsulate an arbitrary object (via the <object> tag) and mix it with ordinary controls; the ability to expose properties, events, methods, functions, coding elements, etc., of objects via the <expose> tag (such exposed properties, events, methods, functions, coding elements, etc., can be represented visually as a pin); and the ability to connect exposed pins with wires (via the <wire> tag).

It should be recognized that the XML coding may be hidden from users who preferably construct it using a designer user interface (UI) discussed below.

As described above, in various embodiments, parts form a hierarchy that defines form and application structure, parts have names so they can be referenced in the XML and elsewhere, parts encapsulate controls and other .NET objects, and parts can expose object members as pins. As will be recognized, any method, component, class, element, etc., available in a platform may be encapsulated and utilized in the present systems and methods.

Pins preferably expose attributes (also referred to herein as programming attributes) of a part or its encapsulated object. For example, an exposed attribute may be visually presented as a pin which may represent an exposed property, event, method, function, coding element, data item, etc. As an additional example, pins may represent exposed attributes of .NET objects.

In one embodiment, an exposed attribute is visually presented on a screen as a pin to provide a visual location for attaching a wire. In another embodiment, pins are not visually represented on a screen; however, exposed members can still be connected to via wires. In yet another embodiment, attributes may be exposed without generating a corresponding pin. In one embodiment where pins are not represented on a screen (i.e., invisible pin or exposed attribute without a corresponding pin), wires may be generated automatically between parts be dragging and dropping one part onto another part. In another embodiment where pins are not represented on a screen, a user may make a gesture with a mouse, and a wire may be generated automatically. As described in detail below, this wiring model (also referred to as a smart wiring model) allows wires to be automatically connected to the appropriate exposed methods, controls, objects, members, data items, etc. In one embodiment, where more than one connection point is available, a dialog box prompts a user to indicate the desired connection. In another embodiment, only one connection point is available, and the wire is connected automatically.

Pins can be further classified according to whether they primarily deal with data (values) or events. A preferred pin hierarchy is:
- Input Pins
   o Data
      ■ Input property pins
      ■ Input method argument pins
      ■ Input list pins (combines multiple inputs into a list)
   o Event
      ■ Input method pins
- Output Pins
   o Data
      ■ Output property pins
      ■ Output method result pins
   o Event
      ■ Output event pins

In an embodiment, data pins transmit values subject to type restrictions. As described above, these values may be .NET objects. They can inherit the data type of their underlying object members (such as a string, number, RecordSet, or Molecule).

As described above, pins are preferably created by exposing selected members of the underlying object. Typically this creates a single pin, but in the case of a method with arguments or a result value, it can create multiple pins. Since a typical object might have dozens of available members, requiring an explicit expose step reduces visual clutter by only visualizing the properties that are actually interesting to the user.

Preferably, wires connect an output pin to an input pin of a compatible type. A data wire, i.e., a wire between two data pins, preferably means that the value at the input pin should reflect the value at the output pin. The details of maintaining this correspondence typically are the job of a Part Manager (described below); preferably, they are abstracted away and not directly under a form builder's control.

Event wires preferably represent something closer to a traditional event handler or method call. For example, an event output pin preferably represents an event such as a button click (an event occurring in time), while an event input pin preferably represents a method or other action. An event connection (event wire) preferably connects methods to events so that the methods are triggered at the same time the event happens. In an embodiment, event connections represent the event handlers or method calls within a particular platform, e.g., .NET.

In a preferred embodiment, the wiring system responds to changes in the wiring configuration or any underlying events, even when in design mode. It thus operates at the highest level of "liveness," and changes made to a form when in design mode are immediately reflected on the screen. For example, where a user adds a component to display a value to a form, that component would immediately reflect its value.

As described above, a goal of the wiring language is to provide a method for simple component-based visual programming. Parts (components) can expose some of their values, events, or methods via pins. The pins are connected via wires. This provides a visual method for specifying relationships between the components that make up a VDL Base form, both visible widgets and invisible components that provide back-end services. In a preferred embodiment, form designers drop widgets into the system and wire it.

Parts are the basic components of a preferred system. Usually a part will encapsulate a .NET control (such as a button) or a non-control UI element (such as a menu item). As will be recognized, any platform's methods, components, classes, elements, etc., can be encapsulated in present systems and methods. Encapsulating provides a graphical representation of the underlying coding elements of the encapsulated item.

As described above, pins and wires can be split into two classes: those that deal with data (objects) and those that deal with events. As will be recognized, these have different semantics and should be considered separately.

Pins and wires can also be used to signal events. Wiring an event pin to a method pin can implement a behavior.

Many platforms have a strictly-typed object model. As such, all objects can belong to a class, and all variables can have a type that restricts them to holding objects of a certain type. In a preferred wiring system, pins correspond to variables, so they also can be typed. The type of pins can be a useful guide to wiring, in that it can be used to guide the user into making only meaningful connections, and in some cases automating the wiring entirely. As will be recognized, the pins do not have to be visible in order for connections to be established. Accordingly, in one embodiment, the pins may be visible. In another embodiment, the pins may not be visible.

In an embodiment, where rigorous object-oriented programming types are implemented, rather than the more interactive and informal activity of form building, it may be beneficial to loosen the type checking implemented. For instance, it may be useful if a user could directly wire a numerical output (say, from a counter) to a text field for display, rather than having to explicitly connect it through a type-conversion component as would be required by strict type-checking. Type coercion can be defined by a module that encapsulates all knowledge about type coercions, and can both coerce values to types and report on the compatibility of types (for error checking and feedback during wiring).

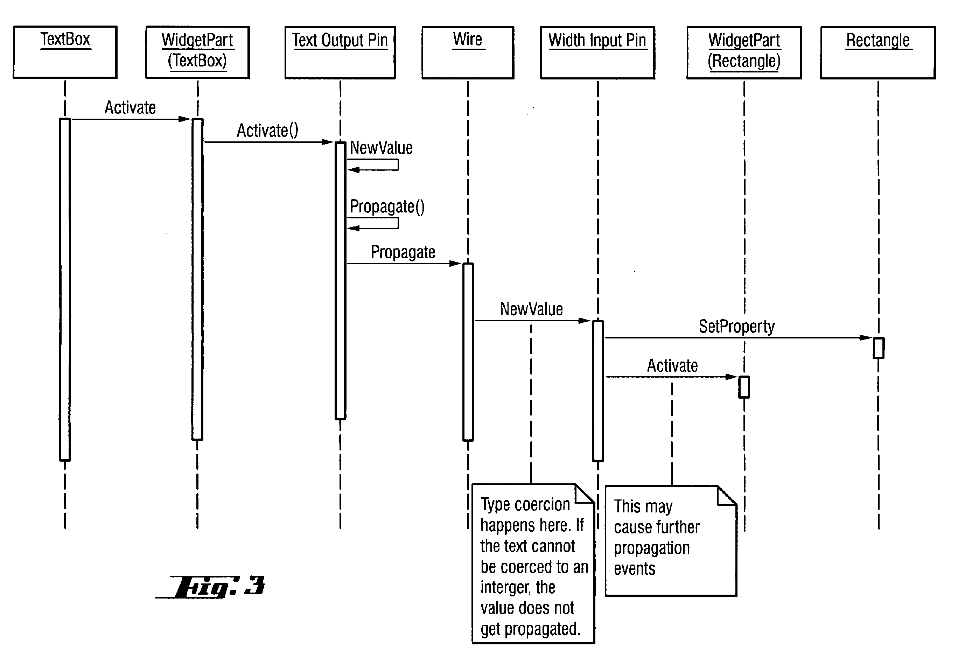

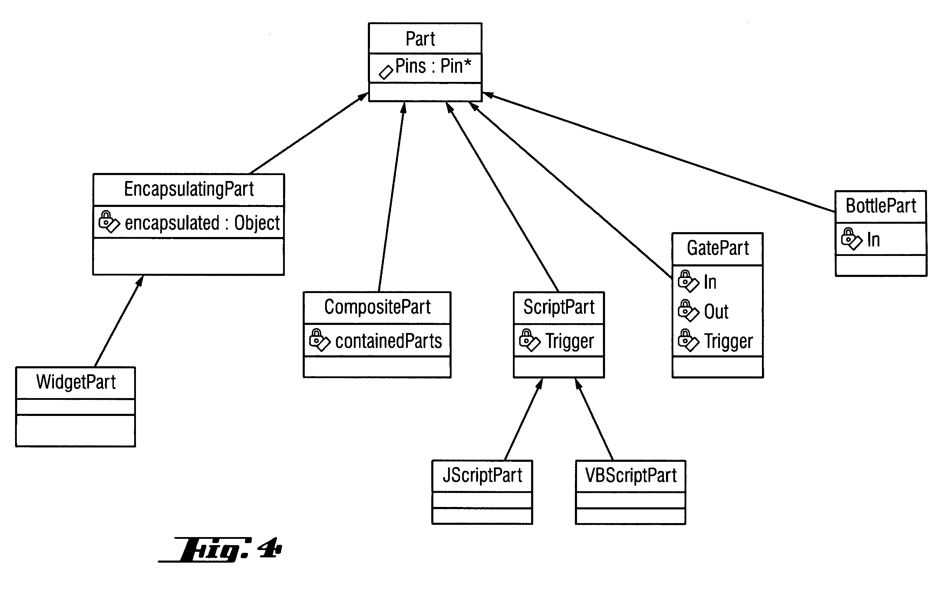

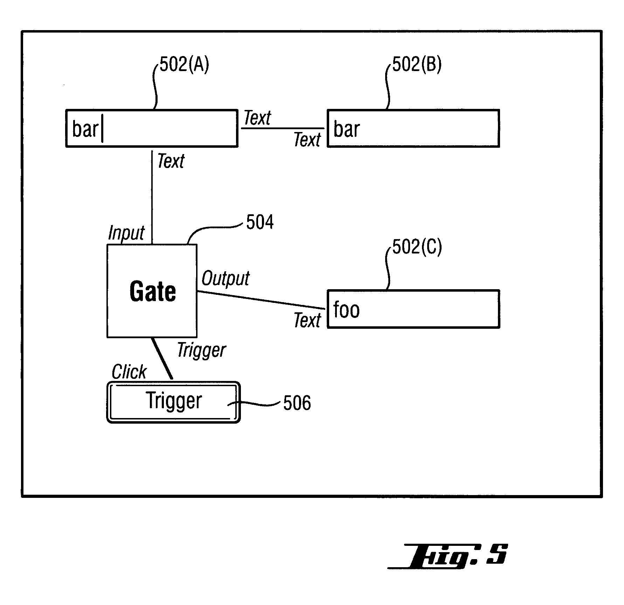

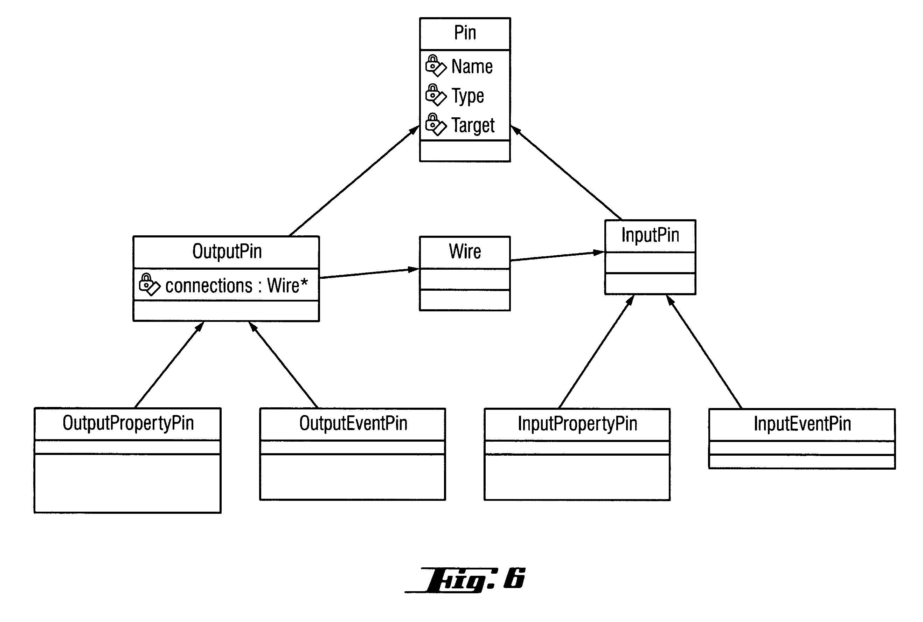

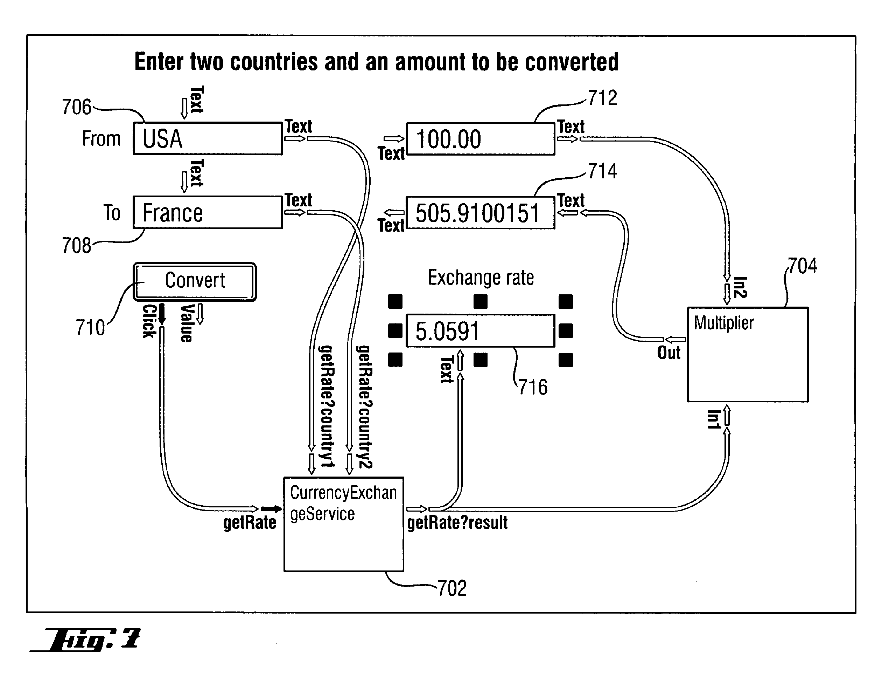

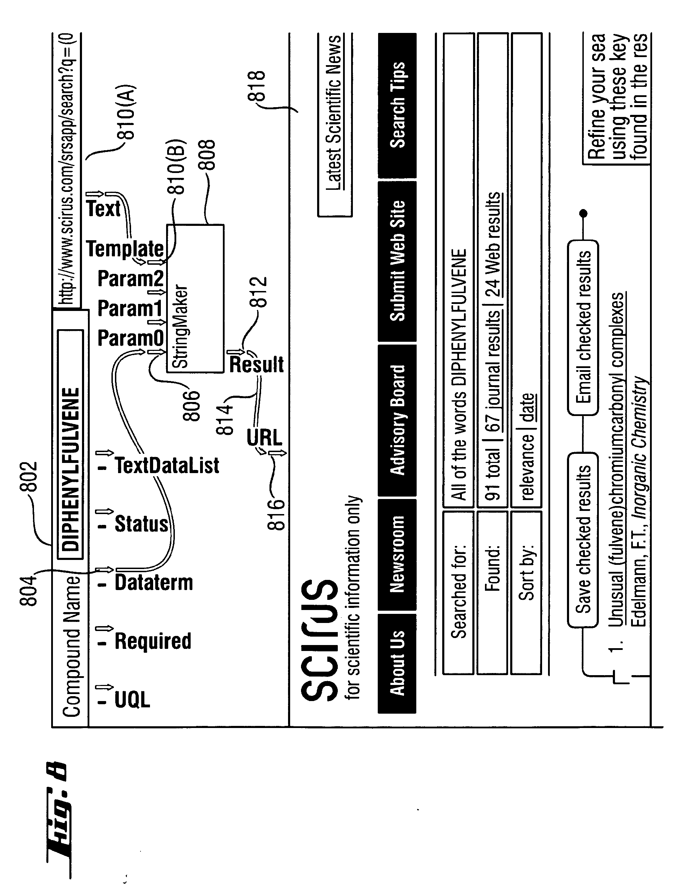

When the value of an output data pin changes, the new value must propagate to the input pins of connected parts. This in turn may cause other components to change their output pins, causing a chain of propagation. Fig. 3 is a diagram illustrating a propagation sequence. As shown, the user enters text in a text box, causing the string to be translated into an integer and used to set the width of another component.

In an embodiment, wires can be created automatically in response to user actions. For instance, simply dropping in a text box widget into a data aware form (DAF) might automatically set up wires between the form and the box. This is a function of the DAF, the wiring model must support this mode of use. In an embodiment, the Part Factory is operable to automatically wire.

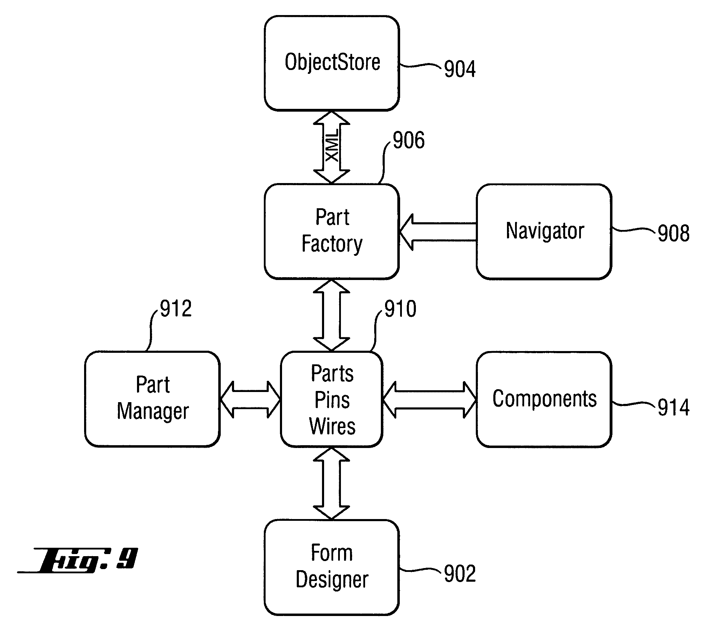

Fig. 4 illustrates a preferred parts hierarchy. As described above, parts are the objects connected by the wiring system. Parts contain pins which provide their interface. In an embodiment, a part can encapsulate another object and expose its properties as pins, e.g., the class EncapsulatingPart.

In an embodiment, parts inherit from the GeneralizedNode class so that they can maintain a containment hierarchy for serialization and navigation purposes. The following are illustrative of various function calls, methods, components, and prototypes present in various embodiments. Those skilled in the art will recognize their implementation and application in the present systems and methods.
ARRAYLIST PINS()
VOID ADDPIN(PIN)
PIN GETPINNAMED(STRING)
VOID ACTIVATE()

Activate the part. The default method simply calls activate on all output pins.
PROPERTYPIN EXPOSEINPUTPROPERTY(STRING, TARGET)
PROPERTYPIN EXPOSEINPUTPROPERTY(STRING)
PROPERTYPIN EXPOSEOUTPUTPROPERTY(STRING, TARGET)

Creates and adds a pin that represents the named property of the target object.
PROPERTYPIN EXPOSEOUTPUTPROPERTY(STRING)

Creates and adds a pin that represents the named property of a default object. This will usually be the encapsulated object. If the property name is preceded by an underscore (ie, "_Name") then the default object is the Part itself rather than the encapsulated object.

Other Expose methods can have similar signatures and conventions as the above. In such instances, they may create and add a pin that represents the named property.
OUTPUTEVENTPIN EXPOSEEVENT(STRING)

Expose the named event as an output event pin
INPUTEVENTPIN EXPOSEMETHOD(STRING)

Expose the zero-argument method named by string as an InputEventPin
ArrayList ExposeMethod(MethodSpec)

Expose the method as an InputEventPin and its arguments as InputDataPins.
ARRAYLIST EXPOSEEVERYTHING()

Expose all public properties, events, and methods of the part.
PUBLIC STATIC VOID PROPERTYWIRE(OBJECT O1, STRING P1, OBJECT O2, STRING P2)

This can be used for wiring together two arbitrary objects via properties. P1 and P2 are property names. O1 and o2 are objects that get encapsulated with the appropriate Parts.
PUBLIC STATIC VOID EVENTWIRE(OBJECT O1, STRING EVENT1, OBJECT O2, STRING METHOD2)

This can be used for wiring together two arbitrary objects via events and methods. O1 and o2 are objects that get encapsulated with the appropriate Parts. Event 1 is an event name (for o1) and method2 is a method name (for o2).
class EncapsulatingPart : Part
ENCAPSULATINGPART STATIC ENCAPSULATE(OBJECT)

Create a part to encapsulate an object.
EXPOSE

The Expose methods have an identical interface but by default they expose properties, etc., on the encapsulated object rather than on the part itself.
class WidgetPart : EncapsulatingPart

A WidgetPart encapsulates a widget (Control). This class knows how to instrument the widget so that user events will cause the object to be activated.
class CompositePart : Part

CompositeParts encapsulate a network of other Parts, exposing some of the pins of the inner parts as their own.
class ScriptPart : Part

Script parts have a script, e.g., in Jscript, VB.Net, or another scripting language. The Script itself can be exposed as a pin . Script objects can have arbitrary pins that are exposed as variables for the scripts.
class JScriptPart : ScriptPart
class VBScriptPart : ScriptPart
class BottlePart : Part

A bottle part accepts an object on an input pin and exposes some of its properties. In an embodiment, this can be different from EncapsulatingPart which can expose properties of the encapsulated component. This exposes properties of a data object.
class GatePart : Part

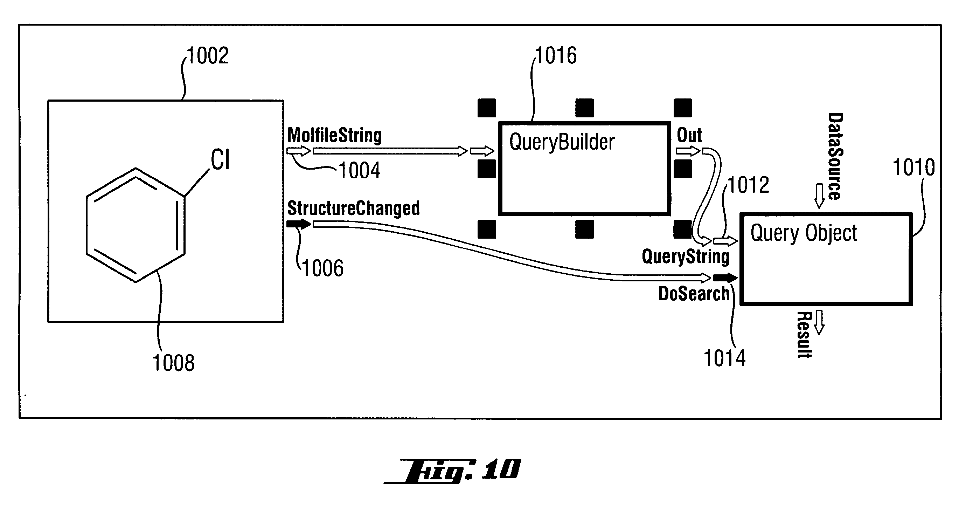

A GatePart serves to delay the transmission of a value along a wire until some event occurs. Fig. 5 illustrates a gate part. As shown in Fig. 5, are text boxes 502, gate 504, and trigger 506. Also shown (but not labeled) are the wires connecting the text various components. By way of non-limiting example only, where an input field will automatically update a subsequent field, it may be beneficial to leave the subsequent field un-updated until a trigger is activated. GateParts can have the following pins:
In (type object)
Out (type object)
Trigger (EventInput)
class MergePart

In an embodiment, a normal input pin may have only one wire. It might be useful to have a special part (or pin) that can merge values from several sources. For example, where a part has many input pins, but only one output pin, the output may be whichever value is most current from any of the input pins. In an embodiment, the present systems and methods incorporate a multiplex input pin.

Fig. 6 illustrates various pin constructions. Pins are exposed interfaces of parts that permit them to be connected to other parts. Pins belong to a part and have a target, i.e., the object they actually communicate with. This target can be either the part itself , the encapsulated object, or for composite parts, it may be a contained part. In general, pins should not be created by direct calls to their constructors. Instead, the Expose methods of parts should be used. As will be recognized, an InputEventPin can be used to expose a method.
abstract class Pin
STRING NAME
TYPE TYPE
OBJECT TARGET
class InputPin : Pin
CONSTRUCTORS
public InputPin(string name)
public InputPin(string name, object target)
class InputPropertyPin : InputPin
CONSTRUCTORS
public InputPropertyPin(string name)
public InputPropertyPin(string name, object target)
WIRE(OUTPUTDATAPIN)
Creates a wire. If there already is a wire to this input pin, it may be deleted.
class InputEventPin : InputPin
public InputEventPin(string methodName, object target)
class MultiplexlnputPin : InputPin
class OutputPin : Pin
ACTIVATE()
NEWVALUE
class OutputPropertyPin : OutputPin
class OutputEventPin : OutputPin

Wires are connections between two pins. In an embodiment, there may be only one class, Wire.
Constructors
public Wire(OutputPin output, InputPin input)
DeleteWire()
Wires can be defined in forms by means of XMI elements. The exact syntax can be defined in the XML form specification language. By way of example only, a sample syntax may be:
<wire outwidget="mdbfile" outpin="Text" inwidget="localDB" inpin="File"/>
ERROR HANDLING

As will be recognized, any known error handling method may be incorporated.

### WEB SERVICES INTERFACE

Web services are becoming increasingly important to many applications, and there have been efforts to allow access to them through visual languages. The present systems and methods can support this in conjunction with existing platforms, e.g., .NET tools.

Fig. 7 illustrates how a currency exchange web service is wired in an embodiment. As shown, there are two invisible parts on this form, one representing the web service 702 and a part that performs an arithmetic multiplication 704. The web service part can be automatically created from a published file, e.g., by a .NET utility that converts the service into a class with methods corresponding to the service APIs. In an embodiment, these methods are turned into wireable pins. In this case the web service takes as input the names of two different countries and outputs the exchange rate between their currencies; this number is then used as a coefficient to a multiplier. As shown, the pins and wires illustrate the connectivity of the components in Fig. 7. When the input text for the particular countries is input (706 and 708), and the convert button is pressed (710), the exchange rate of invisible component 702 is passed to invisible multiplier block 704. The previously entered value in block 712 is then multiplied by the passed rate, and the output (on the output pin of block 704) is passed to the input pin of text box 714, where the result is displayed. In an embodiment, the exchange rate can be passed on the output pin of block 702 to a separate display block's (716) input pin. As will be recognized, the wires connecting the blocks are connected via the pins described above.

Fig. 8 illustrates how a database query is wired in an embodiment. As shown, the results of a database query appear in box 802 (here displaying diphenylfulvene). In an embodiment, this box can hold a single database field. In an embodiment, the value of this field appears on_DataItem pin 804 and changes as the user scrolls through the result set. That is, where a new result is displayed in box 802, the value on the pin changes automatically. As illustrated, this pin can also be wired to the Param0 pin 806 of a StringMaker object 808, which also has as an input a URL template 810. The StringMaker substitutes the query value in the template, passes it through its output pin 812 , where it travels along a wire 814 to the URL input pin 816 of a web browser part 818. In an embodiment, the effect of this wiring is to automatically perform a new web query as the user scrolls through a result set. Additional pins for StringMaker 808 and query box 802 are shown and can be utilized in various embodiments. As will be recognized, additional components, input pins, and output pins can also be implemented.

Fig. 9 is a block diagram illustrating components of the present systems and methods. As shown are blocks representing a Form Designer 902, ObejctStore 904, Part Factory 906, Navigator 908, Parts Pins Wires (910, and also described above), Part Manager 912, and Components 914. In an embodiment, the Form Designer is the user interface to the part and wire system. The Part Factory can be the module of the system that translates between an XML format and part hierarchies. The Navigator can supervise changes to the part hierarchy (for instance, when a user triggers a transition to a new form). The Part Manager can supervise propagation of values through the wiring system. The Form Designer can be the "meta-user-interface" that allows a user to construct and manipulate forms through a designer UI. The Component Library can contain definitions of parts.

As will be recognized, the system can be in "run mode" in which case UI widgets work normally, or in Design Mode where mouse clicks and other commands manipulate the form components and allow pins and wires to be created and manipulated. The Form Designer facilitates drawing pins and wires, and because forms can contain non-visual parts as well as controls, the Form Designer also facilitates creating visualizations for such parts when in Design Mode. In an embodiment, the Form Designer is implemented as a transparent overlay over a standard .NET window. As described above, even when in design mode, changes to a form may be reflected immediately.

In an embodiment, a form is designed by dragging in components from a component library, which is implemented as set of small XML snippets that define a component. Such components can be based on an underlying .NET class with some properties exposed as pins. As will be recognized, any objects can be added to the form, providing the necessary wiring pins.

In an embodiment, VDL Base can consist of a hierarchical structure of parts or components, specified through a collection of XML files, e.g., in a format similar to that of XUL or XAML. In an embodiment, a part may be a user interface control such as a button, table, or textbox, a container for other UI parts, or a non-UI part that does behind-the-scenes computation. In certain embodiments, other modules of the system are centered around manipulating the part hierarchy in some way.

Where the wiring system makes use of .NET's reflection capabilities, it is possible to examine objects for available properties and operations, and invoke them at runtime. Reflection can be used to write dynamic languages on top of static ones. Computational performance is not generally a factor in the UI event handling described above.

Dynamic access to event-handling at runtime can also be done through reflection, but requires additional components. For example, .NET event handlers have strong type checking on their arguments, which makes it difficult to have a universal, generic event handler that can work with any type of event. Accordingly, a custom event handler can create custom event handler classes on demand, at run time, using .NET's built-in code generation facilities.

As is known in the art, .NET has a strictly-typed object model. All objects belong to a class, and all variables, arguments, and properties have a type that restricts them to objects of a certain class. In a wiring system, pins correspond to variables, and thus are typed. The type of pins can be a useful guide to wiring, in that it can be used to guide the user into making only meaningful connections, and in some cases automating the wiring entirely.

However, it may be desired to loosen the type checking imposed by .NET, which is designed for rigorous object-oriented programming rather than the more interactive and informal activity of form building. For instance, it would be useful if a user could directly wire a numerical output (say, from a counter) to a text field for display, rather than having to explicitly connect it through a type-conversion component as would be required by strict type-checking.

Type coercion is defined by a module that encapsulates all knowledge about type coercions, and can both coerce values to types and report on the compatibility of types (for error checking and feedback during wiring).

In an embodiment, strong typing can be utilized in connection with smart wiring. Often, it may be awkward to create wires with the mouse due to the small size of the screen representation of pins (which in turn is necessitated by the need to conserve screen real-estate). The alternate wiring technique is to use a mouse gesture that sweeps from one part to another. The system then computes all the possible wires that could be created from the first part to the second, using the type system as a constraint. Often there will only be a single possible wire, which is then created. If there are more than one, the user can select the appropriate connection from a dialog.

Propagation is the process of transmitting values and events from one part to another. In an embodiment, when the value of an output data pin changes, the new value must be propagated to the input pins of connected parts. This in turn may cause other components to change their output pins, causing chains of activity. A visual dataflow language can create certain expectations through its use of flow metaphors. Relevant analogies are electricity flowing through a circuit, water flowing through pipes, or traffic flowing through a network of streets. These paradigms suggest that events will propagate through the network in parallel if there are multiple paths branching out from the node of origin.

In an embodiment each part is responsible for propagating any output pins that changed. As will be recognized, this is natural from the implementation perspective, and can result in changes propagating in a depth-first traversal of the wiring graph. In an embodiment, a breadth-first graph traversal can be used to preserve the linkages between topology and causality.

In an embodiment, the Part Manager facilitates breadth-first propagation. In particular, this module can supervise all part activation and propagation, and can control the ordering of events.

In order for propagation to happen, the wiring system needs to be notified when there is a possibility that the value of an output pin has changed. In an embodiment, this is done by creating event handlers for all (or a subset of all) events on an encapsulated Control. These handlers can call the Activate() method which can initiate propagation as described above. In various embodiments, non-terminating loops can be prevented by only propagating when a value changes, and limiting each pin to a single propagate event.

Fig. 10 illustrates a depth-first propagation. As shown in Fig. 10, display box 1002 can be a molecule editor that emits a value on pin MolFileString 1004, and an event on StructureChanged 1006 whenever the user edits the molecular structure 1008. The goal of the wiring network is to have this action trigger a new query. As will be recognized, the Query Object part 1010, which performs the query, depends on two different paths that connect back to the molecule editor. For the wiring to work correctly, the updated query must be available from QueryBuilder 1016 (via the QueryString pin 1012) before the input from display box 1002 (via the DoSearch pin 1014) is received and the query is triggered. To ensure that the presence of QueryBuilder and QueryString in the proper order, modified propagation heuristics can be employed.

In an embodiment, a breadth-first graph traversal algorithm tracks nodes that need to be handled. In an embodiment, the Part Manager (as described above) is operable to do this, and is further operable to maintain any number of queues with different priorities. Broadly stated, in this context, the goal of the Part Manager is to allow event activations after all values have arrived, and to attempt to order events so any dependencies are computed in the proper order. In one embodiment, depth-first propagation is utilized. In another embodiment breadth-first propagation is used.

As will be recognized, the queues can contain output pins that have yet to transmit their values across attached wires. In an embodiment, two queues are utilized, one for value output pins and another for event output pins.

One cycle of the Part Manager can be described as follows, although this is only a representative description:
1) dequeue a pin (see below); 2) send value across its attached wires; 3) input pins accept the value; 4) the associated part method is called possibly resulting in more output pins getting queued; 5) repeat until queues are empty

As will be recognized, selecting the next pin to be propagated can be an important distinction. Accordingly, the Part Manager is operable to perform the following steps:
if there are any pins on the value pin queue, choose one of them, otherwise,
if there is exactly one pin on the event pin queue, choose that, otherwise,
select one of the queued event pins based on its dependencies:
   For each pin, see if it has dependencies on any other pin (i.e., a backwards tree-crawl)
   If a pin with no dependencies is found, select it.
   If no such pin is found, there are circular dependencies and it's not possible to pick a good ordering, so give up and pick the first pin in the queue.

This section describes some special-purpose parts that extend the basic mechanisms described above, as well as some parts that make up the library of built-in parts. Additionally, various terms are described below describing many terms associated with the present systems and methods. These parts can be used independently or collectively in various embodiments as described.

### Composite Parts

Any programming language needs some sort of abstraction mechanism. In a visual wiring system this generally means the ability to collapse a network of parts and wires into a single component so that it can be easily reused. These can be referred to as Composite Parts. Composites are defined in separate XML files using the same syntax as forms, with additional syntax that allows pins of contained parts to be promoted to the surface of the composite. For instance, a composite can include a text box, a label, and some hidden mechanisms.

### Reference Parts

Reference parts are a special kind of part that allows a form to contain a cross-reference to a part that is in its hierarchical scope, or otherwise not directly accessible (for instance, they can be used to create references between parts on different panes of a tabbed pane container). References can be used to change properties of their referenced part, to expose pins, or to add additional subparts. A reference can also be used to change the behavior, properties, or children of a class in an application's hierarchy of classes.

Fig. 11 illustrates reference parts. As shown, Fig. 11 includes two references: one to the existing Help menu 1102, and a reference to an added subpart called Advice Item 1104. This item is then connected via an event wire 1106 to a dialog launcher part 1108, which will pop up a dialog that is defined by a separate XML file.

As described above, and in Appendix D, various files can have references, e.g., Application.xml, Workflow.xml and Form.xml can have some references.

A reference can be a link (by name) to an object in the hierarchy. The hierarchy can preferably be composed of VDL Base->application->workflow->form. In this example, an object can only be reference by a lower level object. Once an object from one level is referenced by a lower level, the reference attributes (from the lower level) will change the attributes of the object. Once the level will change, the attributes will return to their initial states.

For instance, a Form that disables a toolbar from the Base during the time frame that the Form can be displayed.

The Base.xml may be:
<Base>
<Window ...>
...
<Toolbar name="**Base\MamTooibar**" enable="**true**" visible="**true**">
...
</Toolbar>
</Window>
...
</Base>

The FormCompLoc.xml may be:
<Form>
...
<!-- References can only modify the state of an object that is upper in the hierarchy Base\application\workflow\from-->
<References>
<Reference name=**"Base\MainToolbar"** enable=**"false"** visible=**"false"**/>
</References>
</Form>

Once the Application's Form has changed, the **Base\MainToolbar** may return automatically to its initial state (enable=**"true"** visible=**"true"**). If a user needs to have the bar disabled during a whole application, then the Reference can be done at the Application.xml level instead of at the Form.xml level.

The ApplicationCompLoc.xml can be:
<Application >
...
<!-- References can only modify the state of an object that is upper in the Hierarchy Base\application\workflow\from--> <References>
<Reference name="**Base\MainToolbar**" enable="**false**" visible="**false**"/>
</References>
</Application>

### Gates

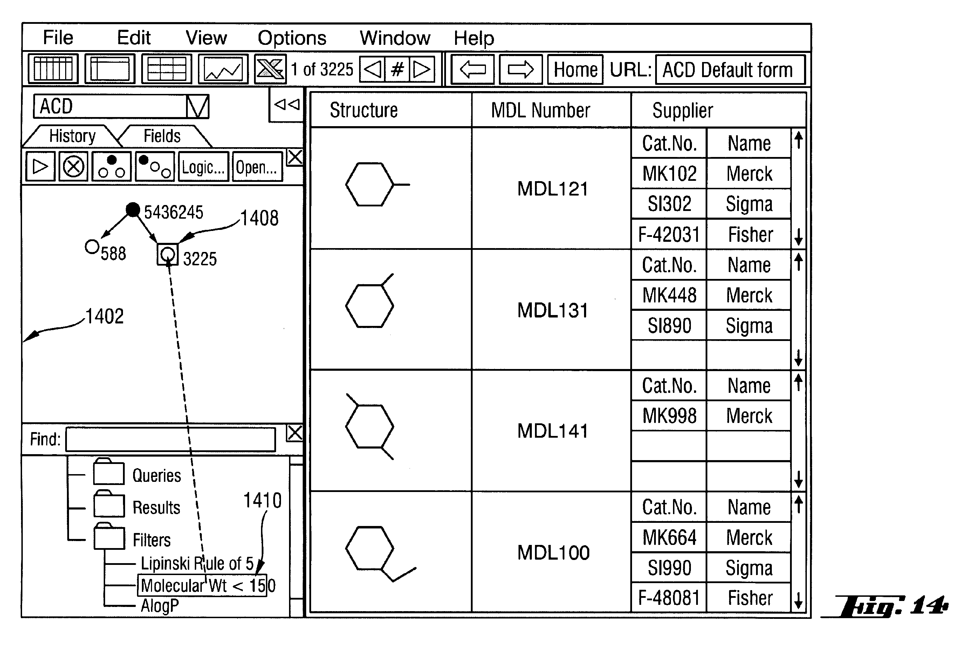

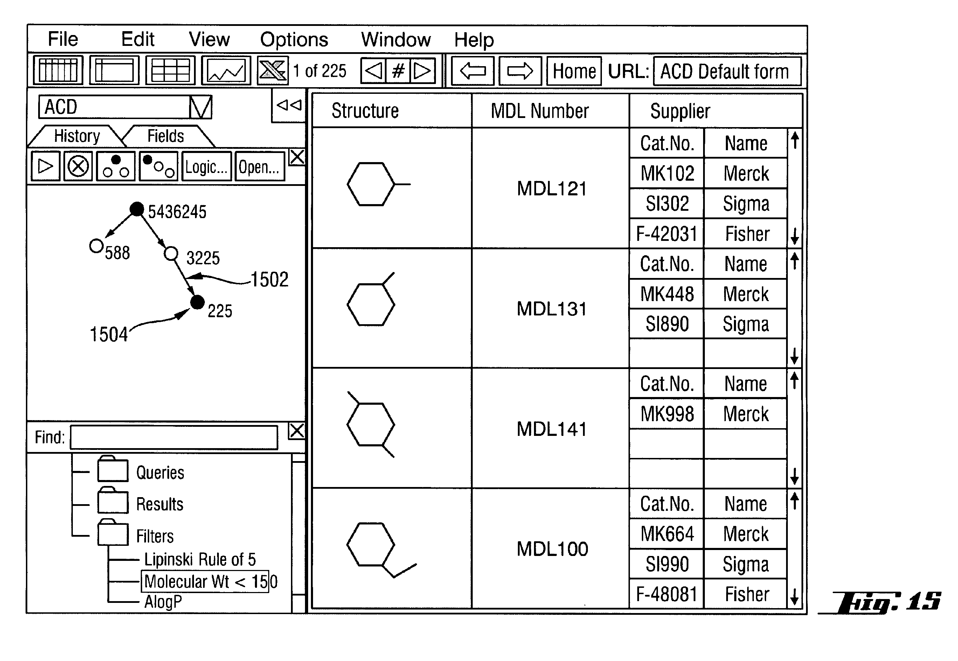

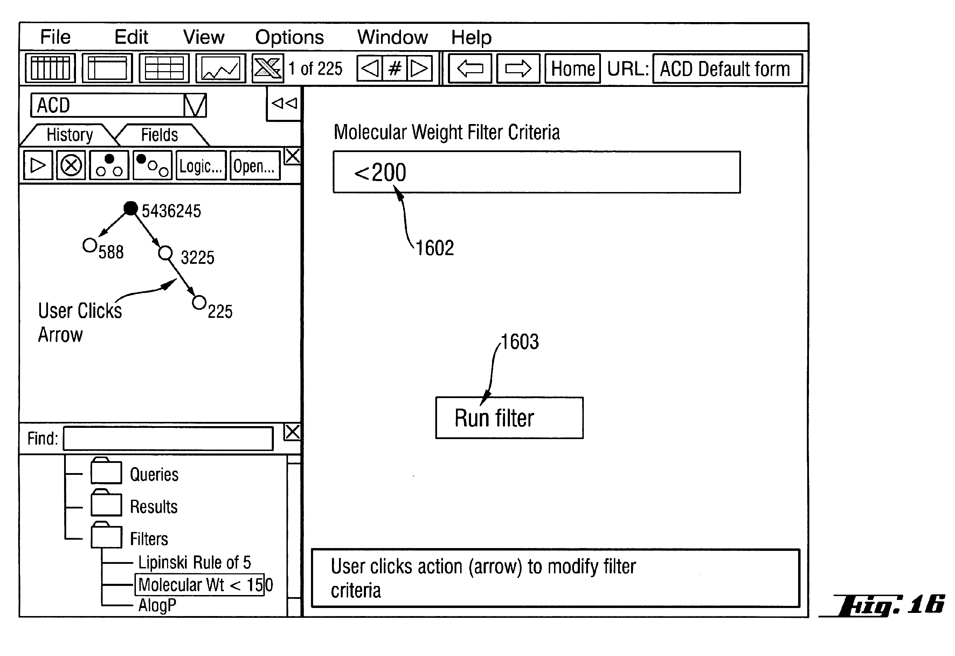

Fig. 12 illustrates gates as used in accordance with the present systems and methods. In an embodiment, gates are regular parts that allow finer-grained control of when values are transmitted along wires. For example: if the Text output pin 1202 of a textbox 1204 is directly connected to another textbox or a query generator, every character the user types will change the value of that pin and result in events propagating forward. This creates a very "live" feeling to an application but can cause performance problems if the receiving operation is expensive, and can also be disconcerting to a user. To change this, a gate part 1206 is inserted into the wire and triggered by the EnterKeyEvent (traveling via wire 1208). Now the Out pin of the gate 1210 won't transmit the Text value until the appropriate point.

### Bottles

Bottles solve a semantic problem that is common to visual component languages. The problem is the dichotomy between objects that are relatively static (the components) and those that are in virtual motion along the wires (data values). A bottle essentially captures and holds a data object so that its properties may be accessed through wires.

In a preferred embodiment, bottles accept as input an object of any type and a string indicating the property of interest. Such input can be stored ("bottled"). Bottles can provide two pins, Out and In, that make the value of the named property available and allow it to be set, respectively. Extensions to the implementation would allow the runtime creation of multiple pins exposing multiple properties, as well as other members of the bottled object such as events or methods.

### Functional computation parts

The components set include a set of parts that perform functional computations, including arithmetic, Boolean logic, inequalities, and the like. These parts generally expose one or more input data pins and a single output data pin, and are conceptually pretty simple since they involve no state or events. Other parts of this type include the StringMaker, If/then/else switches, and parts for extracting parts of recordsets.

### Query-related parts

In various embodiments, current applications are used to query and browse databases. Accordingly, a number of parts exist to aid this process. These include the Query Object, which accepts as input a query specification (in UQL, a variant of SQL) and emits a record set on an output pin. Other parts can display, store, or manipulate these recordsets.

Additionally, another important part is the Data Aware Form (DAF): a form which can accept a RecordSet as input and distribute it via the wiring system to internal parts, which can extract and display individual fields. The DAF can also perform a similar process for query forms, where it gathers up query clauses from a variety of fields, sends them through Query Logic parts to combine them, and generates a complete UQL statement.

### Asynchronous parts

As described, most parts either perform UI tasks or simple computations that take a trivial amount of time. Parts that perform time-consuming tasks may need to perform them in a separate thread to avoid long user-visible delays. The query object described above works this way, since queries can take significant amounts of time. Generally a part will launch a thread when triggered by some arriving event, and when the thread completes it will put some values on output pins. In one embodiment, all propagation happens within a single thread.

As will be recognized, other embodiments can be implemented, such as a part that interfaces to a barcode reader and uses it as input to a normal query process; a part that performs text-to-speech translation; numerical display parts that color-code their values according to range; and a part that wraps an Excel spreadsheet and allows query results to be wired in. These parts can then connected via the wiring language to utilize existing functionality (for example, the inputs or outputs of database queries).

In an embodiment, to preserve screen real-estate, a separate logical view for doing wiring, in which the layout of components can be decoupled from their "physical" location in the end-user interface. In an embodiment, special serializing components or the addition of ordering annotations to the wires can be implemented to further facilitate the above operation.

As will be recognized, setting up large forms can be simplified by allowing the creation of many wires in a single operation. Additionally, debugging can implement debugging tools that print traces of wiring activity; as well as more elaborate tools that include steppers and smarter tracers that can condense events down to a description more comprehensible.

### Search History

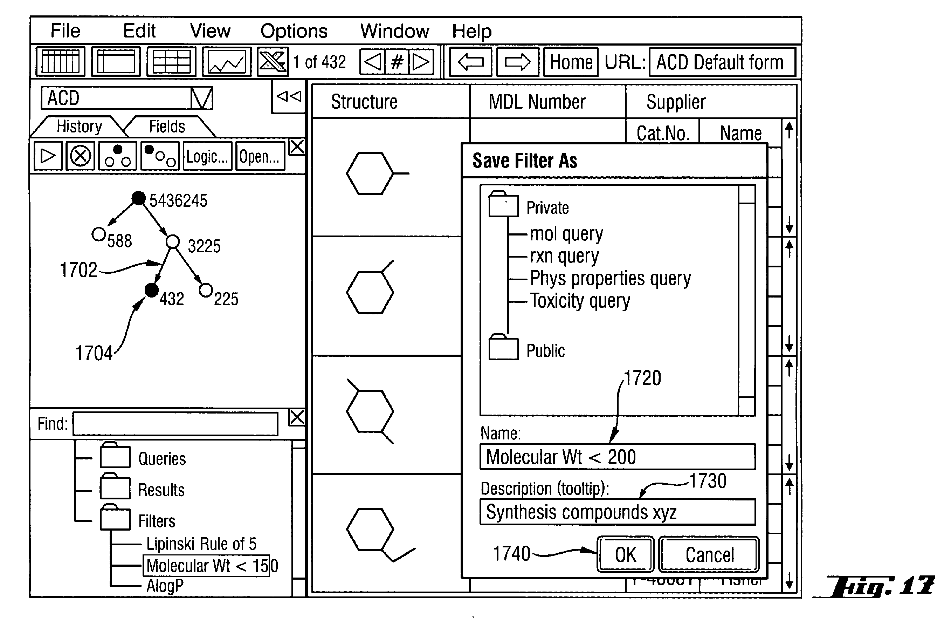

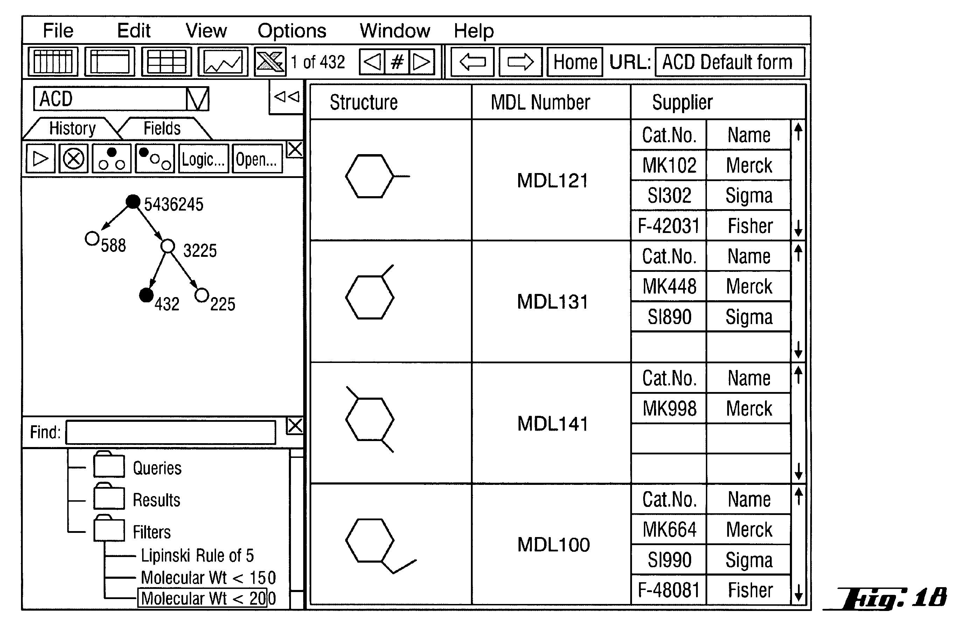

Fig. 13 illustrates a typical search history tree. A description of the search history is included below, and a detailed explanation is included in Appendix C. In an embodiment, VDL Base uses a tree paradigm to represent the queries (arrows) and results (nodes) that the user has completed. In an embodiment, the VDL Base history is highly interactive. For example, users can click on arrows in the tree to navigate to the query forms used to specify those queries. Modifying the query form causes a new arrow to be sprouted that represents the new query. Clicking on a node (e.g., the filled circles in the tree) takes the user to the results form represented by that node. Dragging a query from one node to another node, applies that query to the new node (uses the result set represented by the new node as the search domain for that query). Dragging a node onto another node allows the user to use "list logic" to create a new result set from the two original result sets. For example, a popup window may request the type of action a user desires. In one embodiment, a user can right-click on nodes or arrows to operate on the queries or result sets they represent (e.g. save the form, export the result set, save a branch, rename, change the description, etc.)

In an embodiment, the search history graph records and structures queries and other recordset producing operations, the results of these operations, and the relationships between them. It displays them in graphic form and allows the user to view and manage them. It typically is associated with a display pane, which it uses for displaying selected recordsets and queries. In one embodiment, multiple search panes each containing a search tree (or search elements) are available for a user to apply an existing node (results) or edge (query) onto a displayed node. For example, a node on one search screen can be dragged and dropped onto a node in a separate search screen. In this way, users can drag and drop search elements within and also between windows, panes, or search screens. Search elements can include filters, queries displayed as an arrows or elements in the library, results of pervious queries displayed as nodes or an elements in the library, etc.

In an embodiment, the visual display of the search history is a directed graph consisting of nodes connected by edges. Nodes can represent search results (lists or recordsets) and edges can represent operations that generate new lists (queries other operations). Both nodes and edges can be active UI objects. Nodes present affordances for recordset operations such as revisiting a result set and starting a new search. Edges present affordances for query operations.

The Search History Graph can consist of a control bar on top and a display area below. It can have an associated Display Pane, typically to the right, which is used for displaying selected items. The display shows the network of nodes and edges. One node or edge may be *selected,* in which case it is graphically highlighted. Multiple selection is not supported.

Additionally, the search history can implement a menu with menu items such as Save, Save As, Cut/Copy/Paste, should be applied to the selected object when appropriate.

As will be recognized, there may be more than one root node. Typically, the search history will start with a single root node that represents a data source. The single node can, however, also represent a result set from a search query. The display is laid out automatically, and reconfigures itself when nodes and edges are added or deleted. In an embodiment, manual layout mechanisms are also provided.

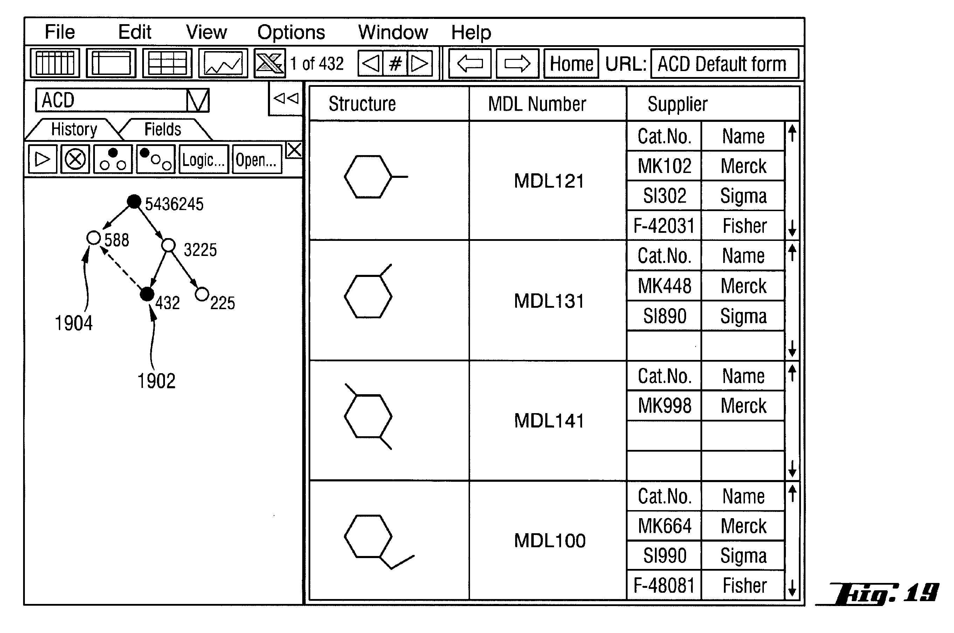

Figs. 14-21 illustrate typical user interface windows during form design. As shown, during visual form design, a user can drag and drop various components, parts, pins, wires, etc. (as described above) onto a form. The corresponding methods and functions are implemented using the systems and methods described.

As shown in Fig. 14, a form is displayed, whereby a user is presented with a search tree in window 1402. The results displayed in window 1402 come from a previous user search. A user may drag a search element from a library of search elements onto a node or an arrow in a search tree to perform a new search. Such search elements can include filters, queries (displayed as an arrow or an element in the library), results of pervious queries (displayed as a node or an element in the library), etc. For example, a user may drag a molecular weight filter (box 1410) onto element 1408, to further filter the results. By way of another example, a user may drag a predefined query from the library onto a node to further filter the results. By way of yet another example, a user may drag a result from the library onto an arrow representing a search query. As will be recognized, a new result node or a new search query can be added to the search element library such that it is available to be accessed by a user.

As described in connection with Fig. 19, search elements can also include nodes representing search results and arrows representing search queries that are already displayed on the search tree. In one embodiment, a user can actively modify a search tree by dragging and dropping search elements that are displayed on the screen. In another embodiment, a user can actively modify a search tree by dragging and dropping elements from a library of search elements.

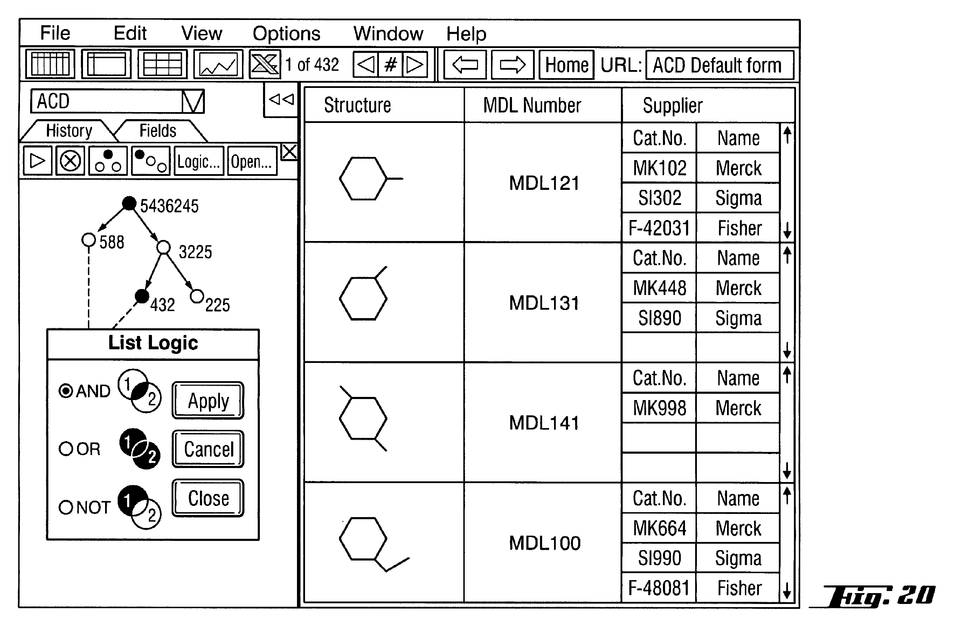

Fig. 15 illustrates that a new arrow 1502 has been formed representing the search modifier, and a new result node has been generated 1504.

As illustrated in Fig. 16, a user may click on an action (arrow) to modify search criteria. For example, the user may modify the molecular weight filter (1602) to <200 and click the run filter button 1603.

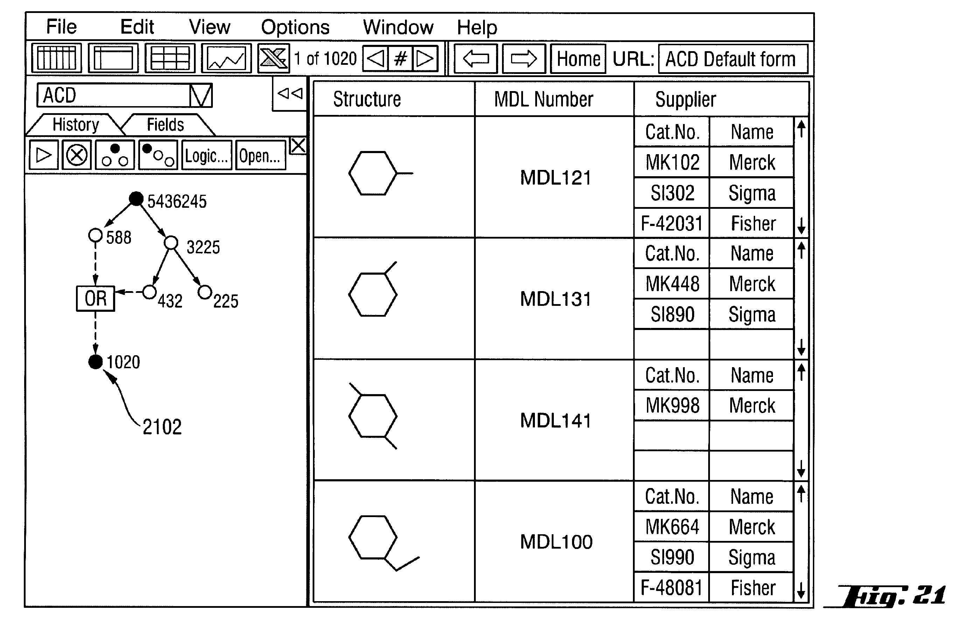

Fig. 17 illustrates the result of modifying the filter. As shown, arrow 1702 representing a new action and node 1704 representing new results have been generated. The results can be saved as shown by specifying a name (1720), description (1730), and clicking an "ok" button (1740). Fig. 18 illustrates the results of applying the new filter as described in Fig. 17.

Fig. 19 illustrates the effect of a drag and drop from one node to another node. As shown, the result node 1902 is dragged onto result node 1904. As described above, the system recognized that the user wishes to combine the results of the two nodes, and accordingly requests the type of combination the user wishes in Fig. 20. As shown in Fig. 21, the user has chosen to OR the results, yielding a new result node 2102. As will be recognized, the numbers presented with the result nodes indicate the number of entries corresponding to that node. That is, for node 1902, there are 432 results items, and for node 1904, there are 588 items. When these results are OR'ed, there are 1020 result items, as indicated in Fig. 21.

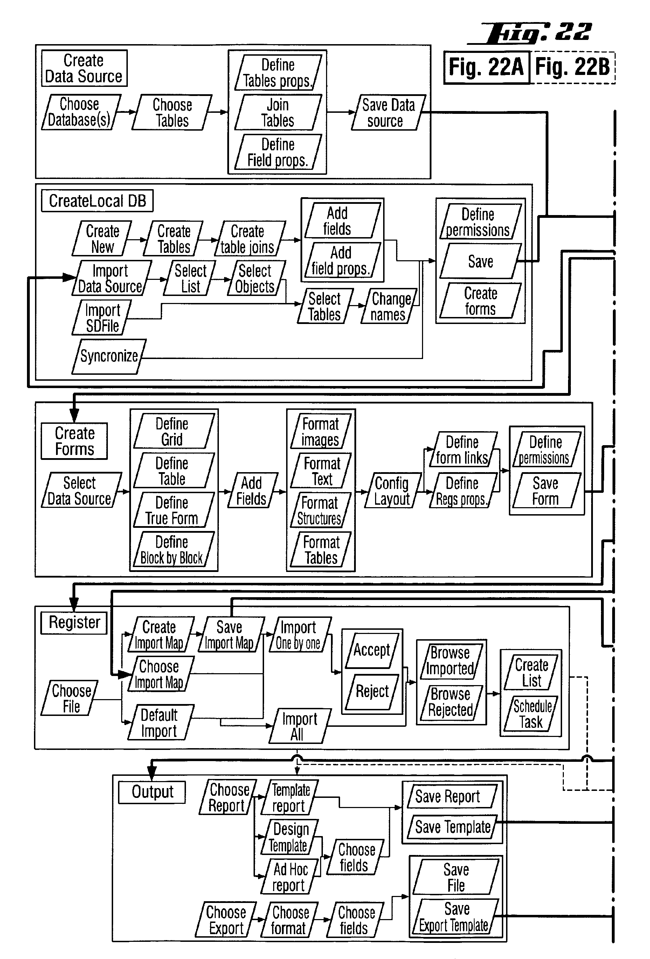

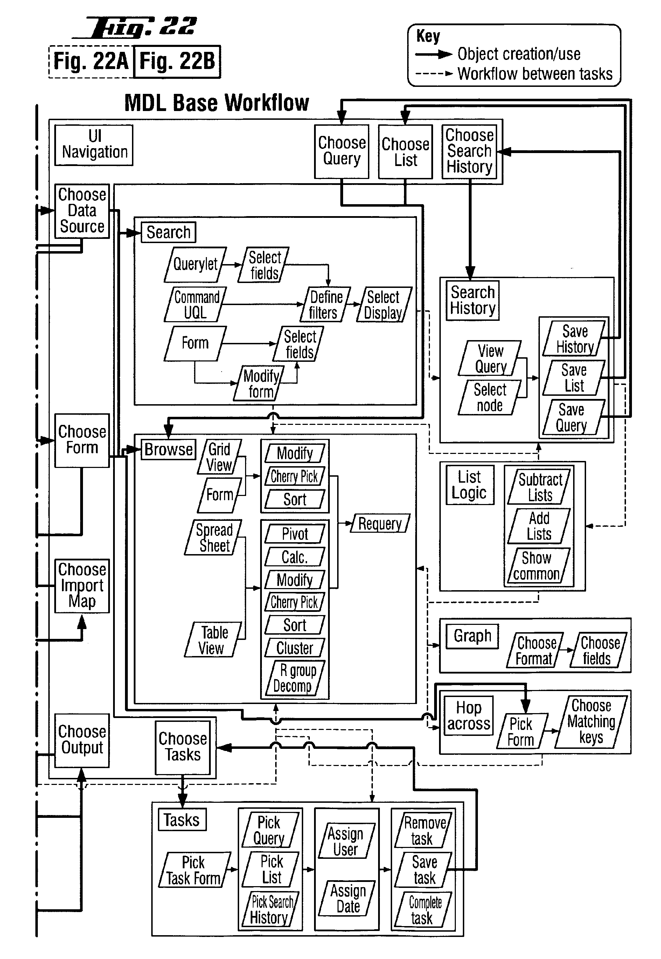

Fig. 22 illustrates a typical VDL workflow. As shown, a workflow may encompass a variety of workflow elements, including creating data sources, creating databases, creating forms, registering, output, UI navigation, search history, list logic, Graphs, Tasks, Searching, and Browsing. Additionally, flow may Hop Across elements to achieve a more efficient result.

In an embodiment, the class elements, methods, functions, etc., are implemented as illustrated in Appendix A. In an embodiment, the present systems and methods are designed in accordance with the functional specification included as Appendix B.

A further description of various embodiments is provided in Appendix D. Other embodiments will be apparent by those skilled in the art.

For ease of discussion, functions of components may be described independently. Although components and their functions may be described independently, one skilled in the art will recognized that one component may be operable to perform the functions of any number of components. For example, where it is described that one component may be with an exposed first attribute, and a second component may be with an exposed second attribute, it should be recognized that one component may be operable to expose both the first and second attributes.

While the present invention has been illustrated and described above regarding various embodiments, it is not intended to be limited to the details shown, since various modifications and structural changes may be made without departing from the spirit of the present invention. Additionally, although above descriptions are mostly directed to embodiments where .NET is used, one skilled in the art will recognize that the invention is not limited to such embodiments, and may be used on any number of platforms. Without further analysis, the foregoing will so fully reveal the gist of the present invention that others can, by applying current knowledge, readily adapt it for various applications without omitting features that, from the standpoint of prior art, fairly constitute essential characteristics of the generic or specific aspects of this invention.

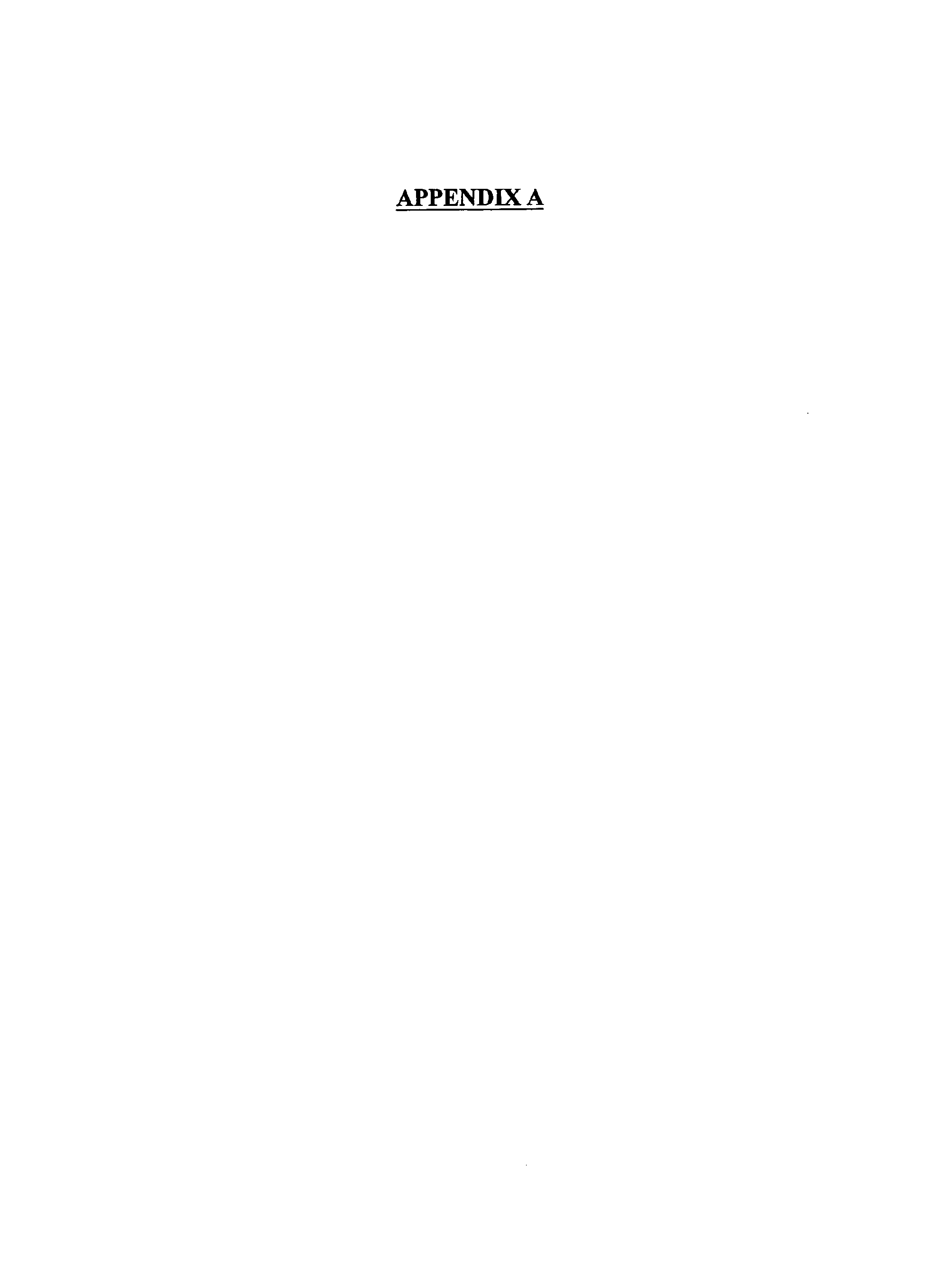

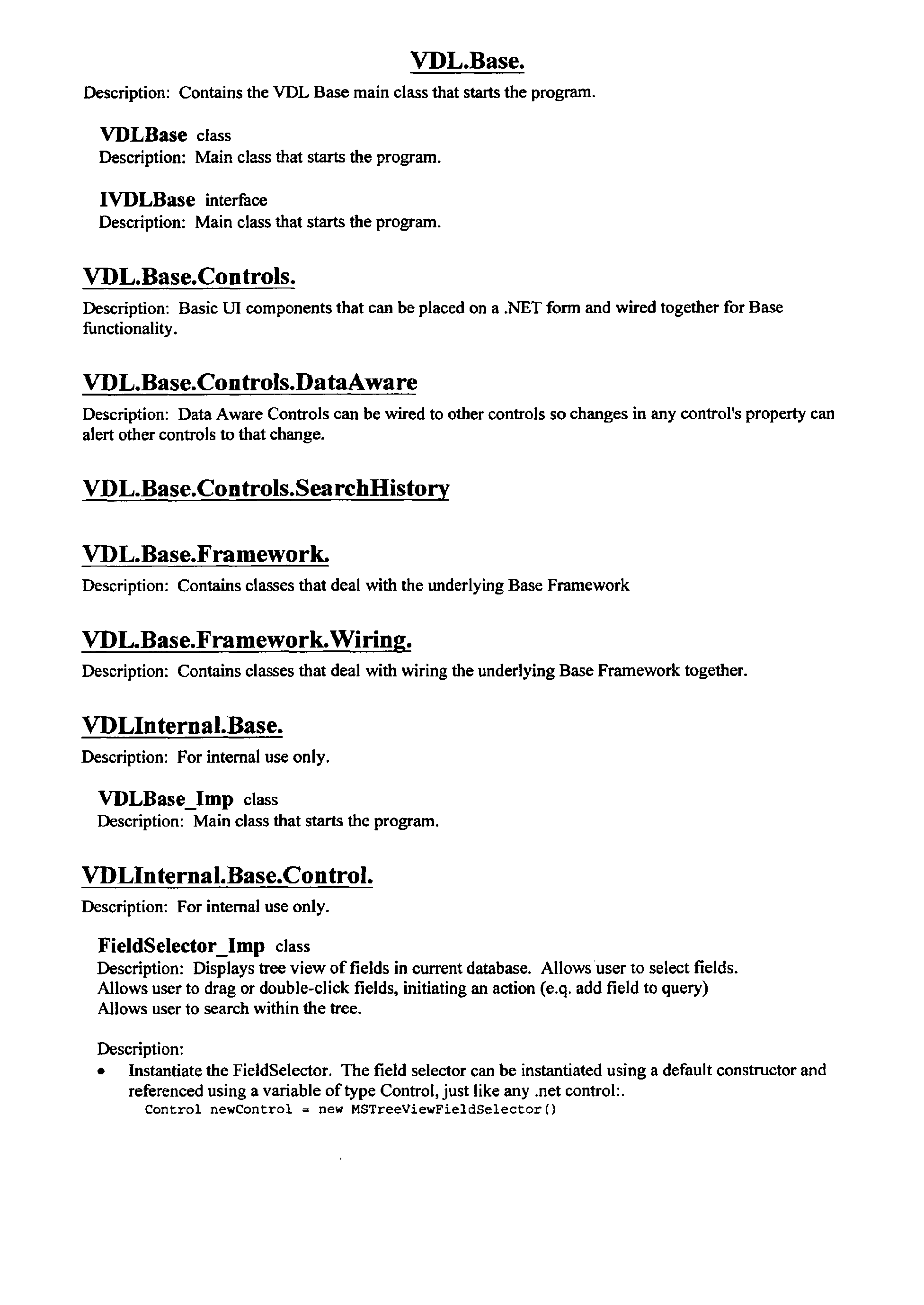

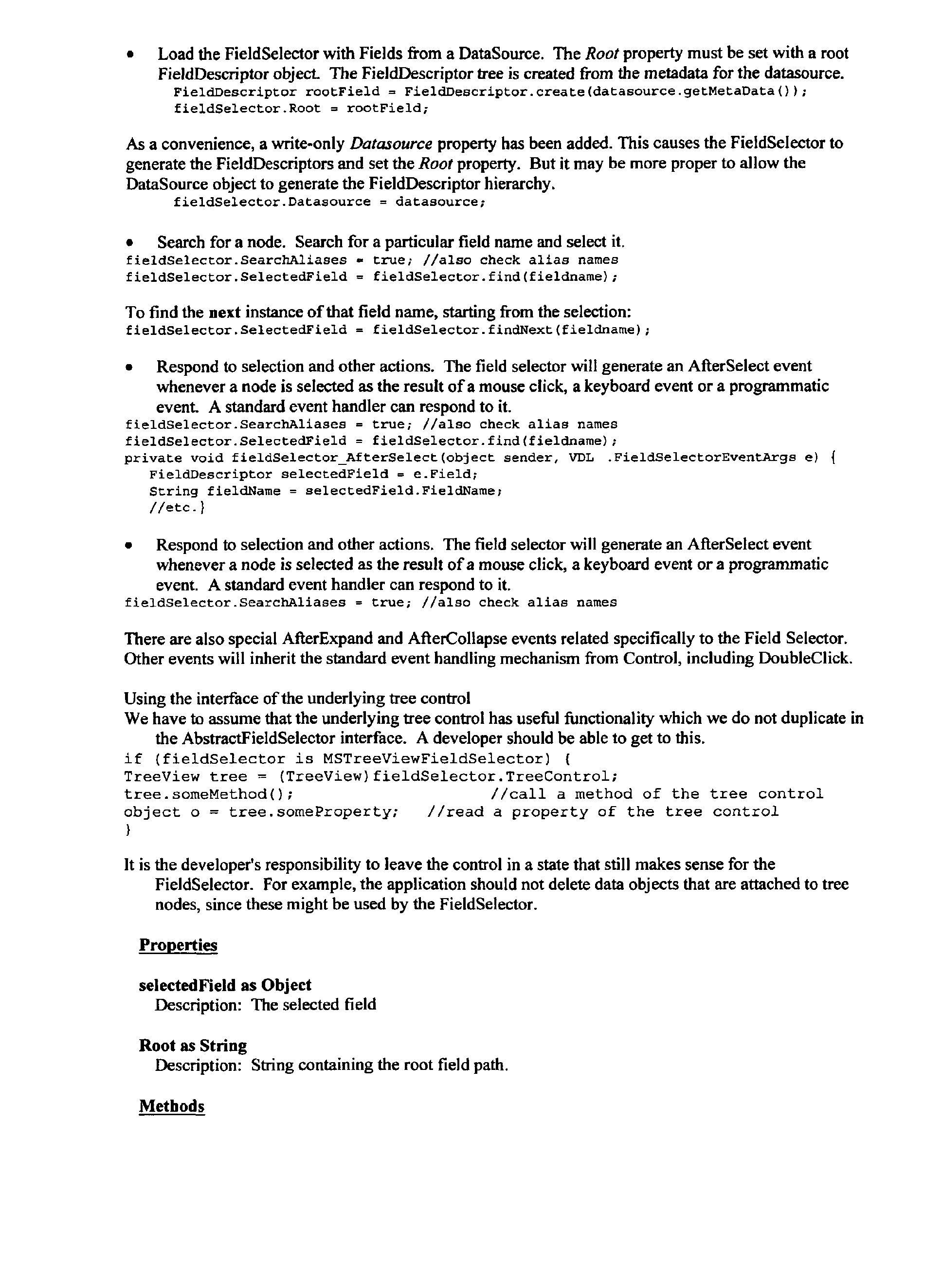

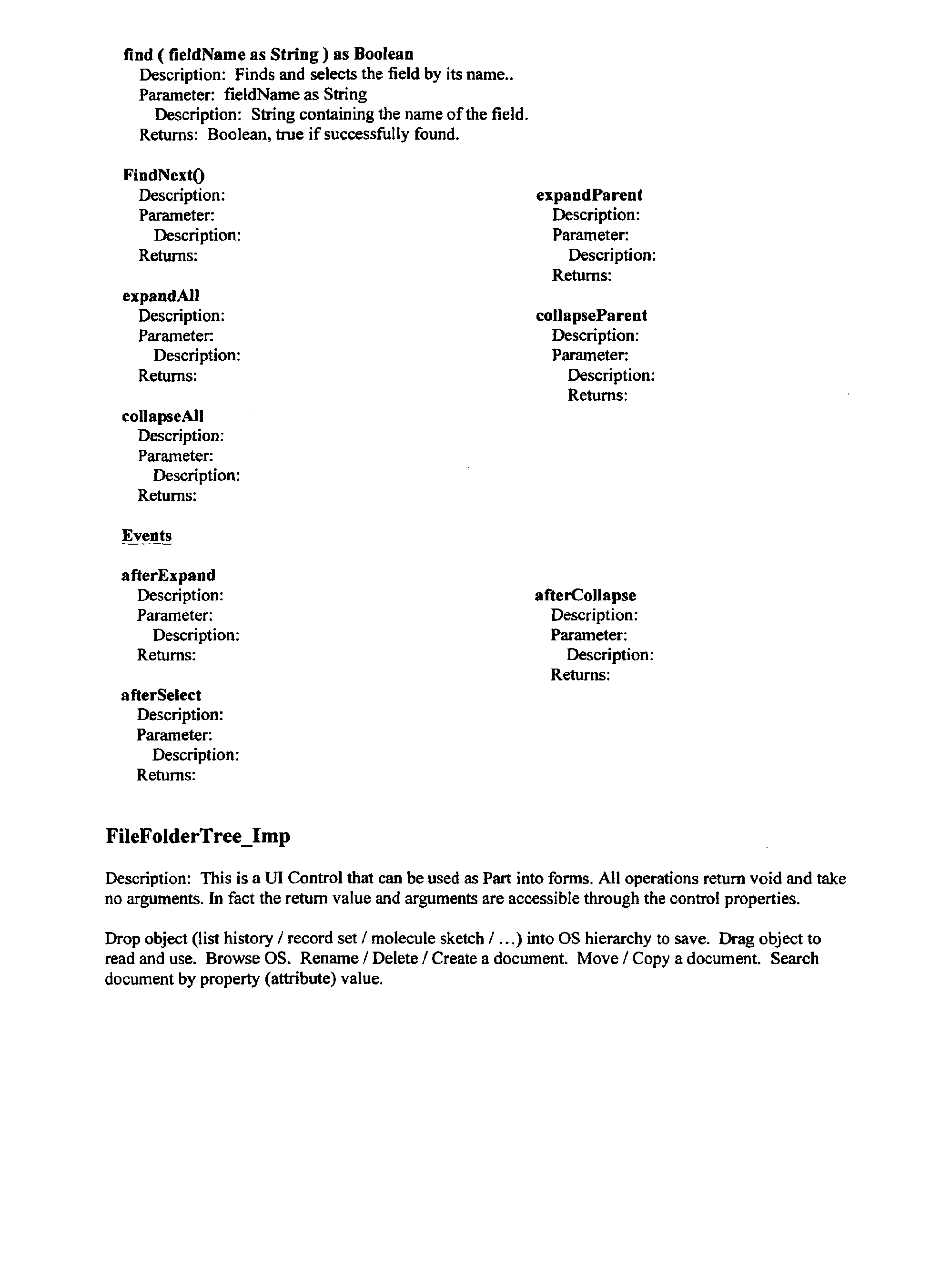

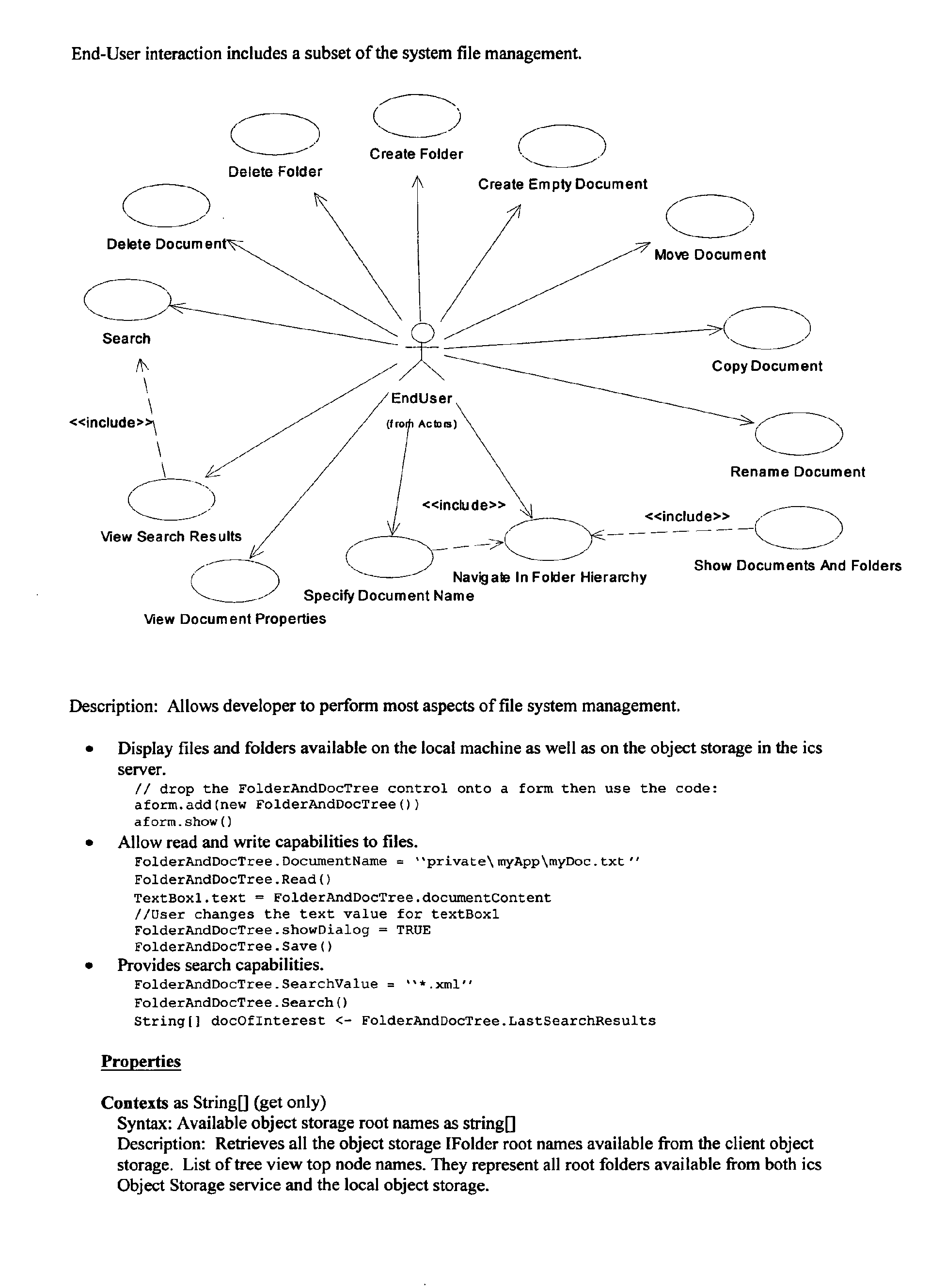

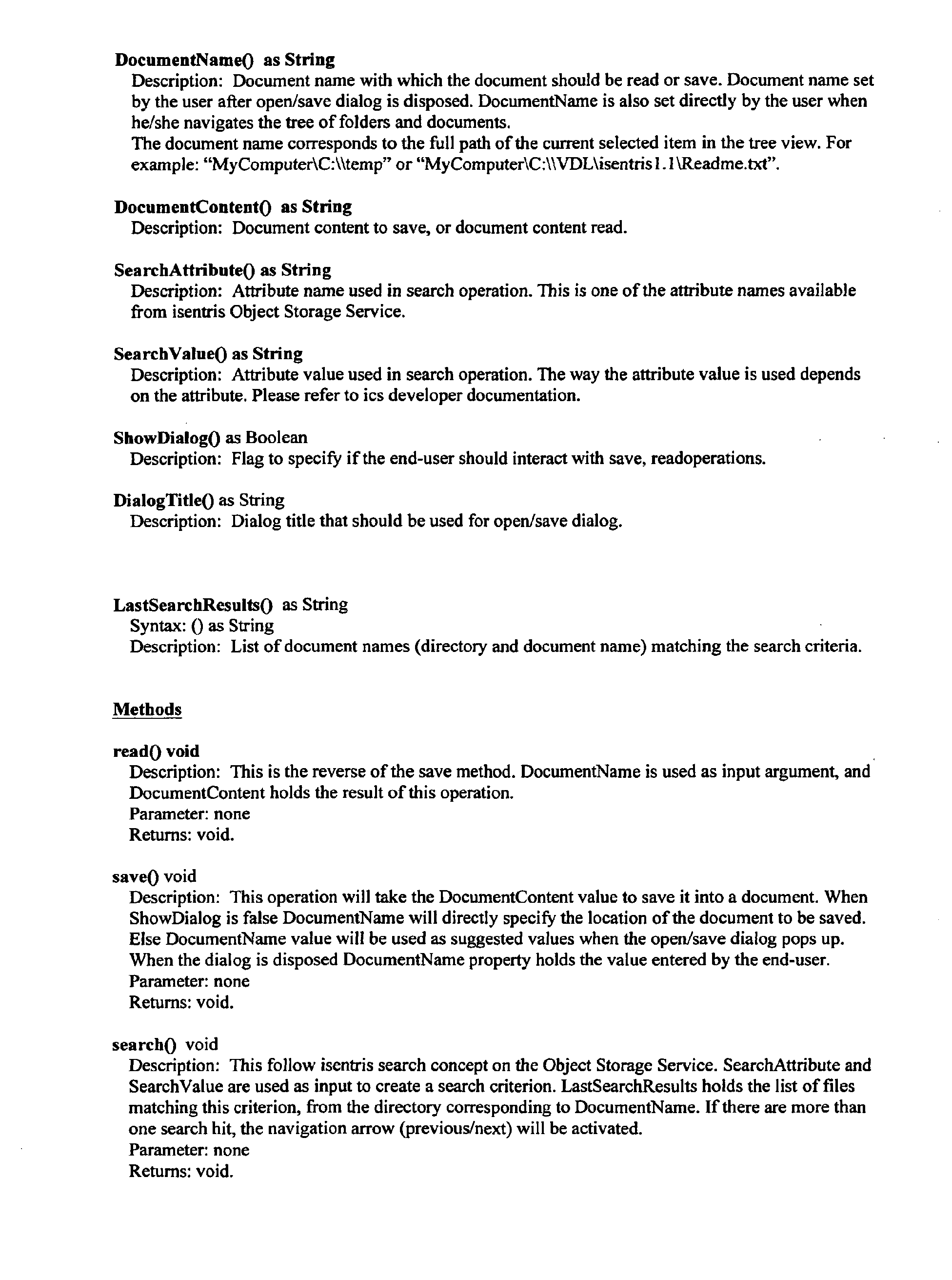

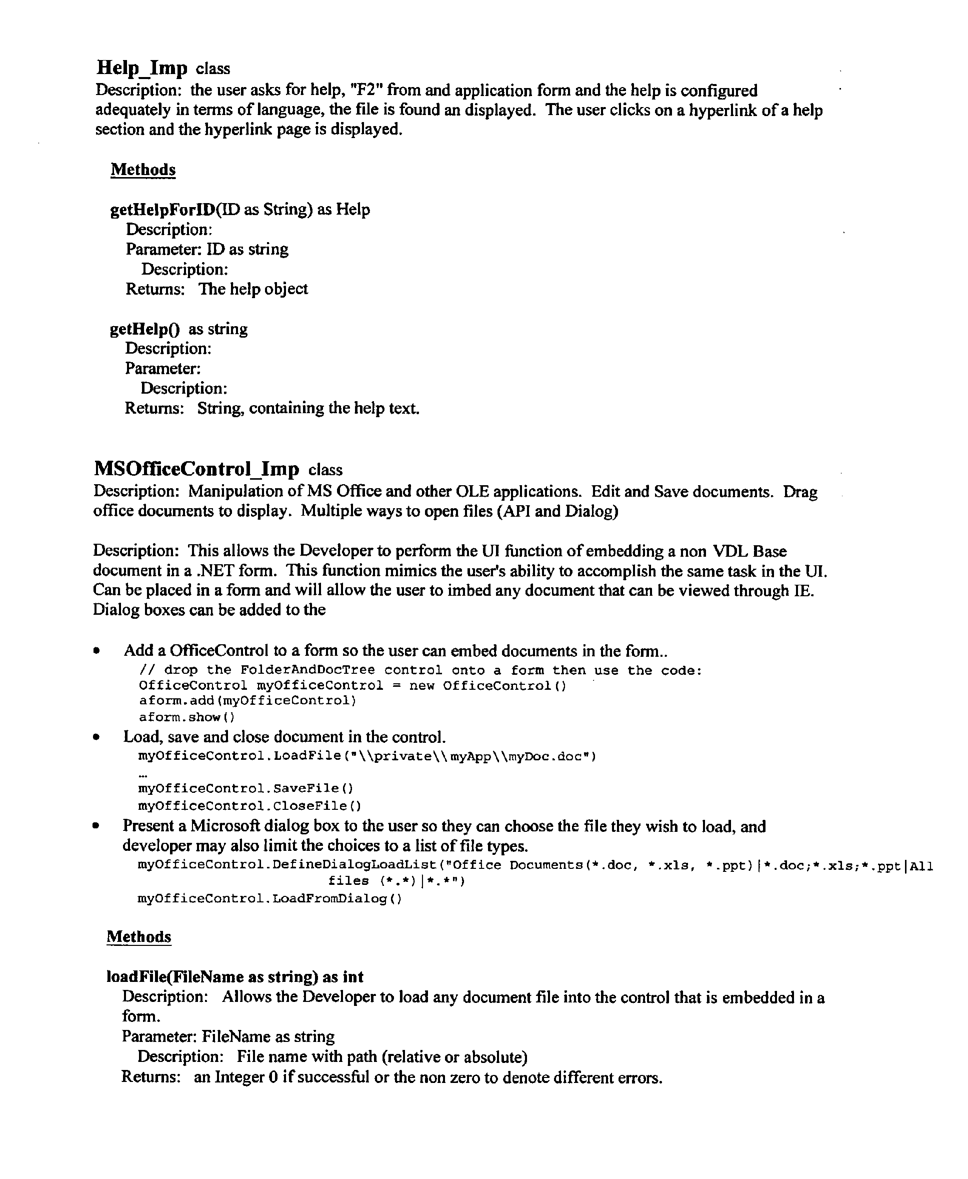

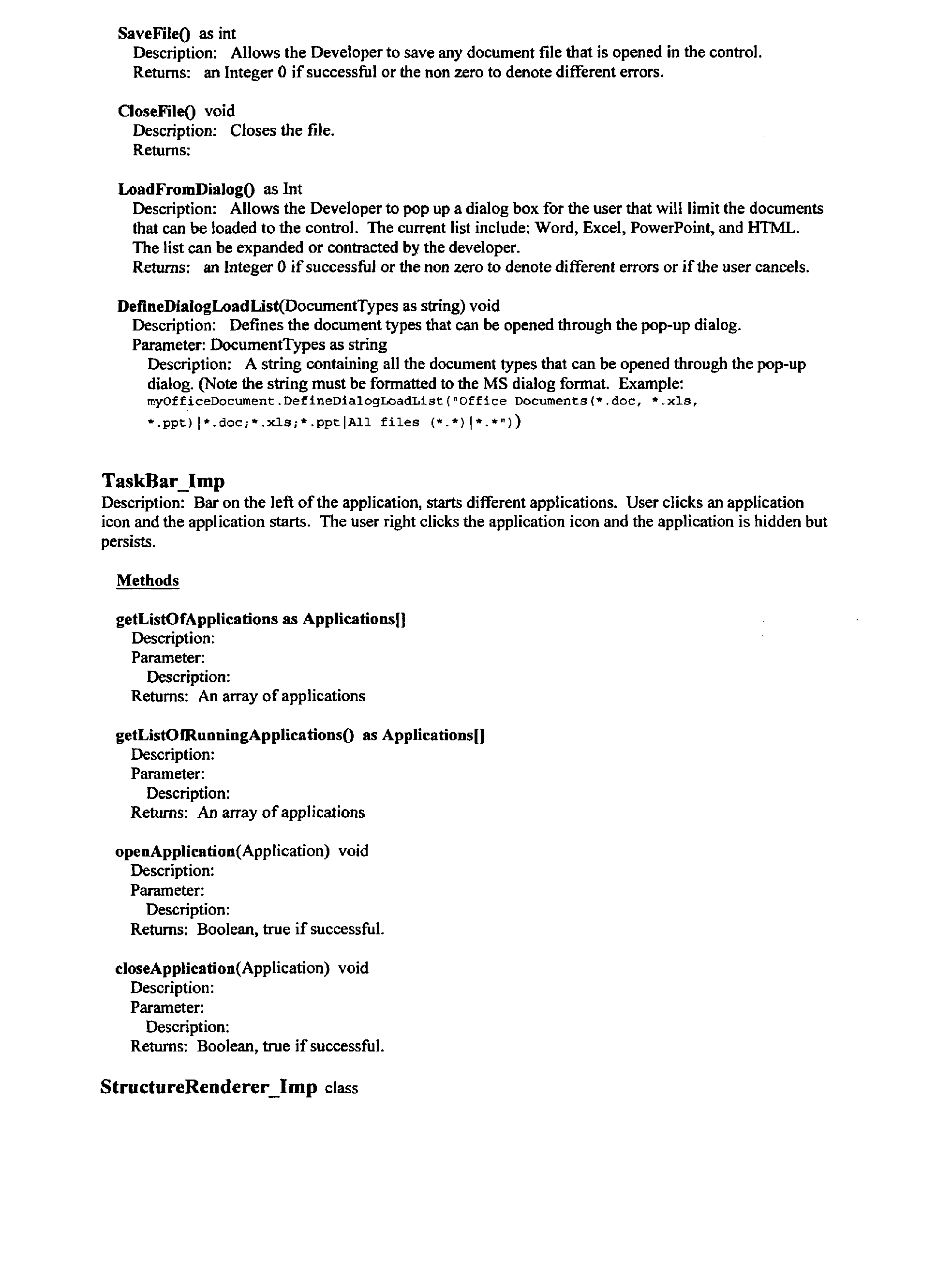

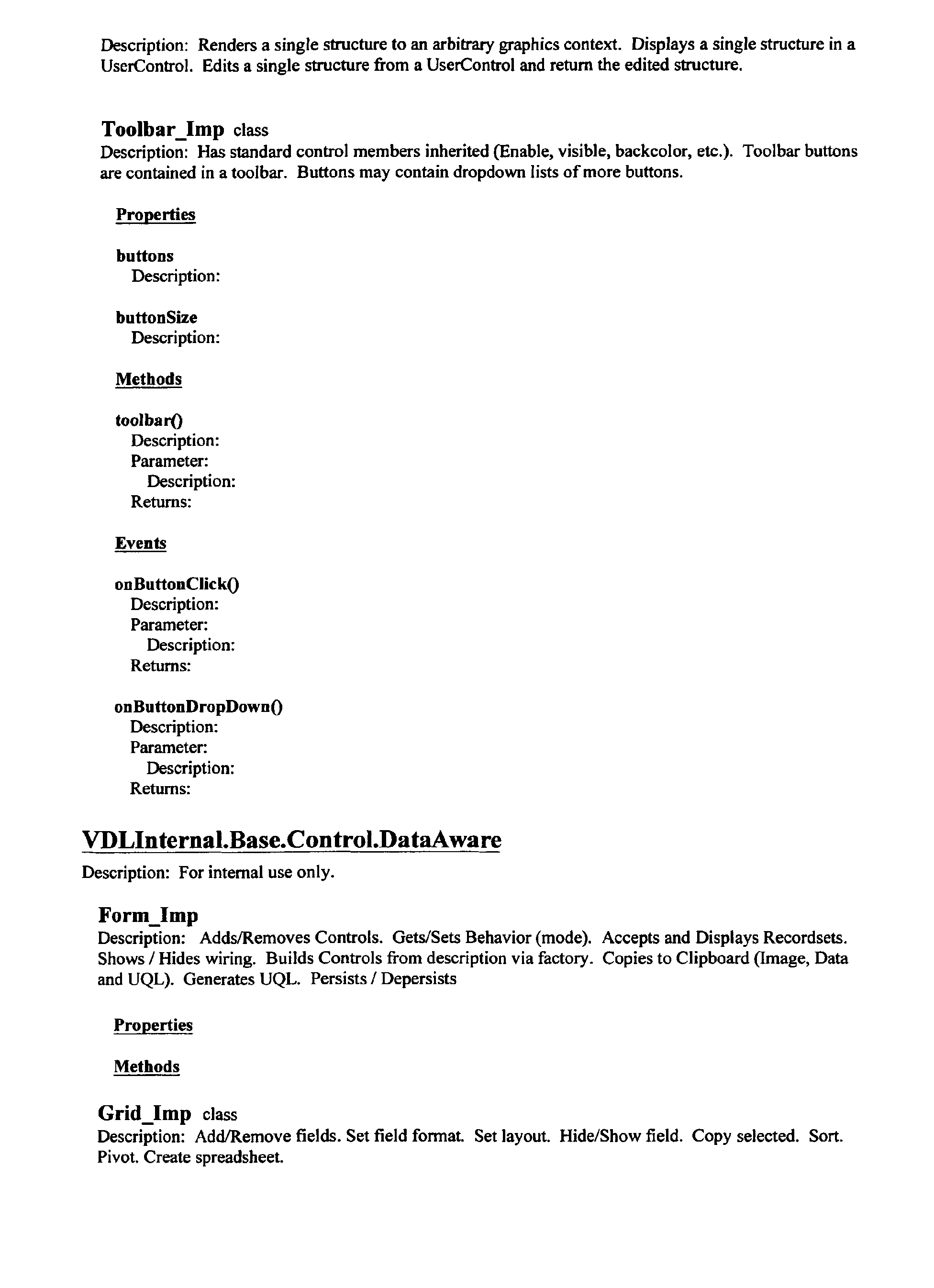

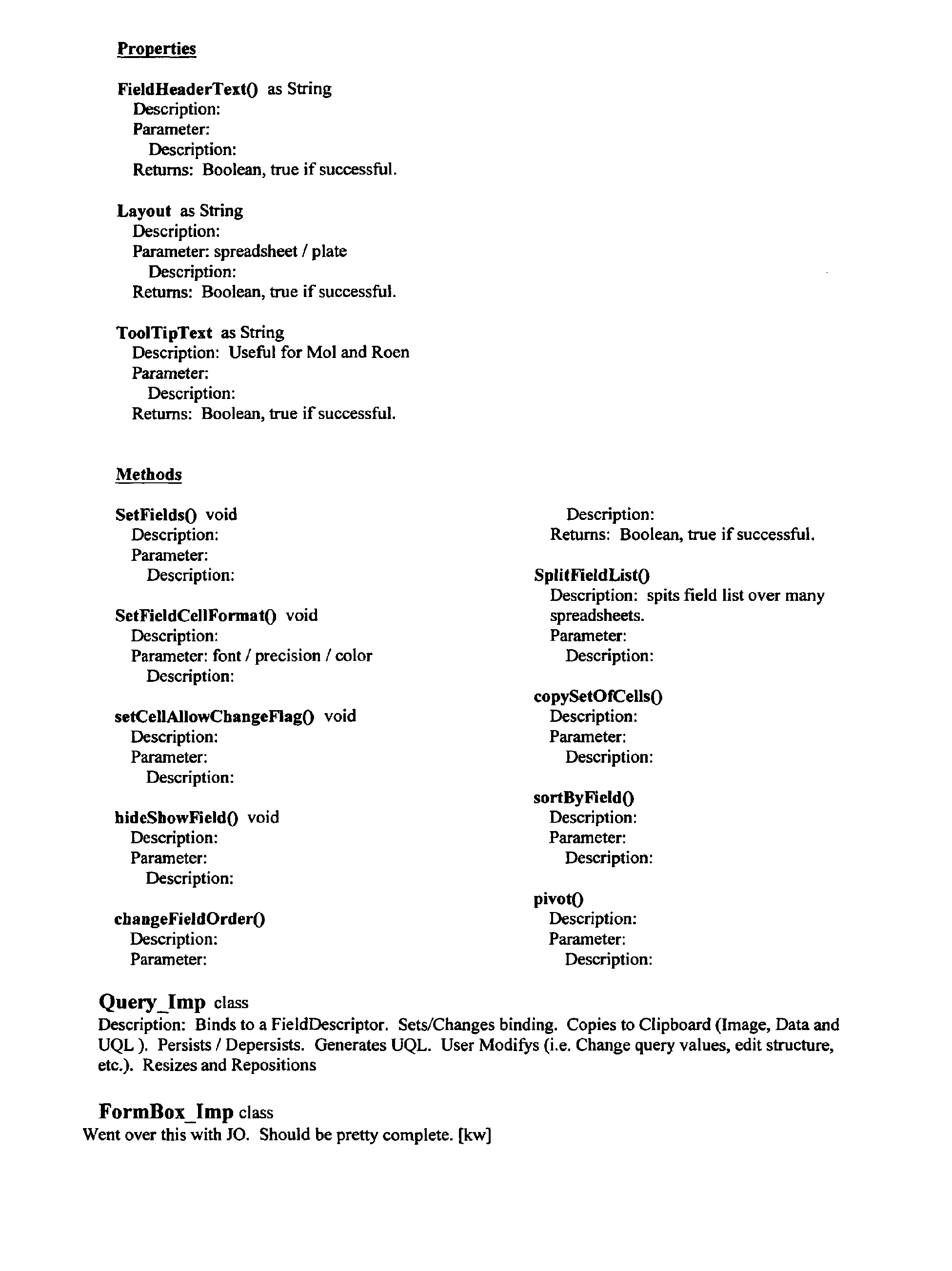

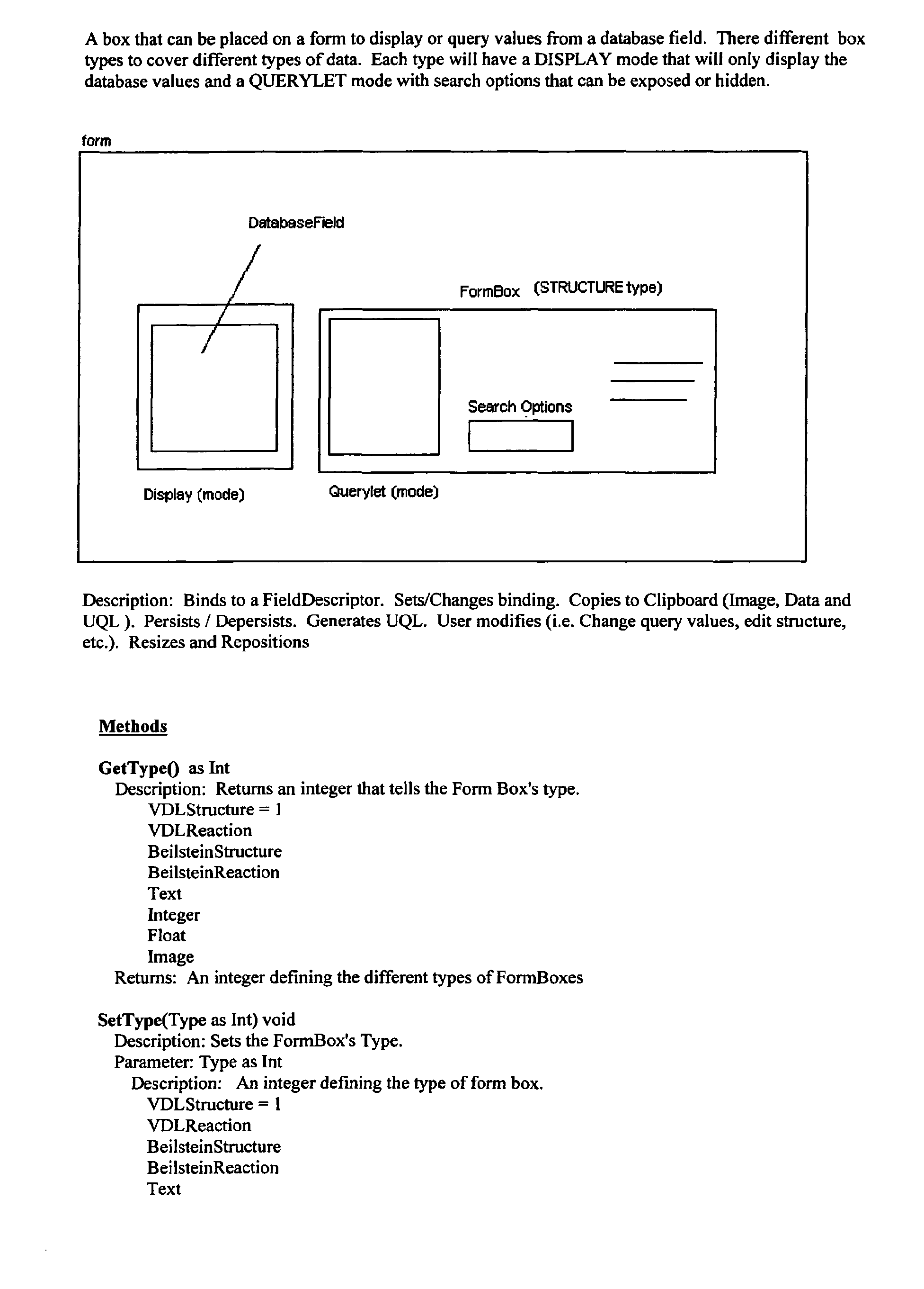

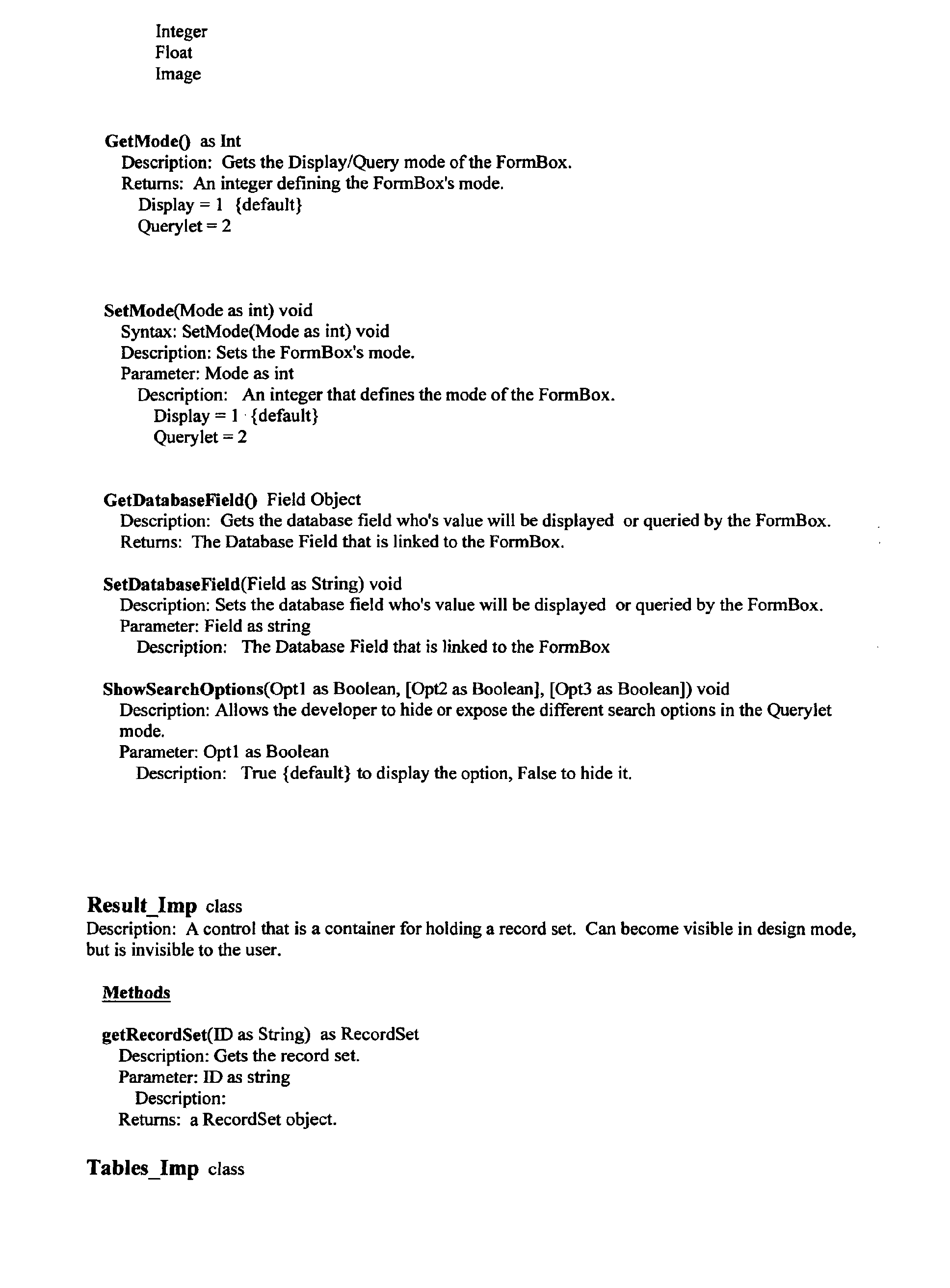

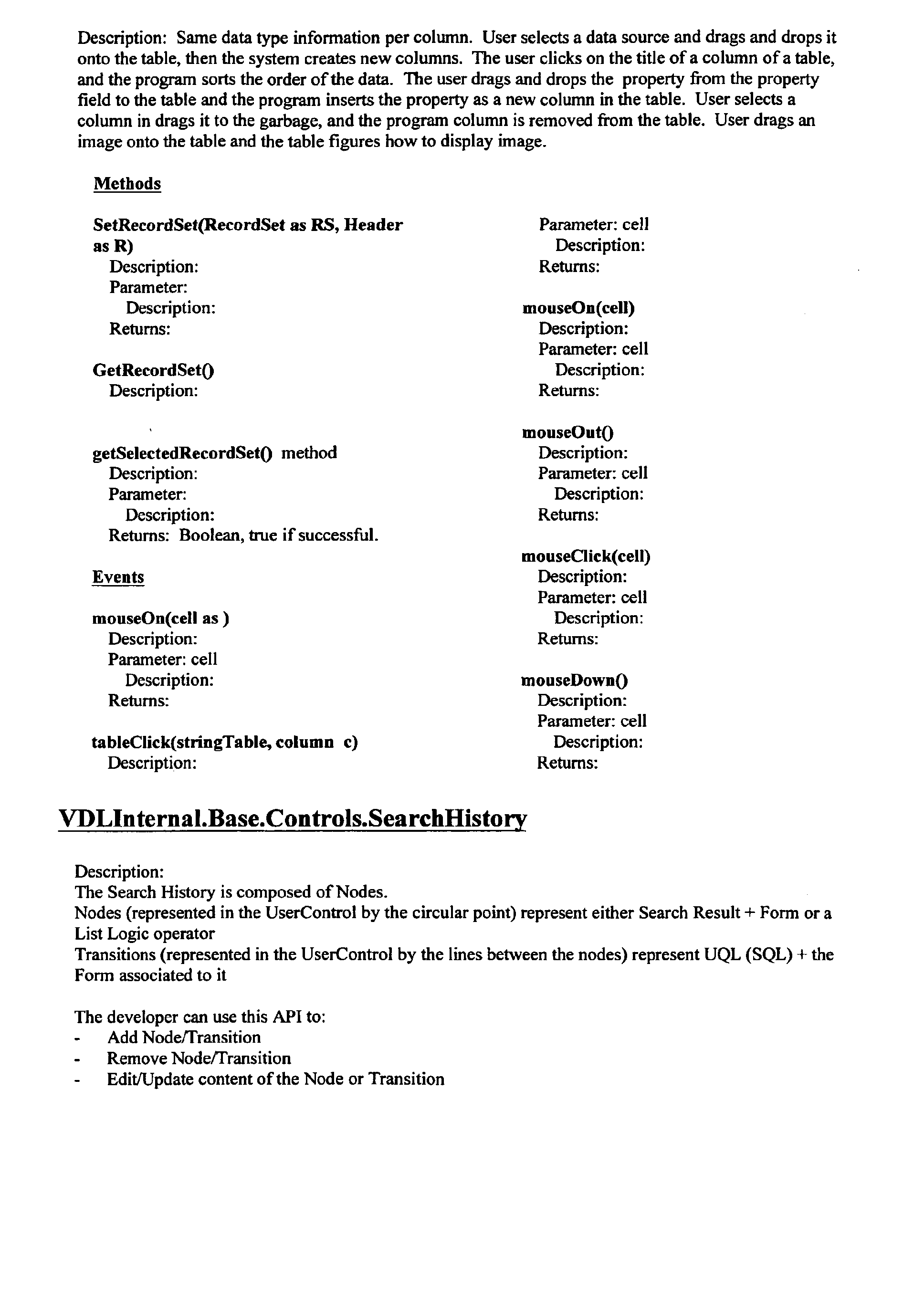

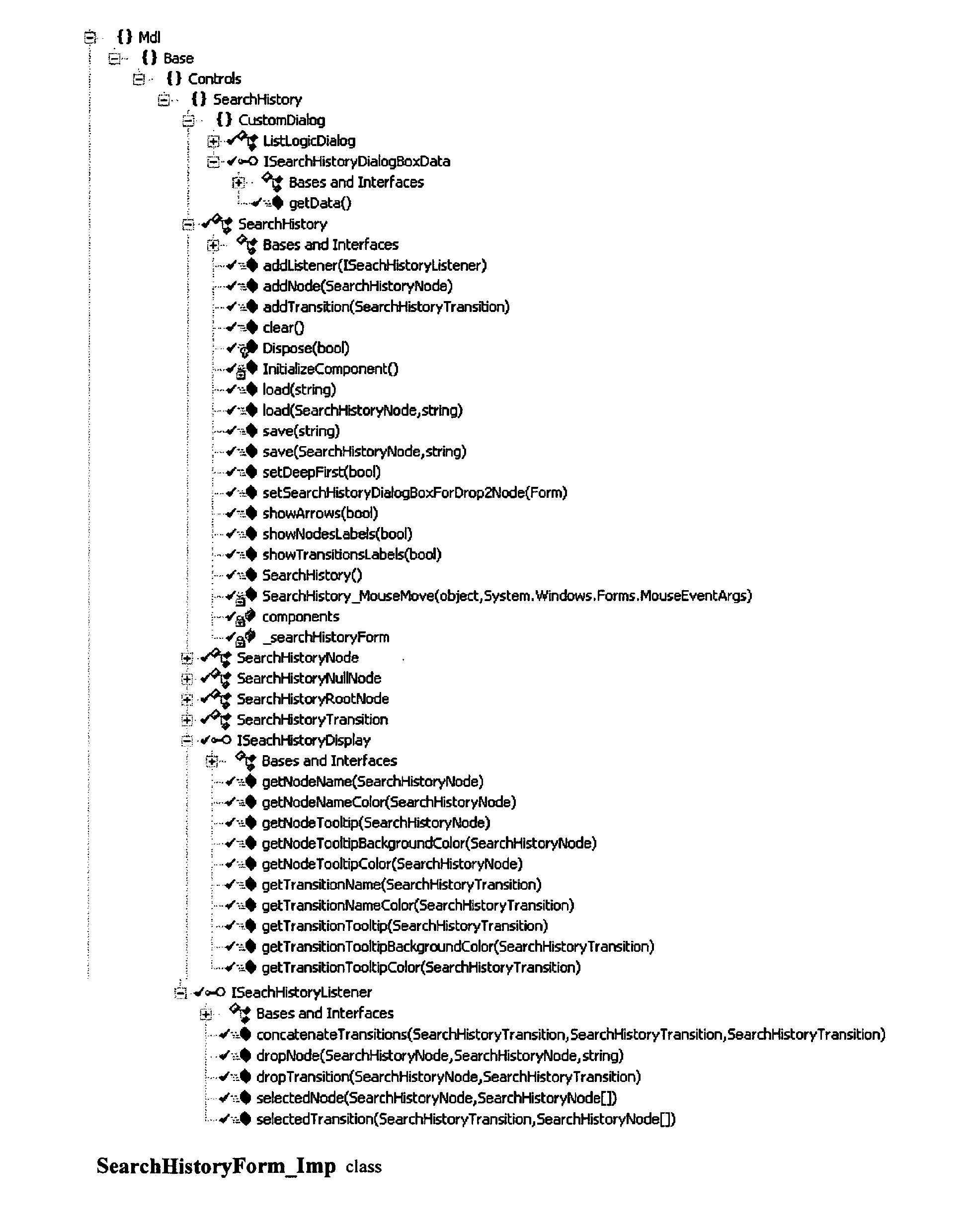

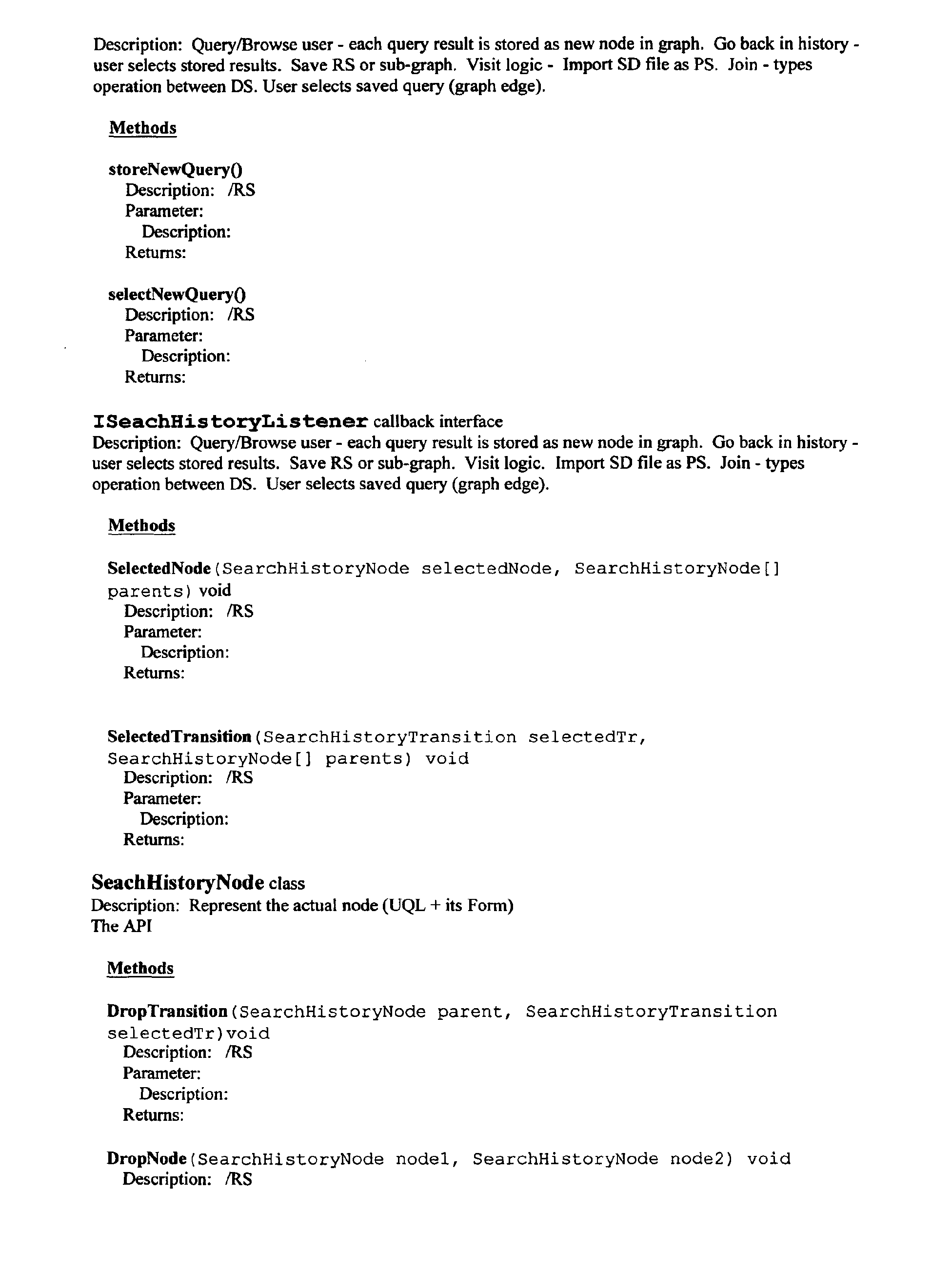

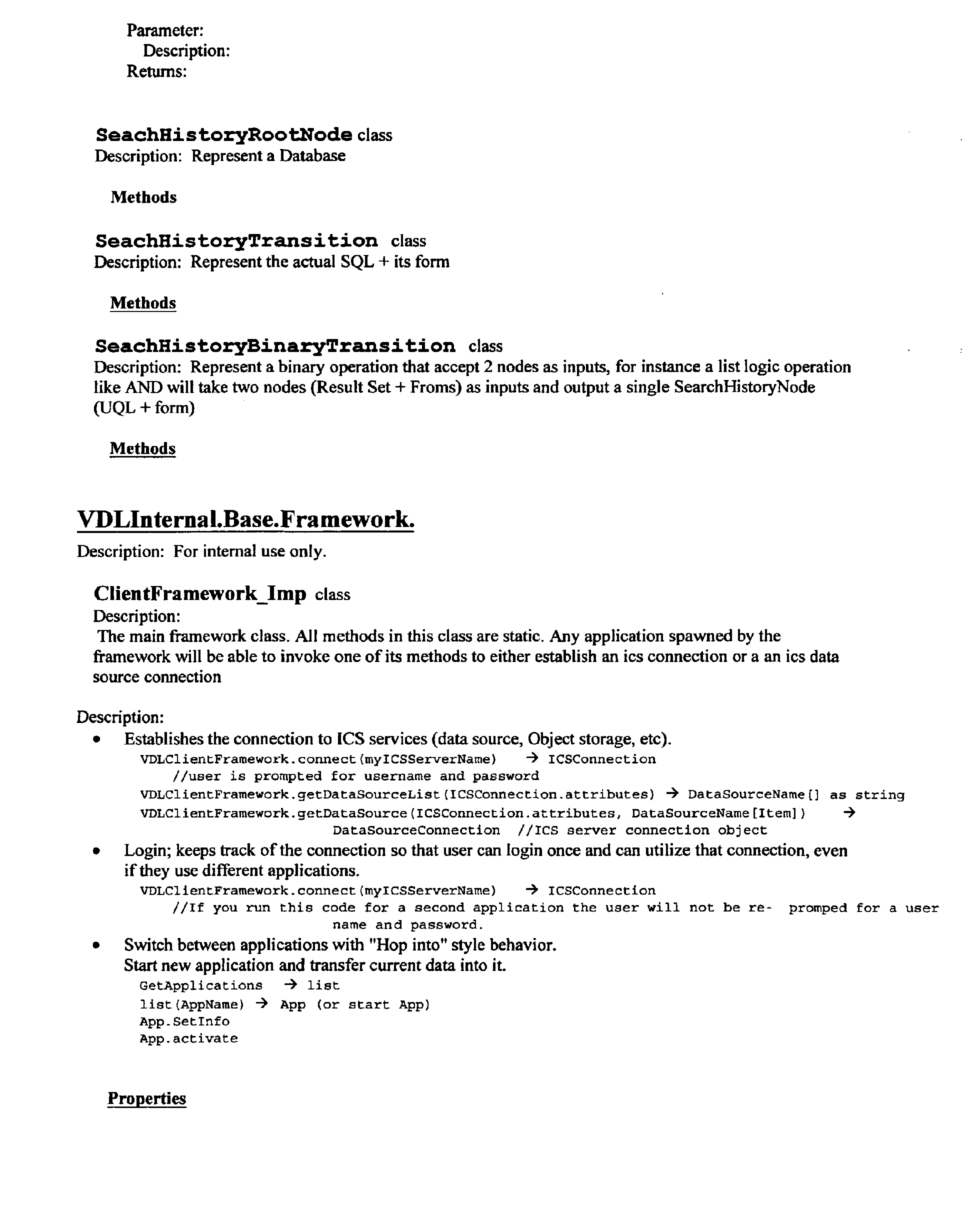

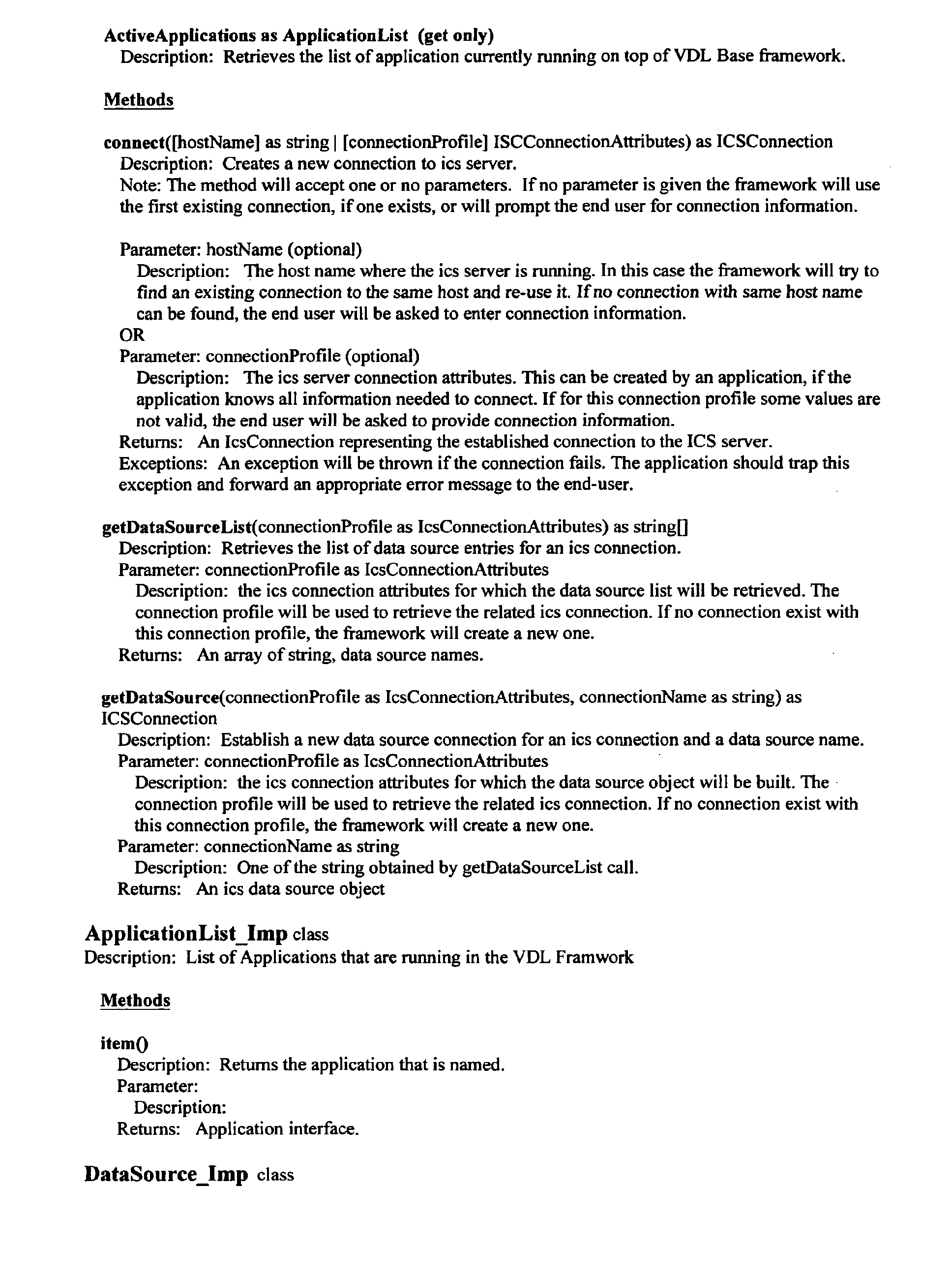

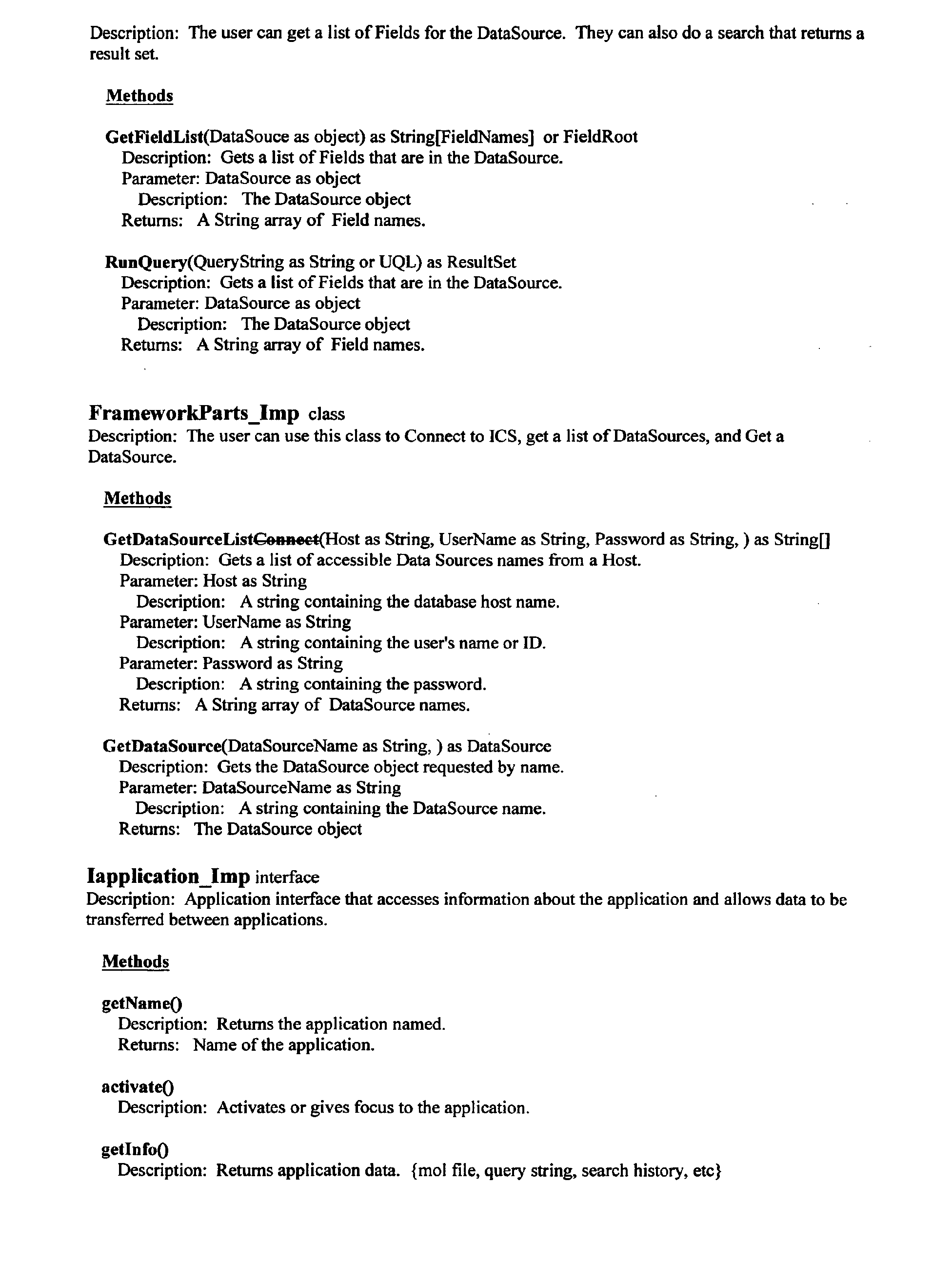

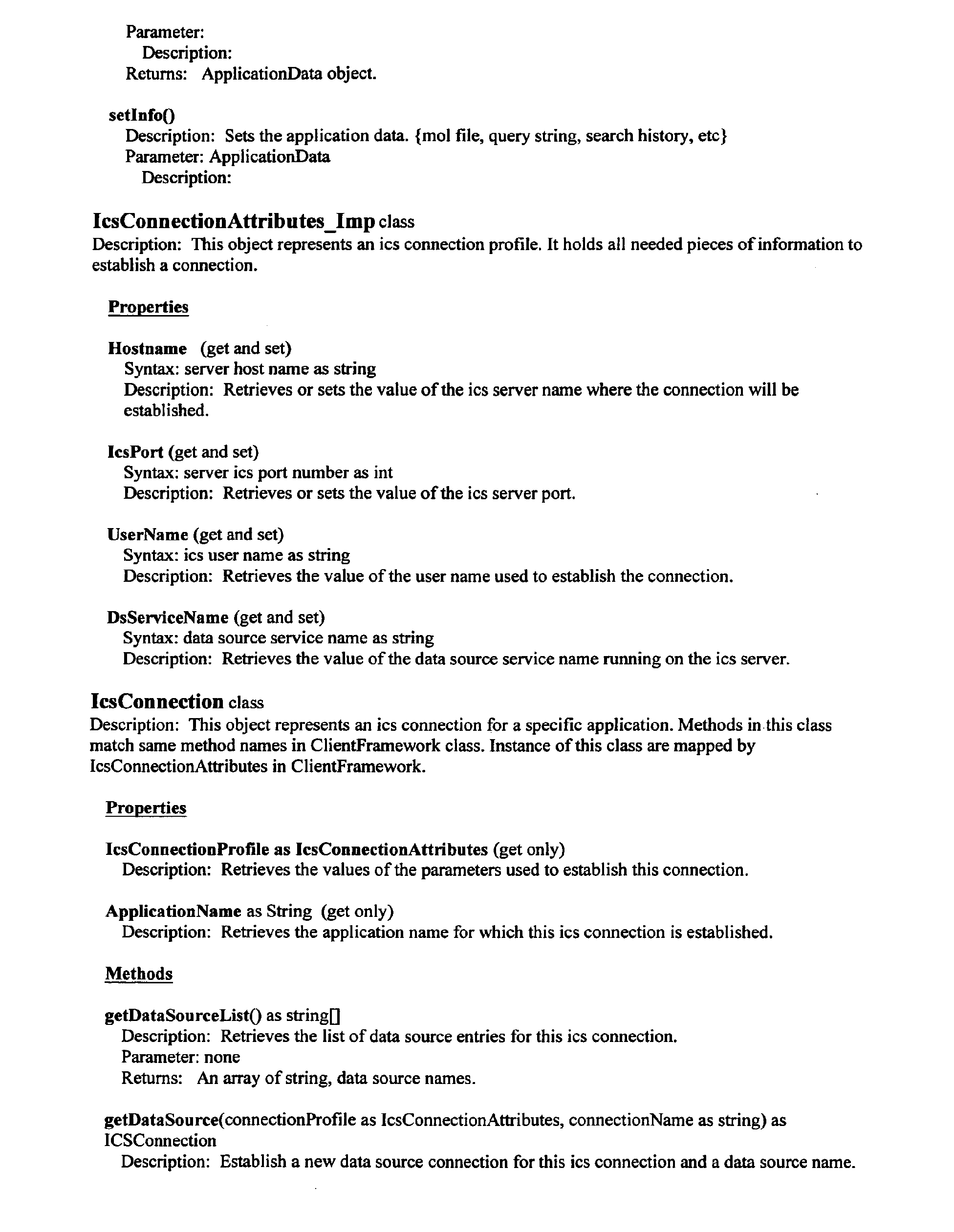

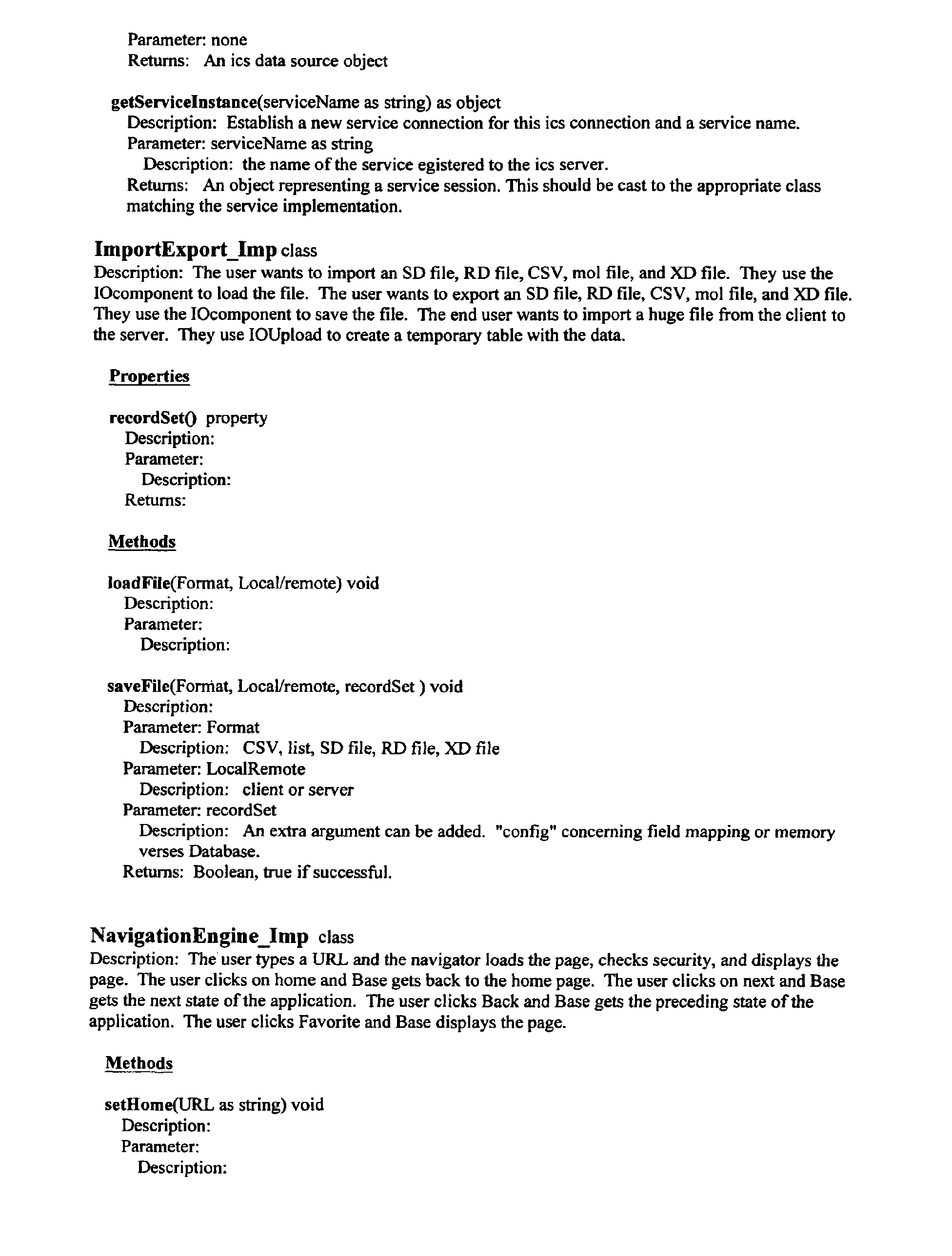

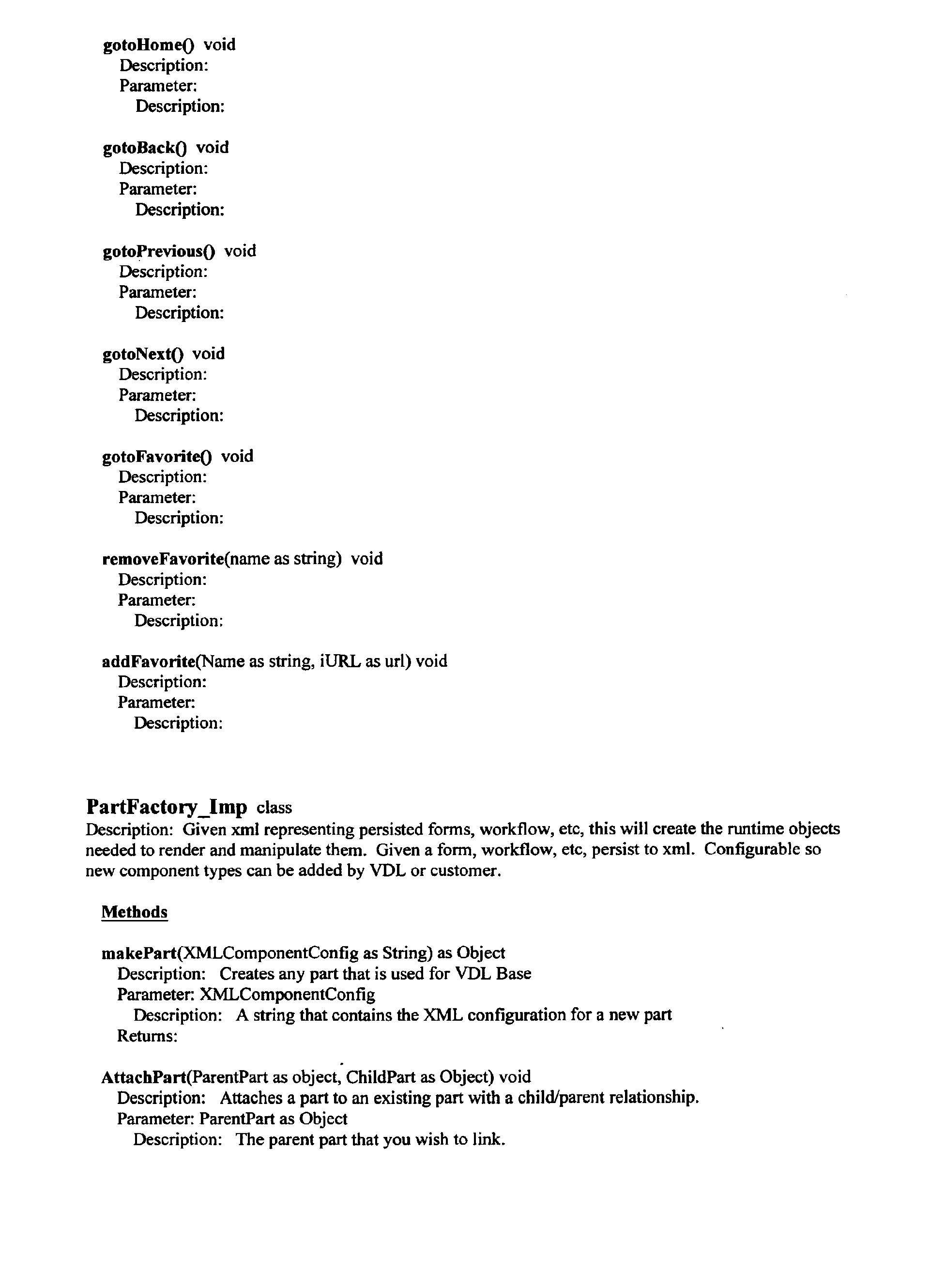

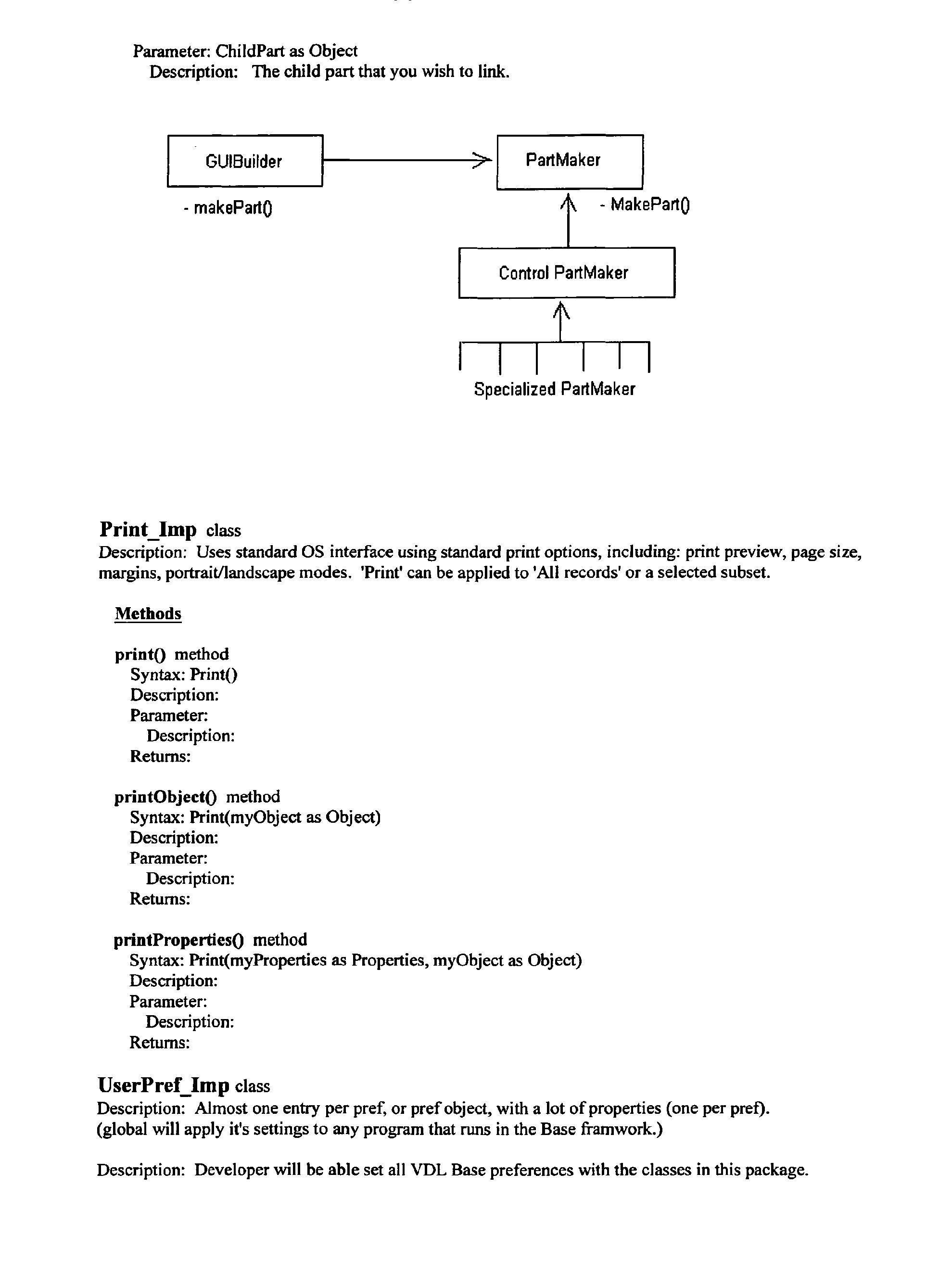

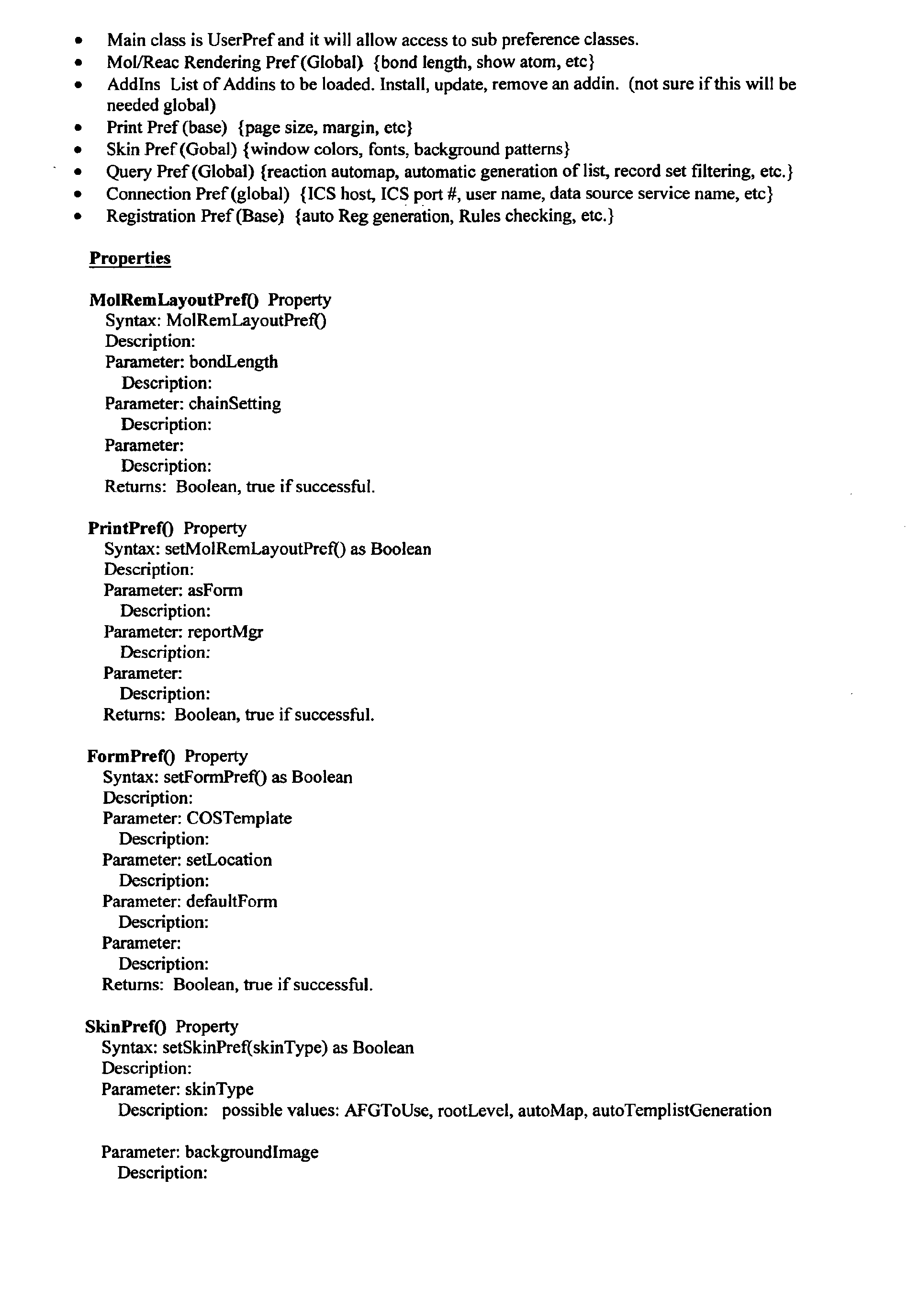

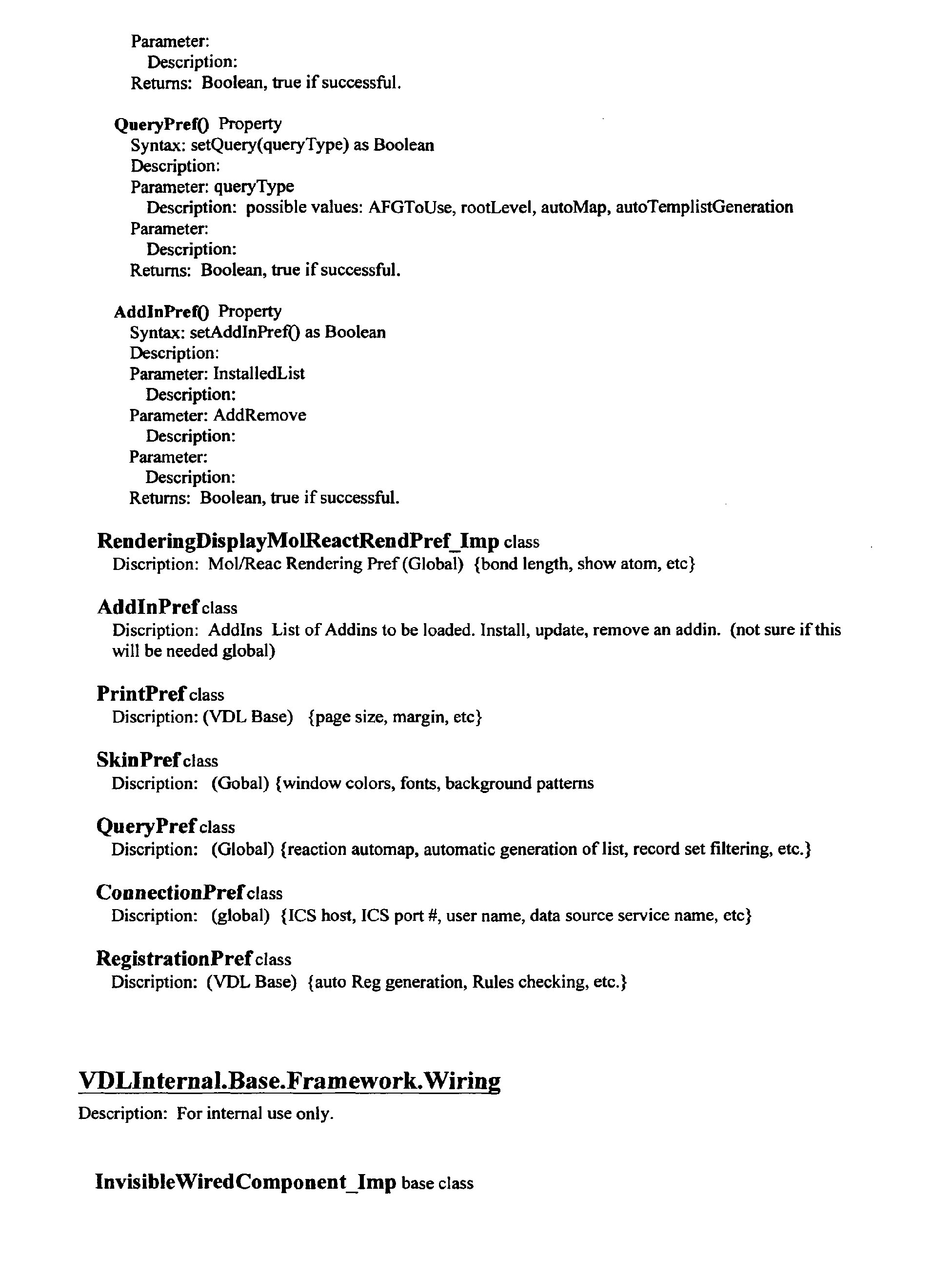

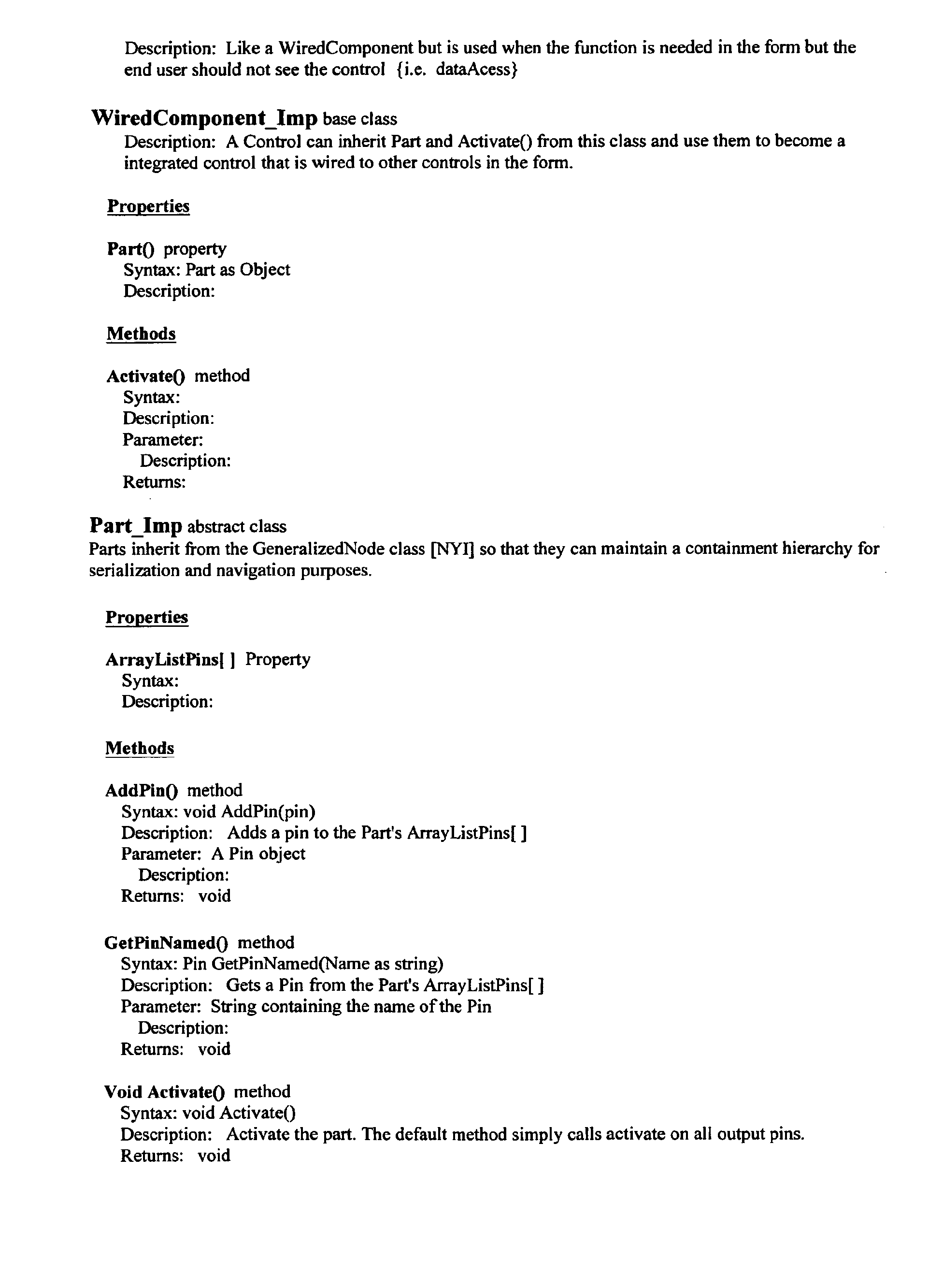

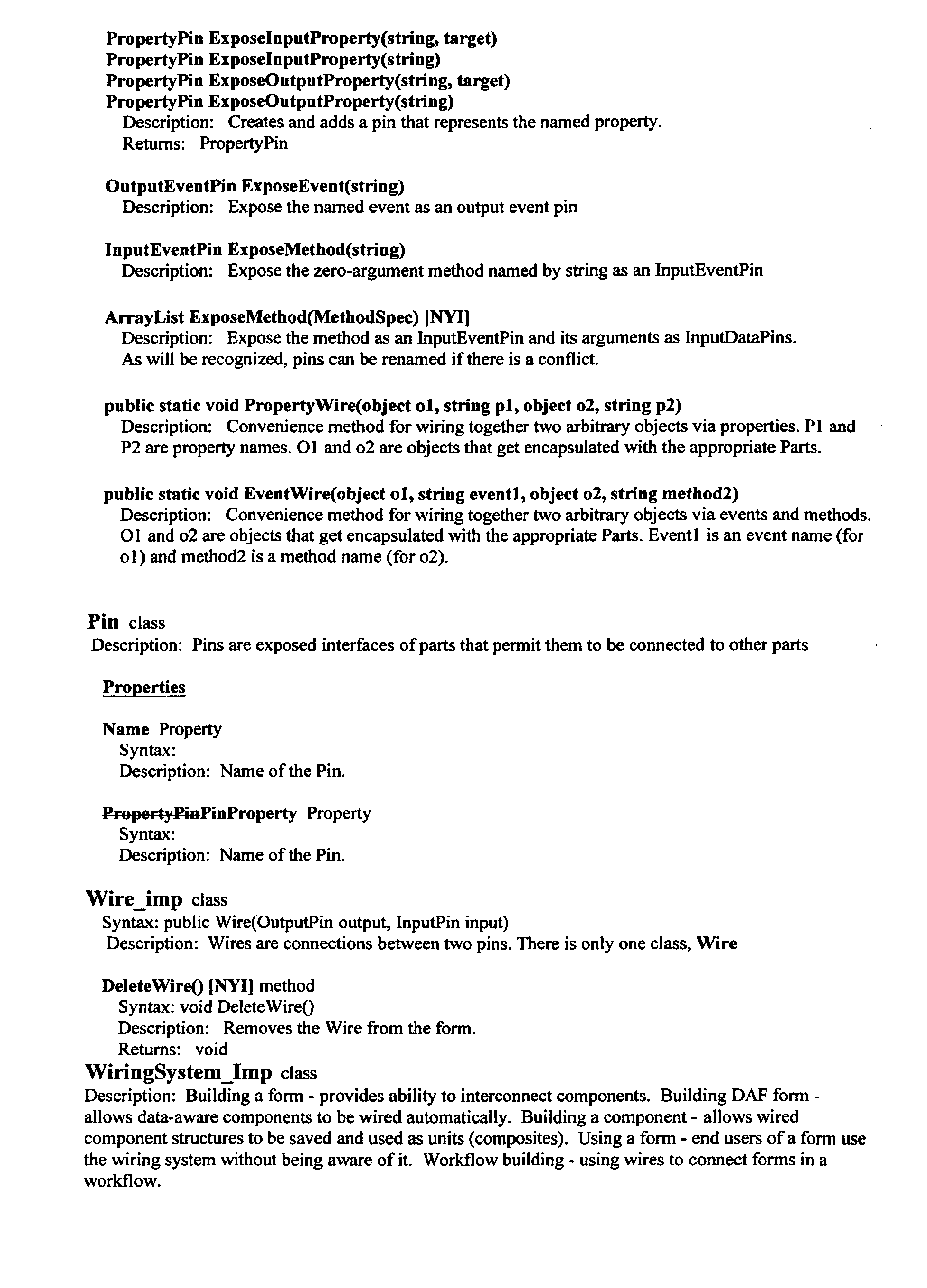

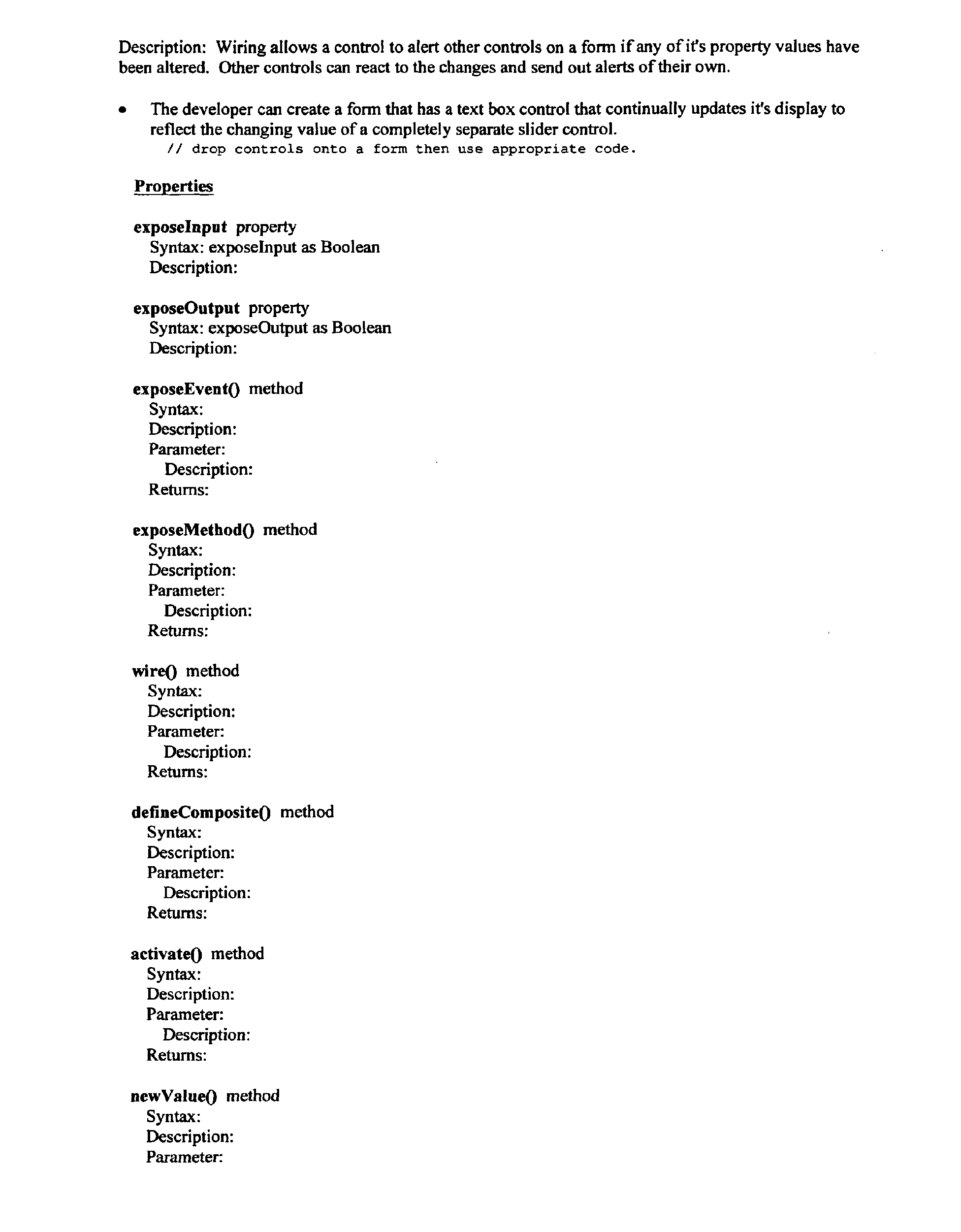

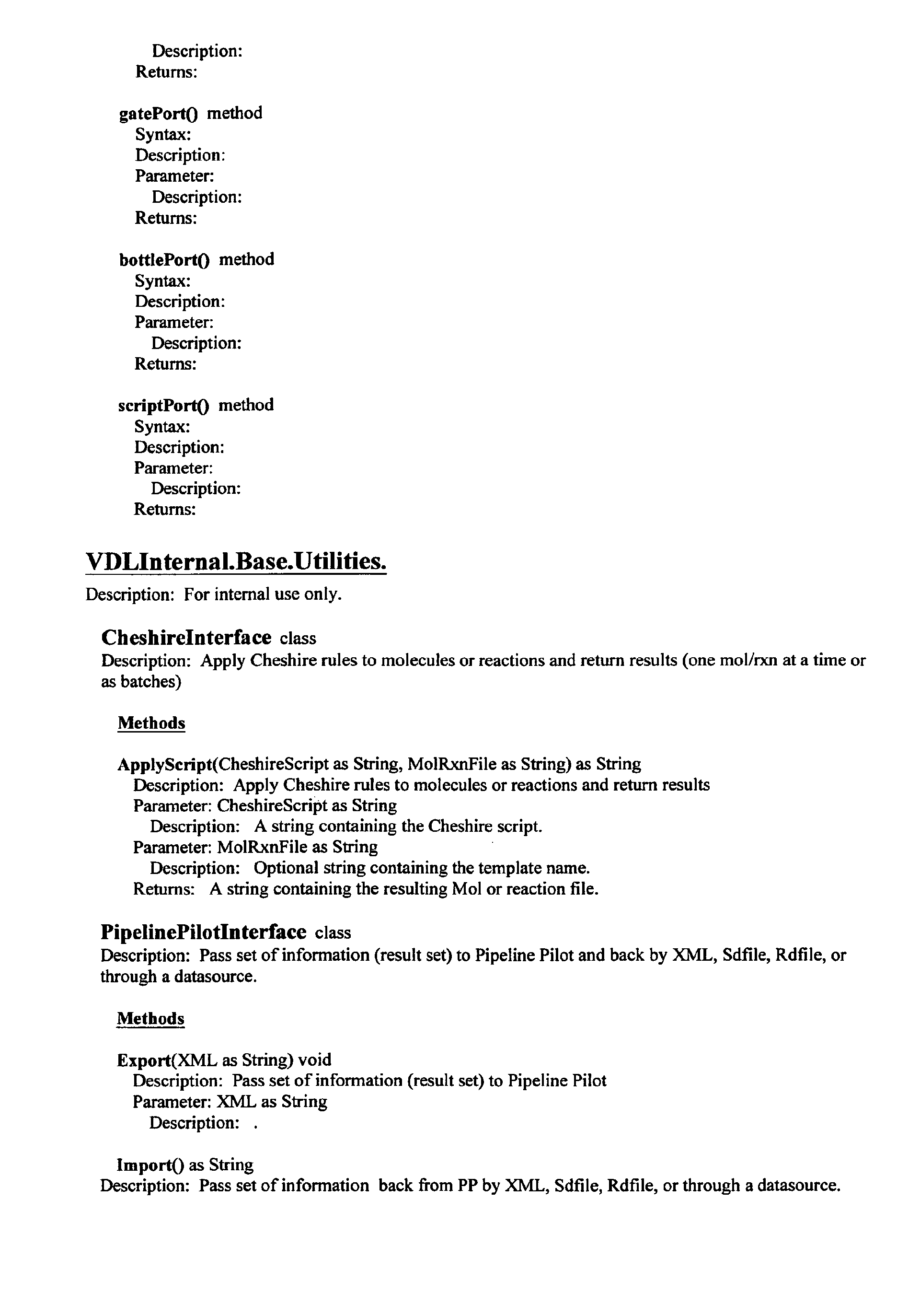

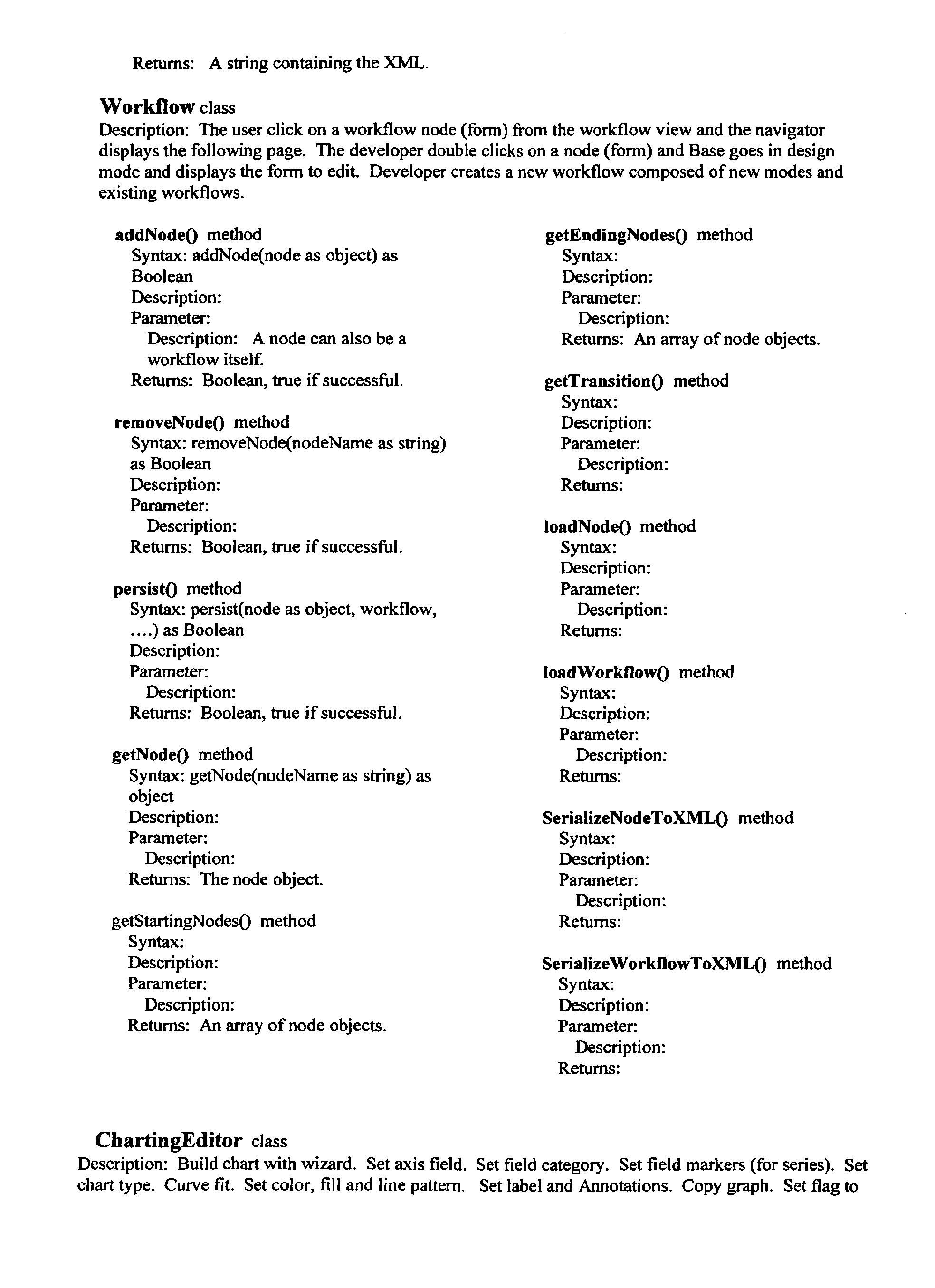

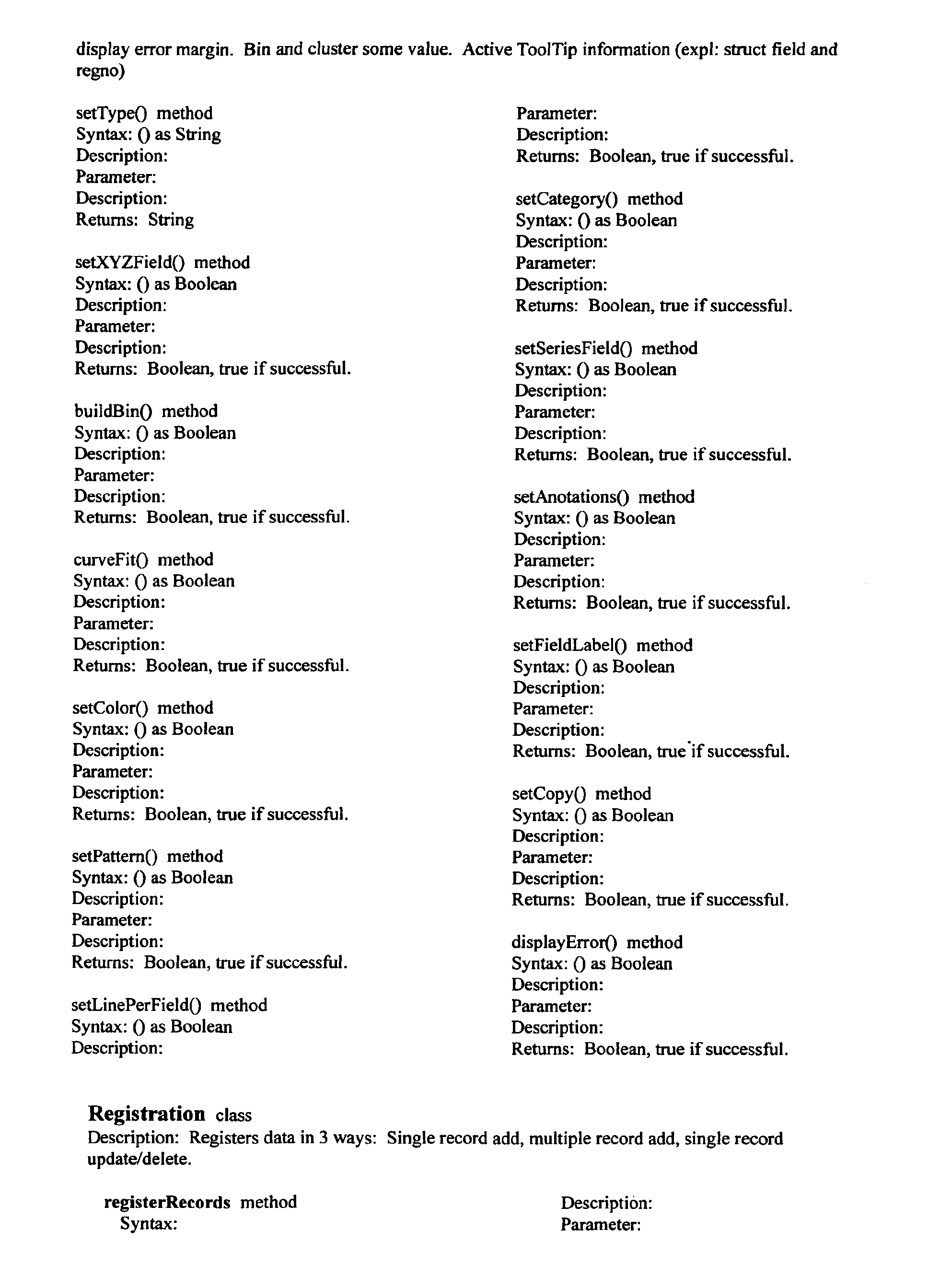

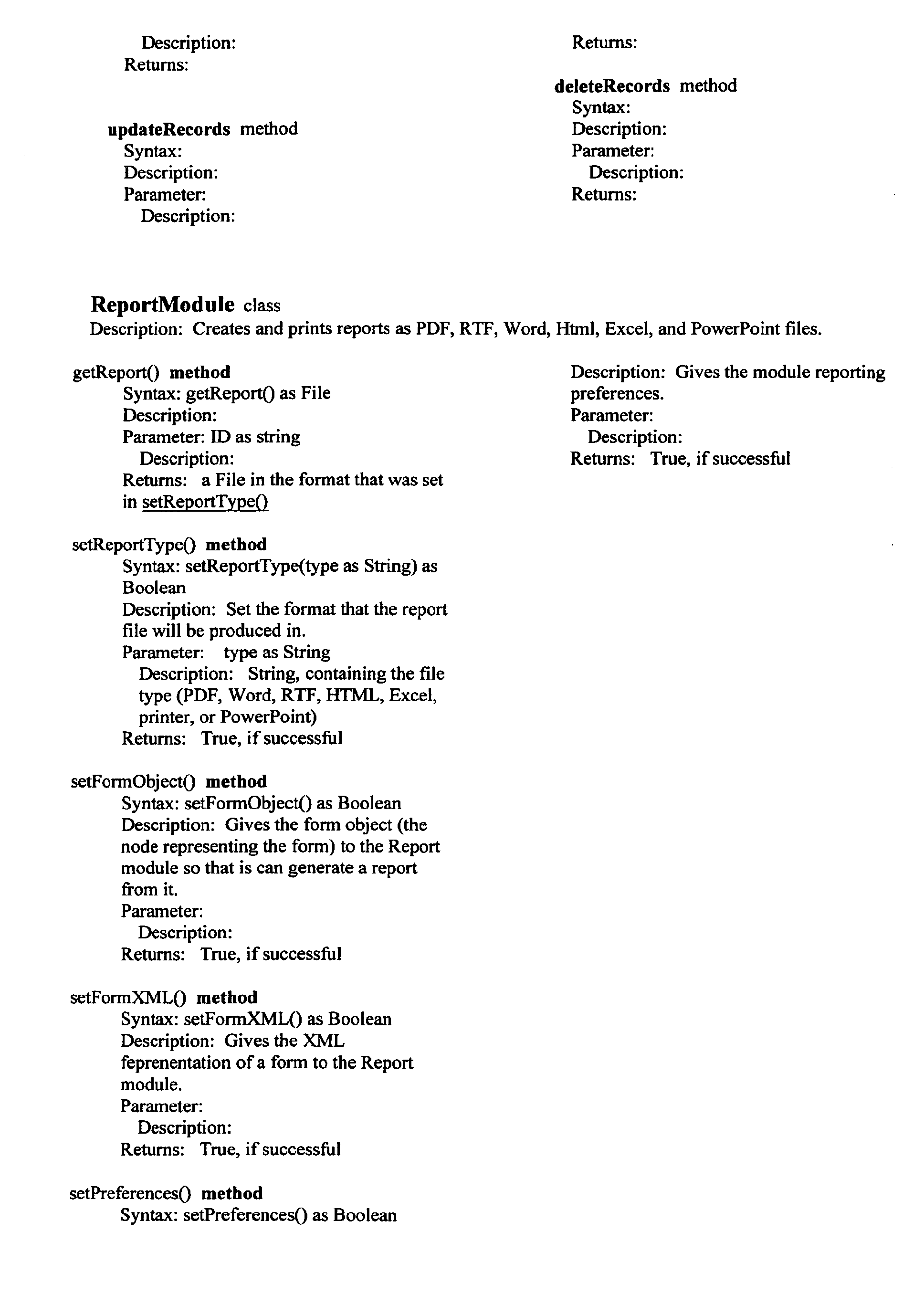

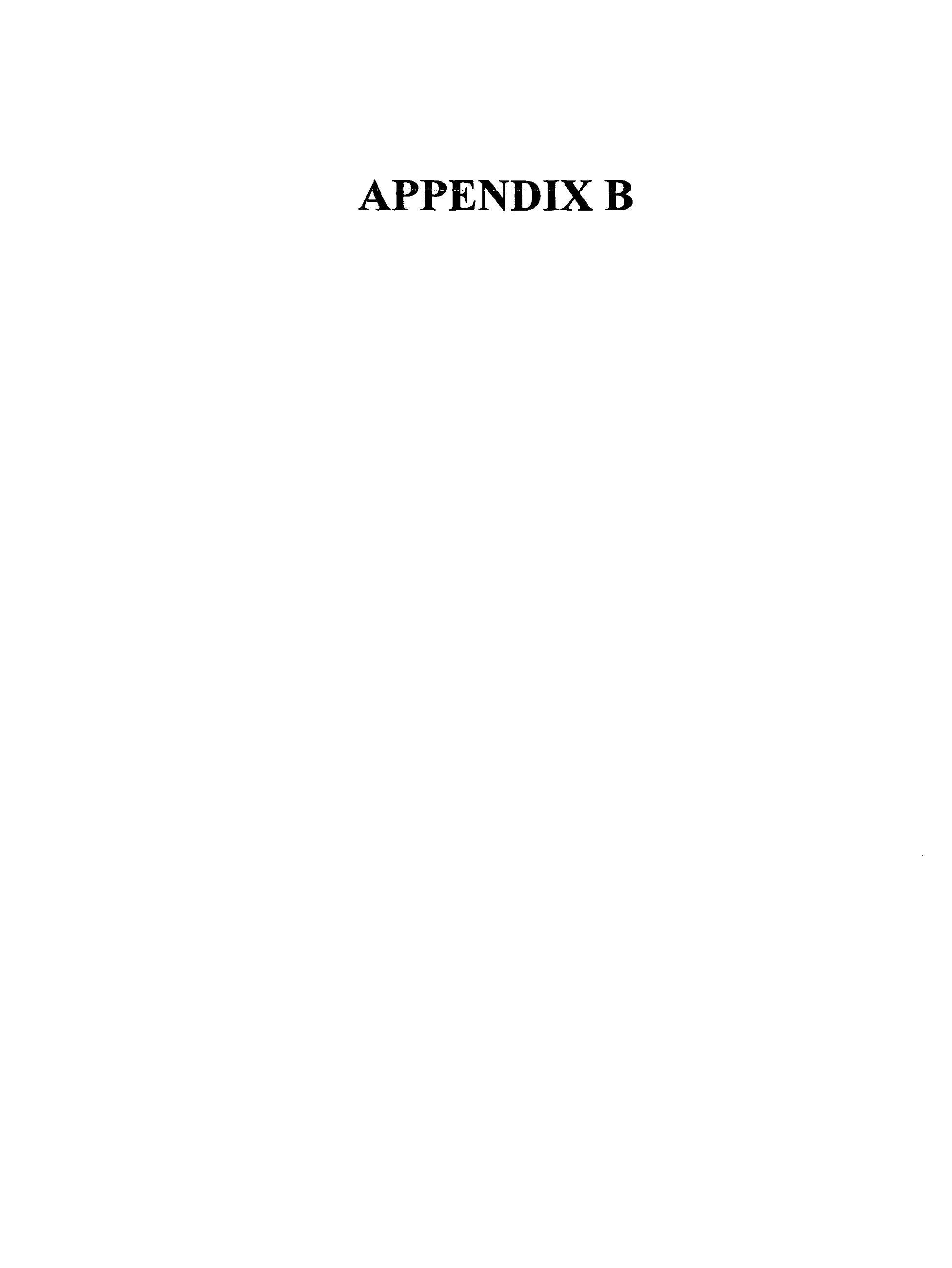

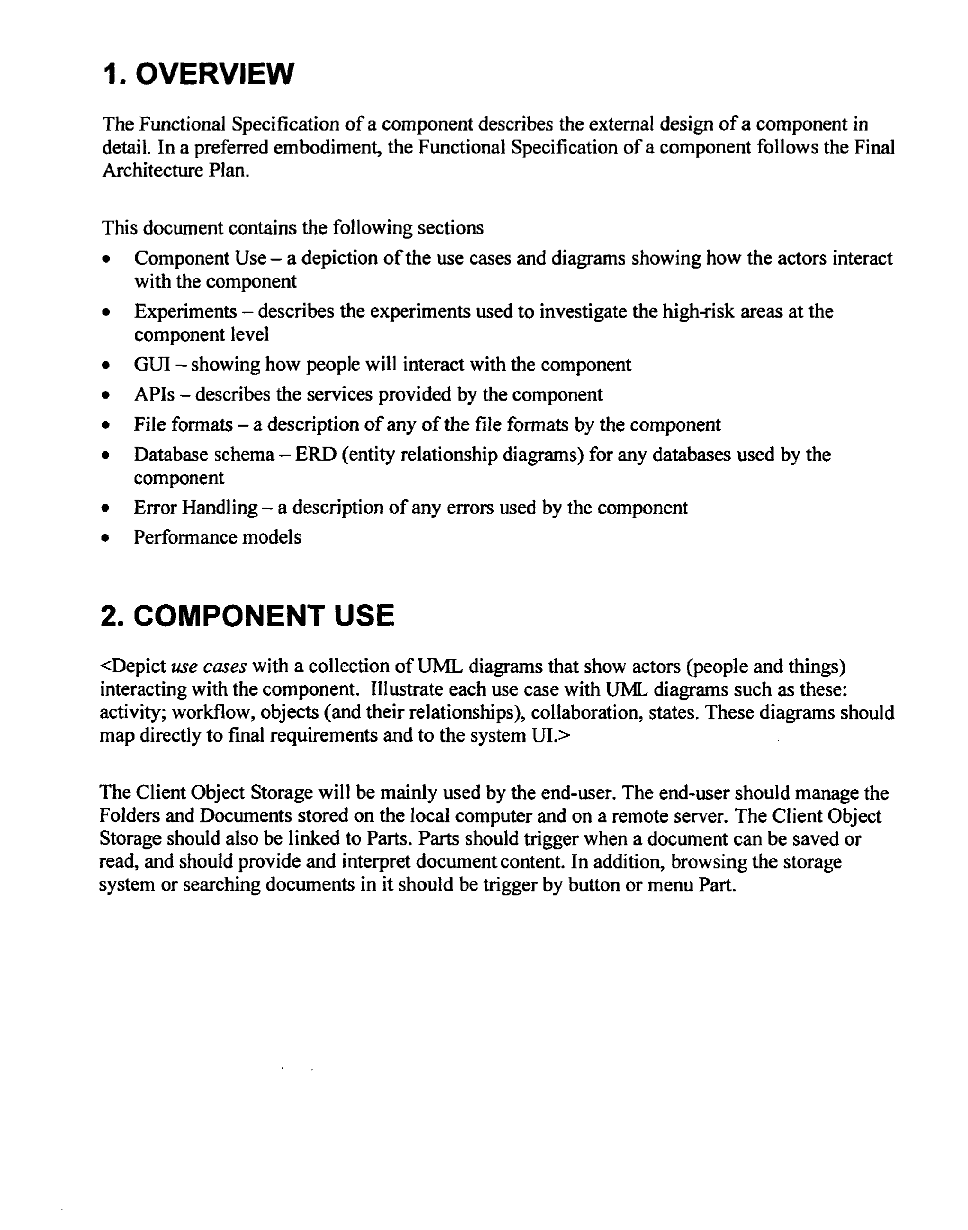

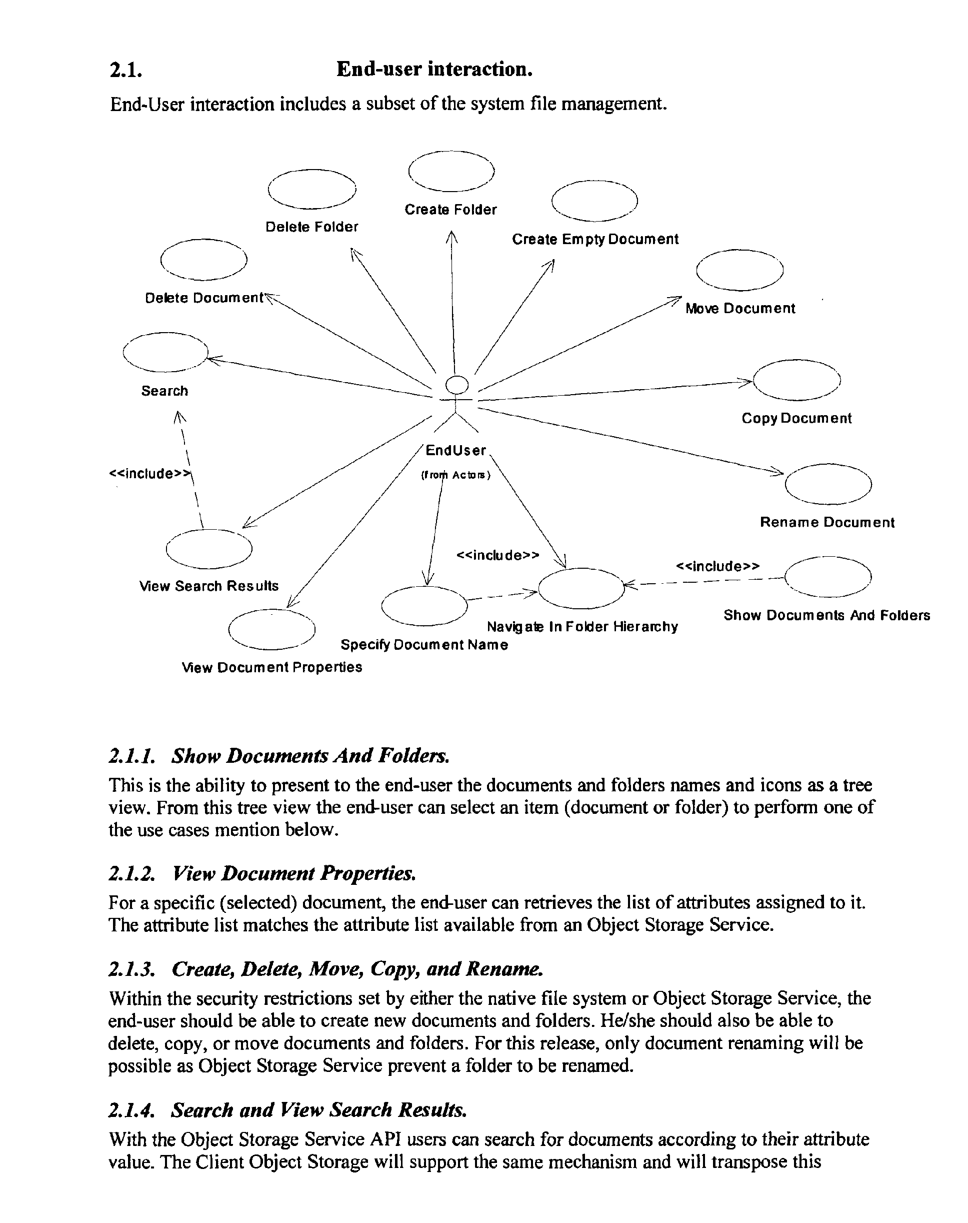

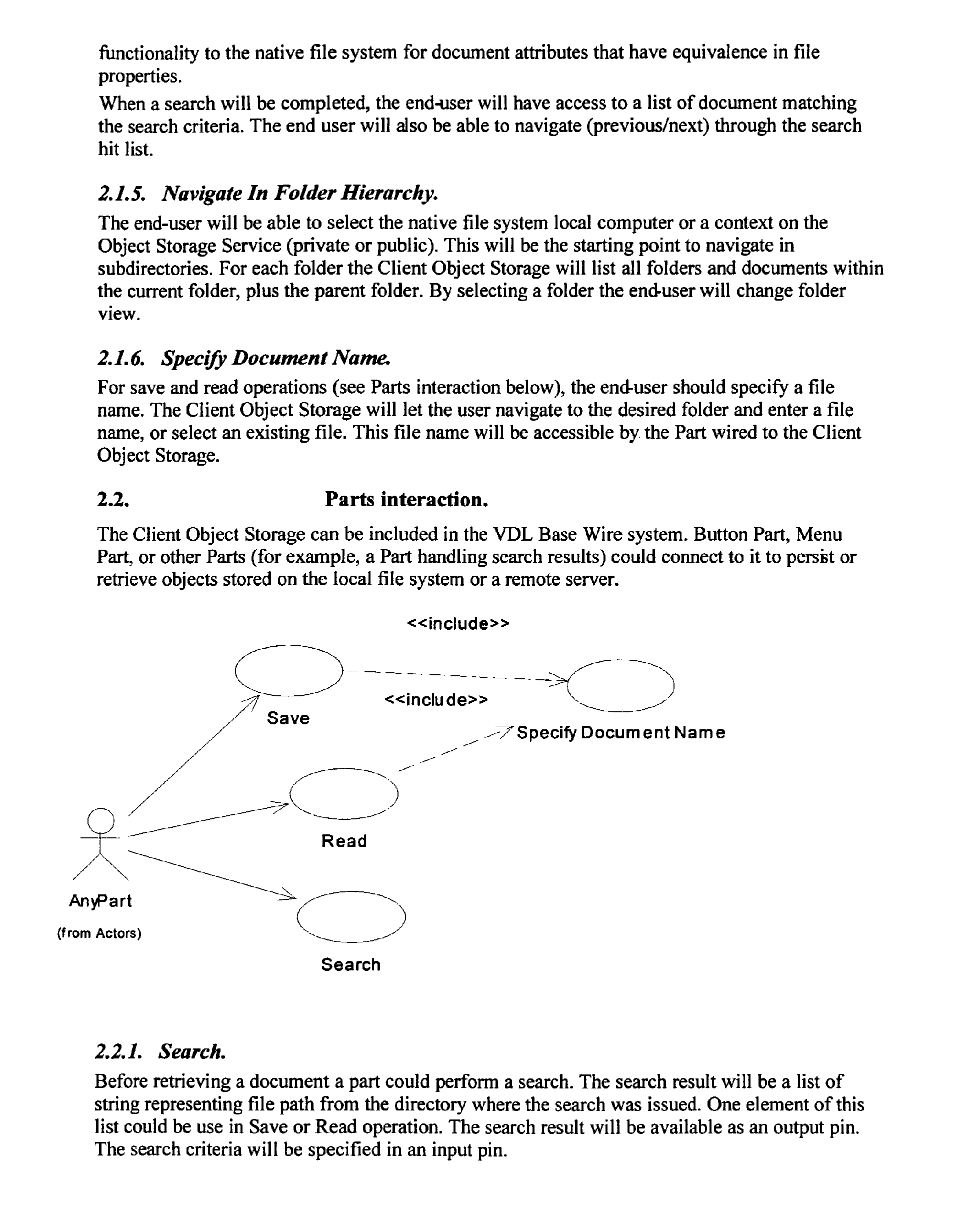

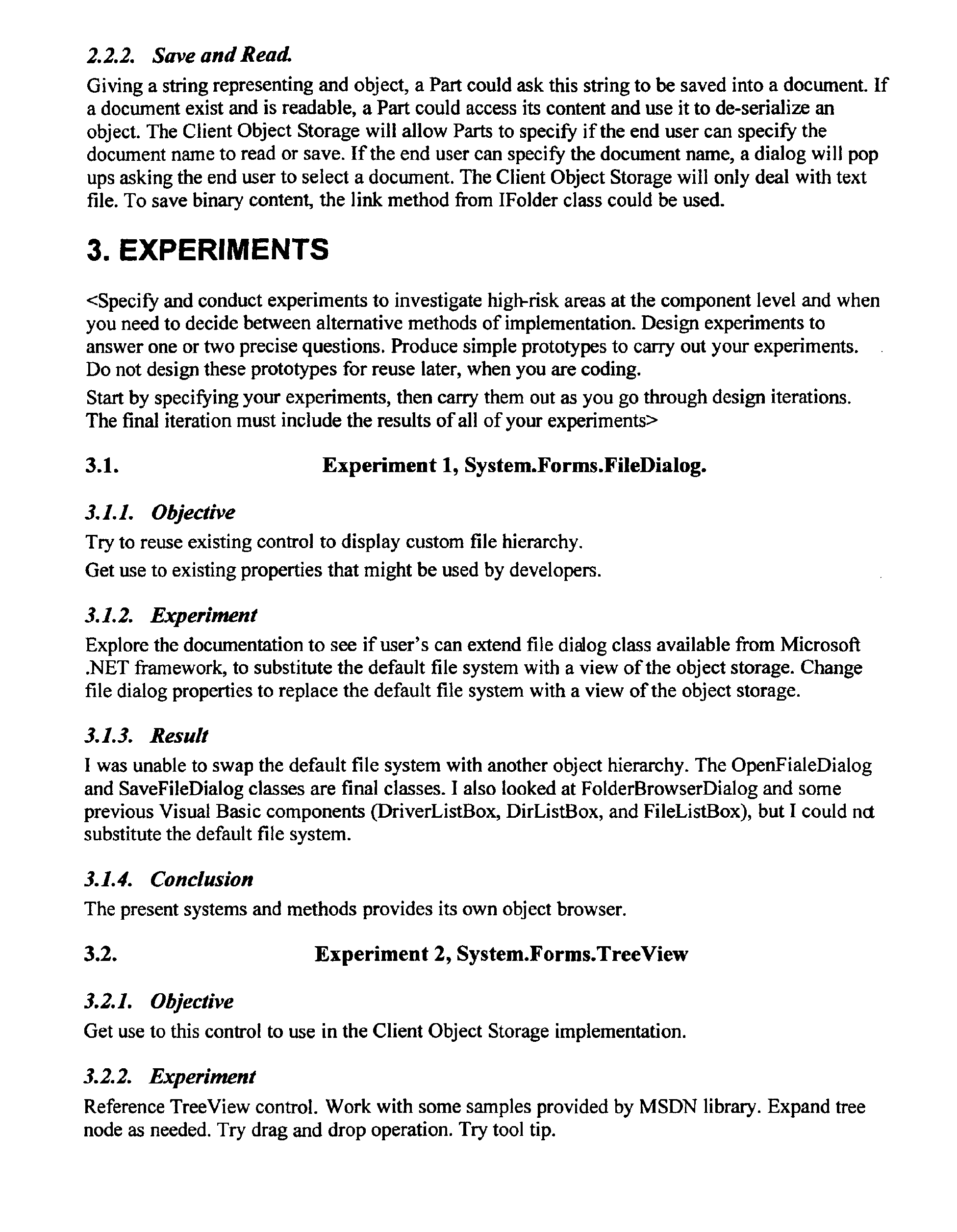

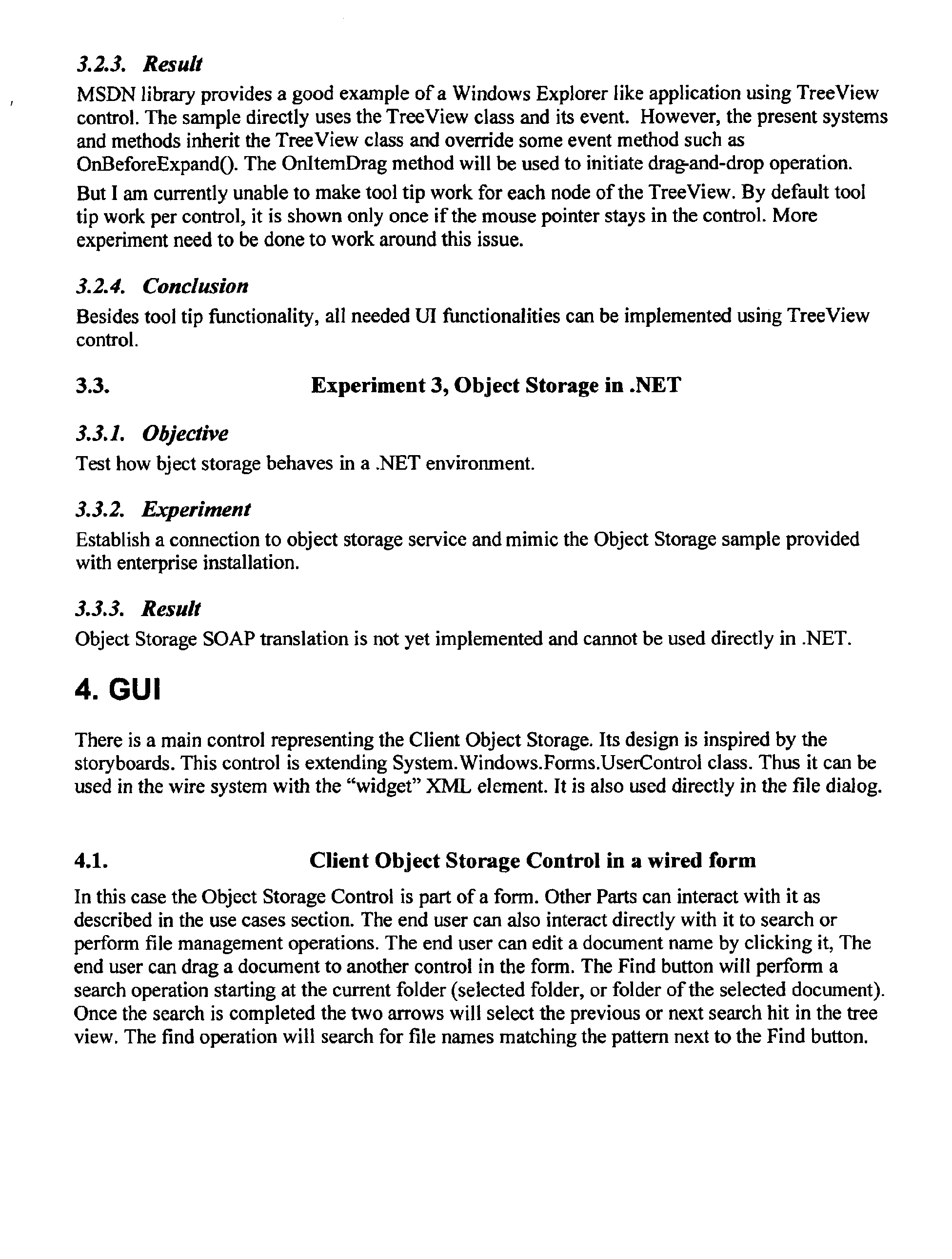

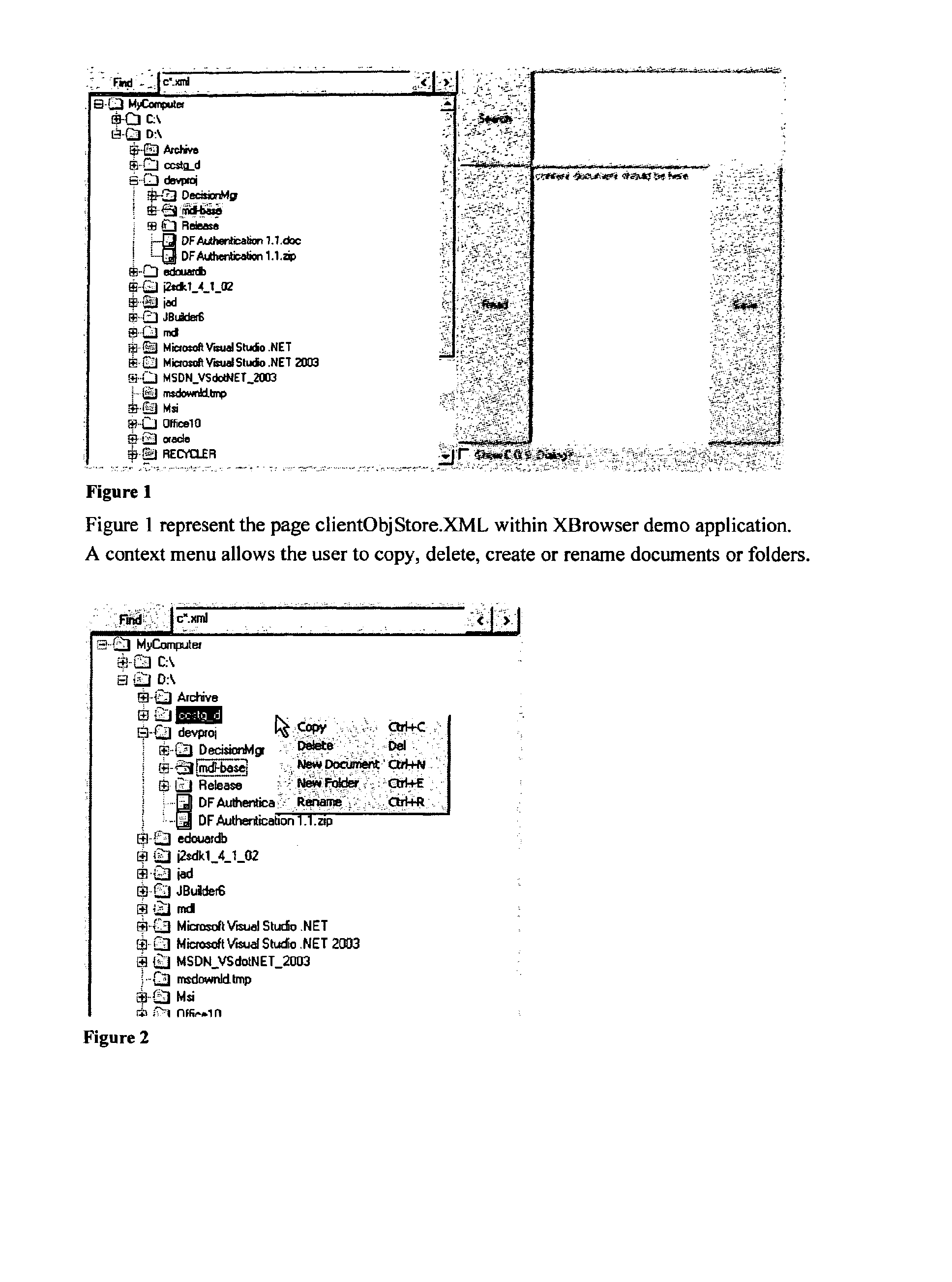

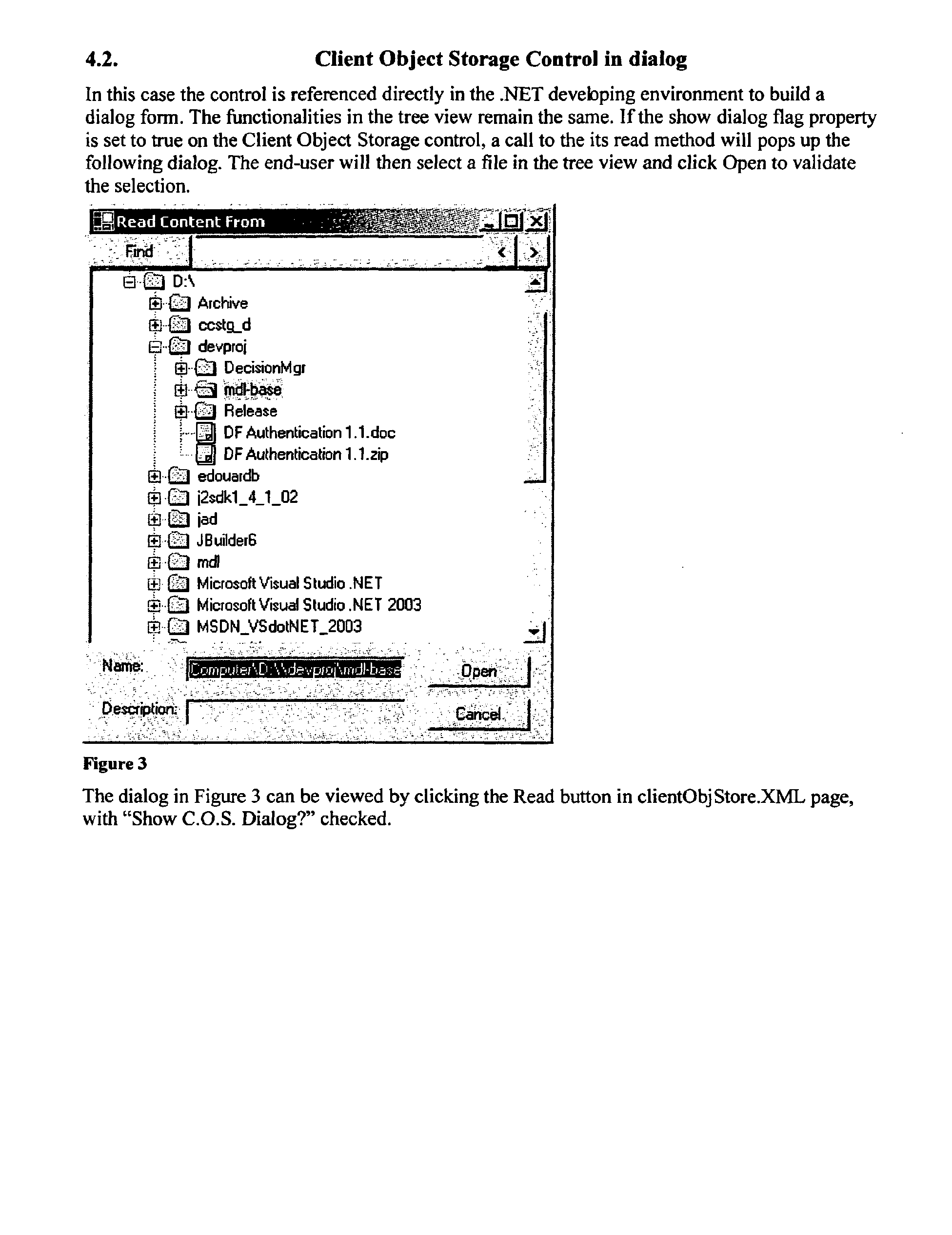

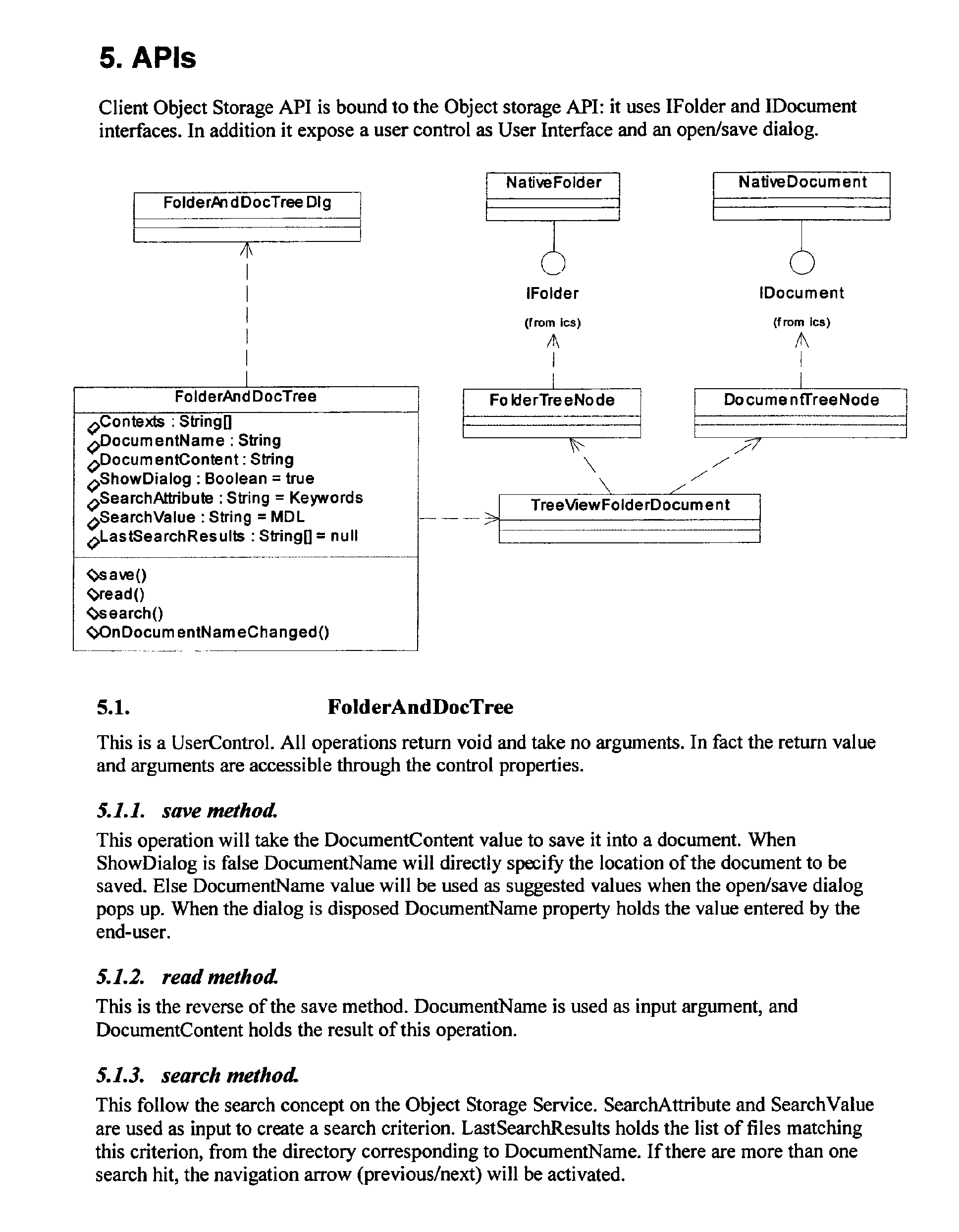

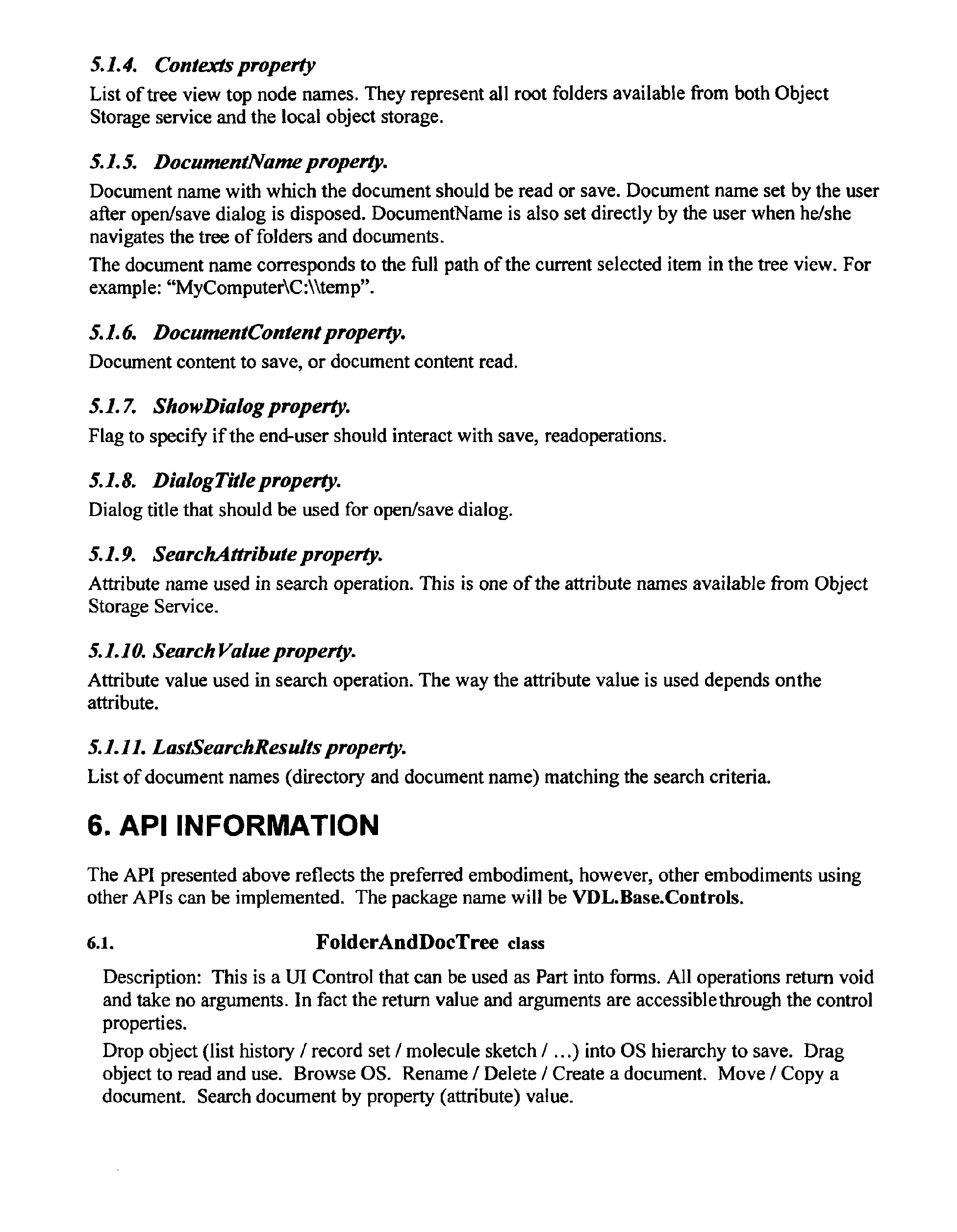

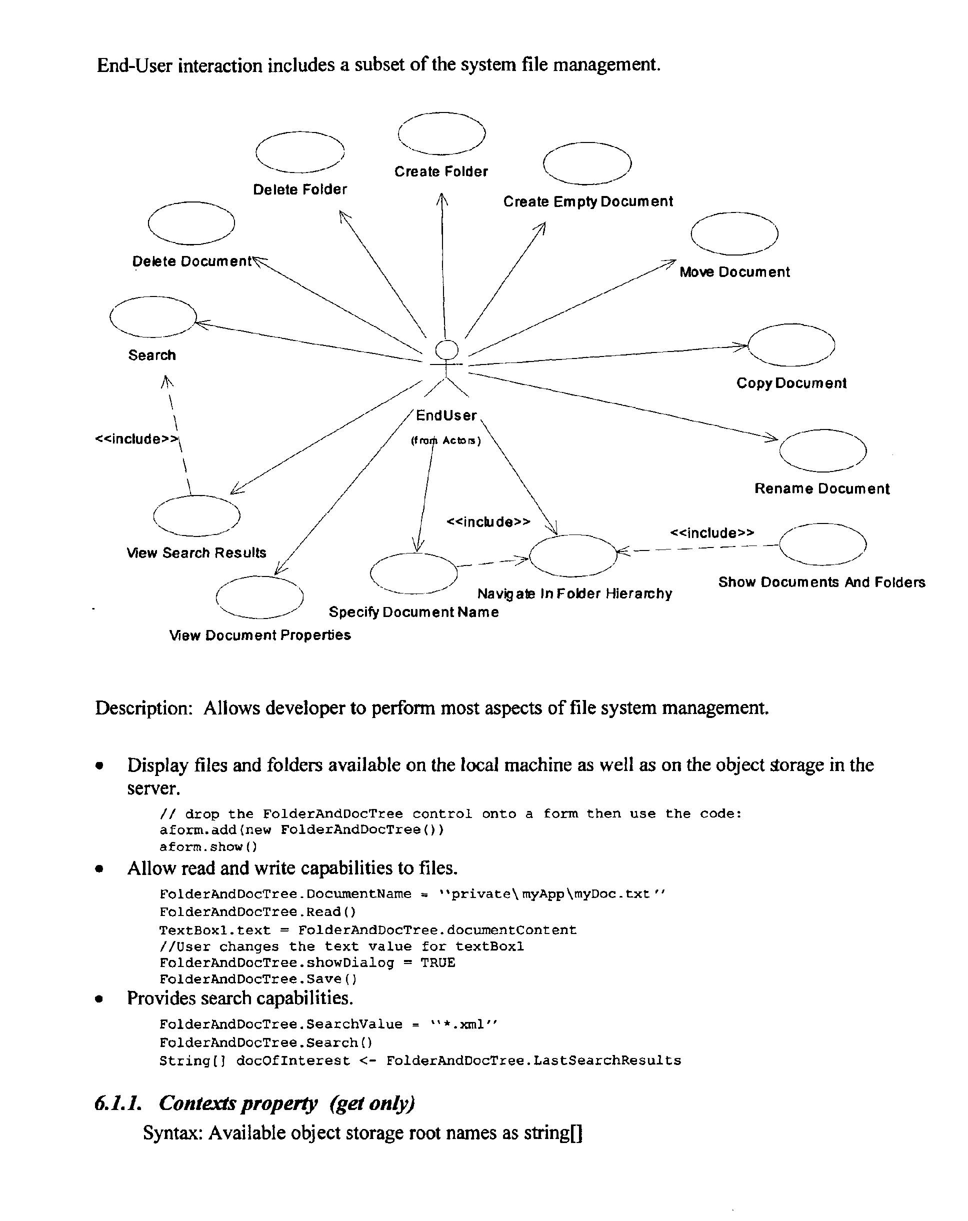

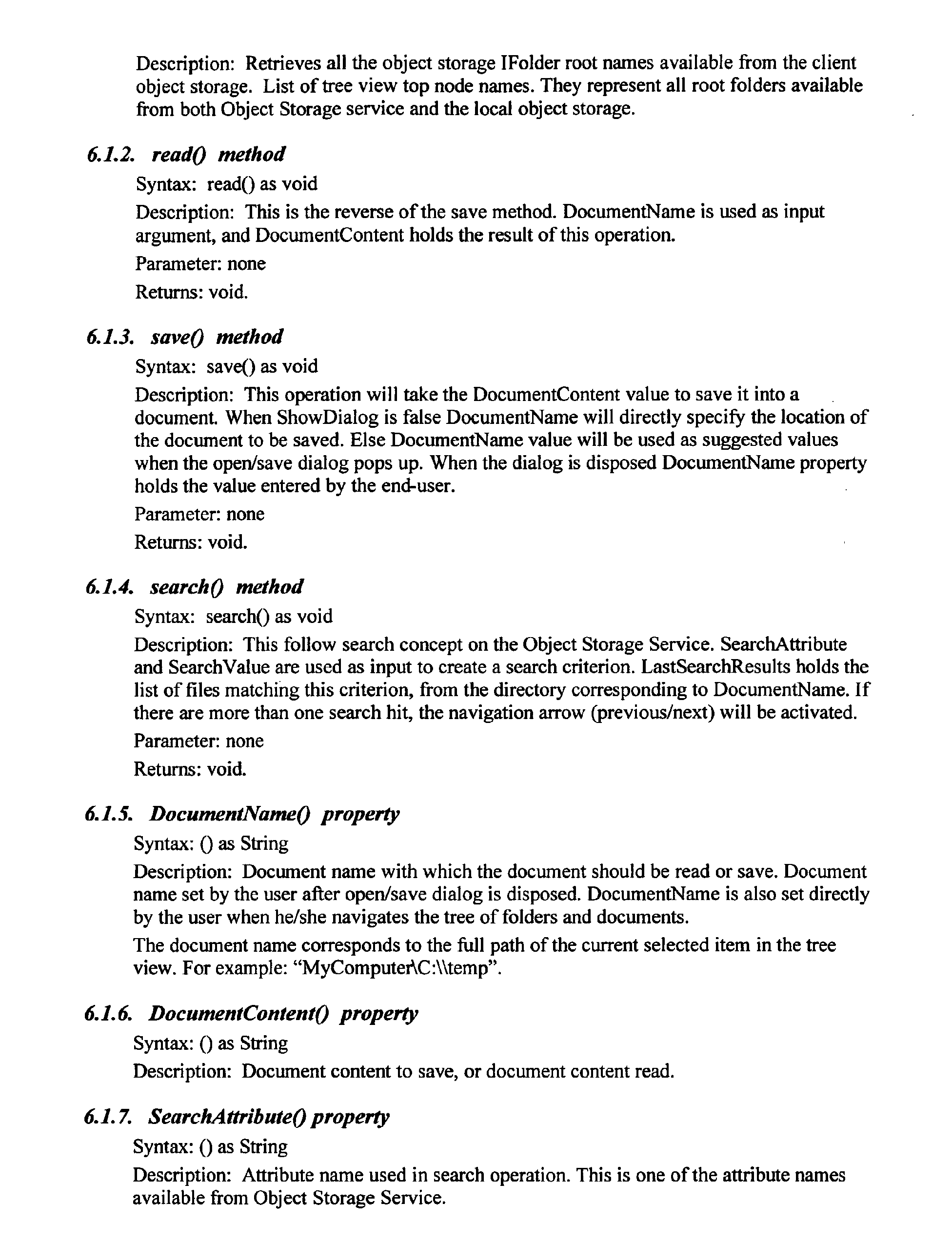

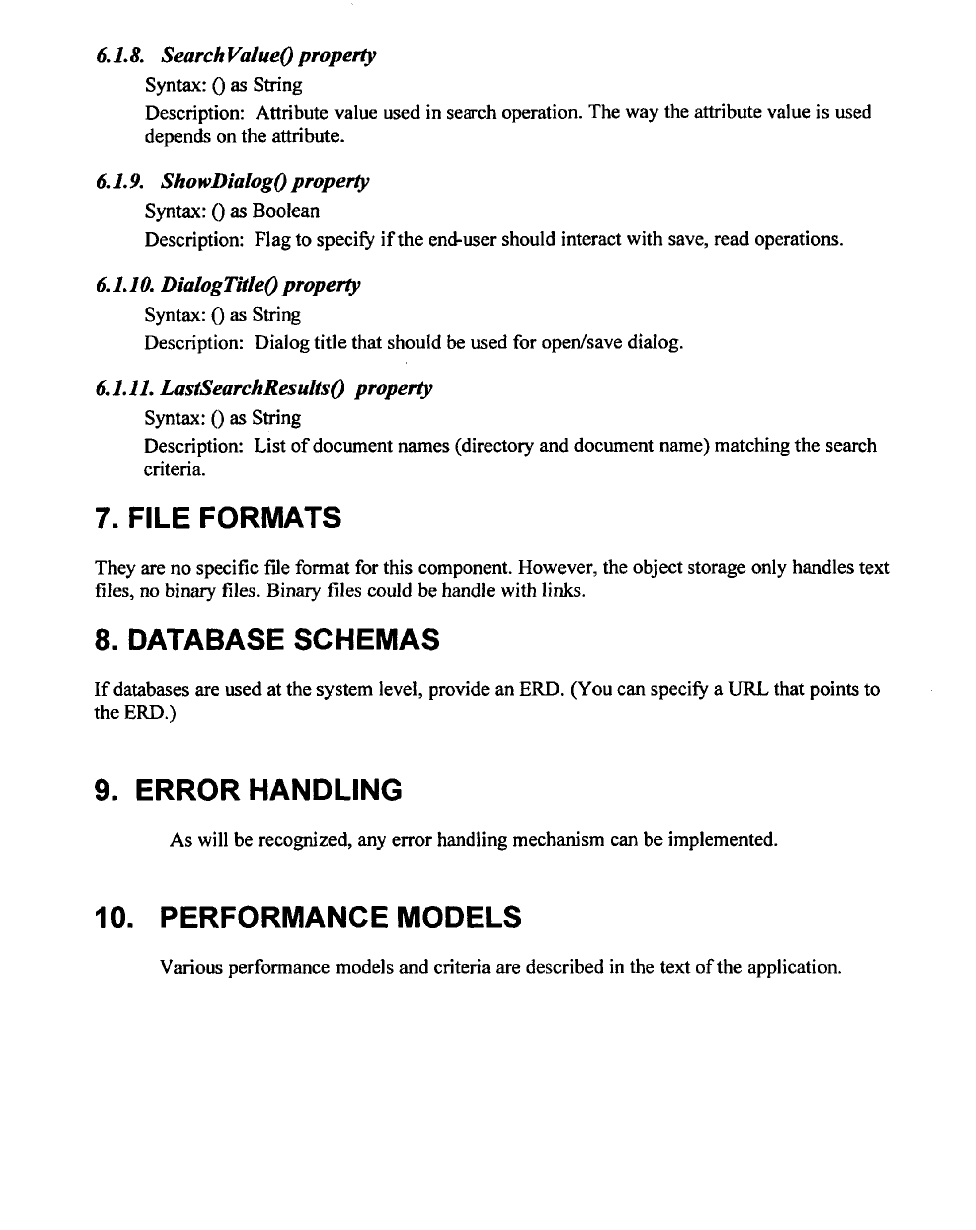

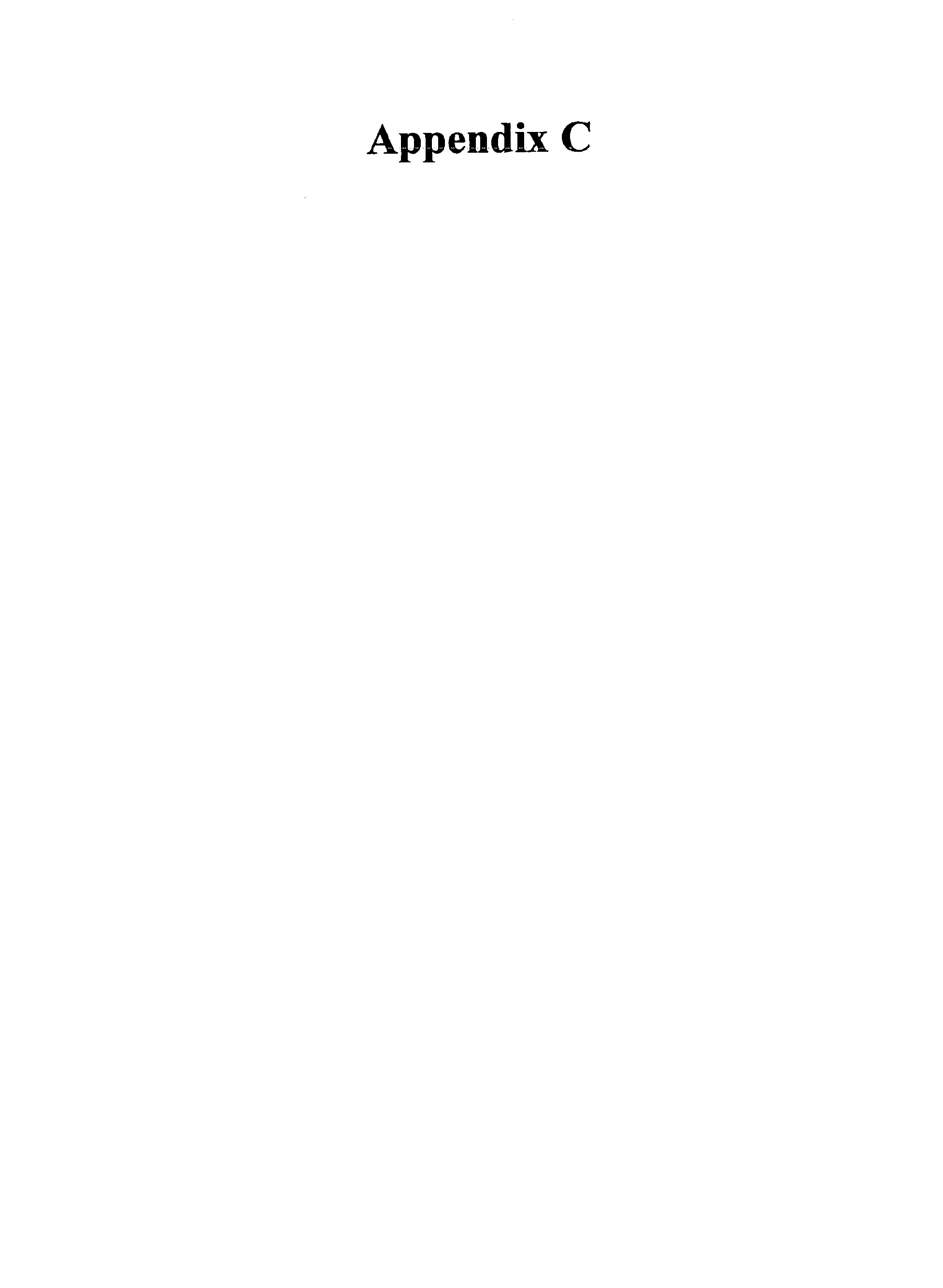

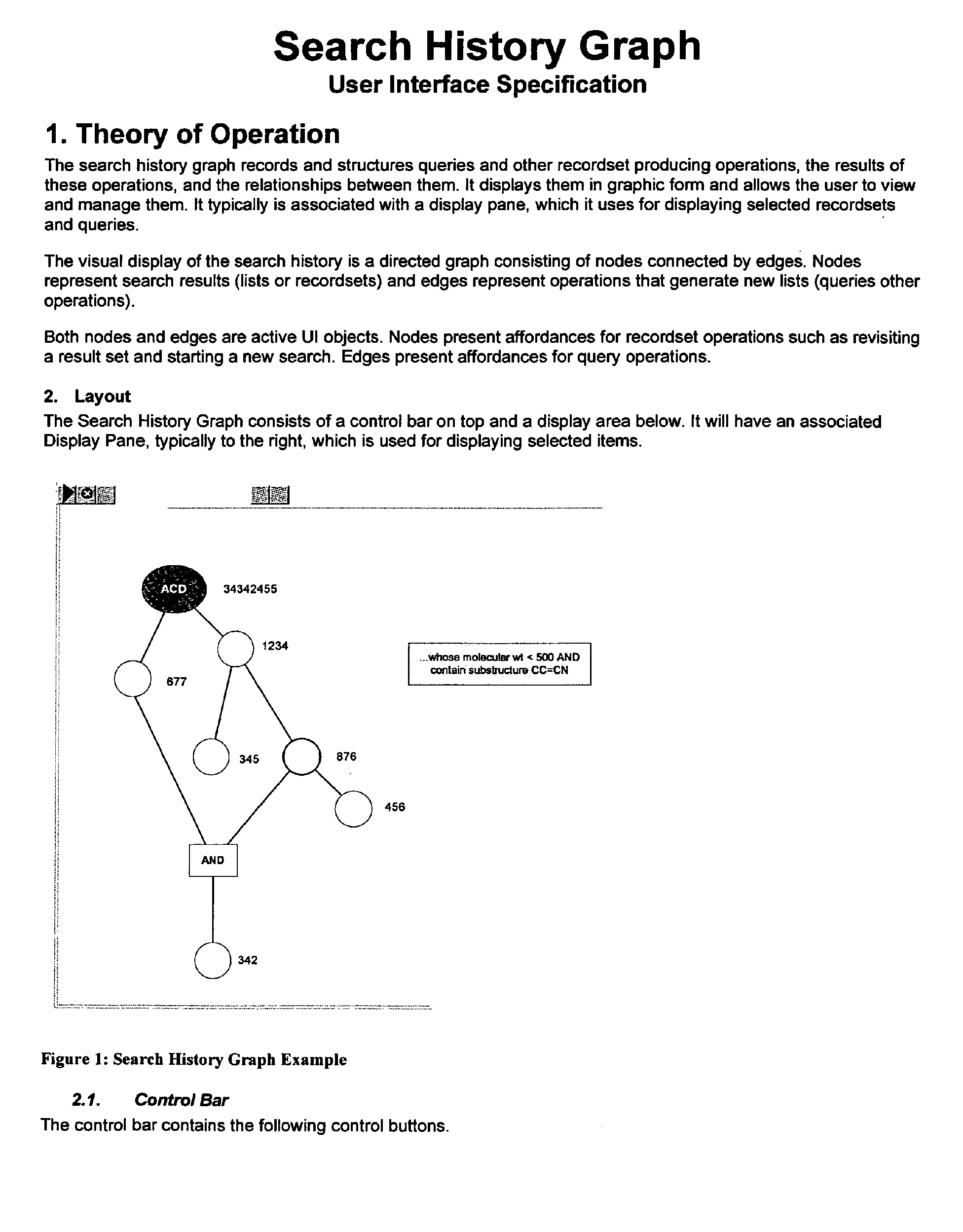

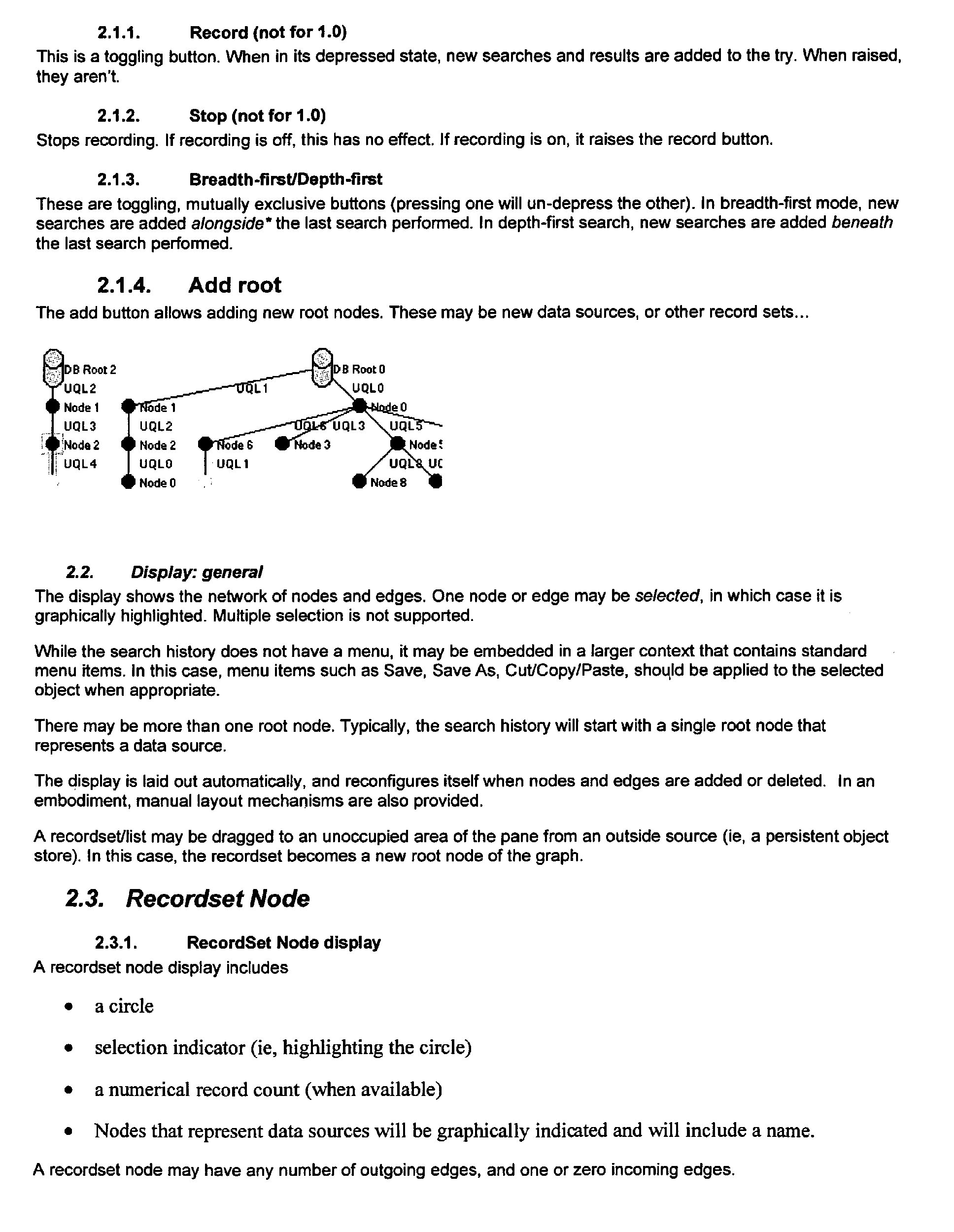

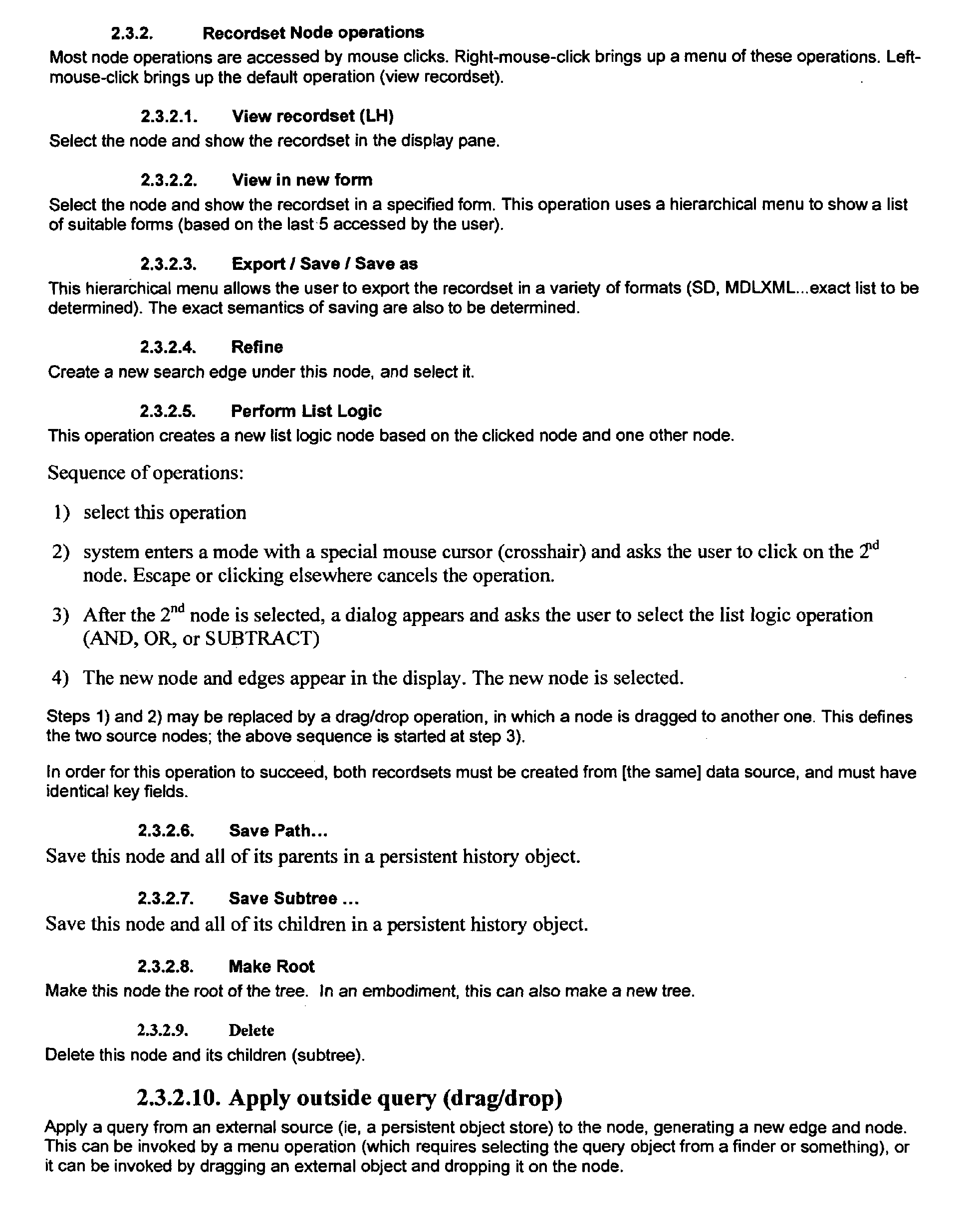

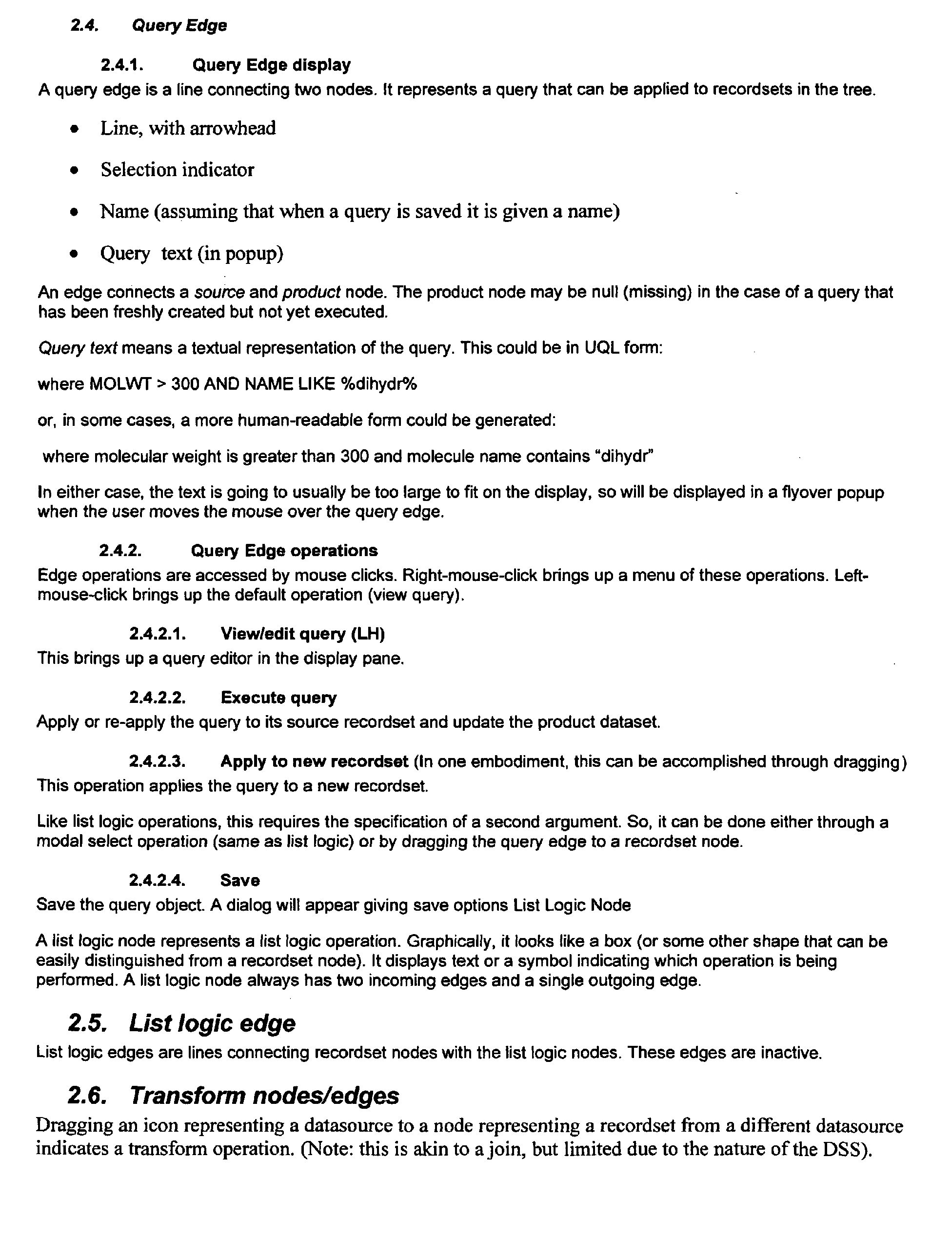

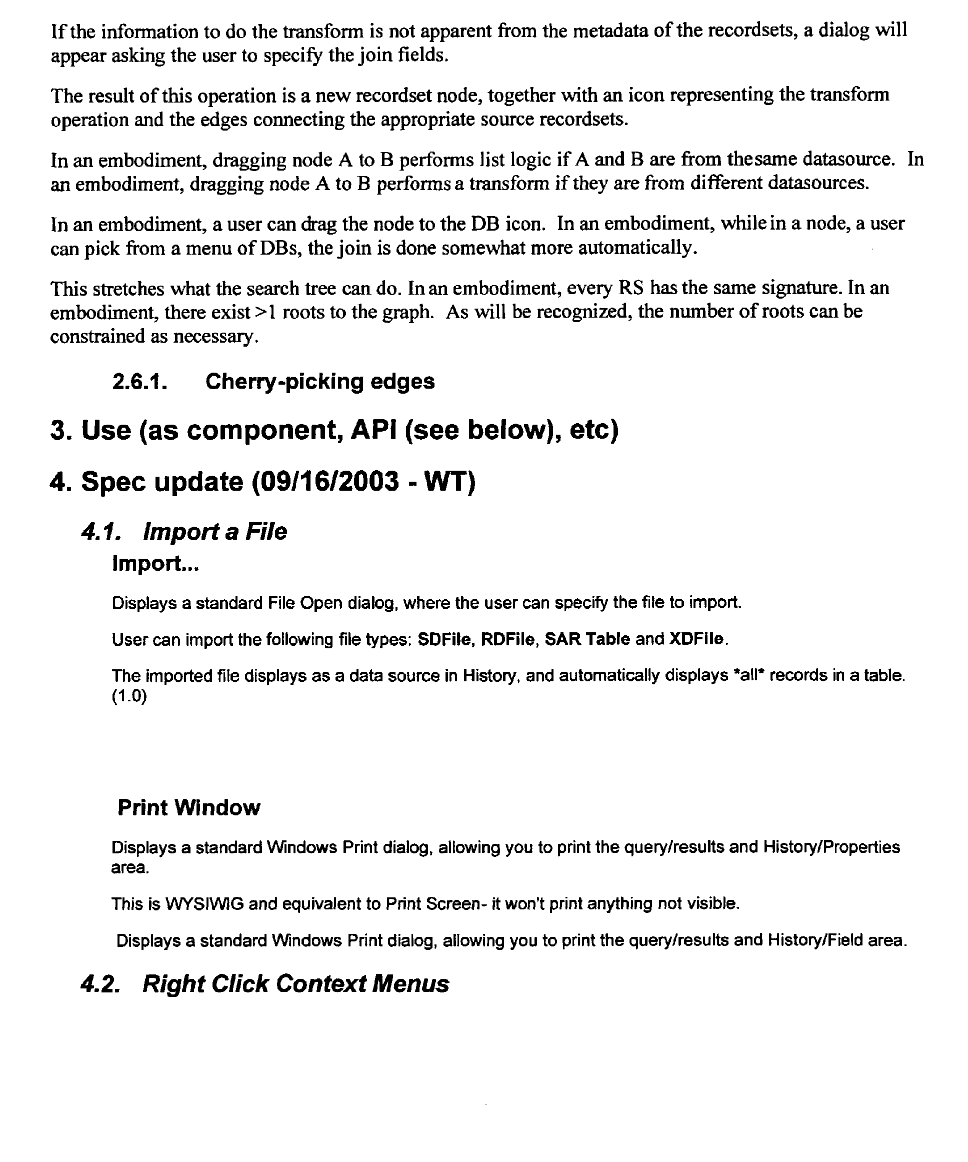

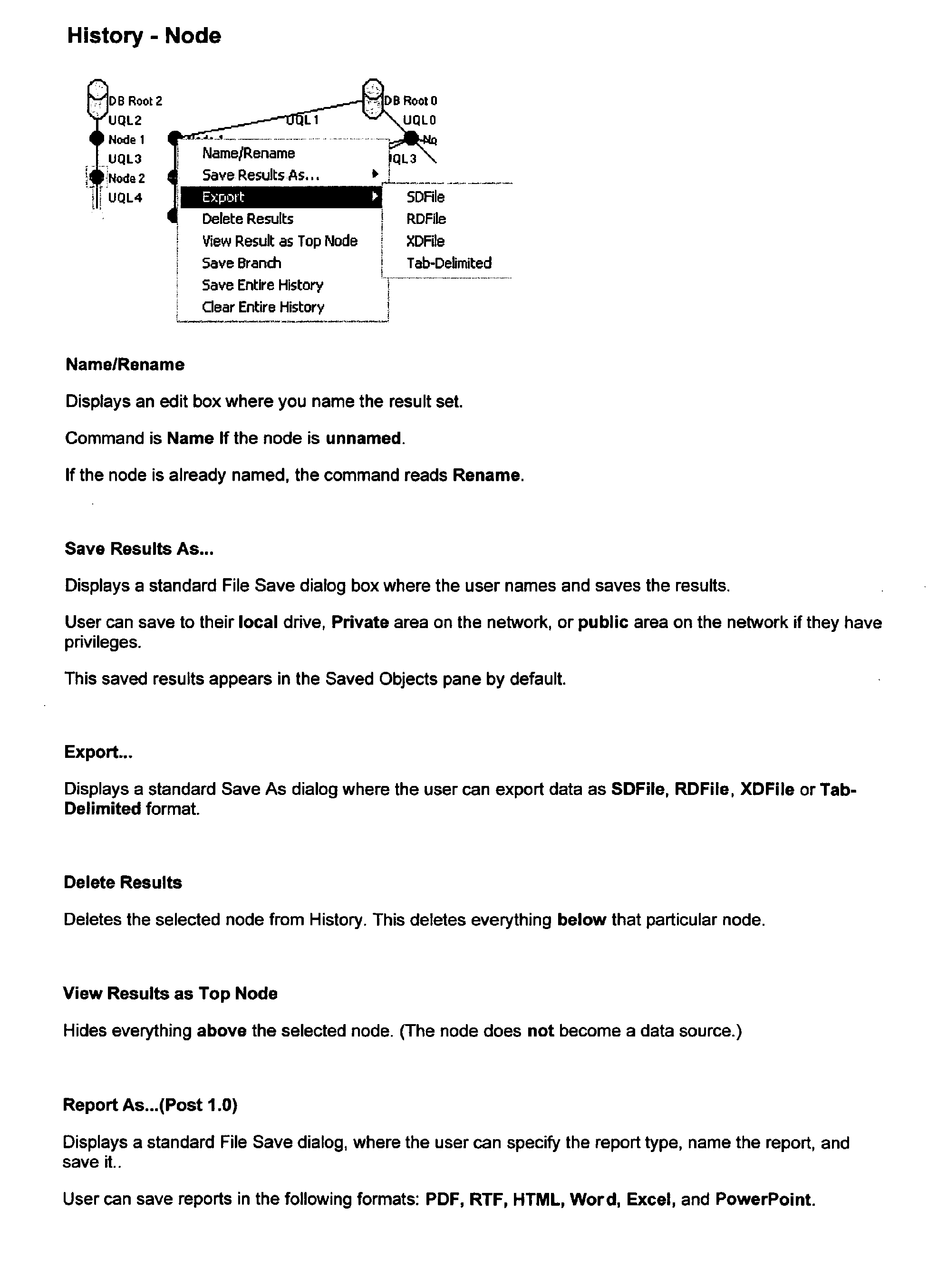

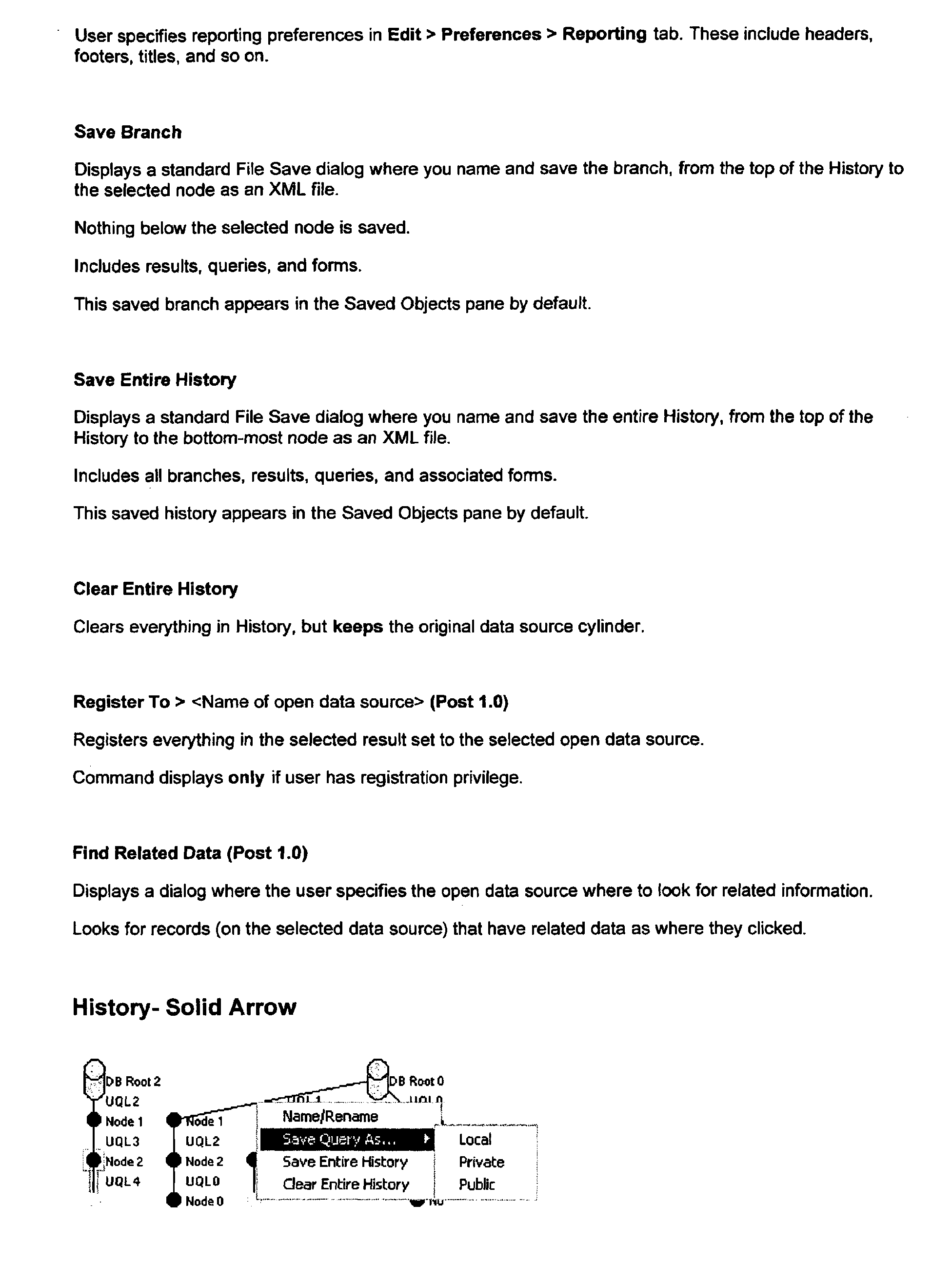

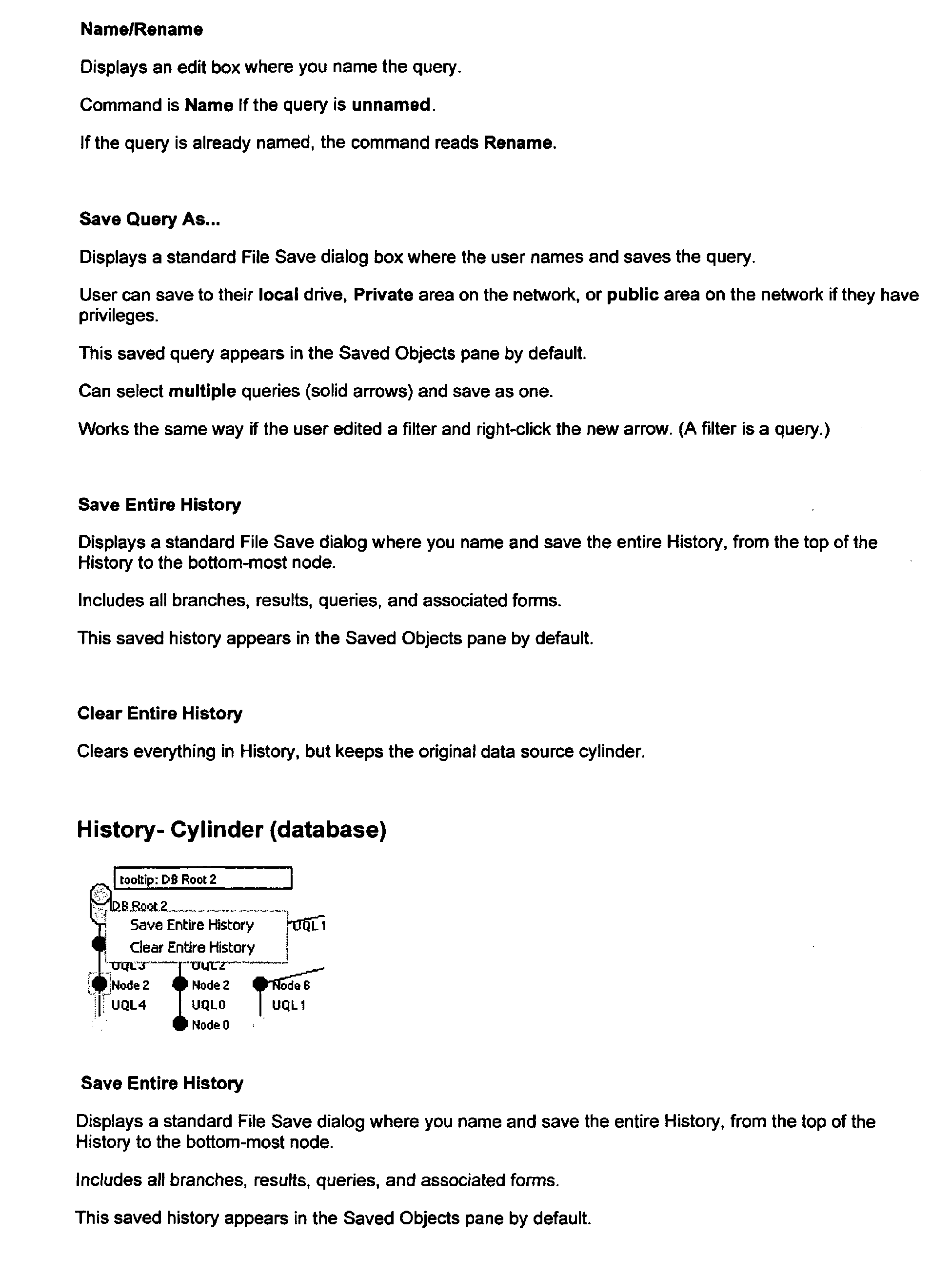

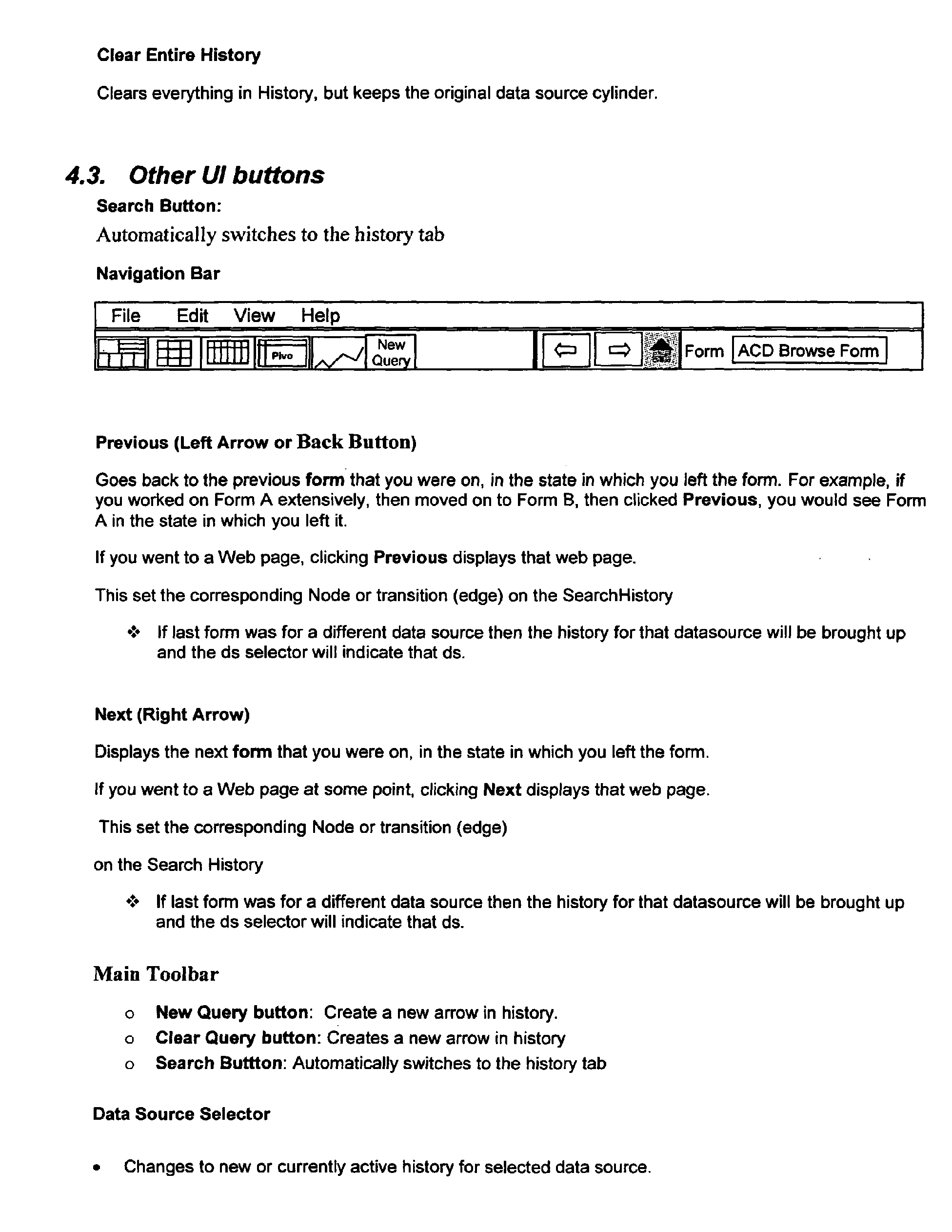

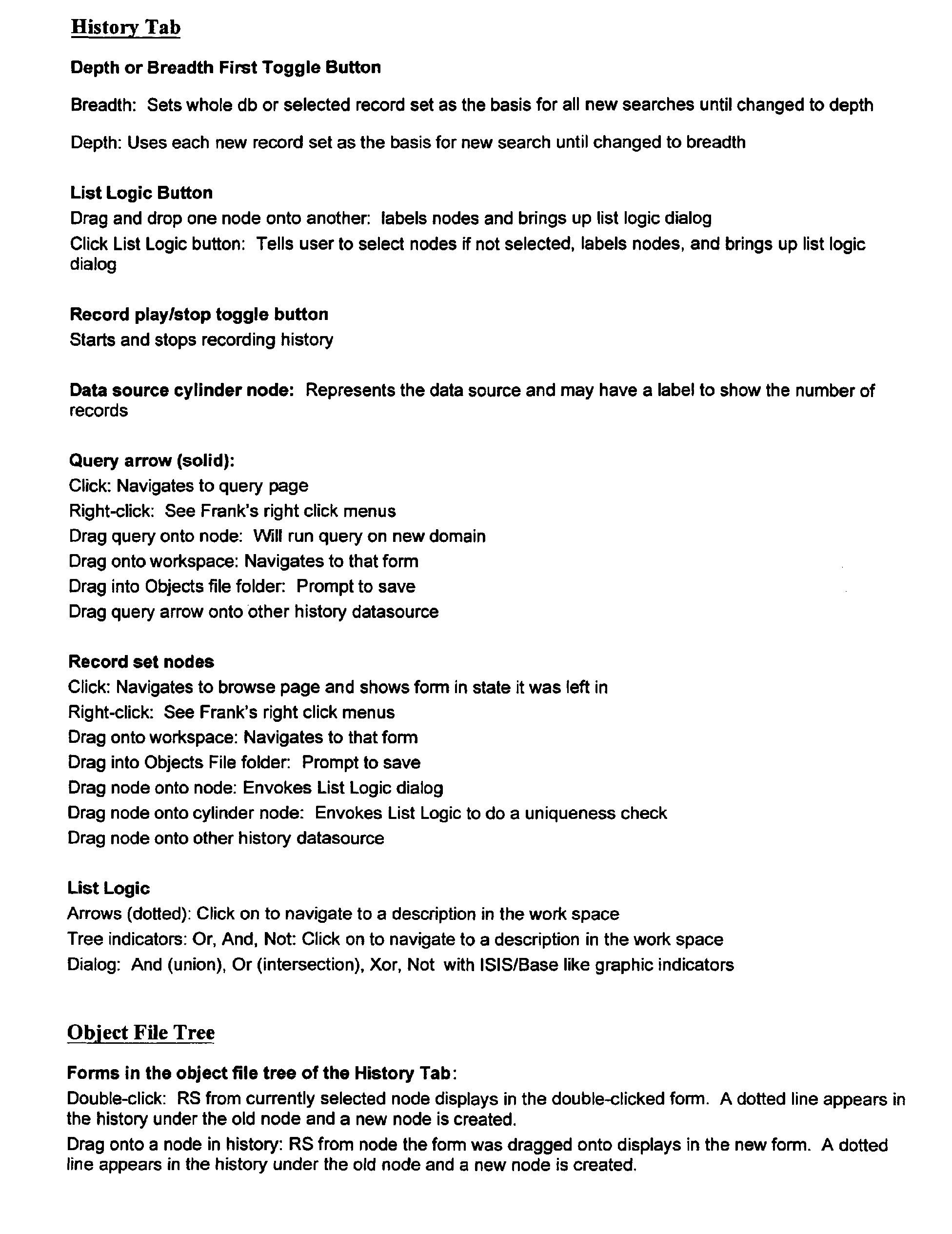

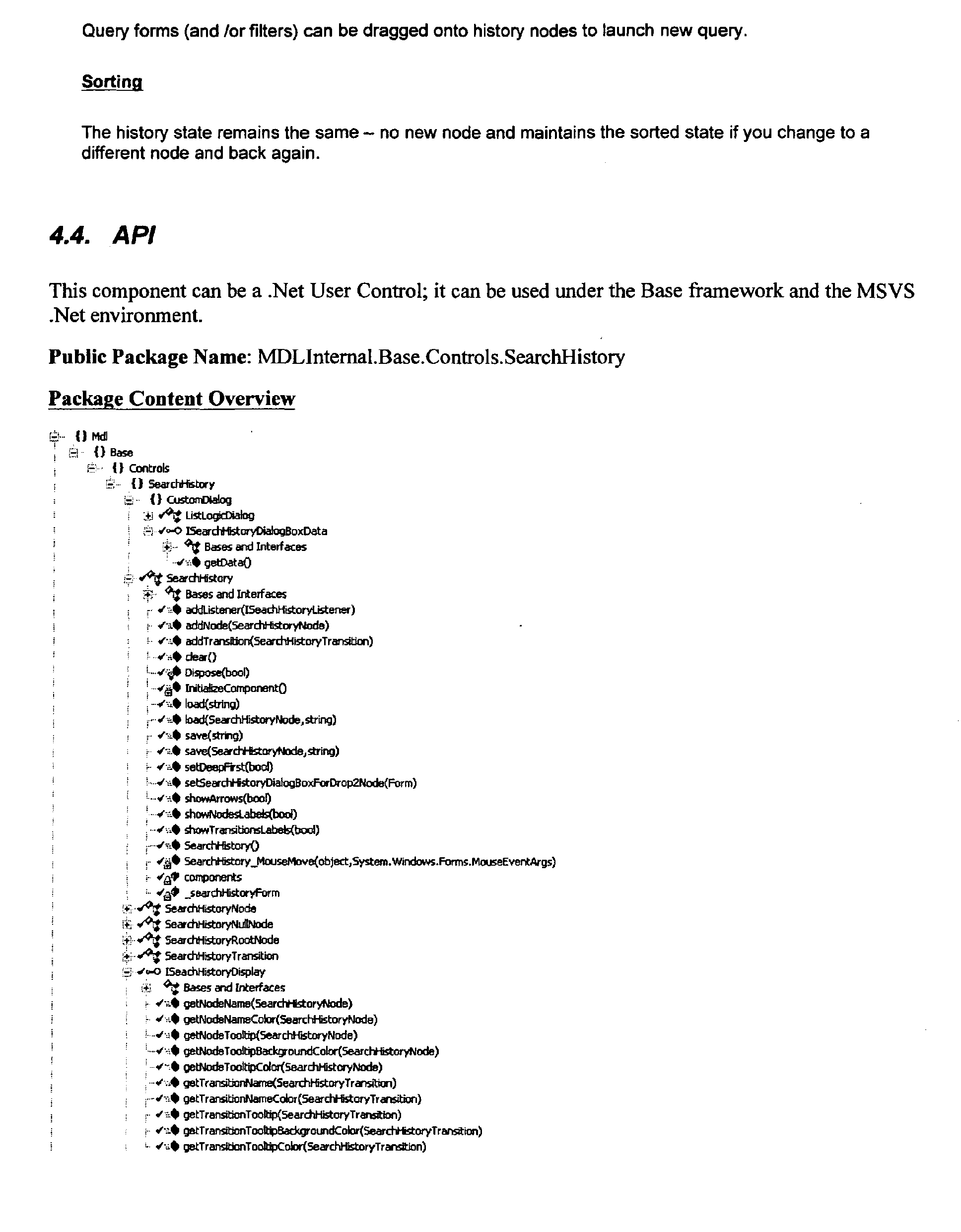

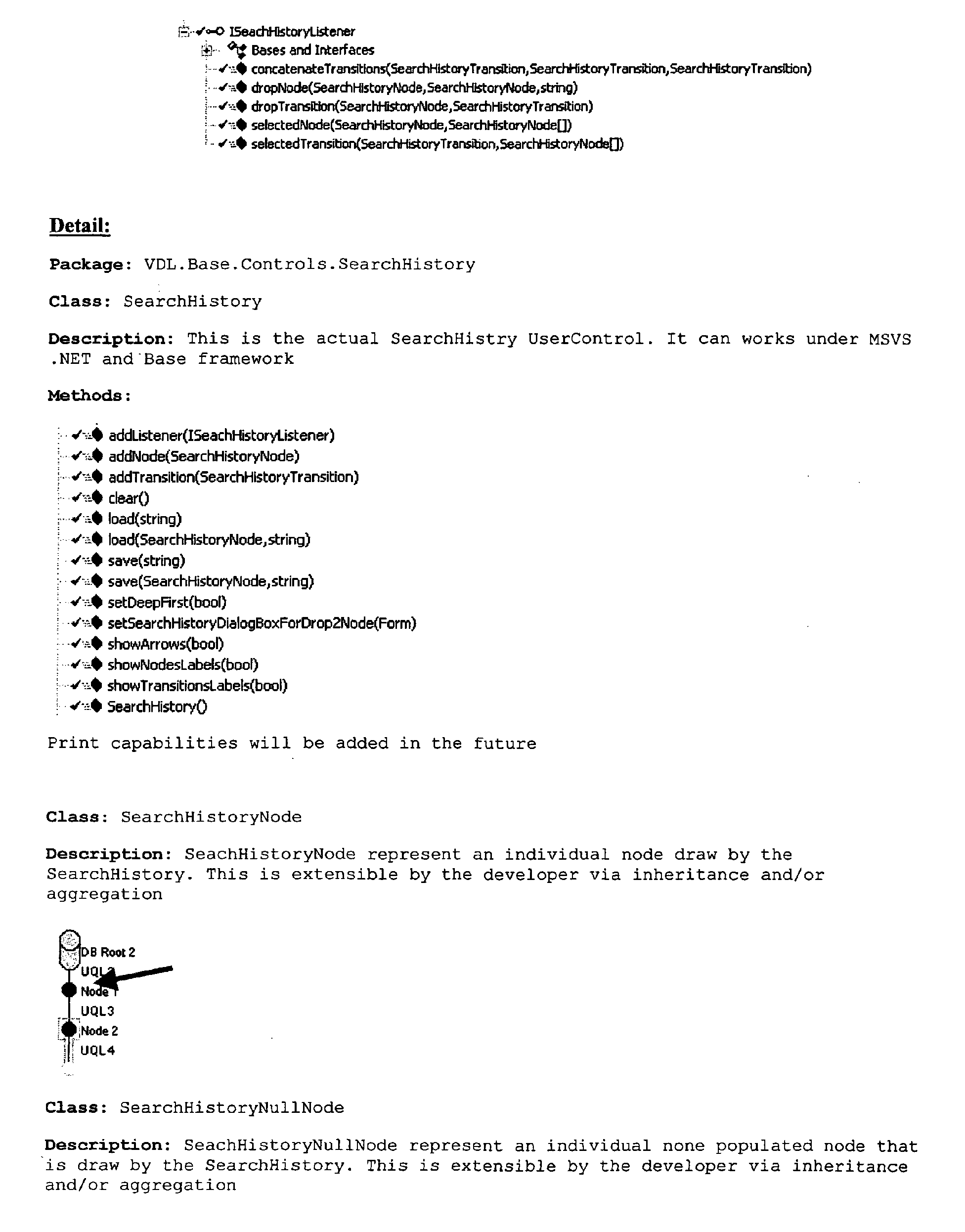

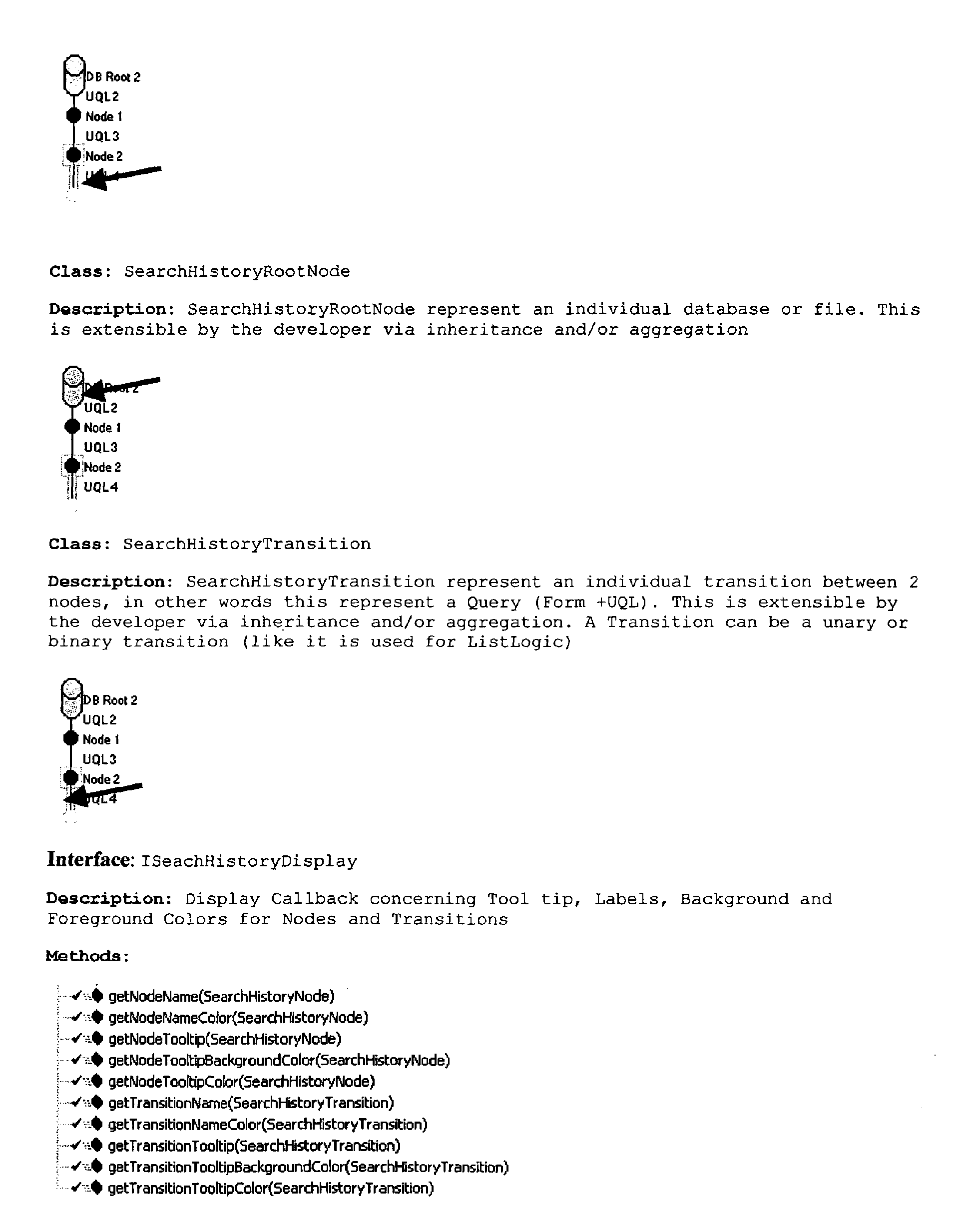

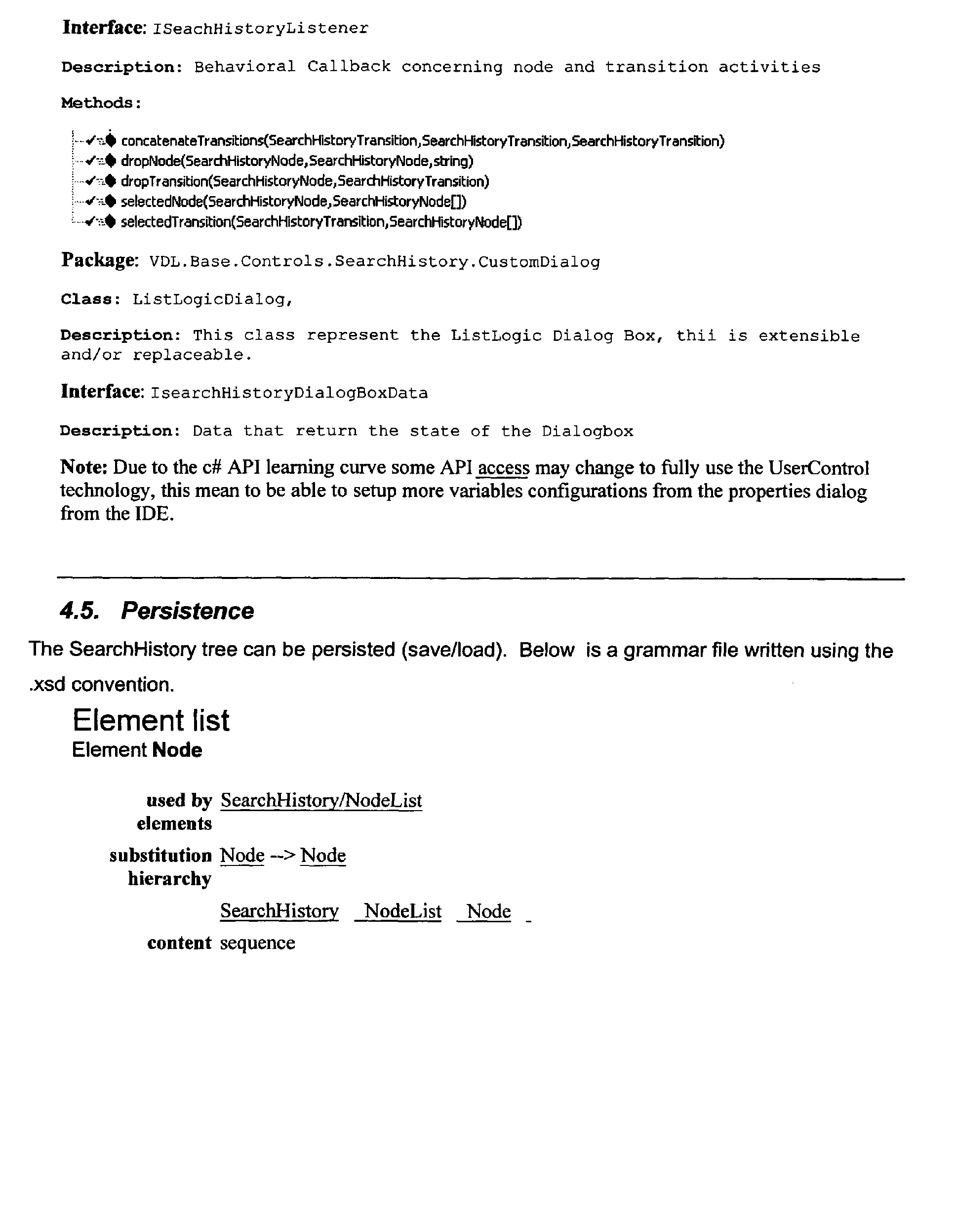

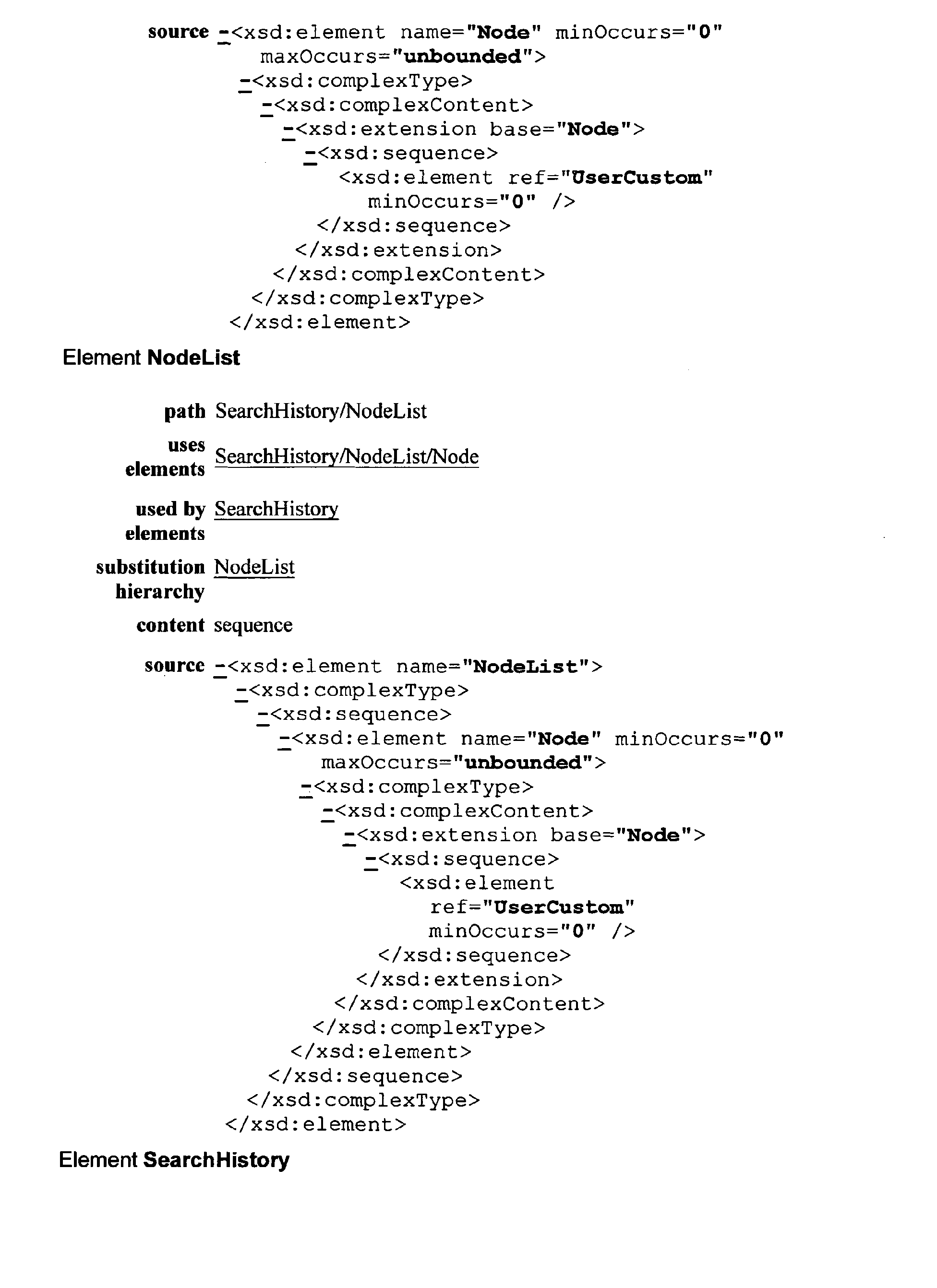

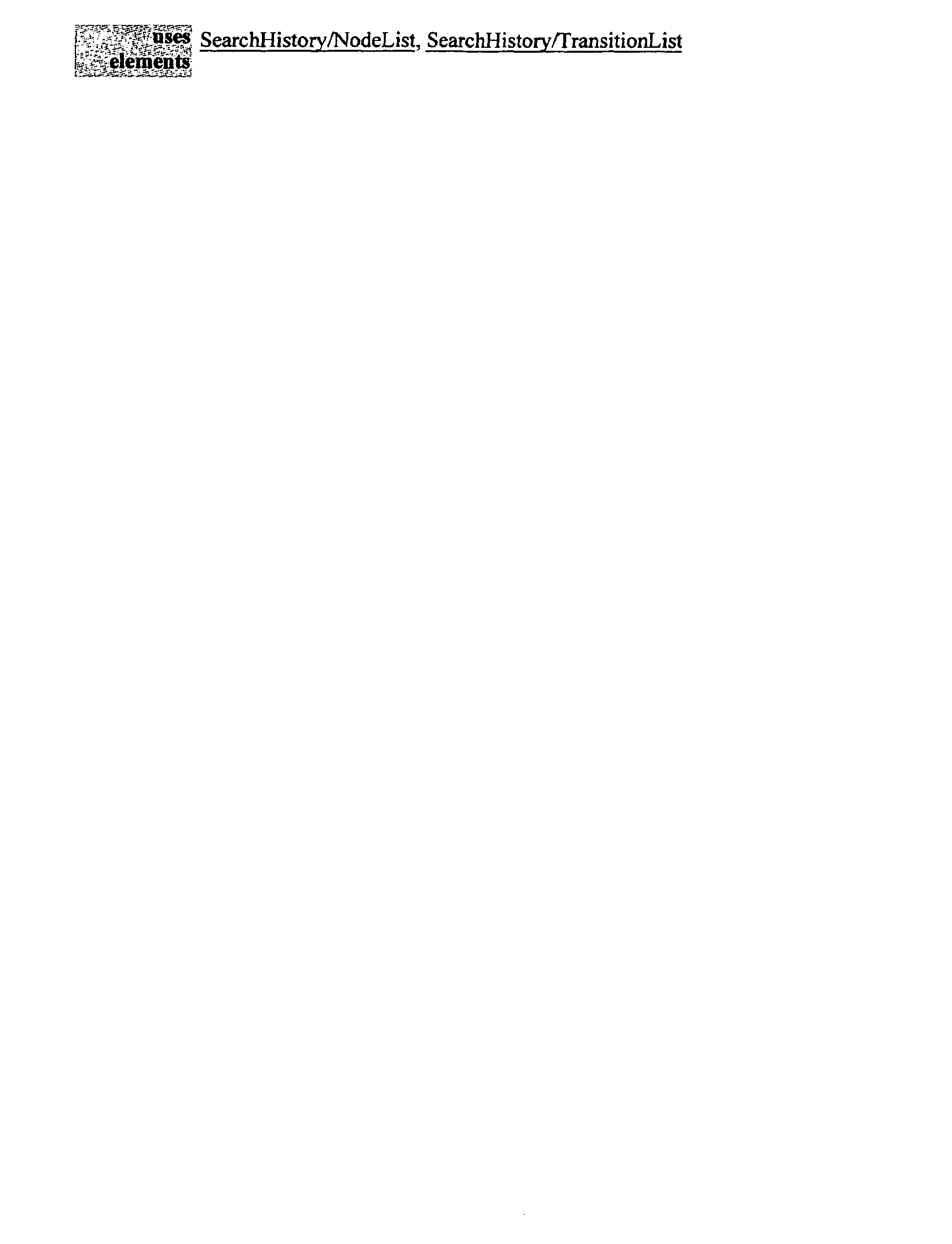

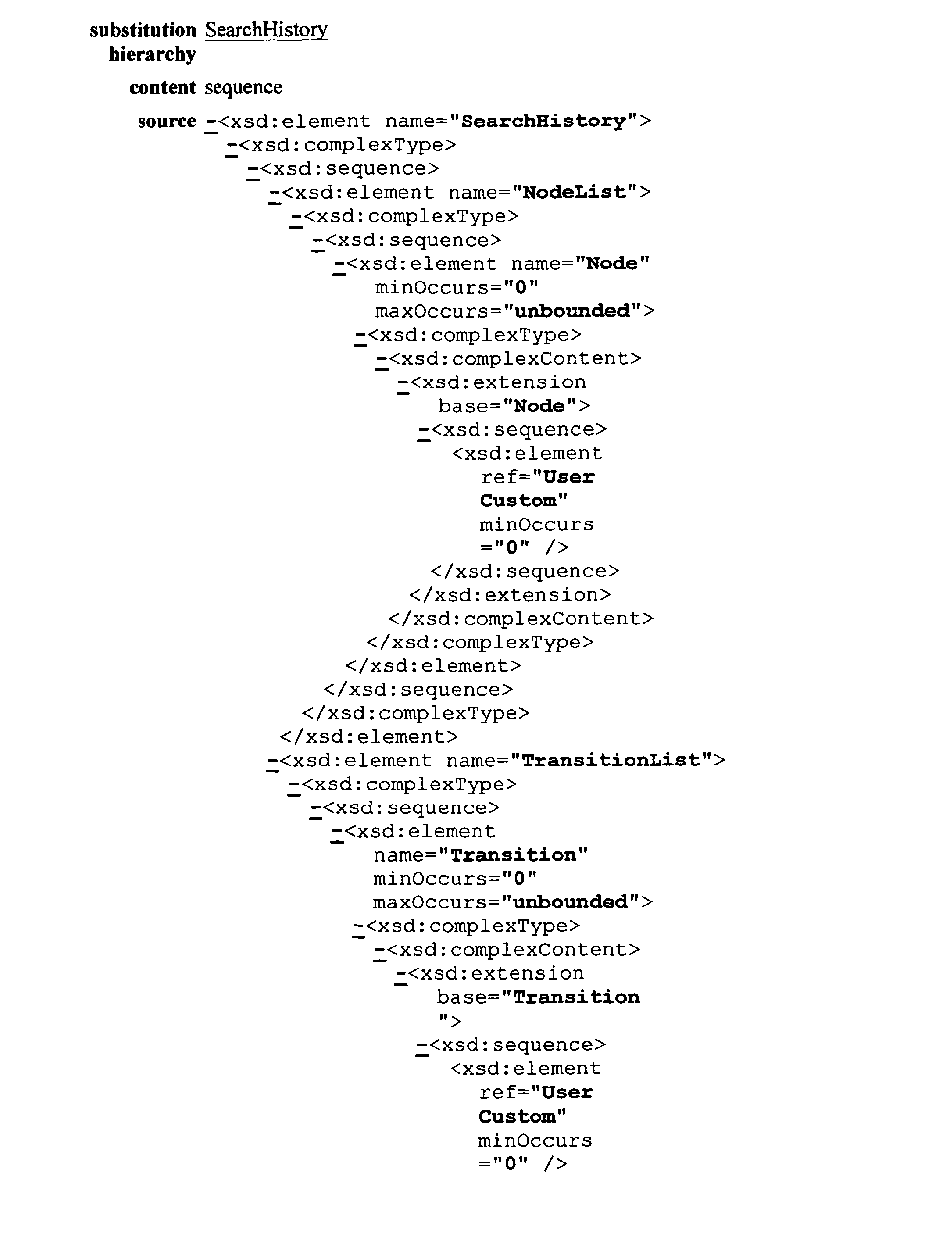

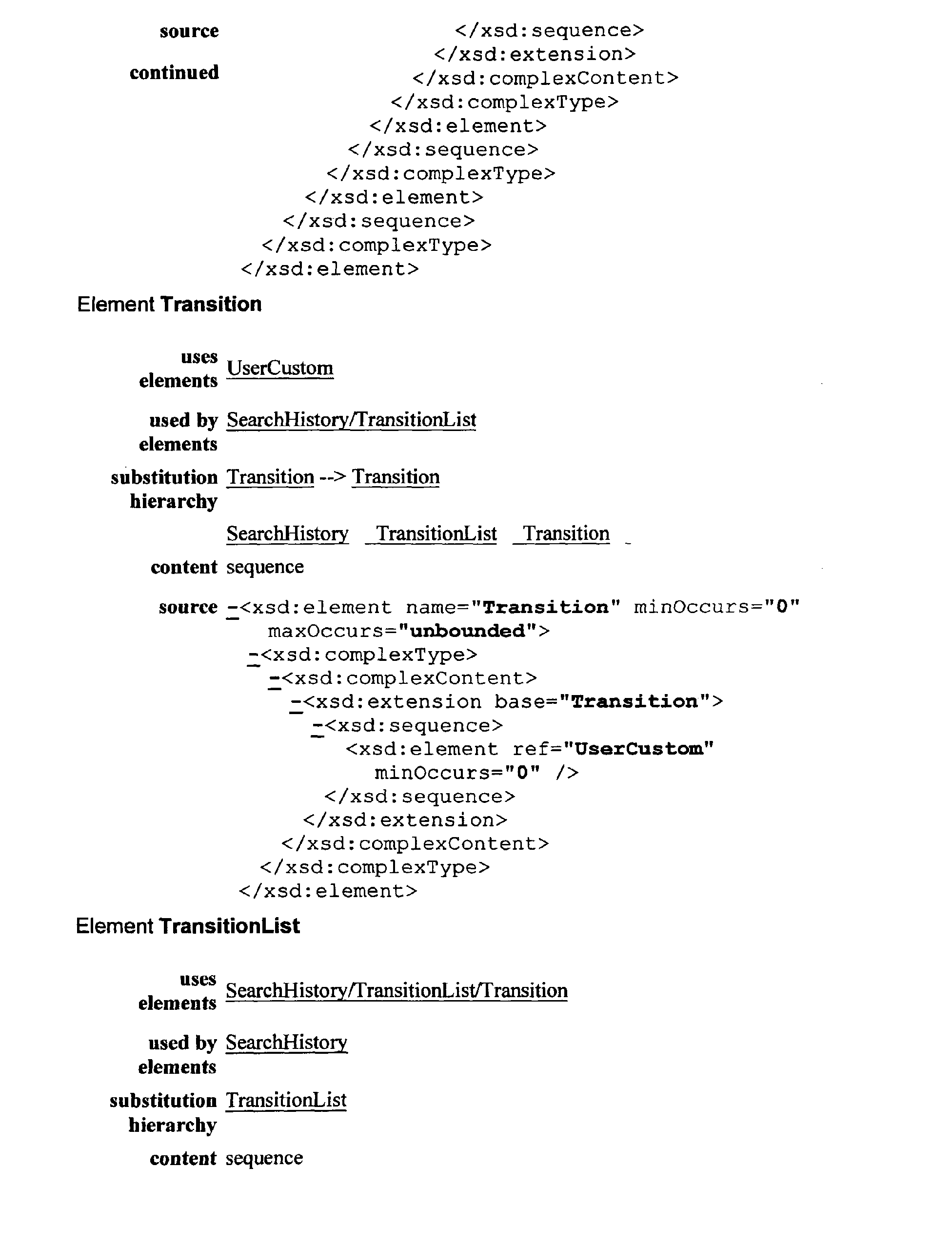

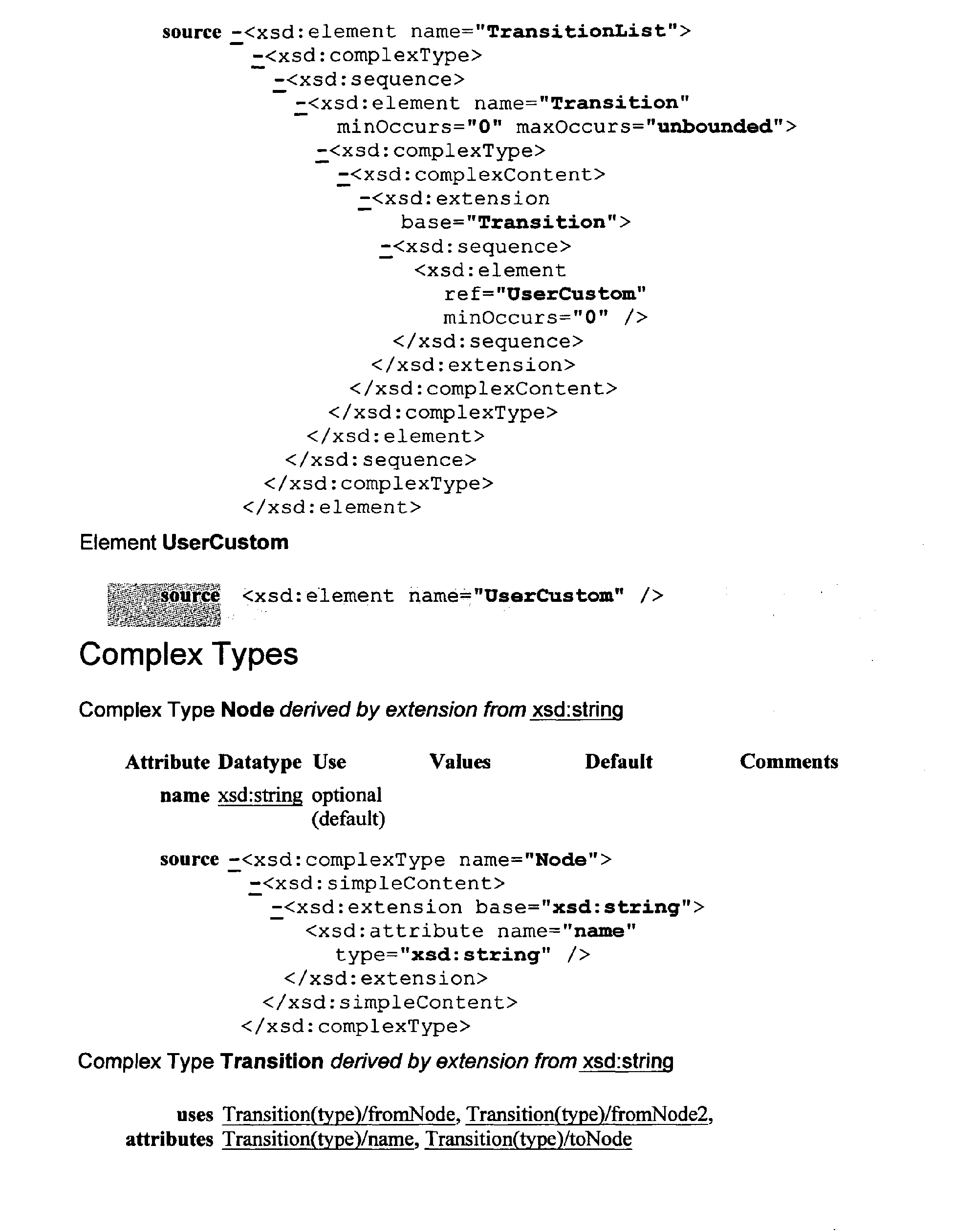

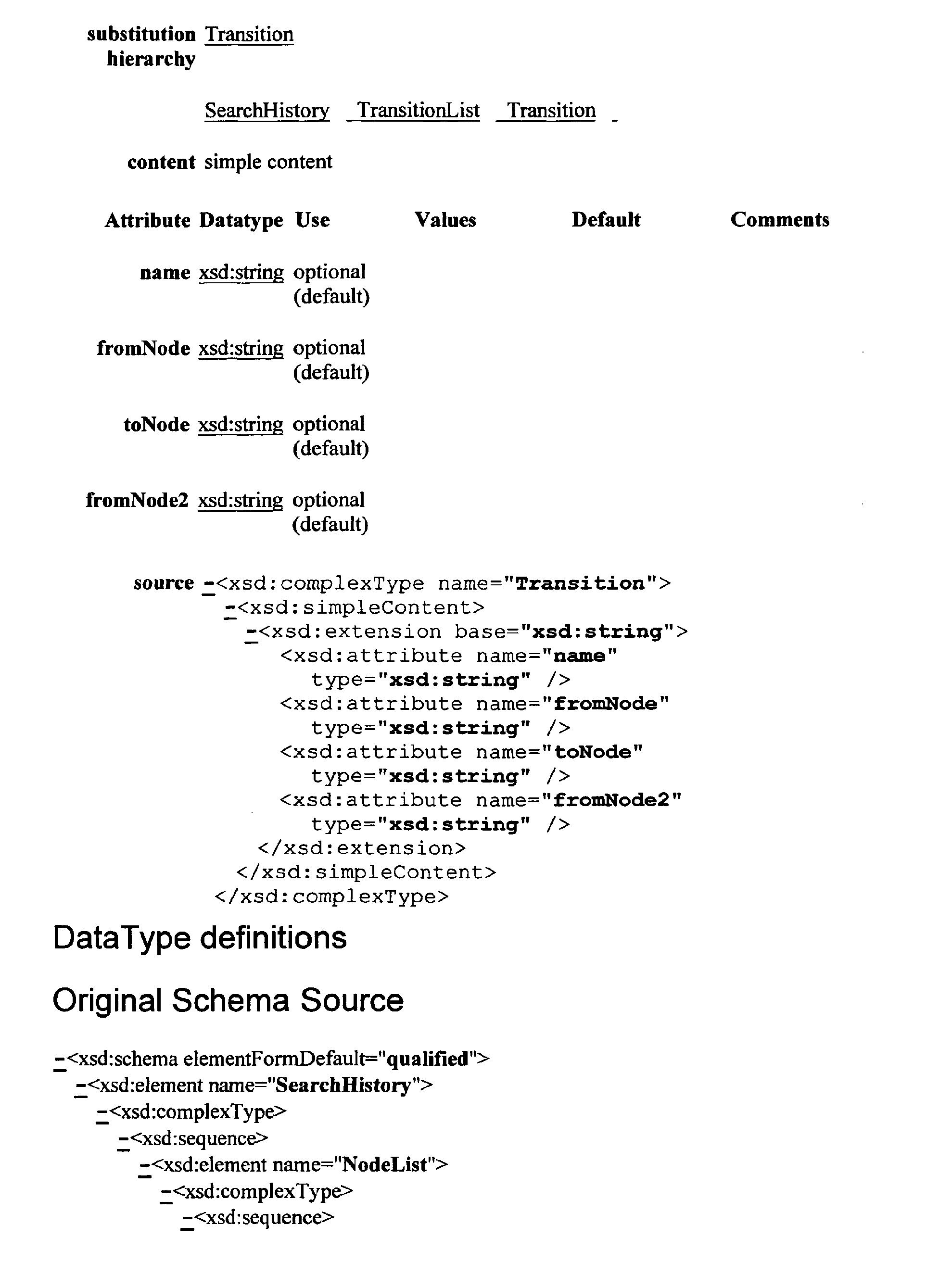

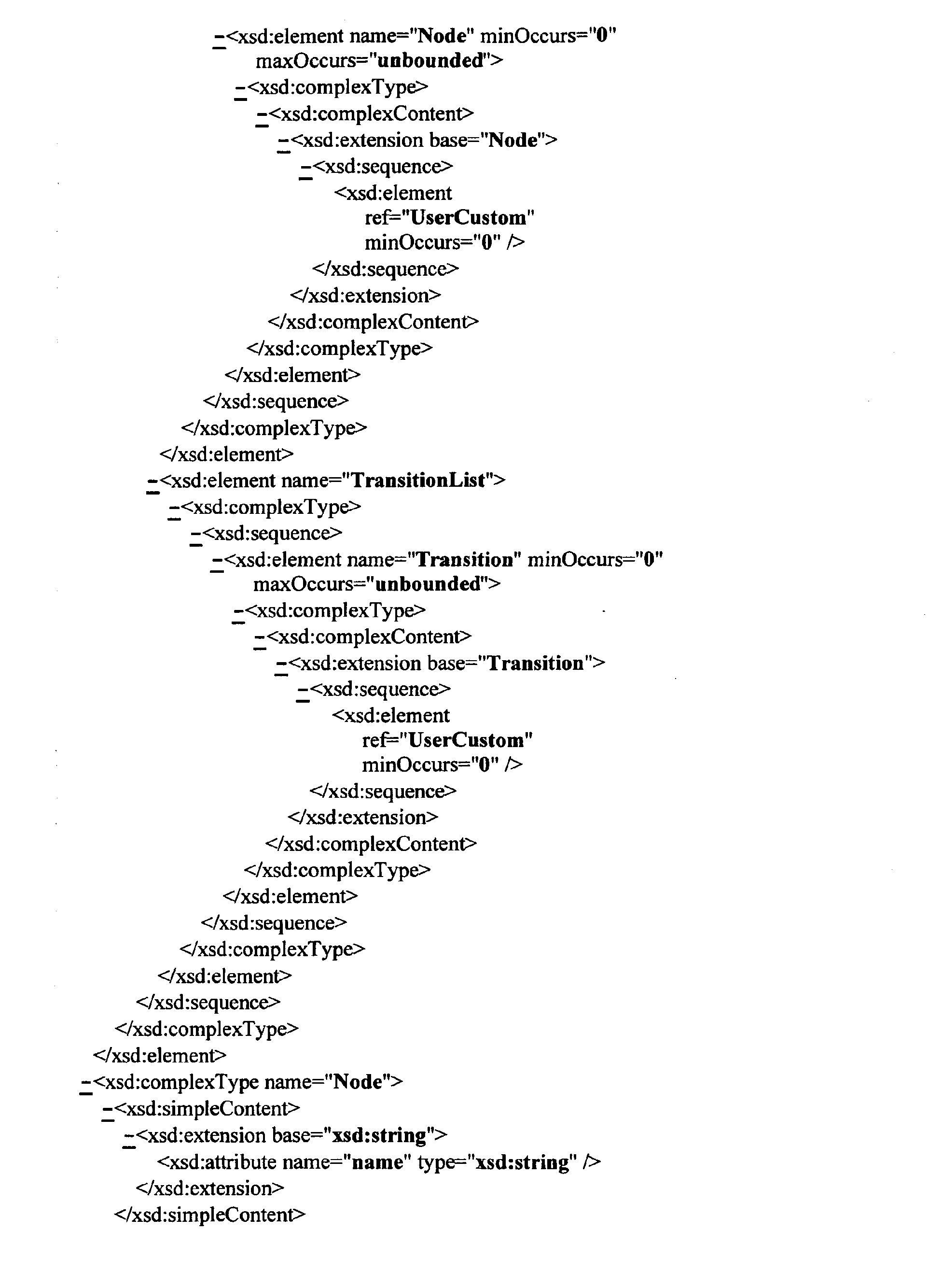

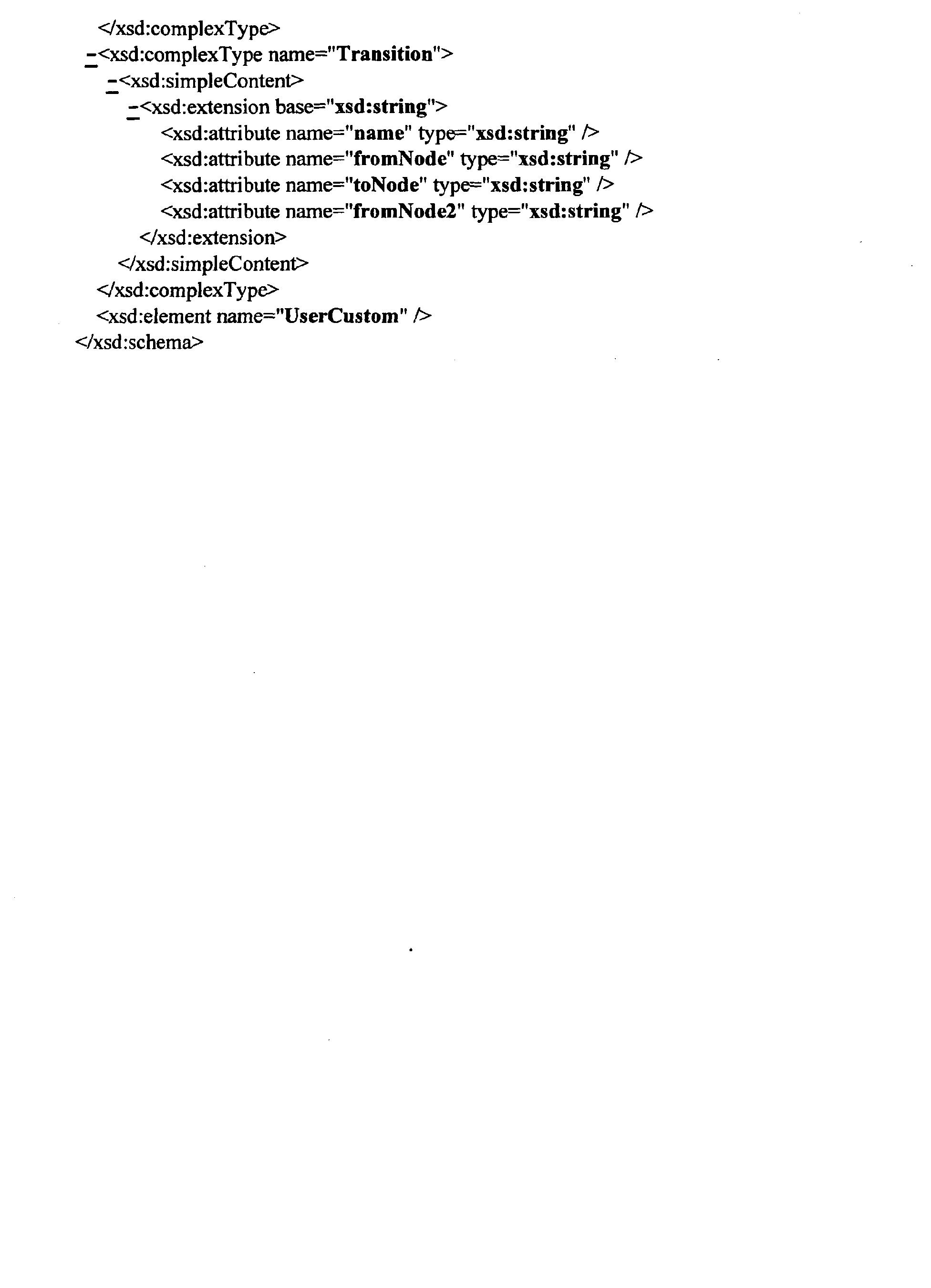

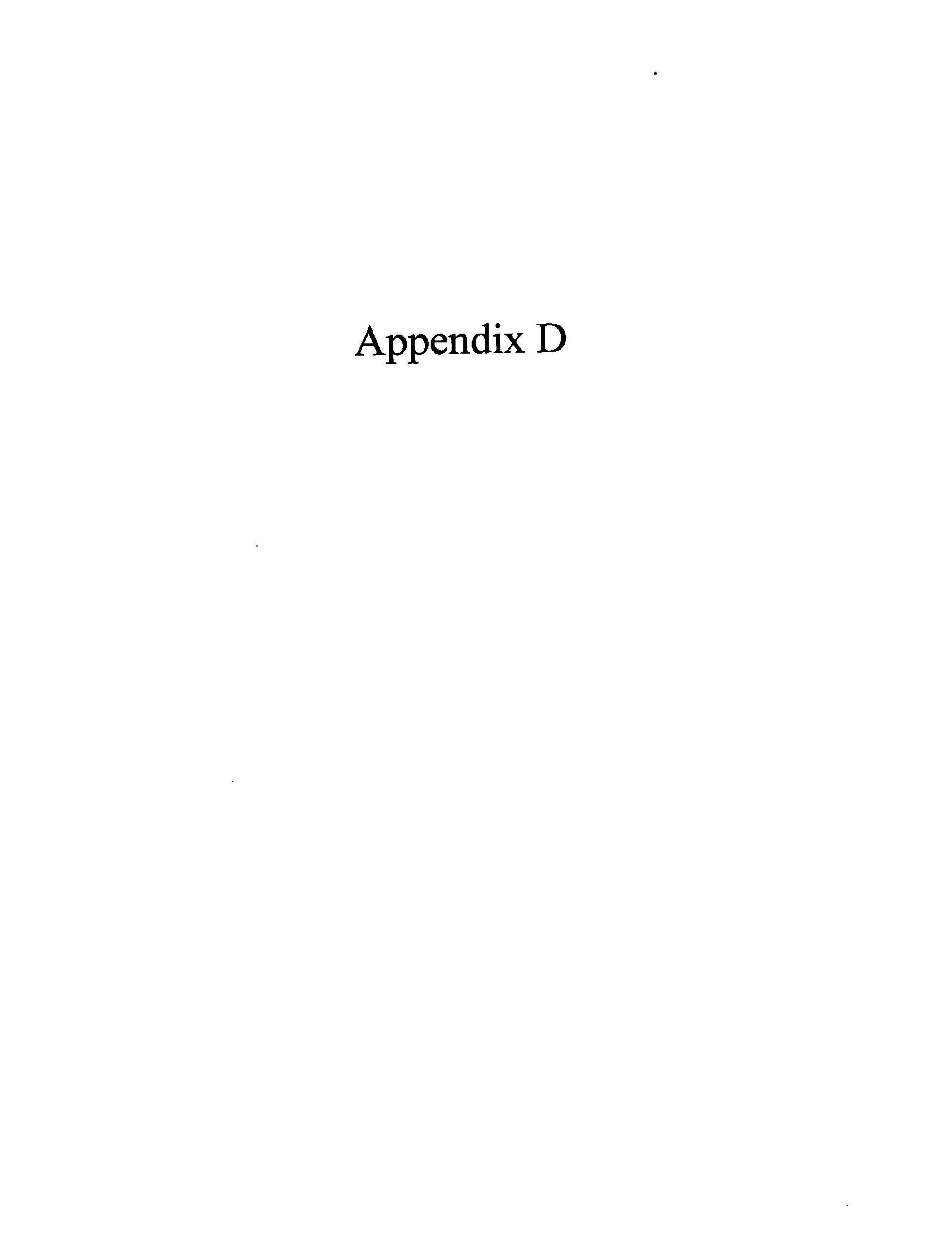

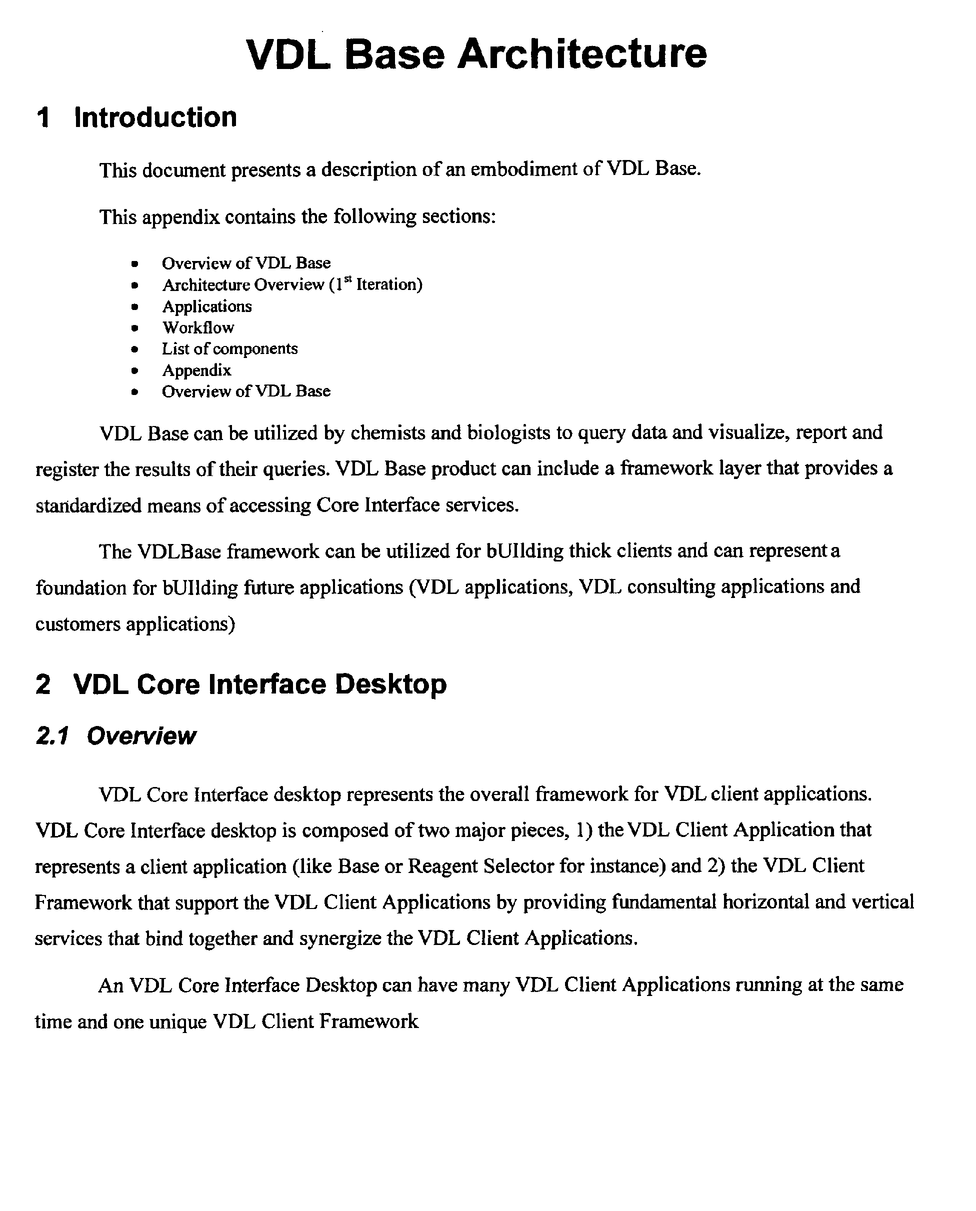

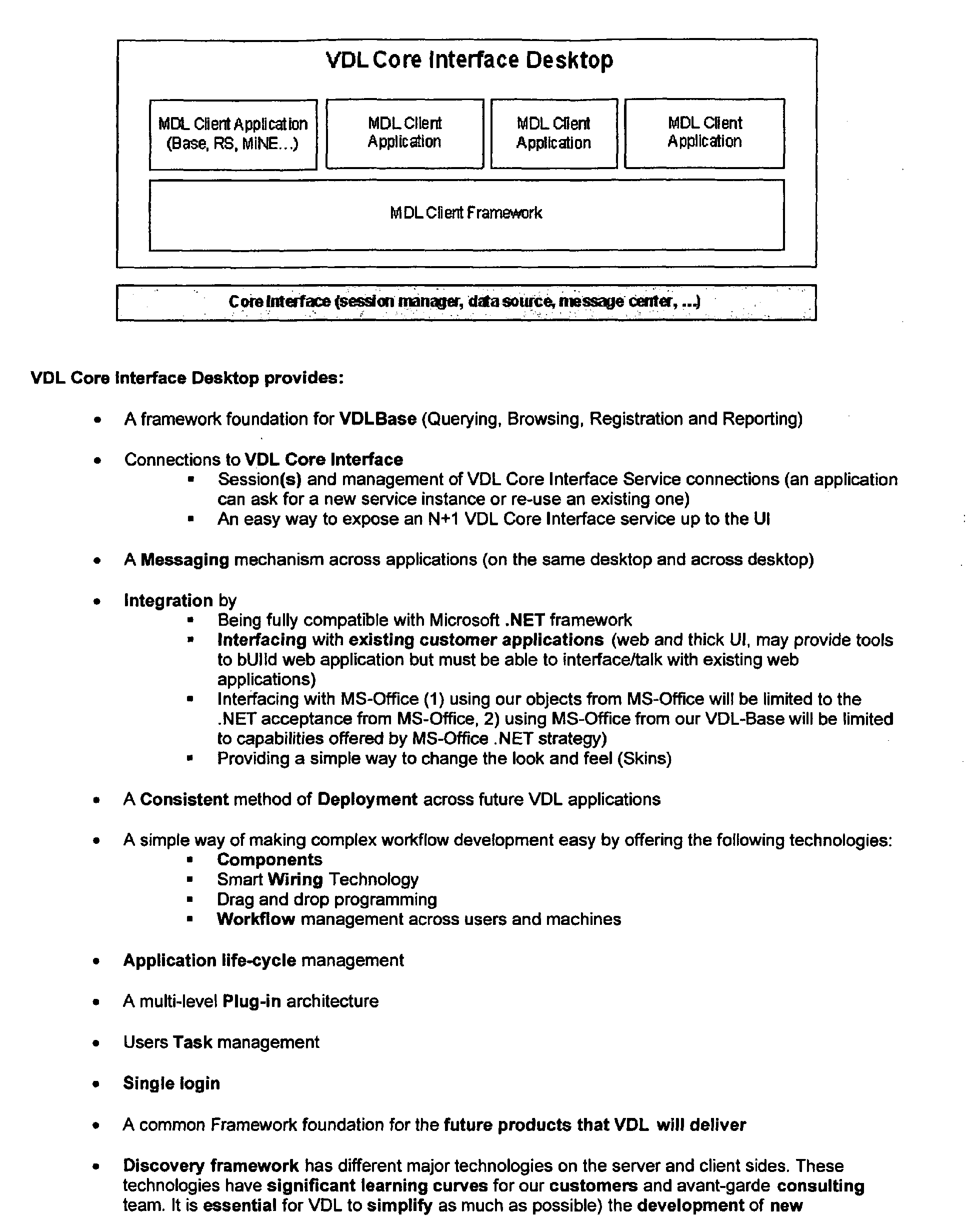

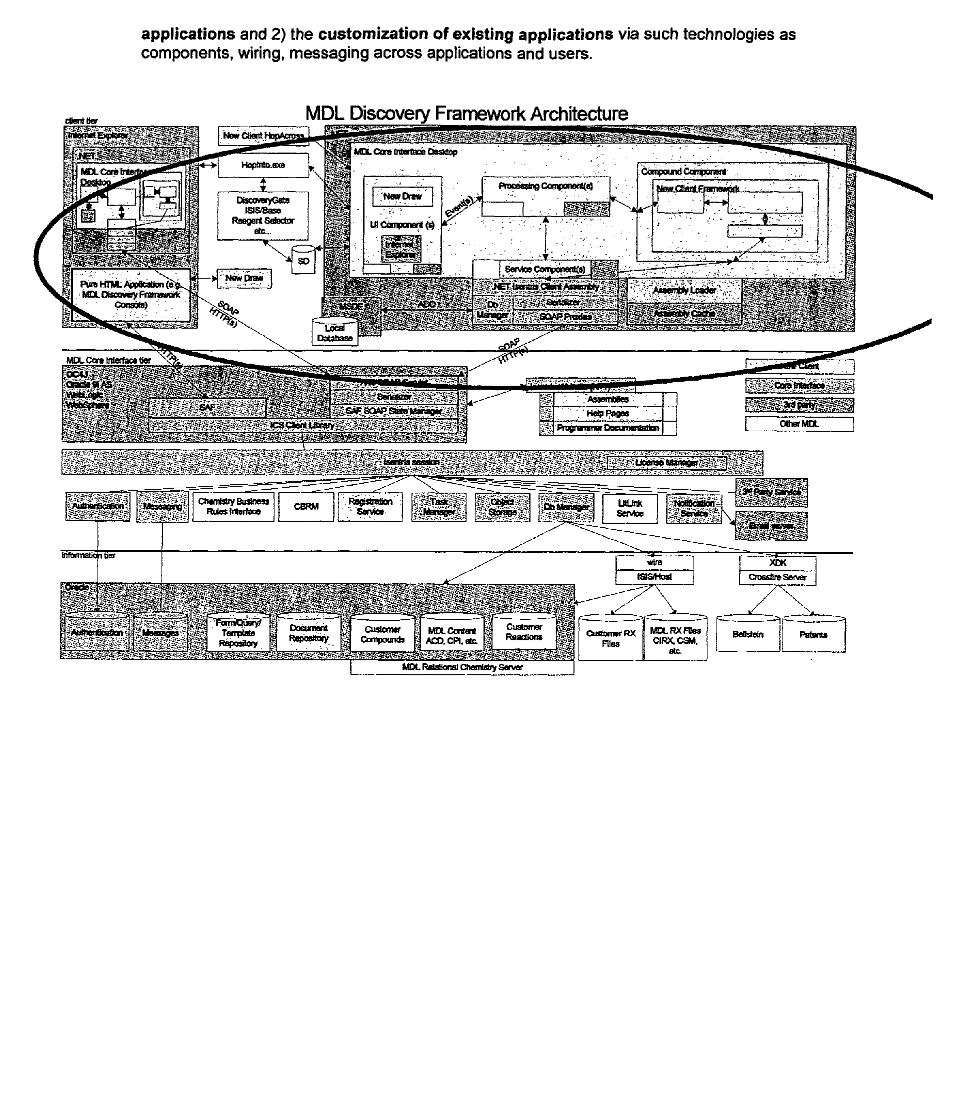

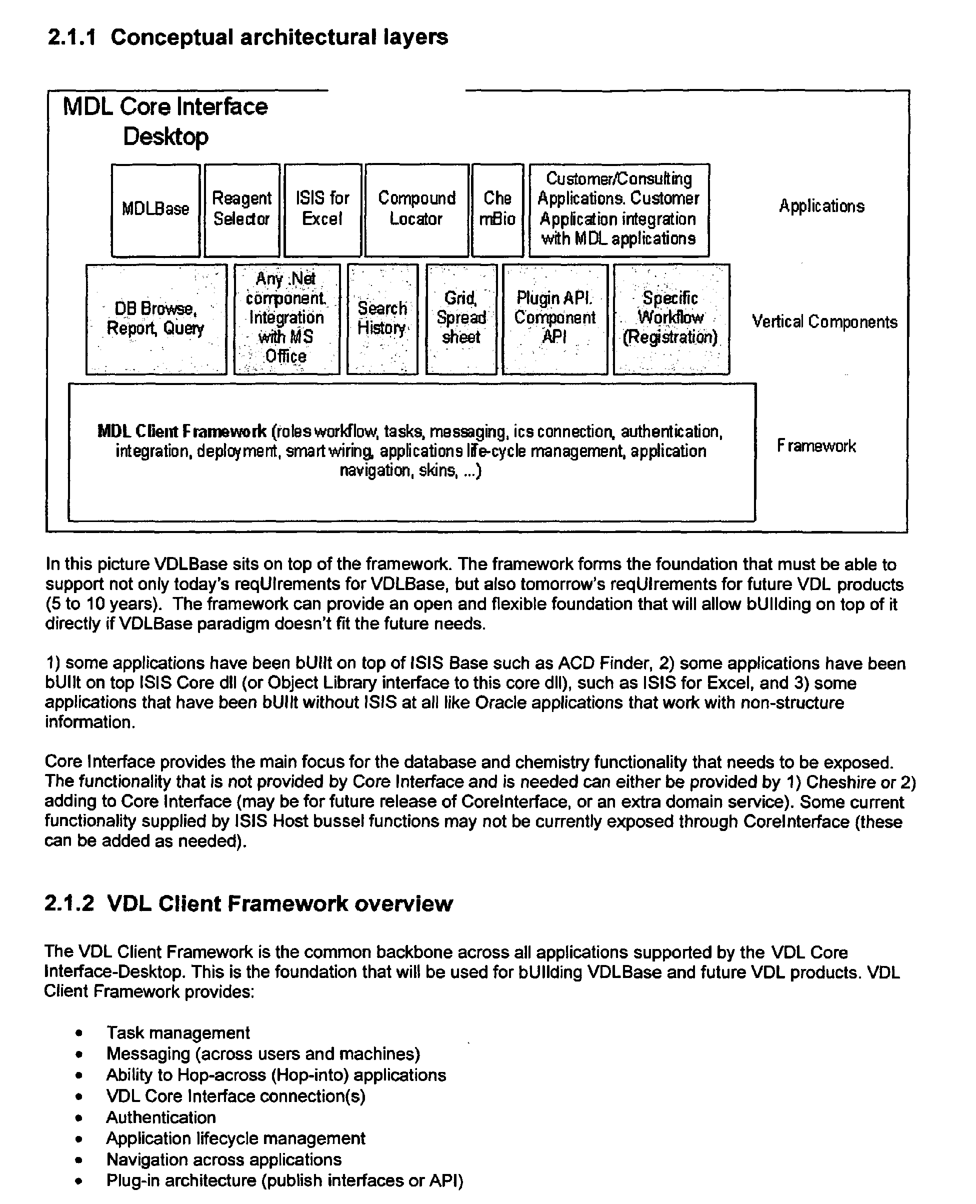

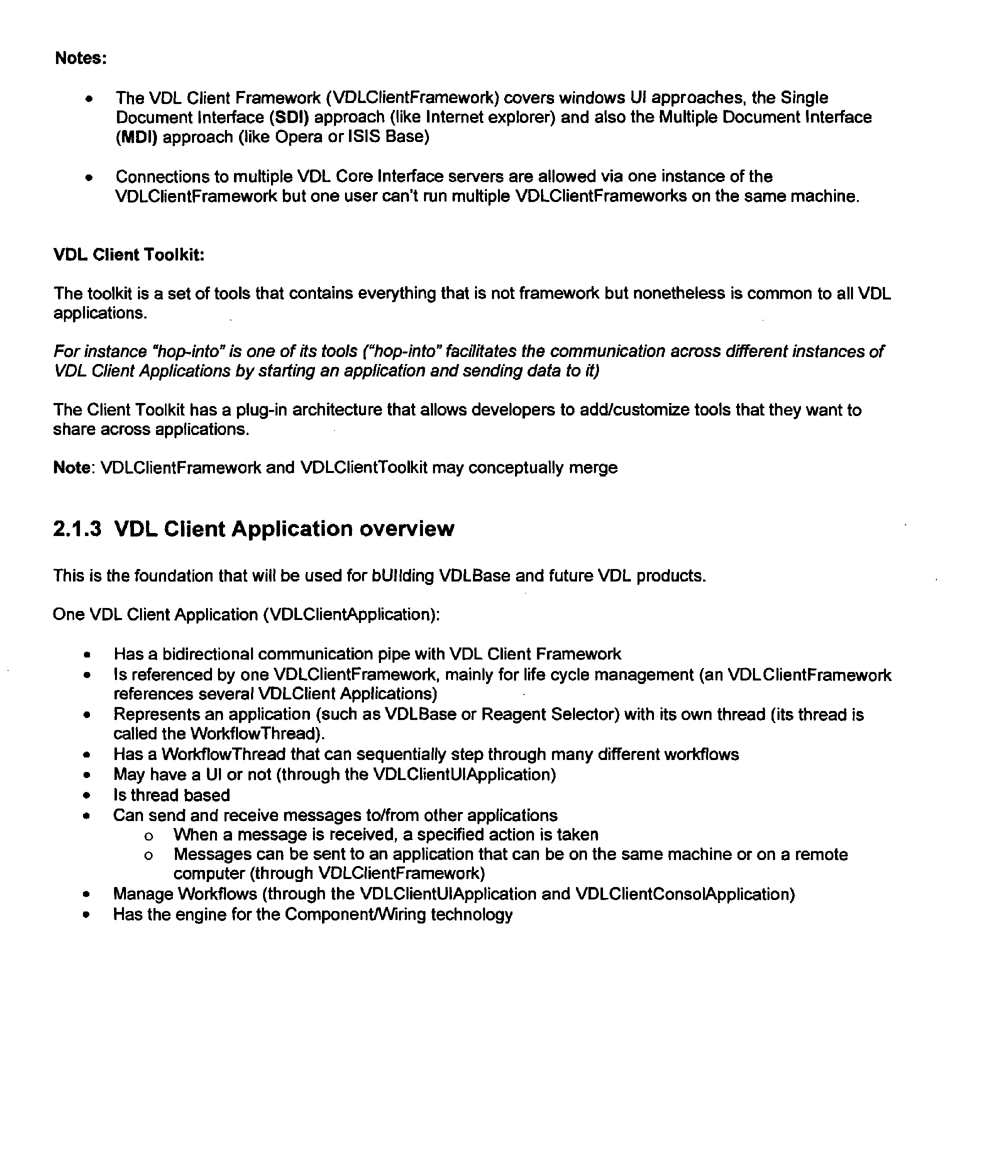

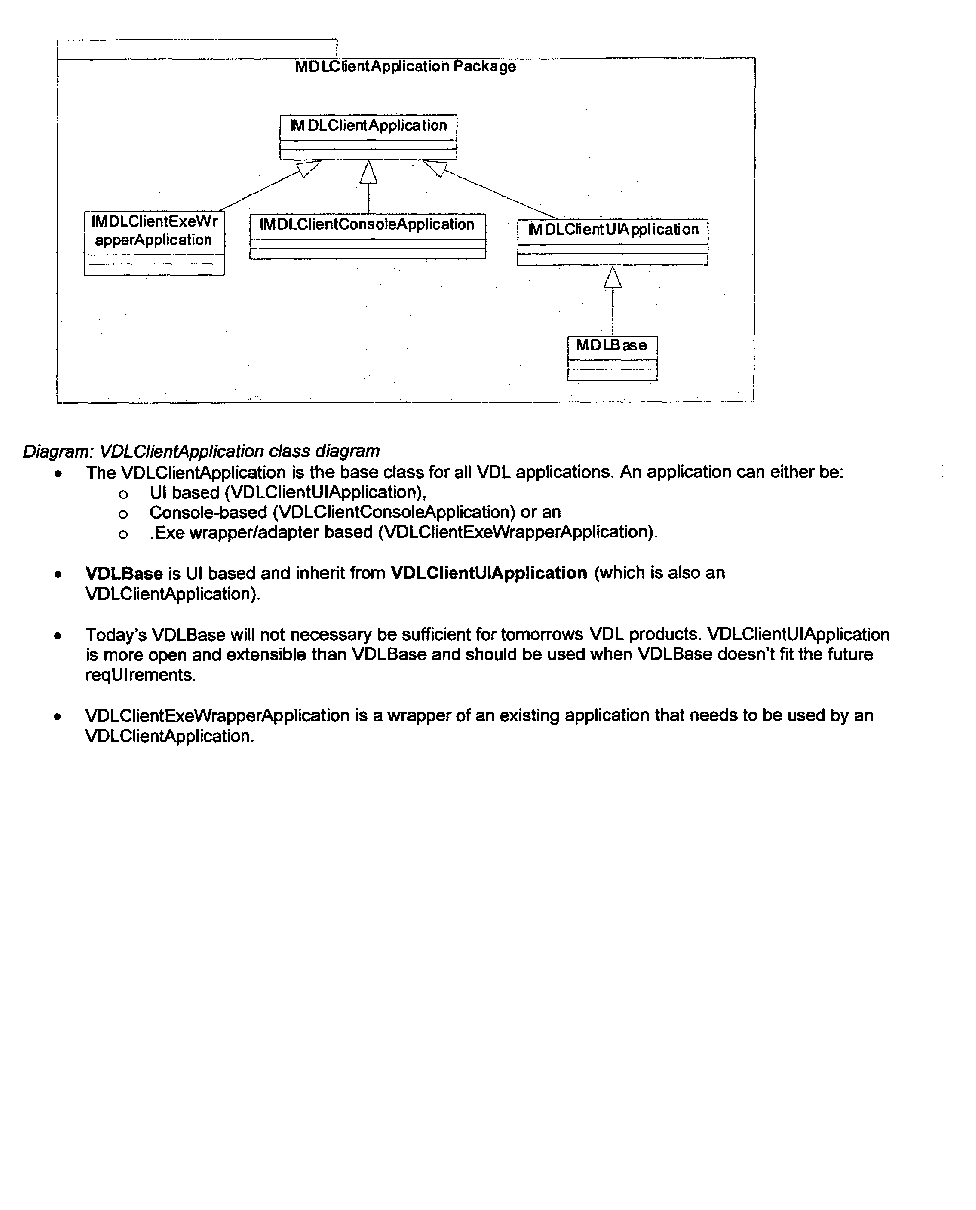

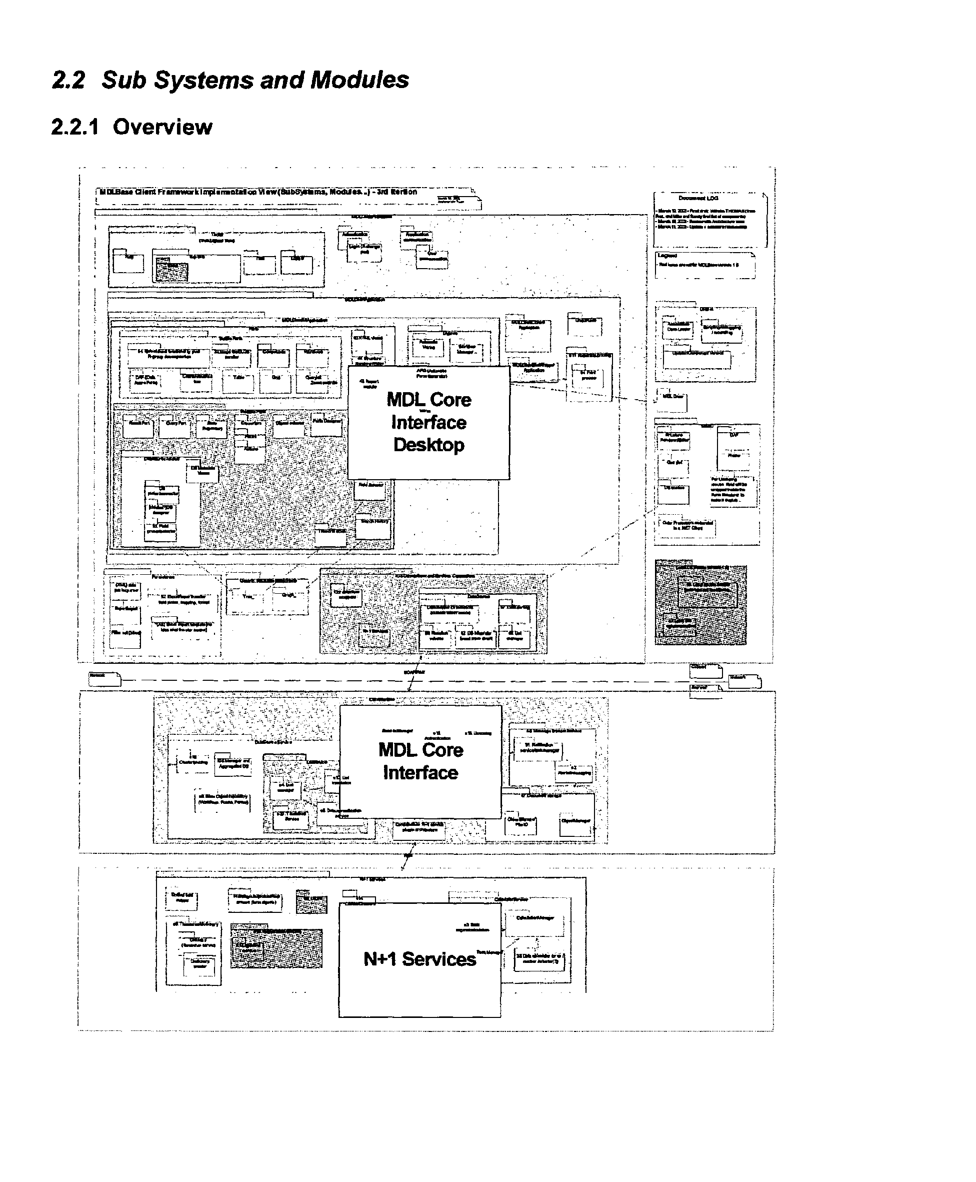

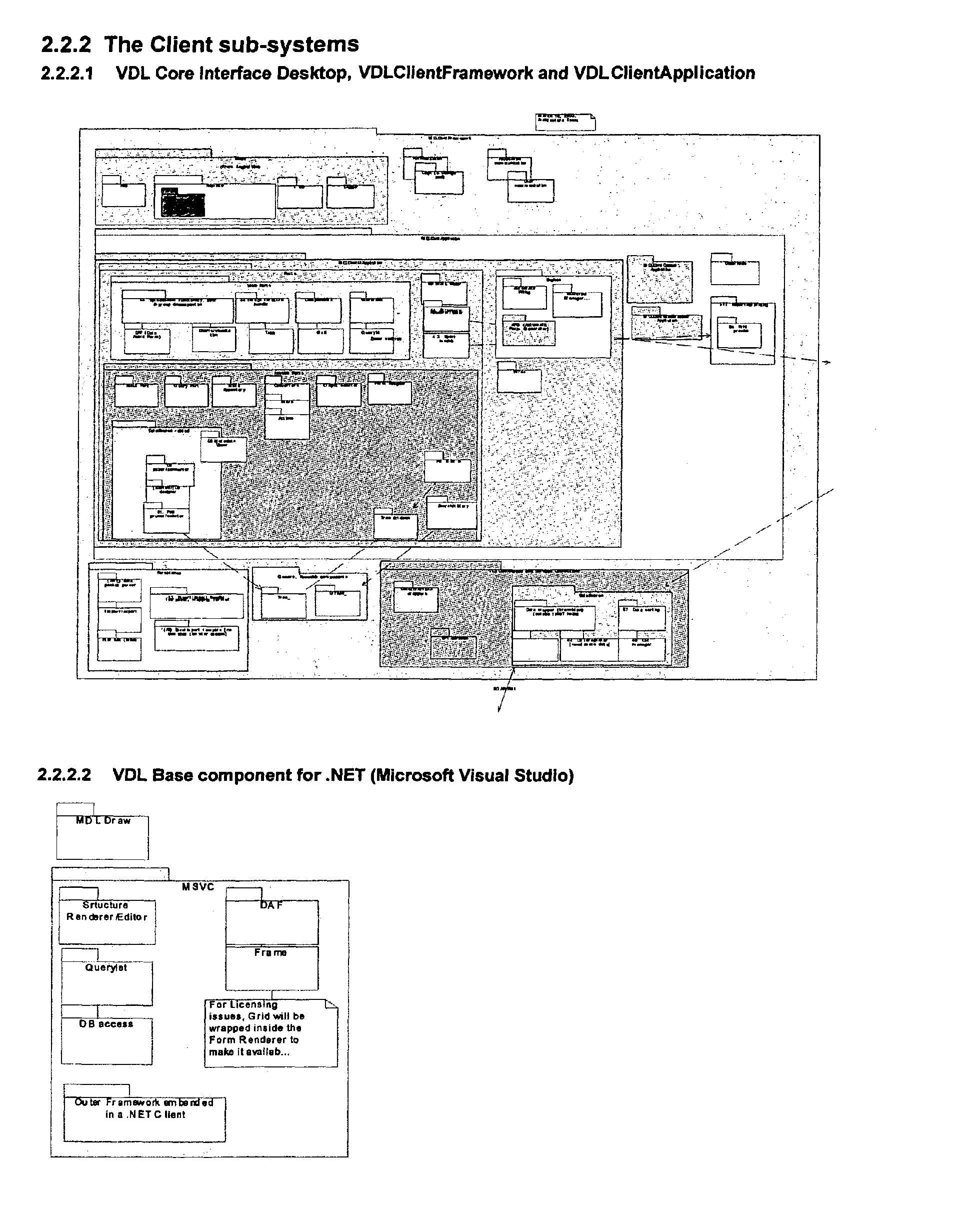

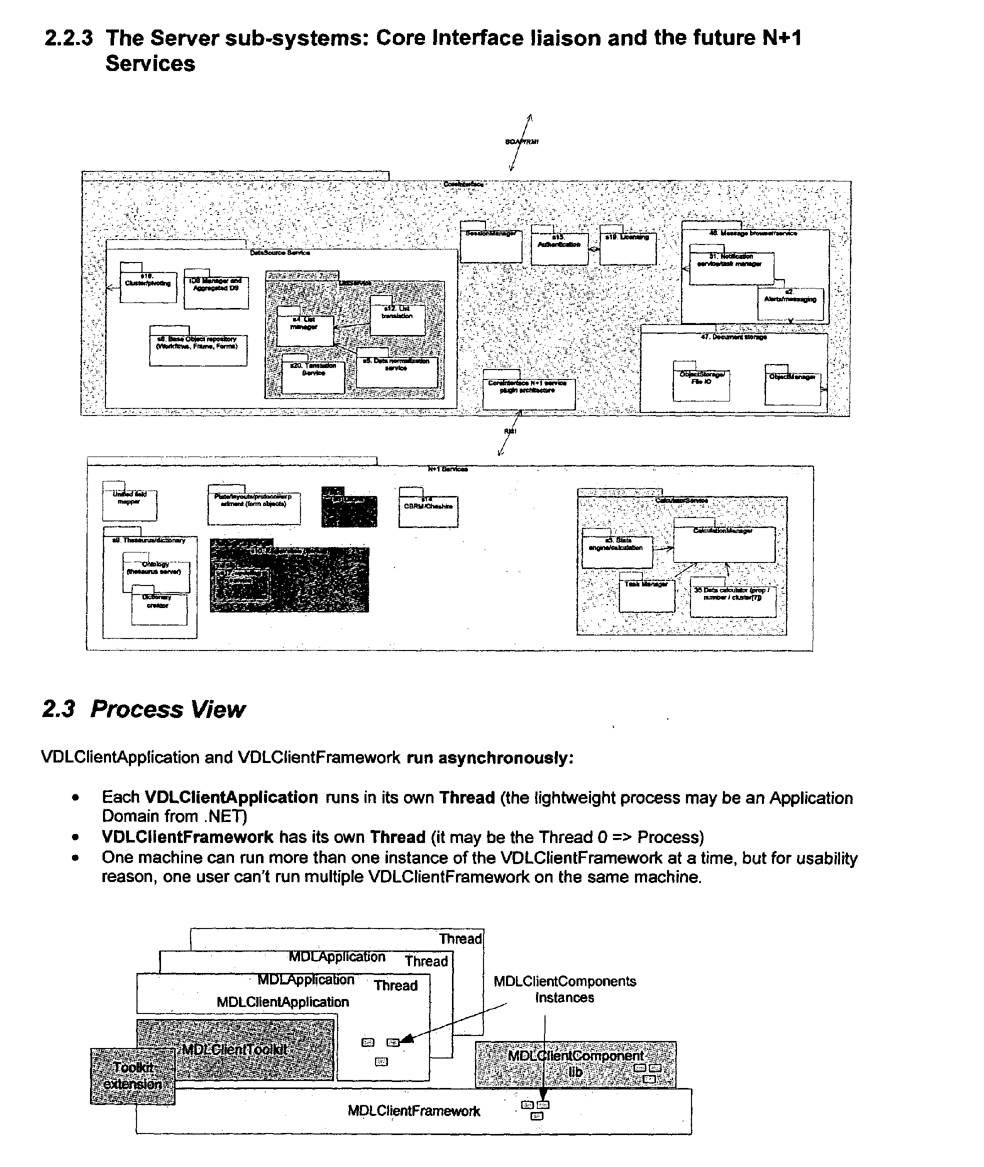

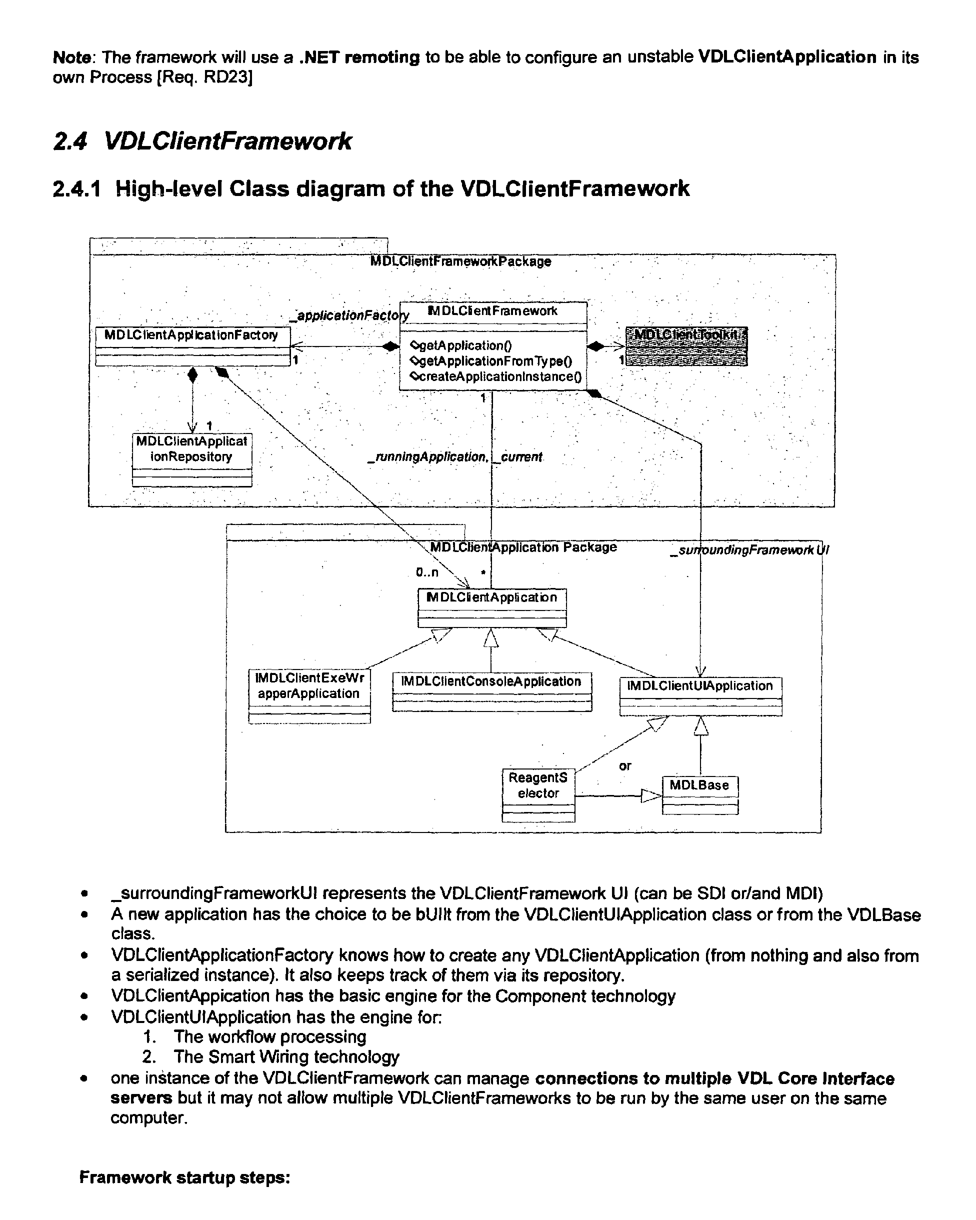

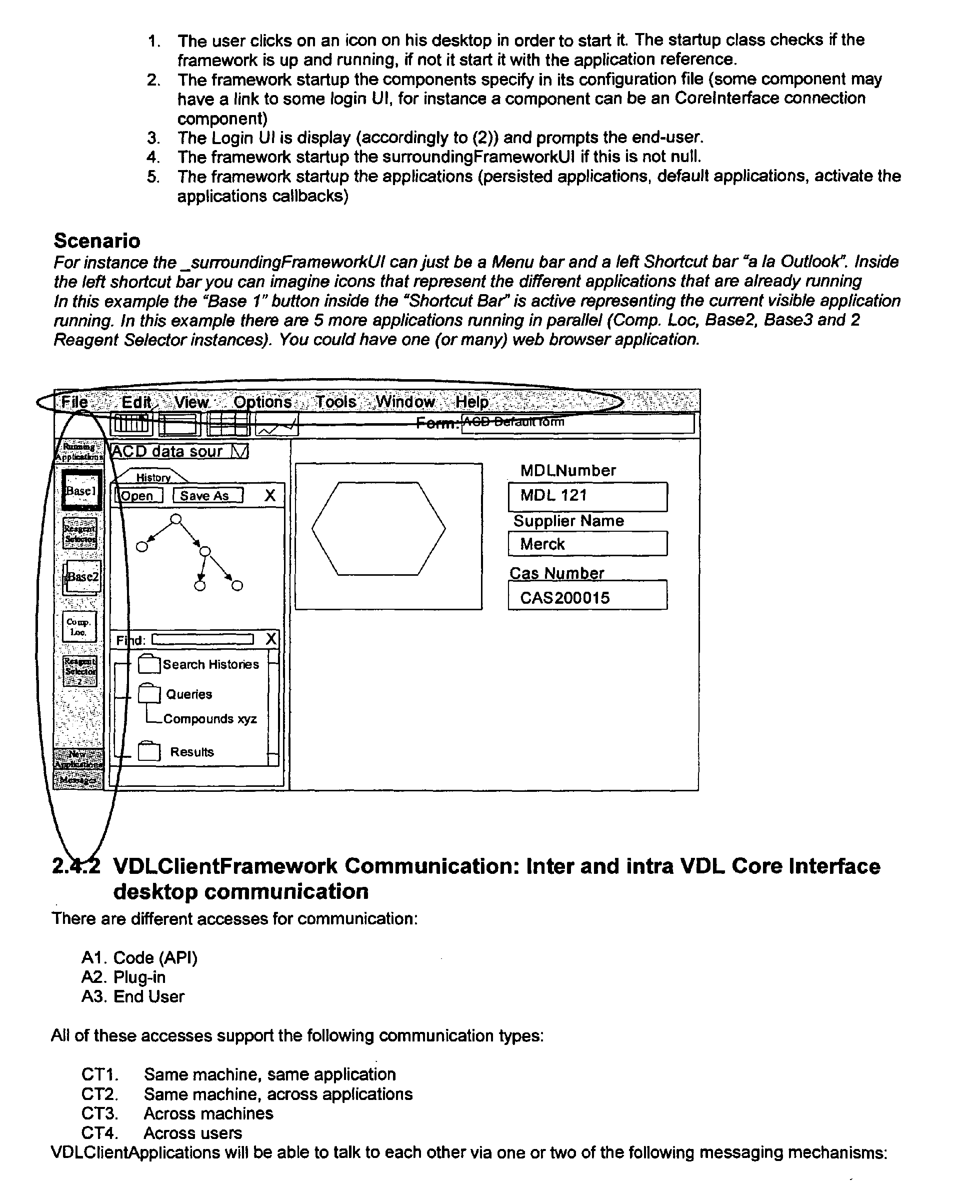

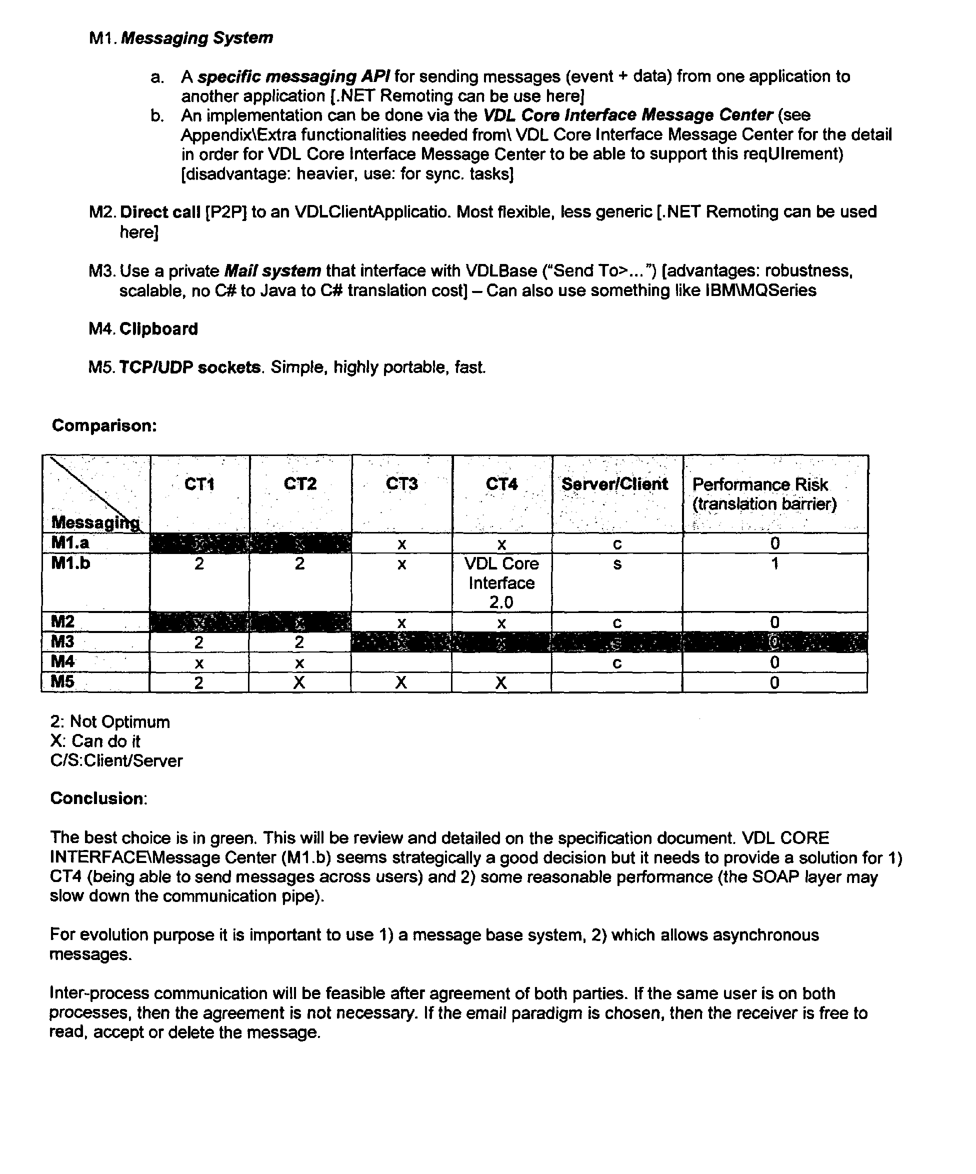

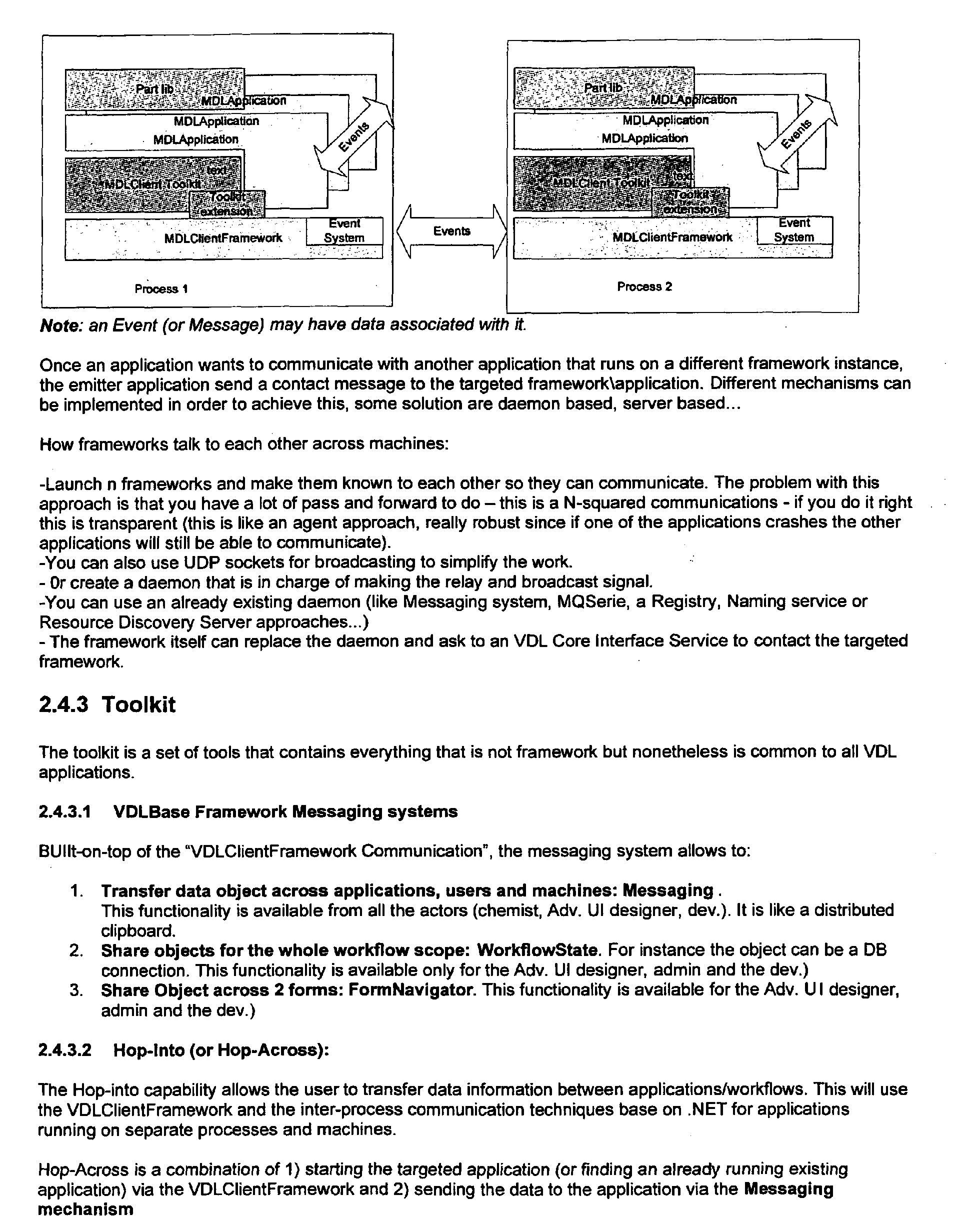

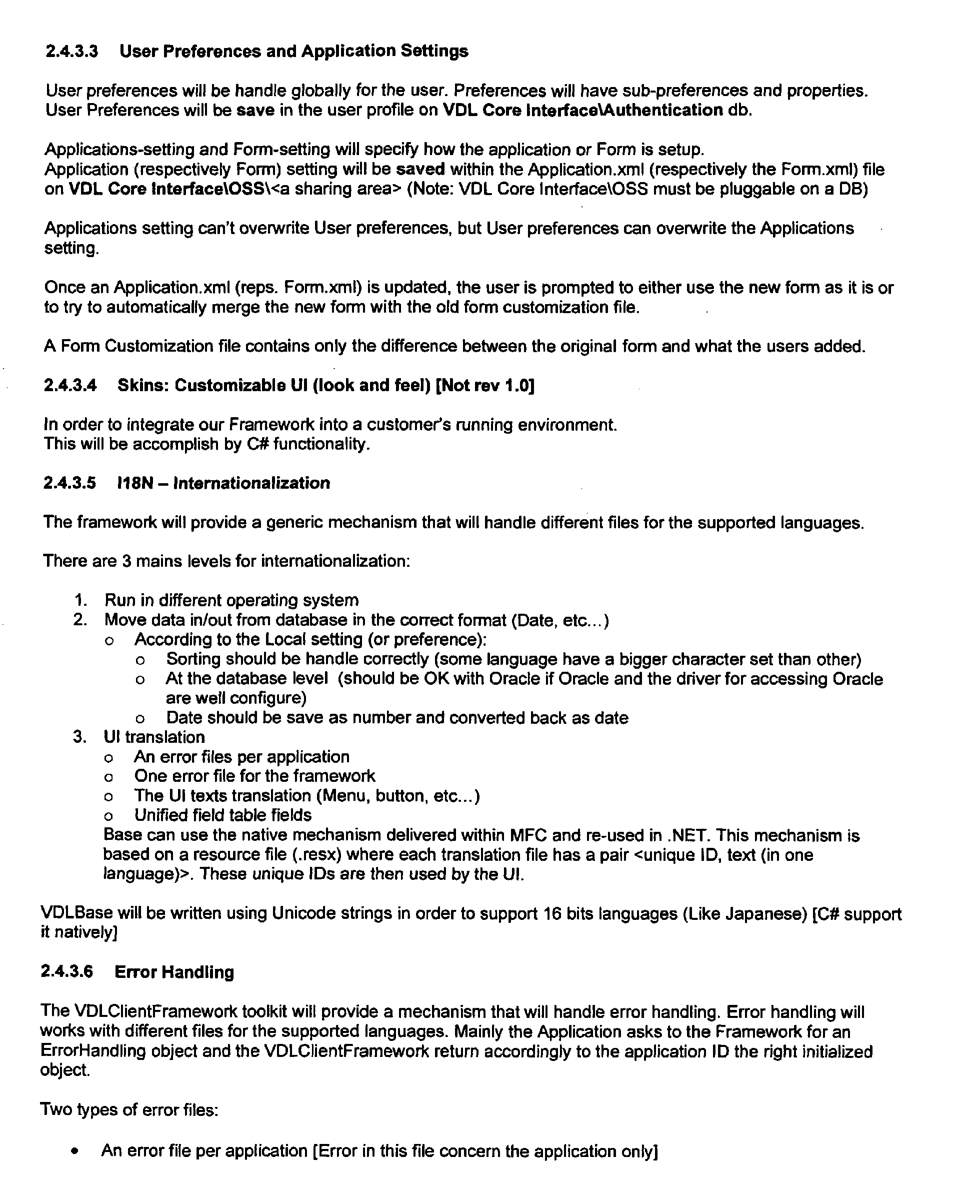

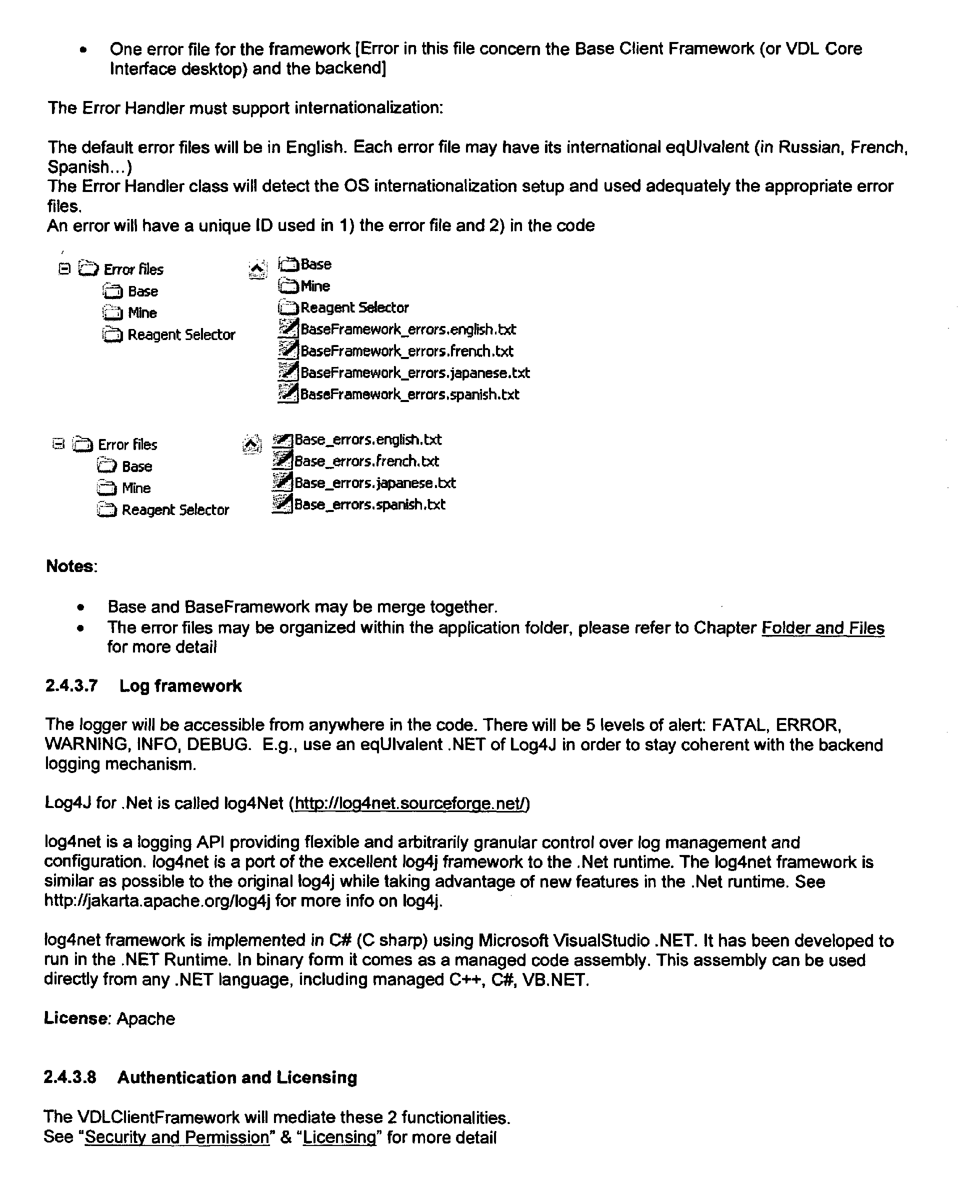

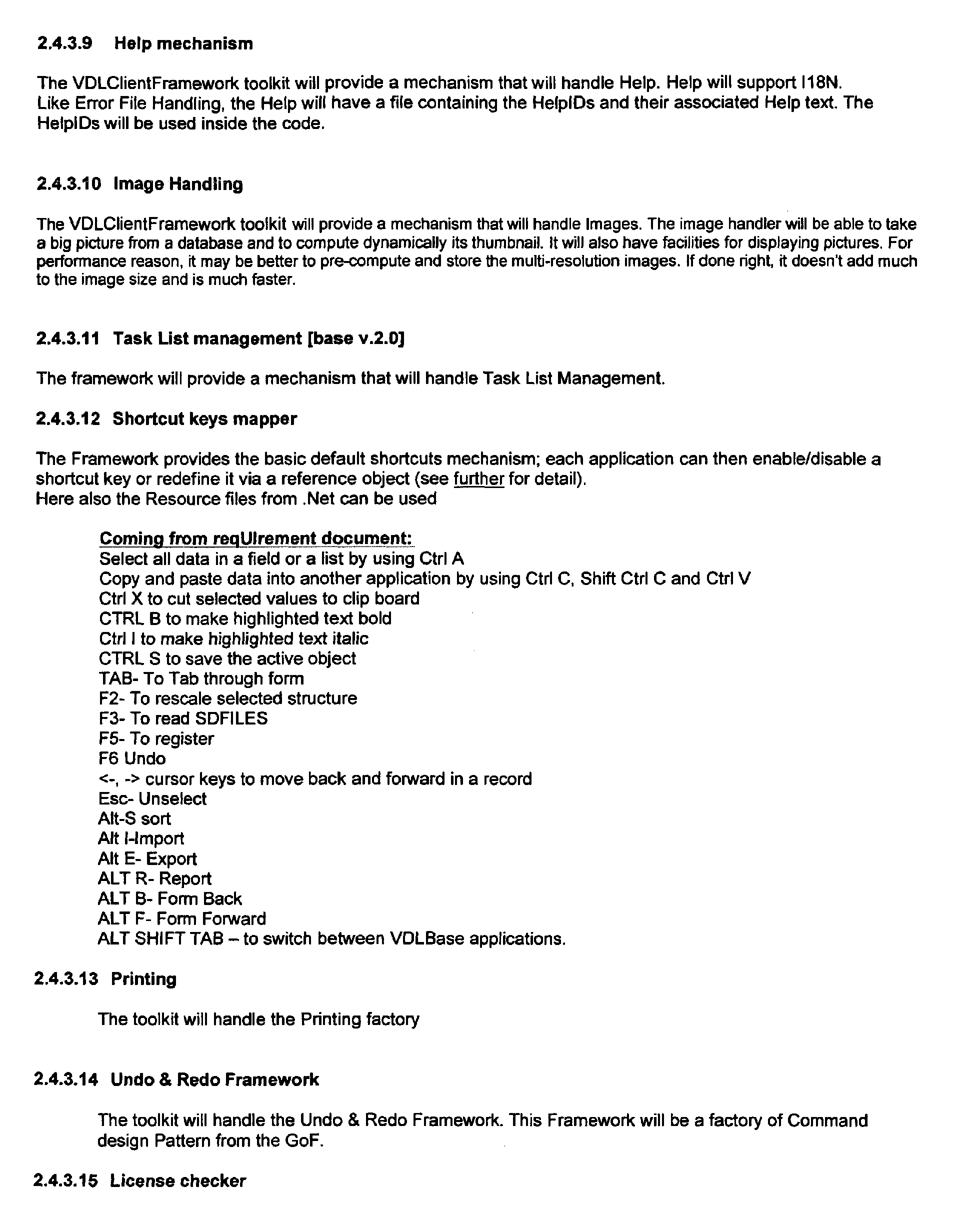

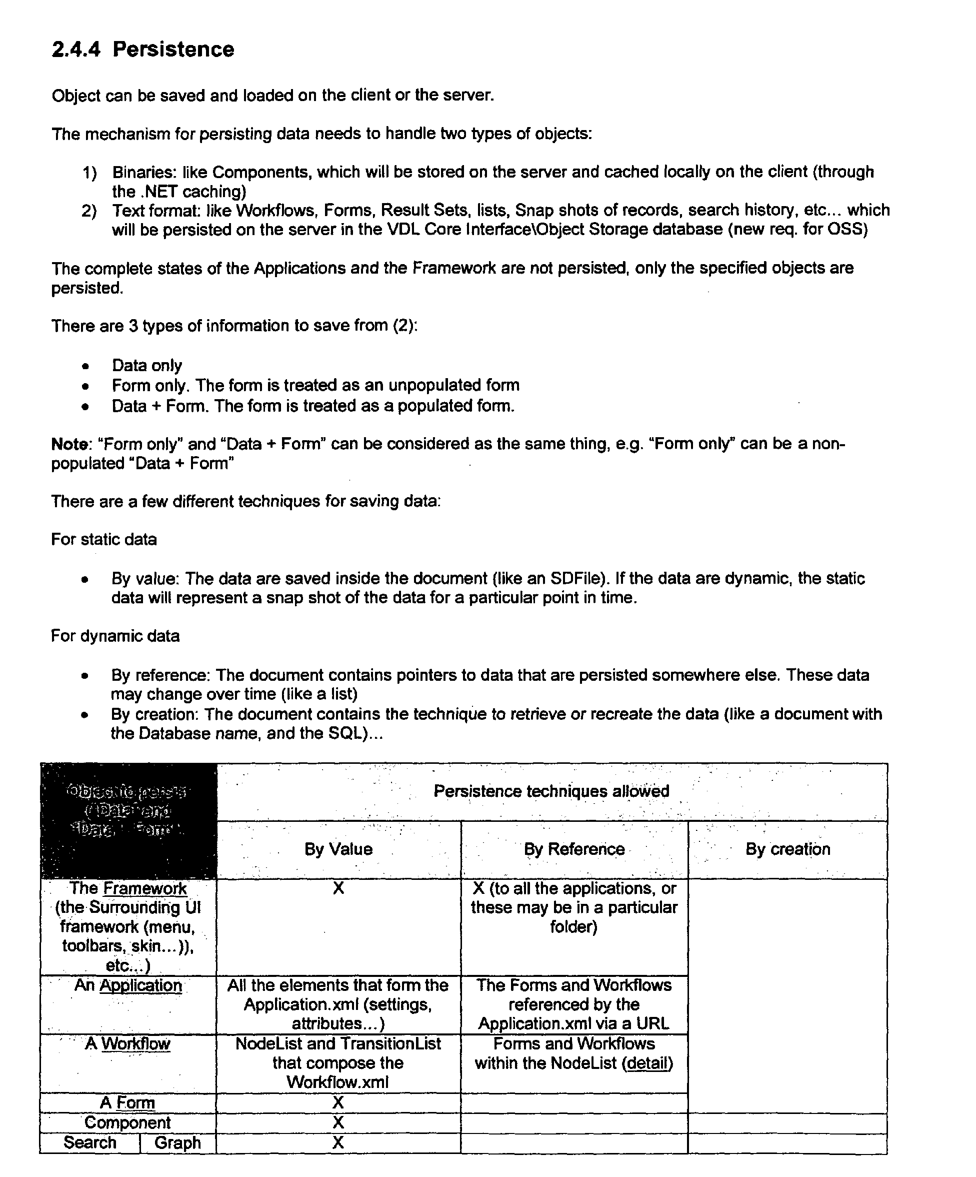

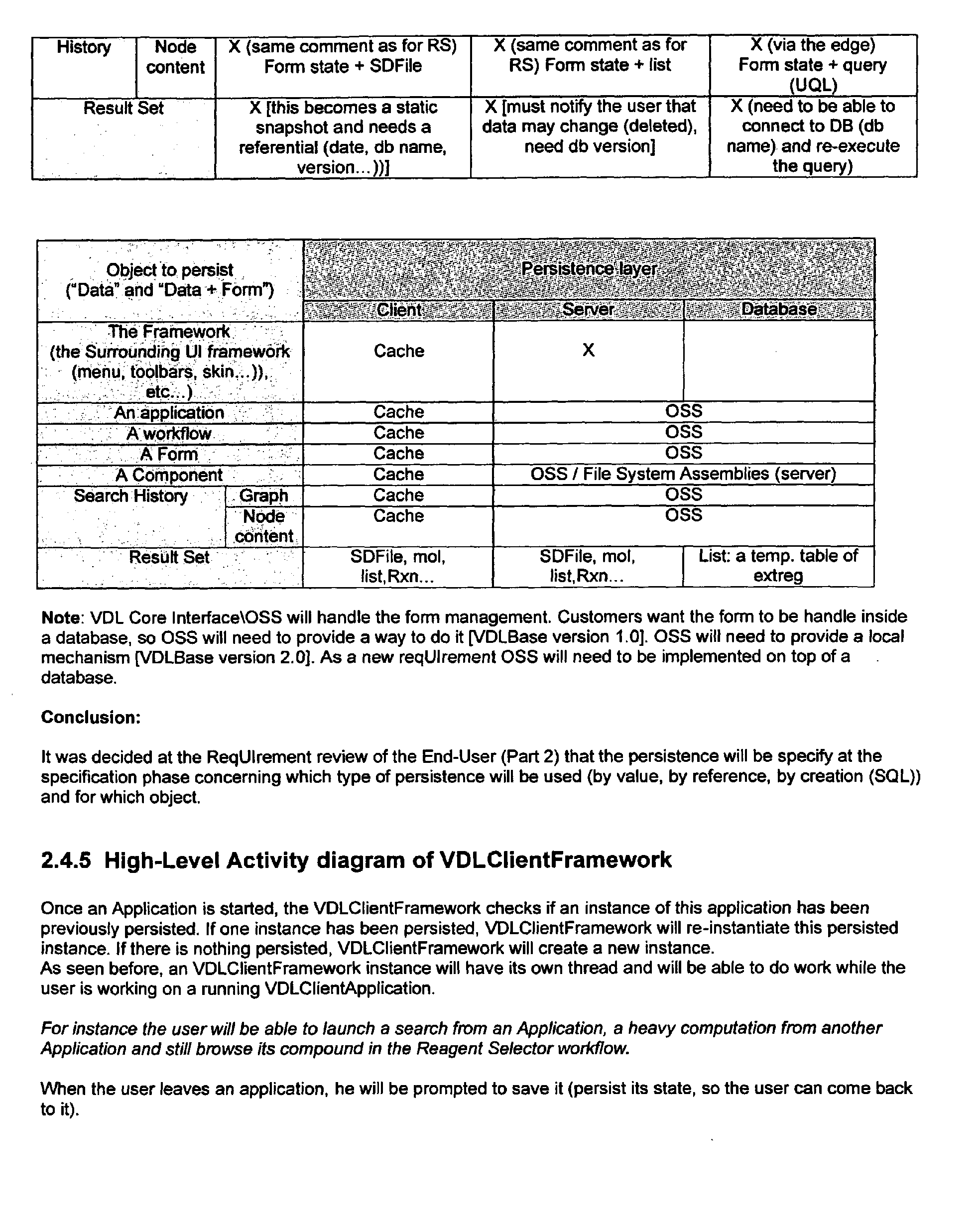

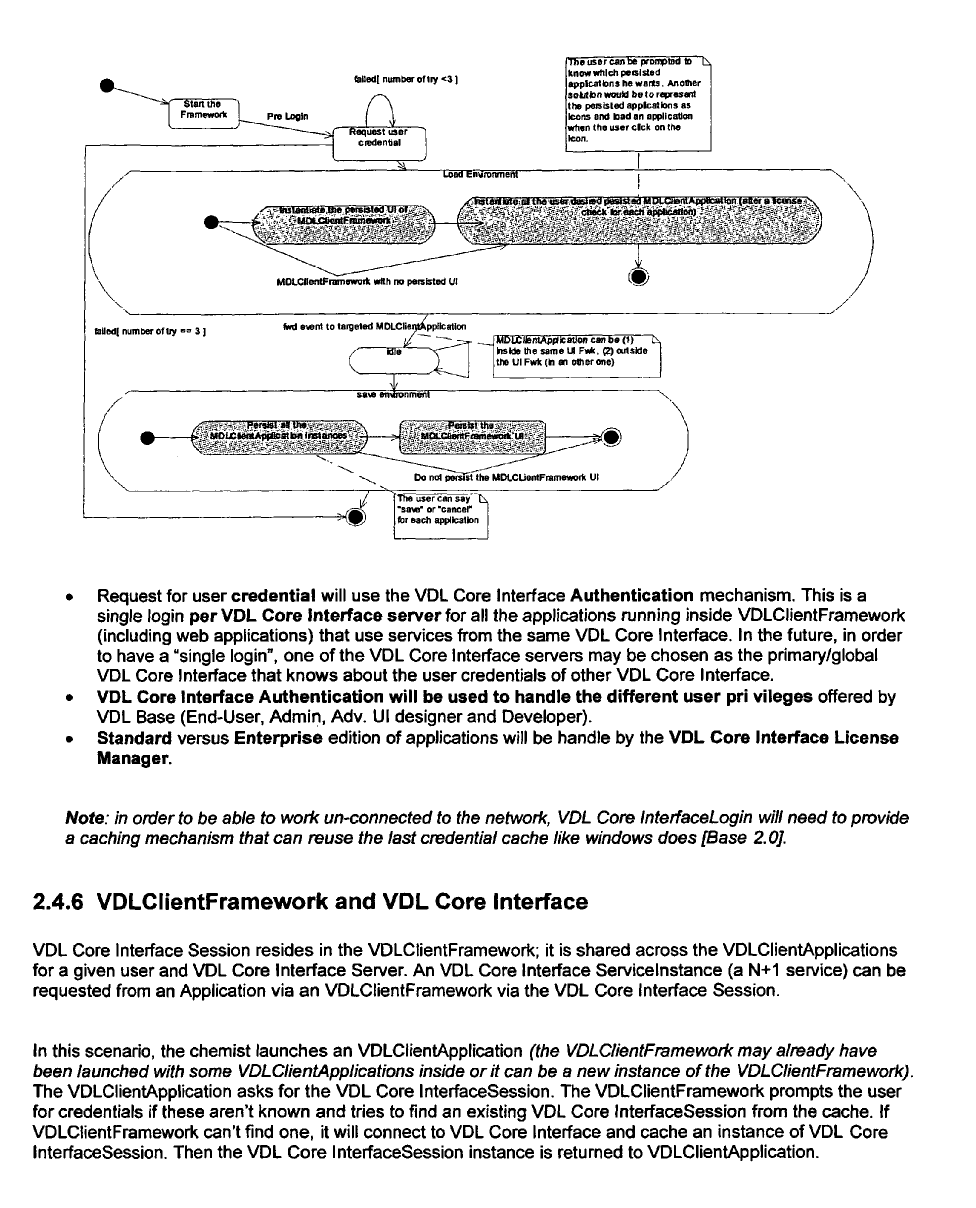

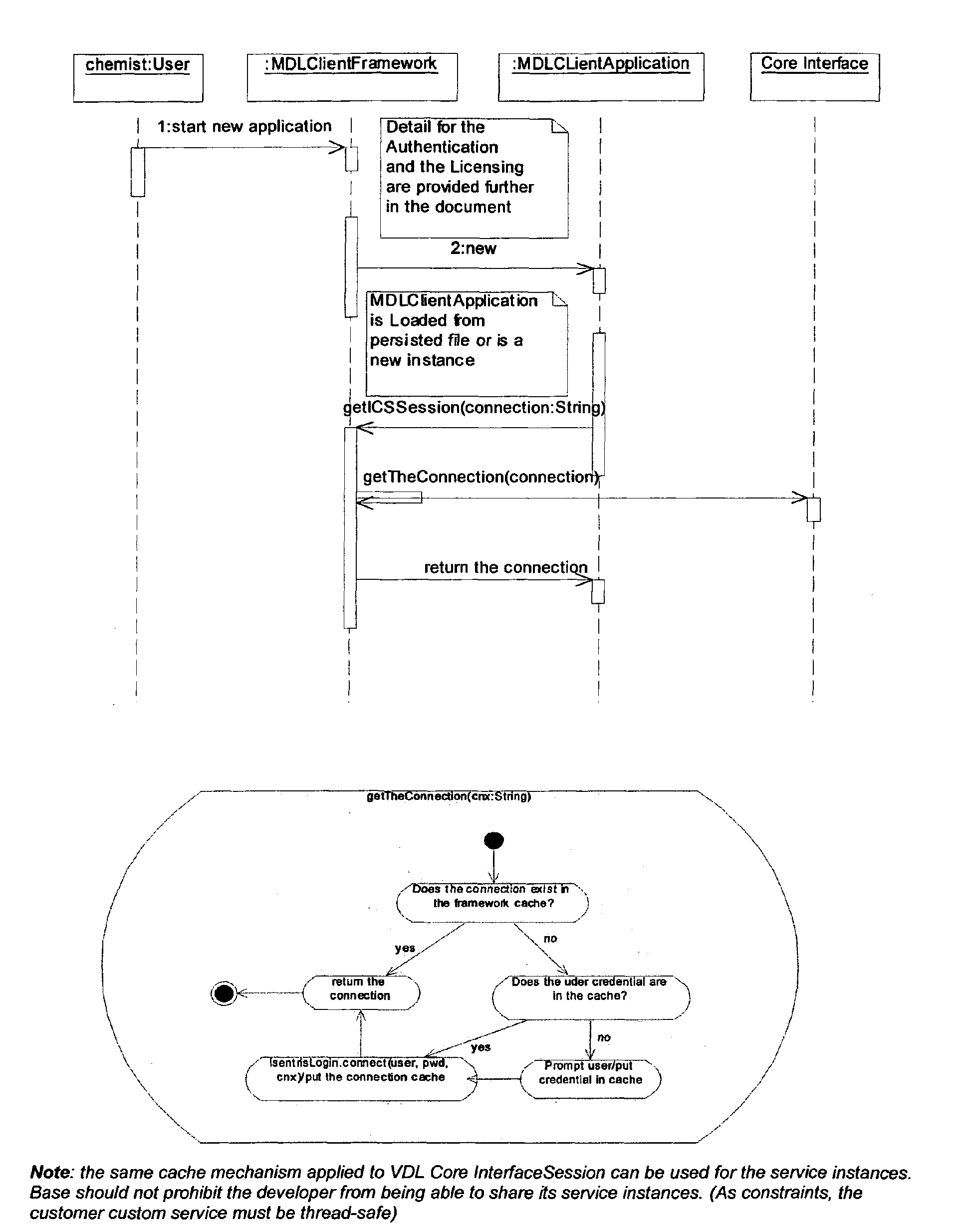

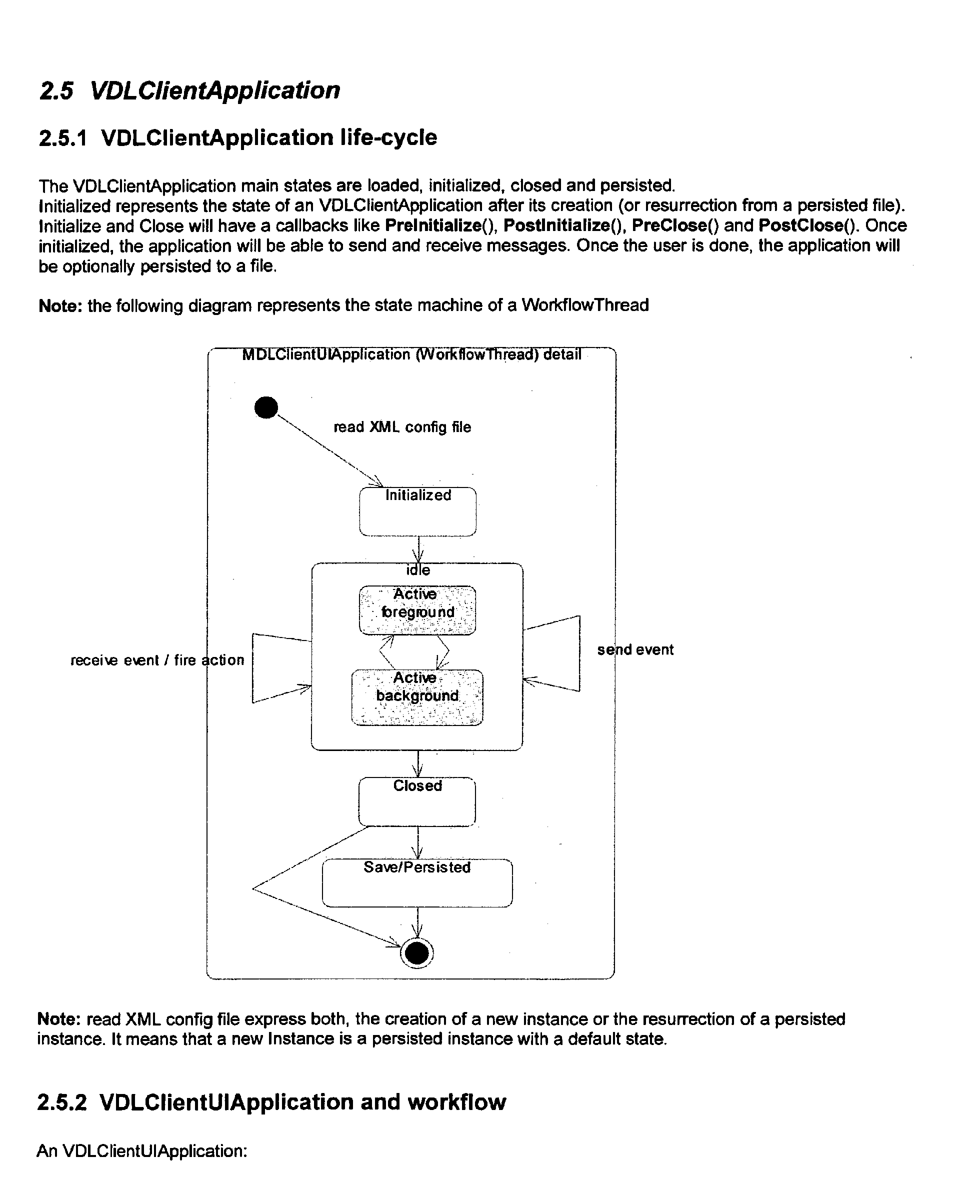

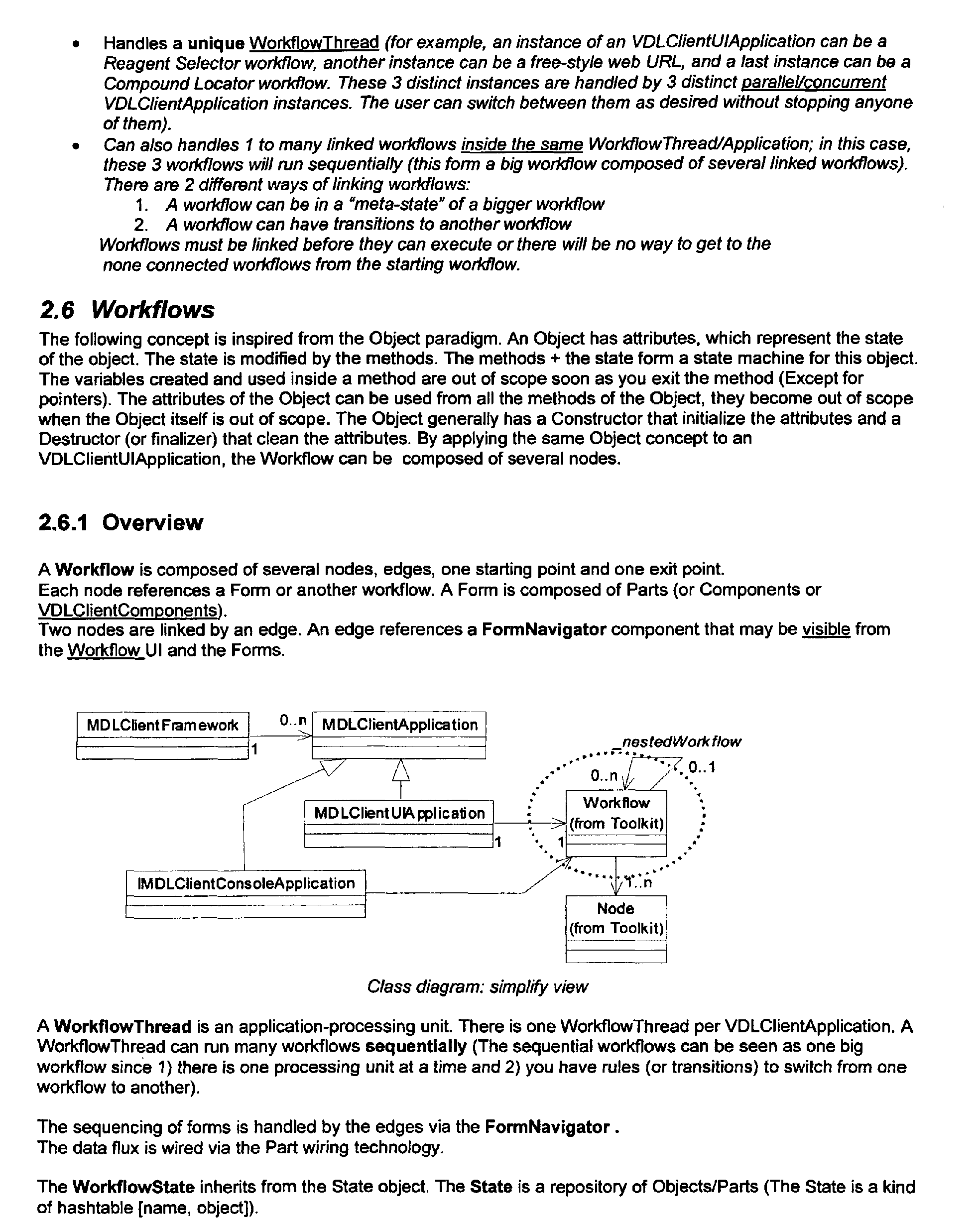

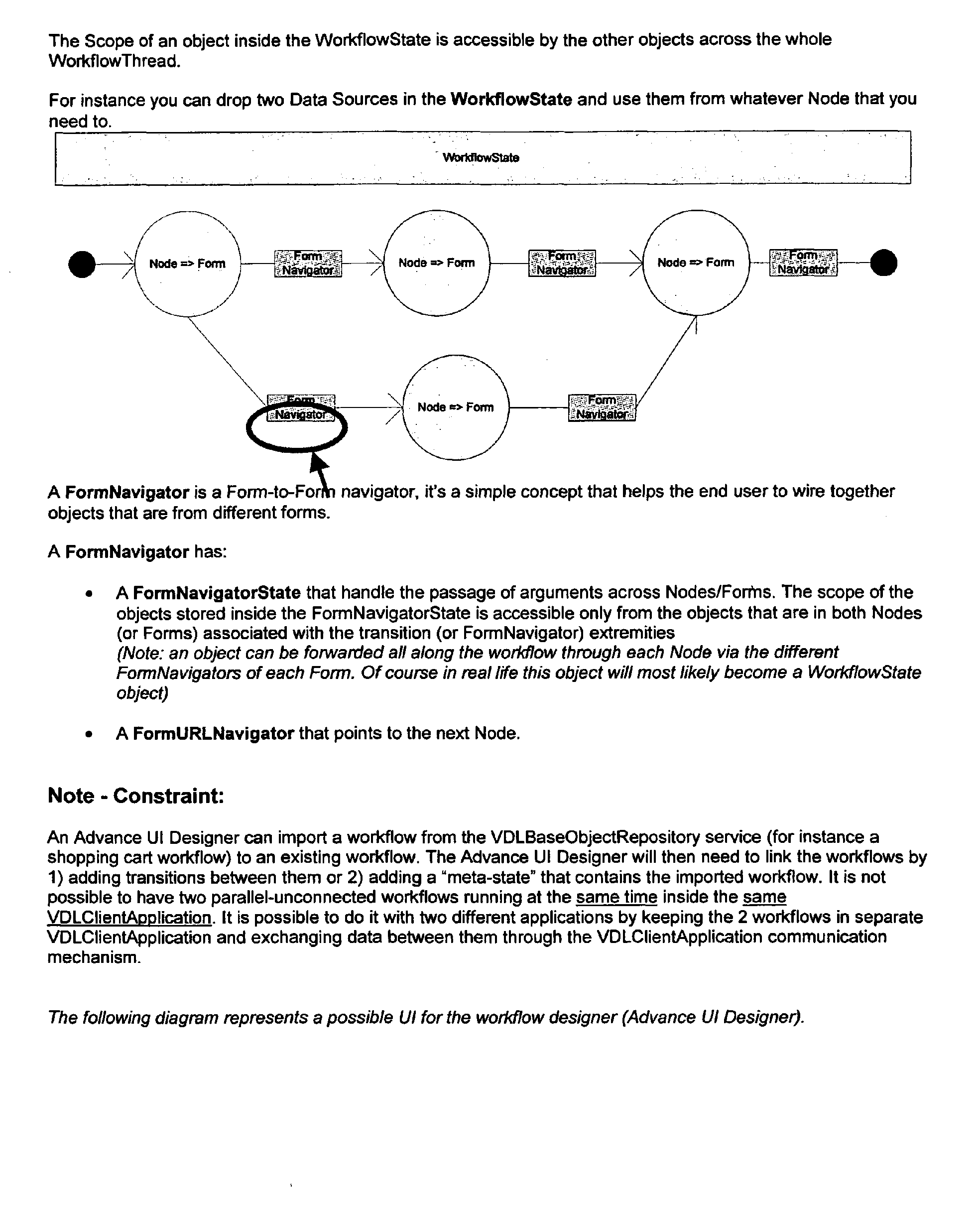

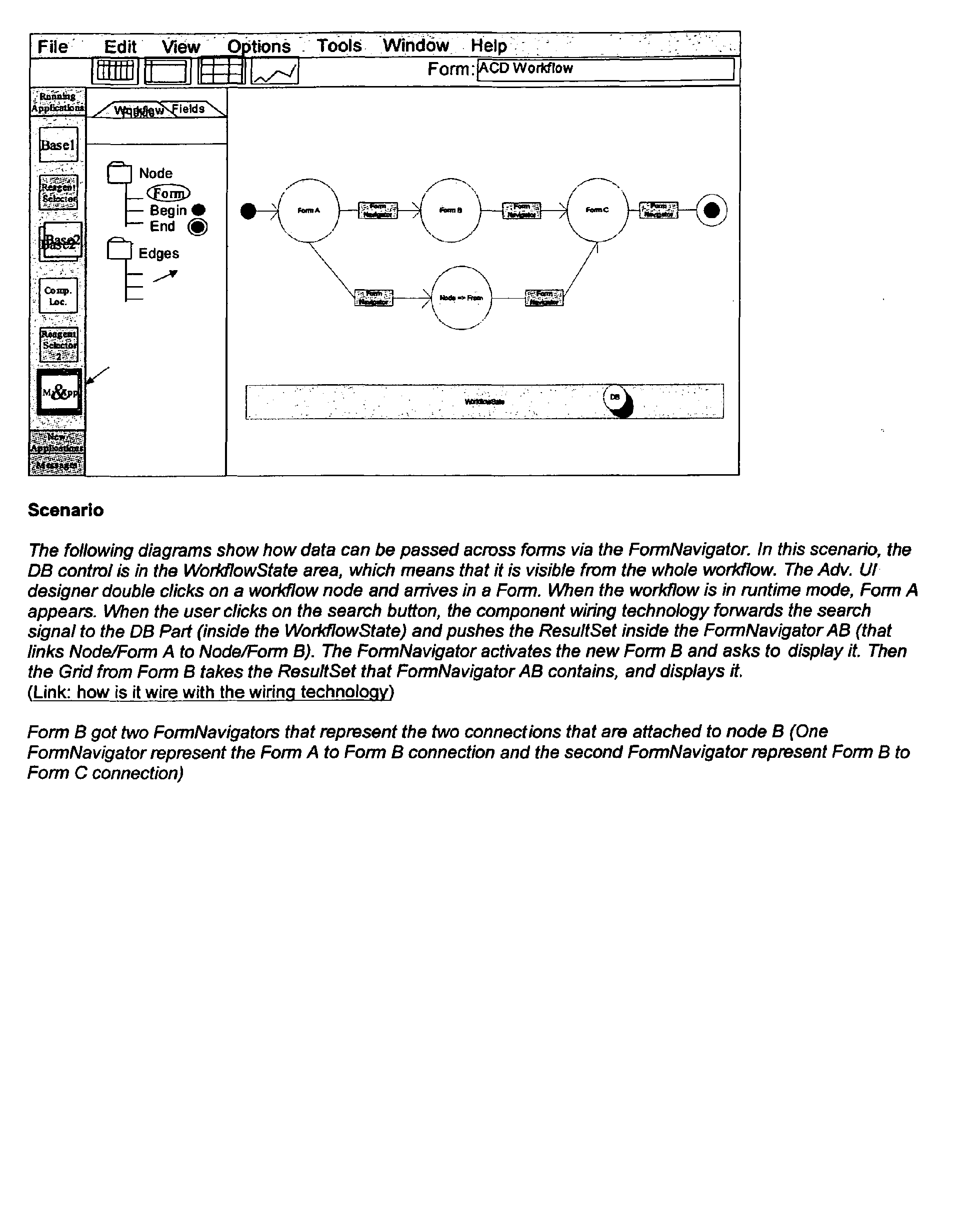

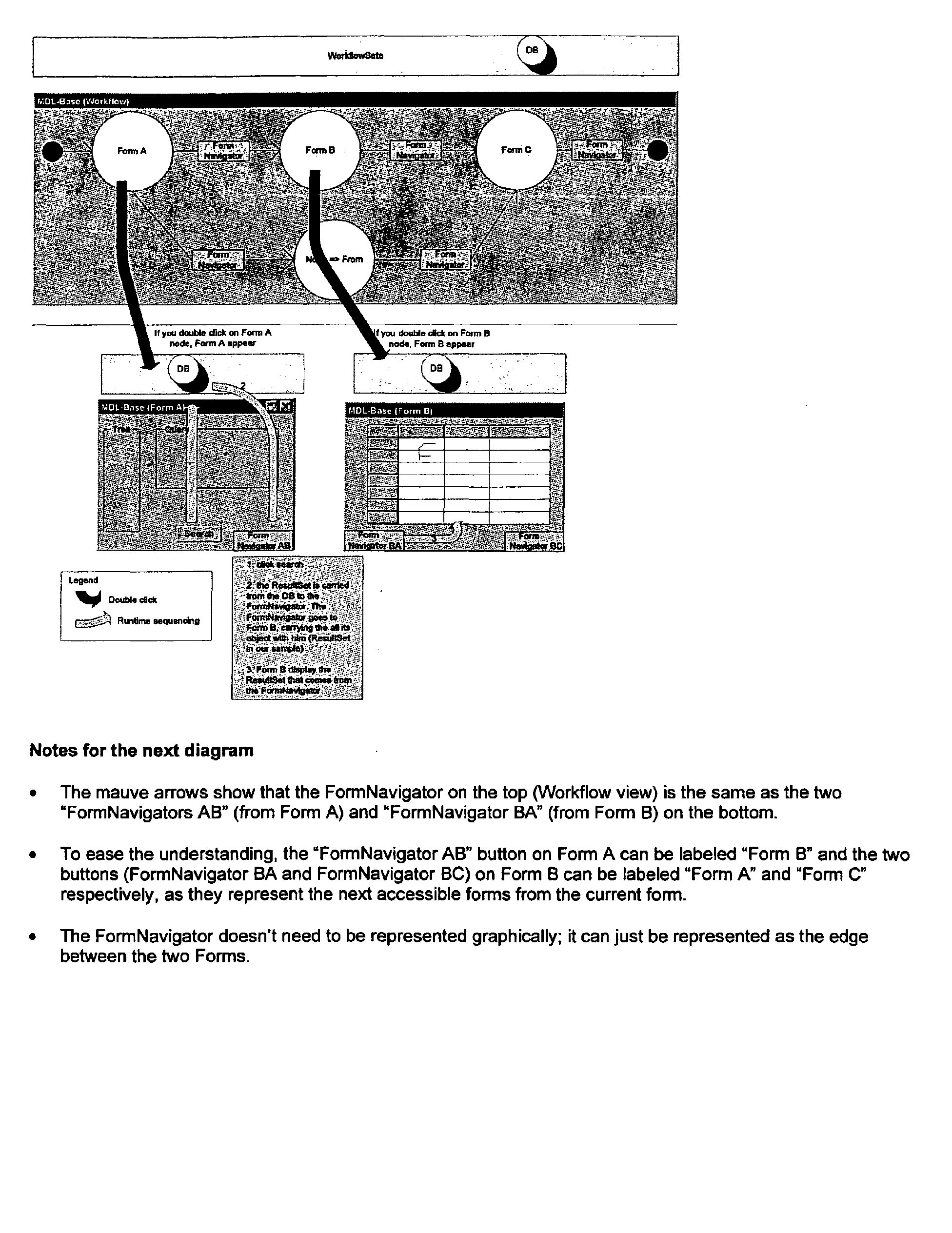

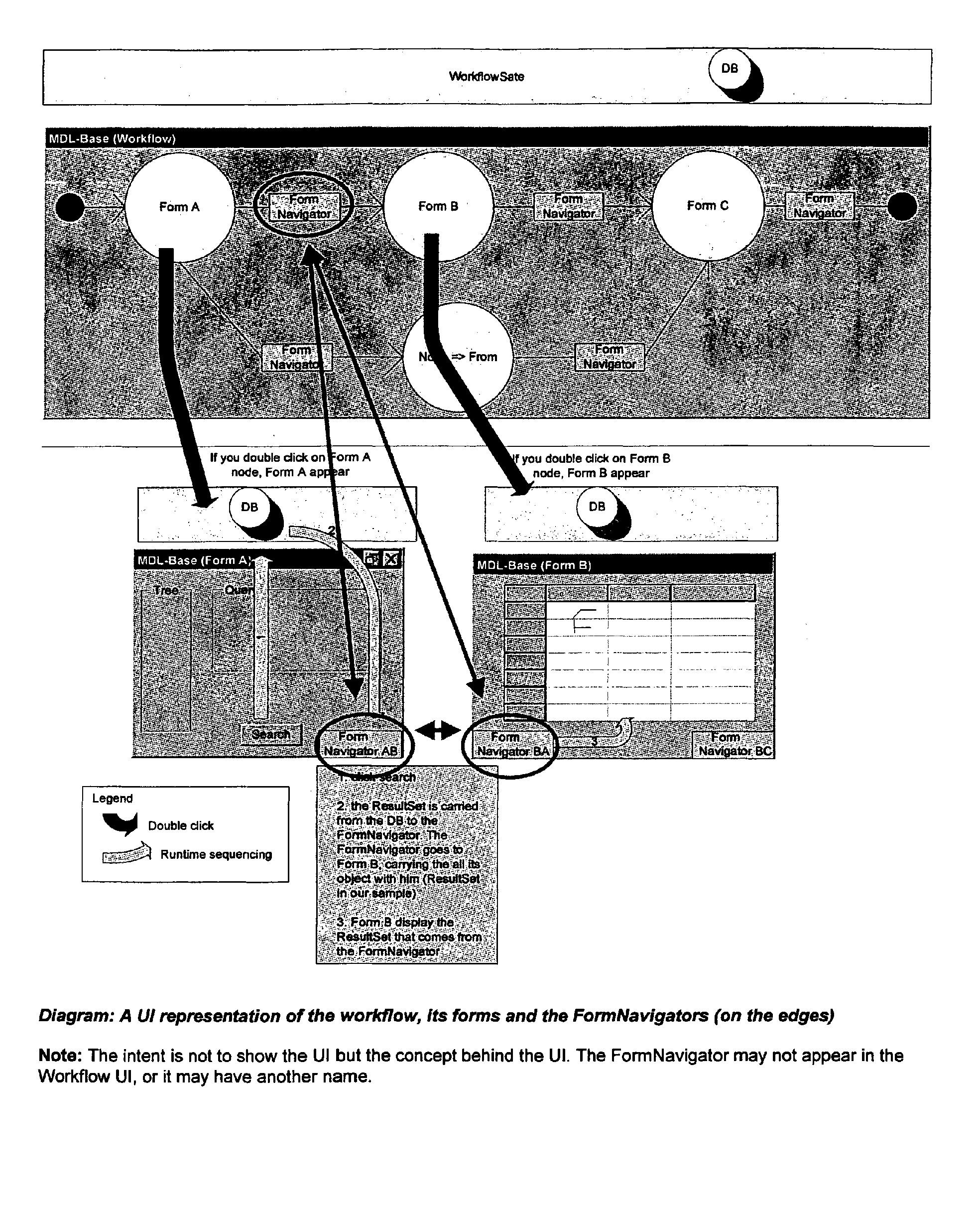

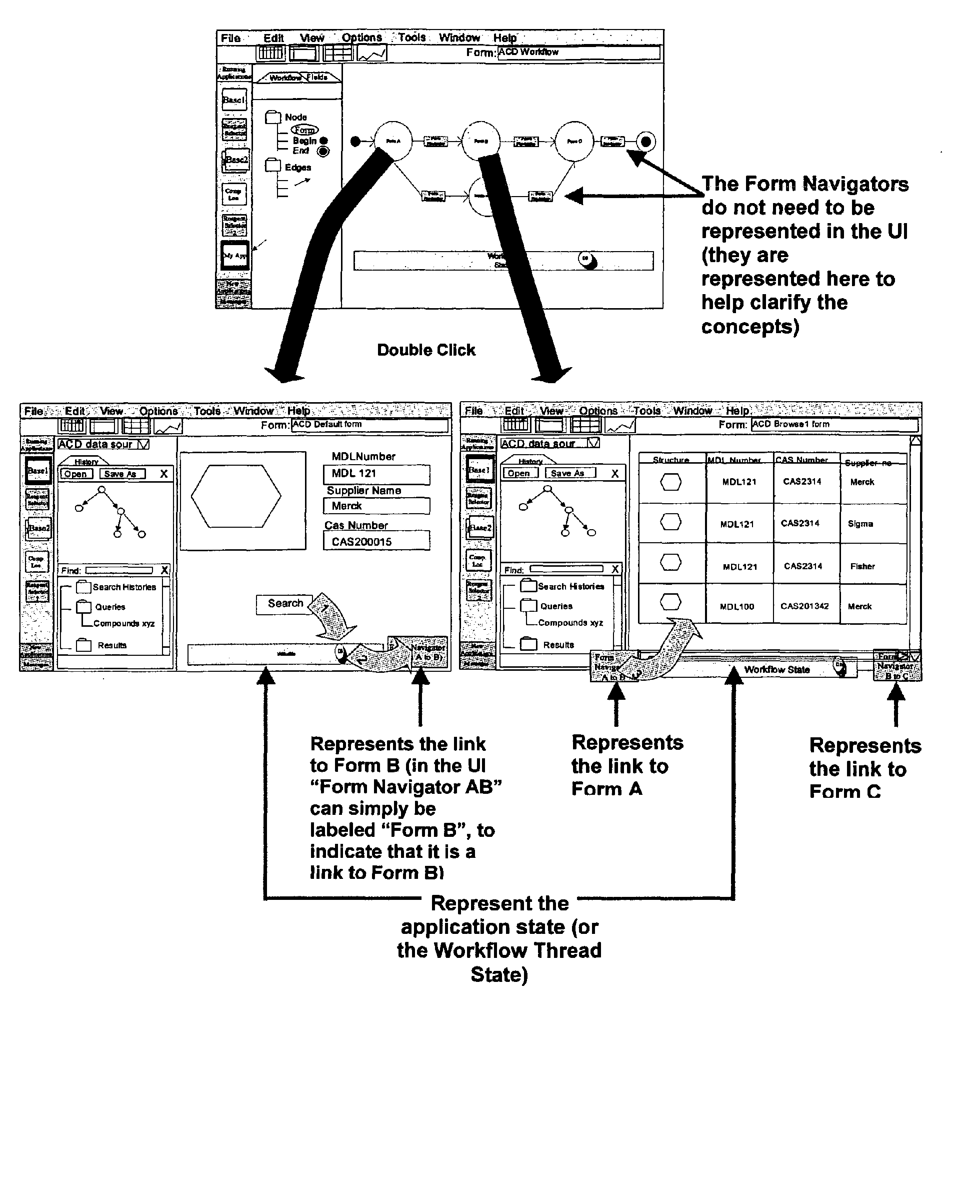

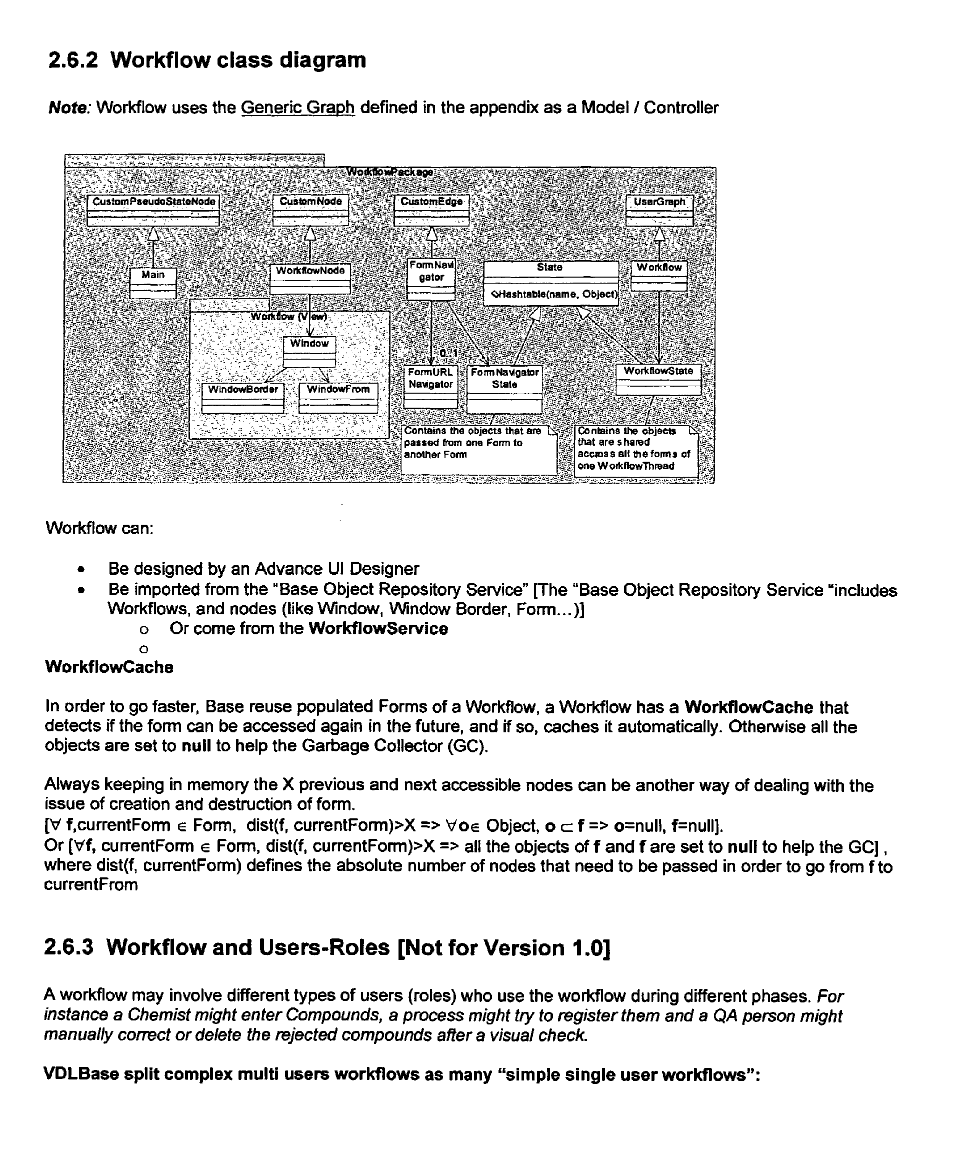

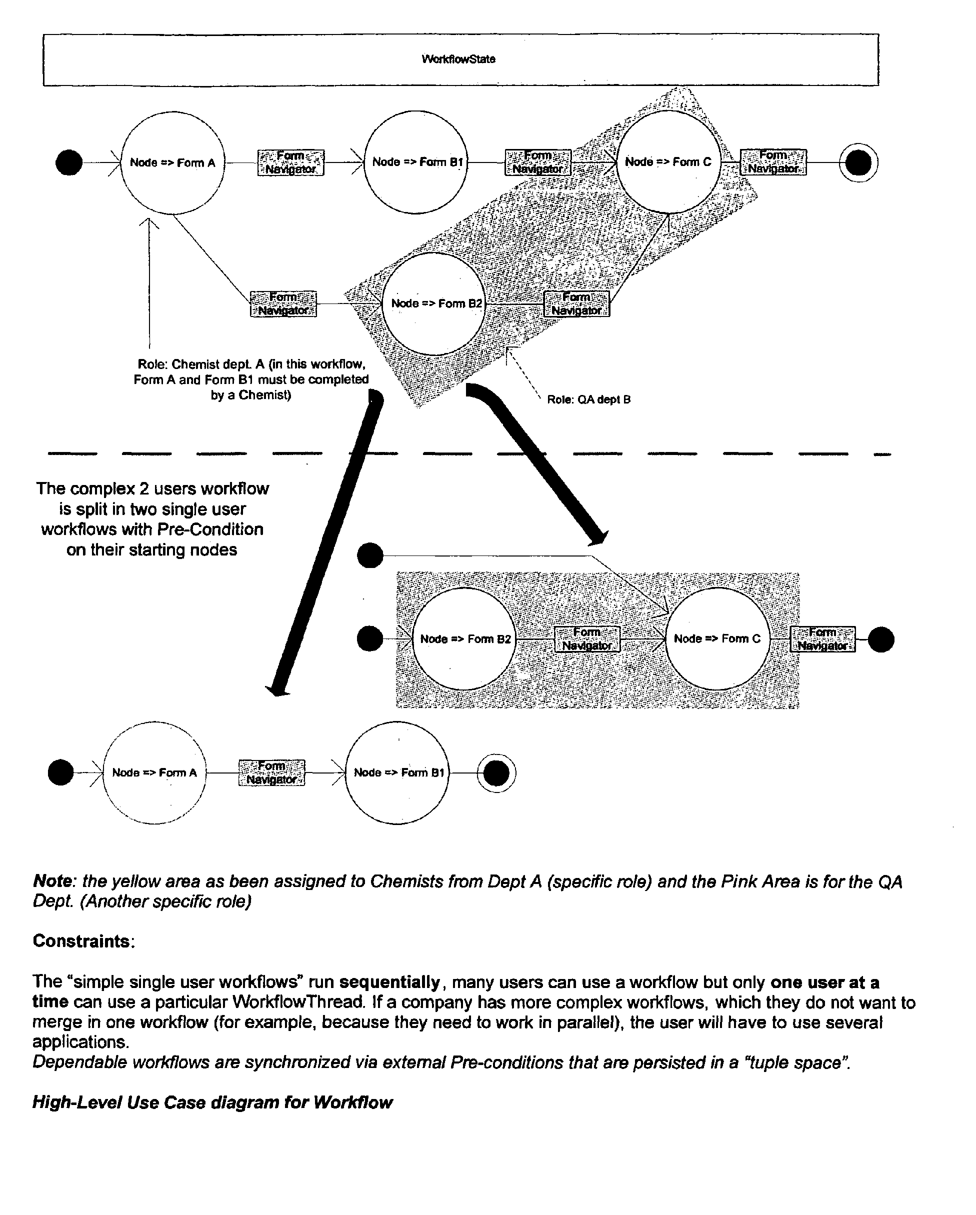

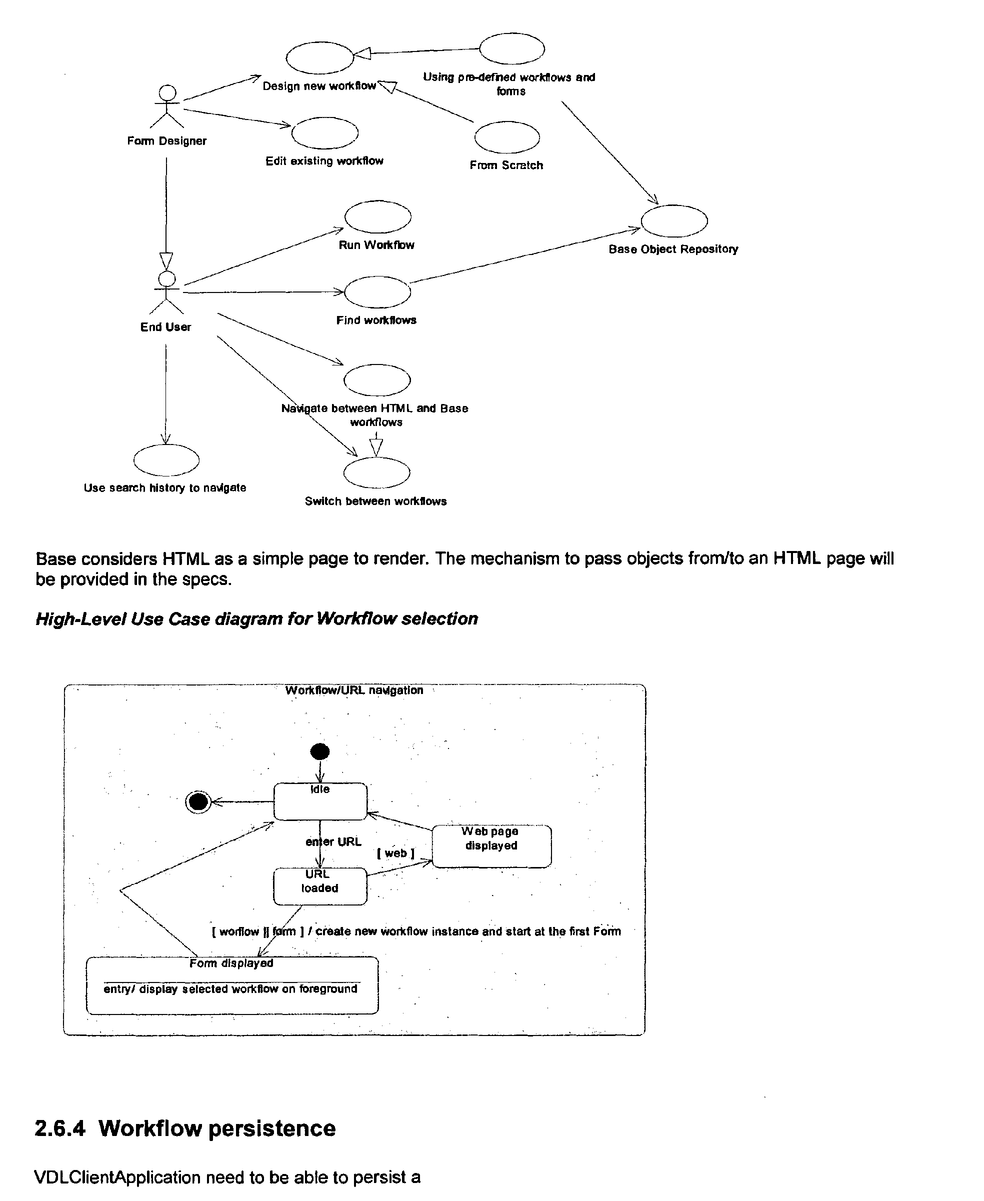

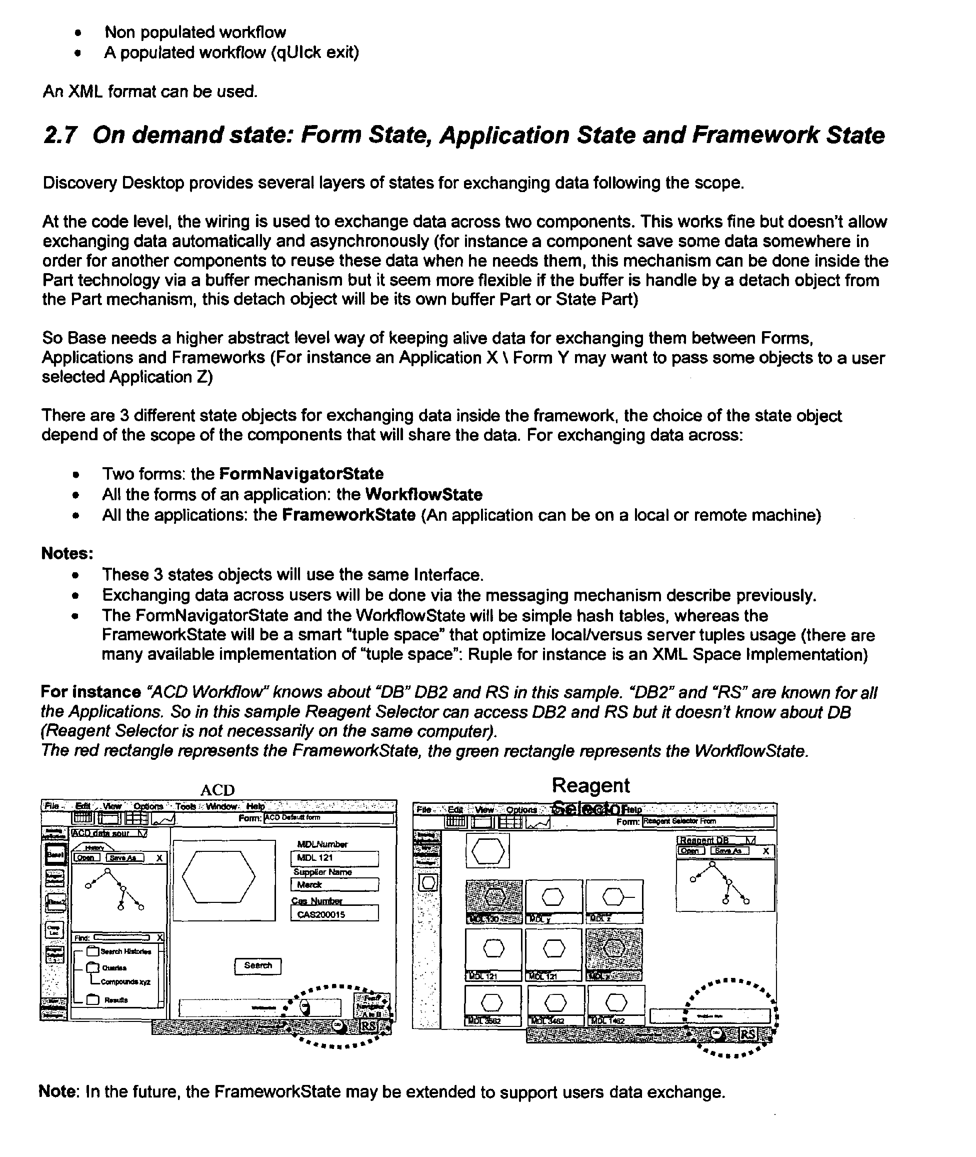

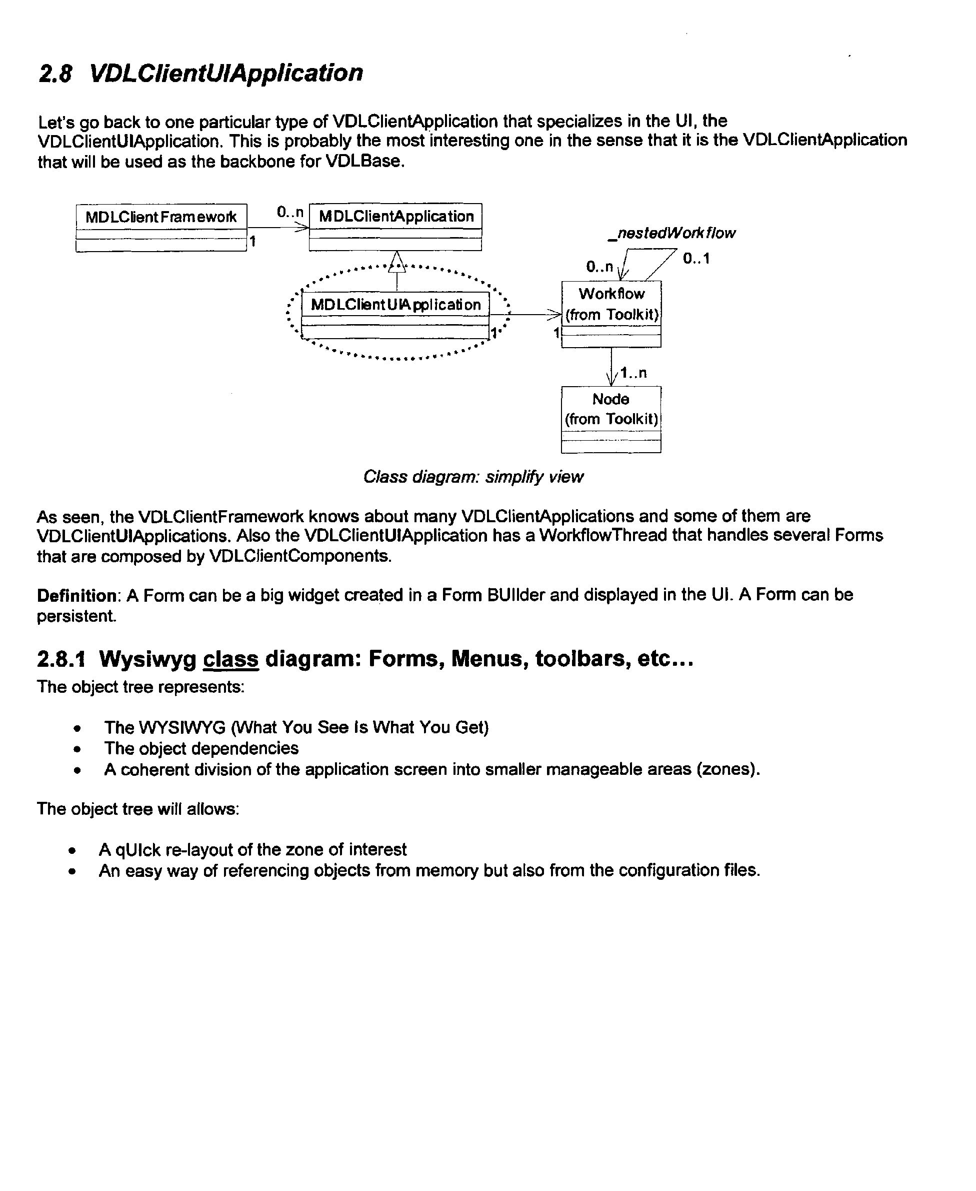

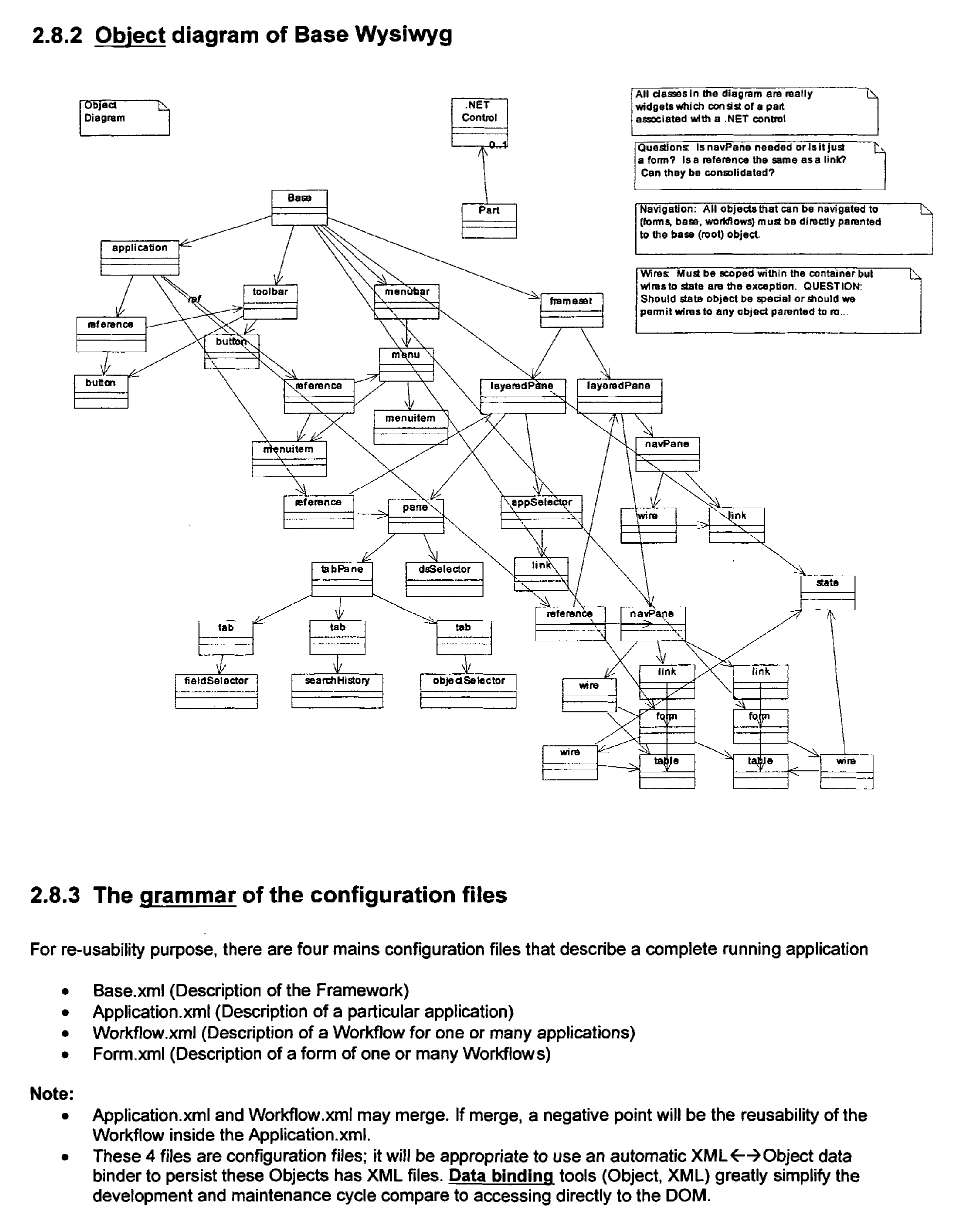

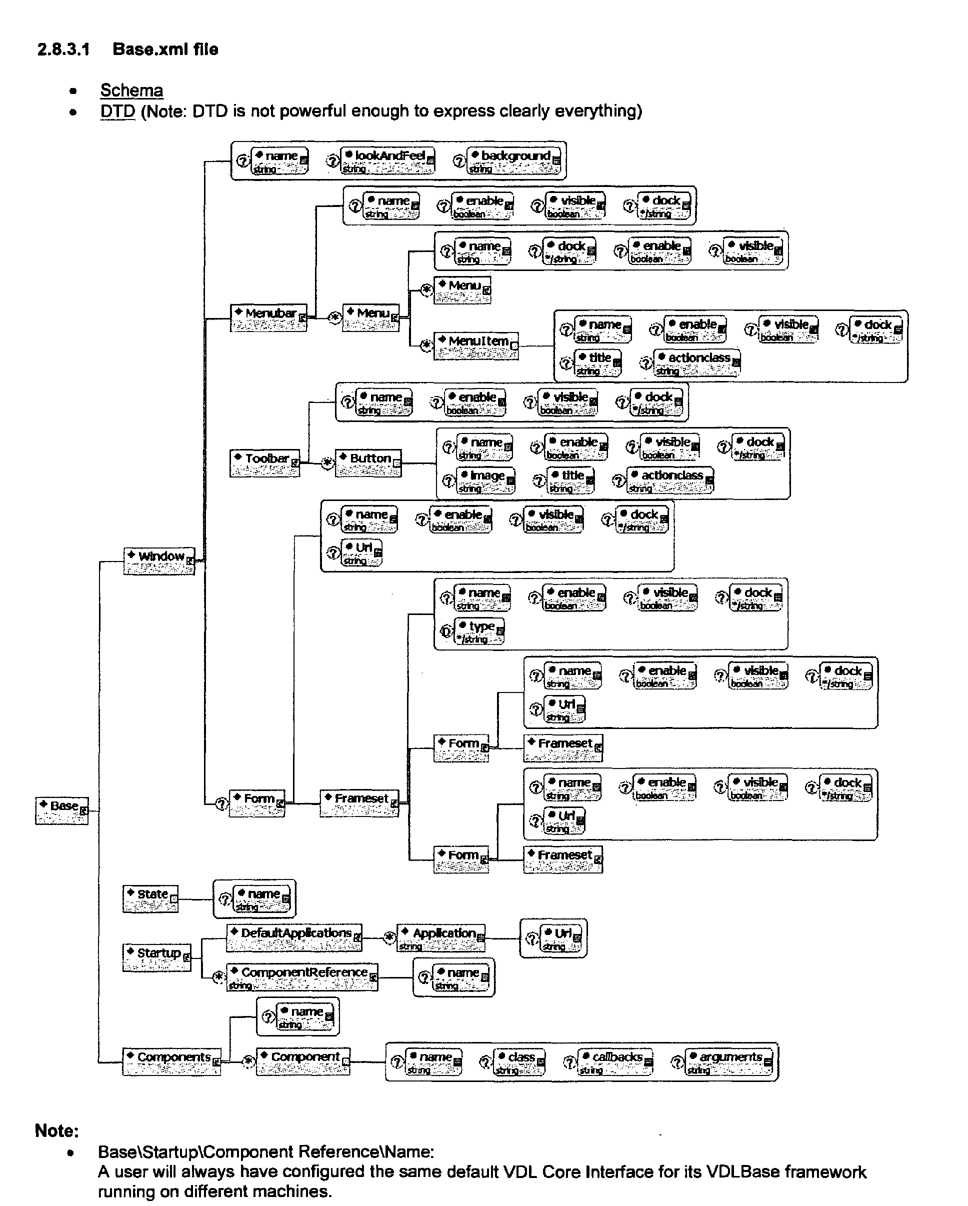

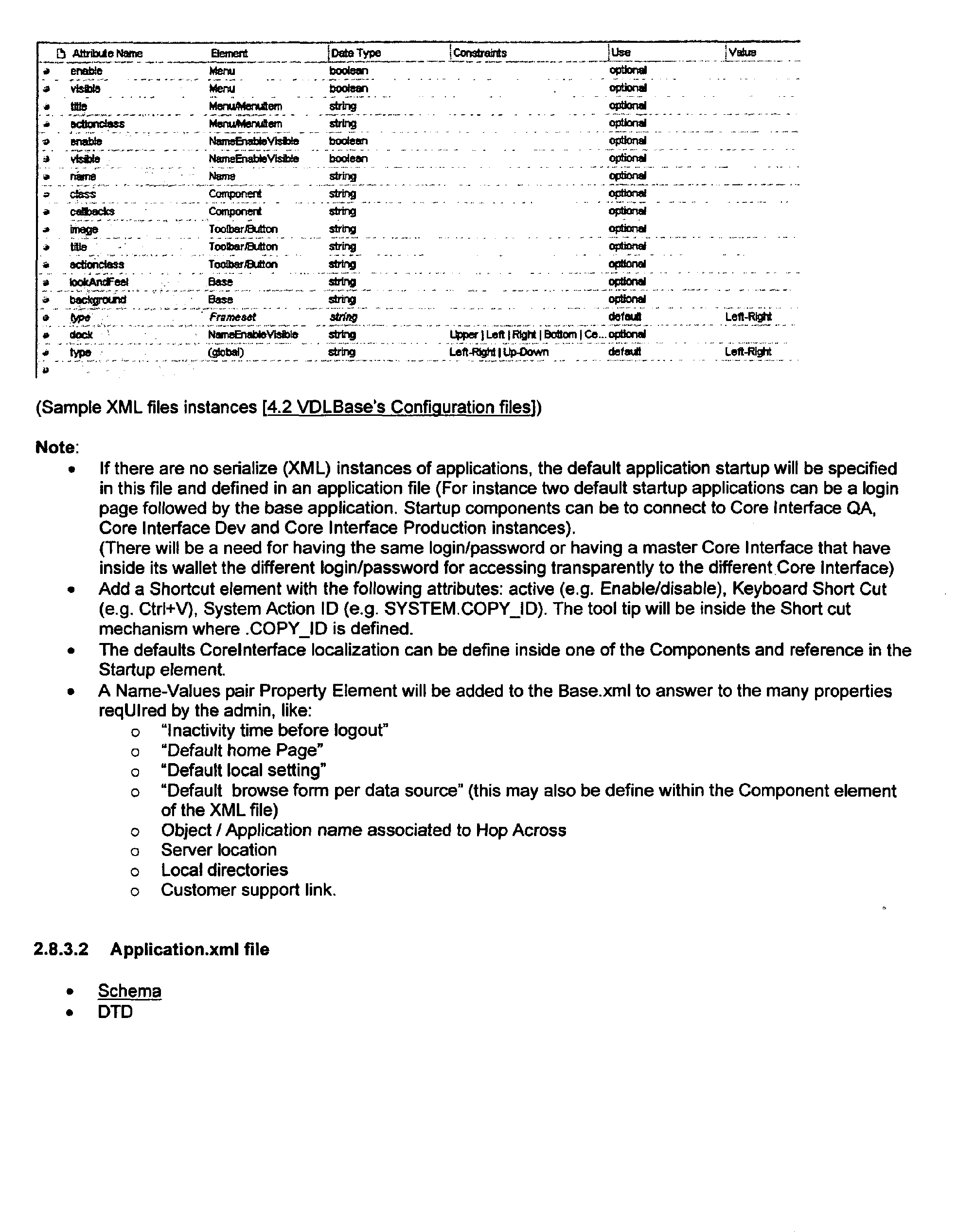

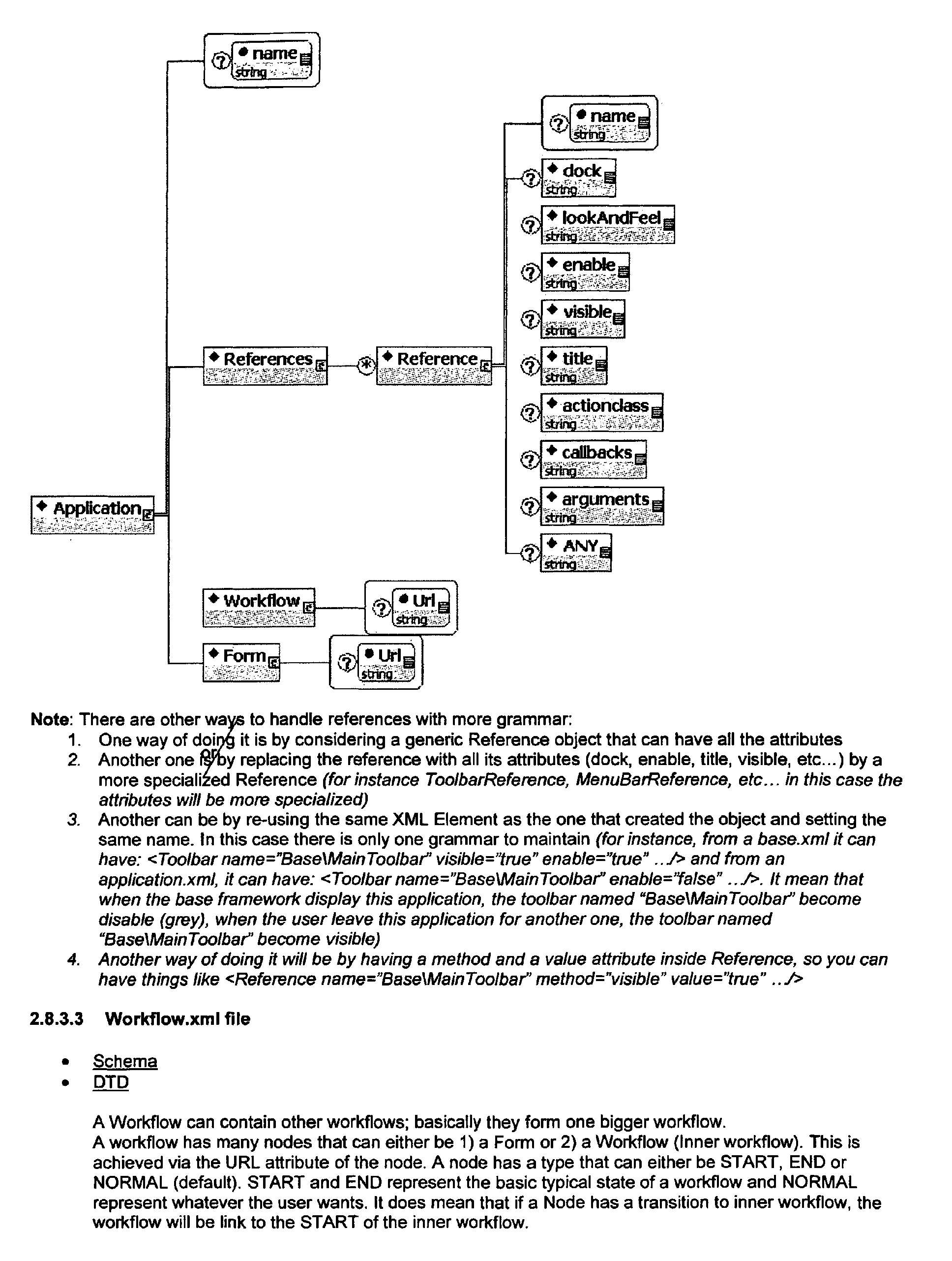

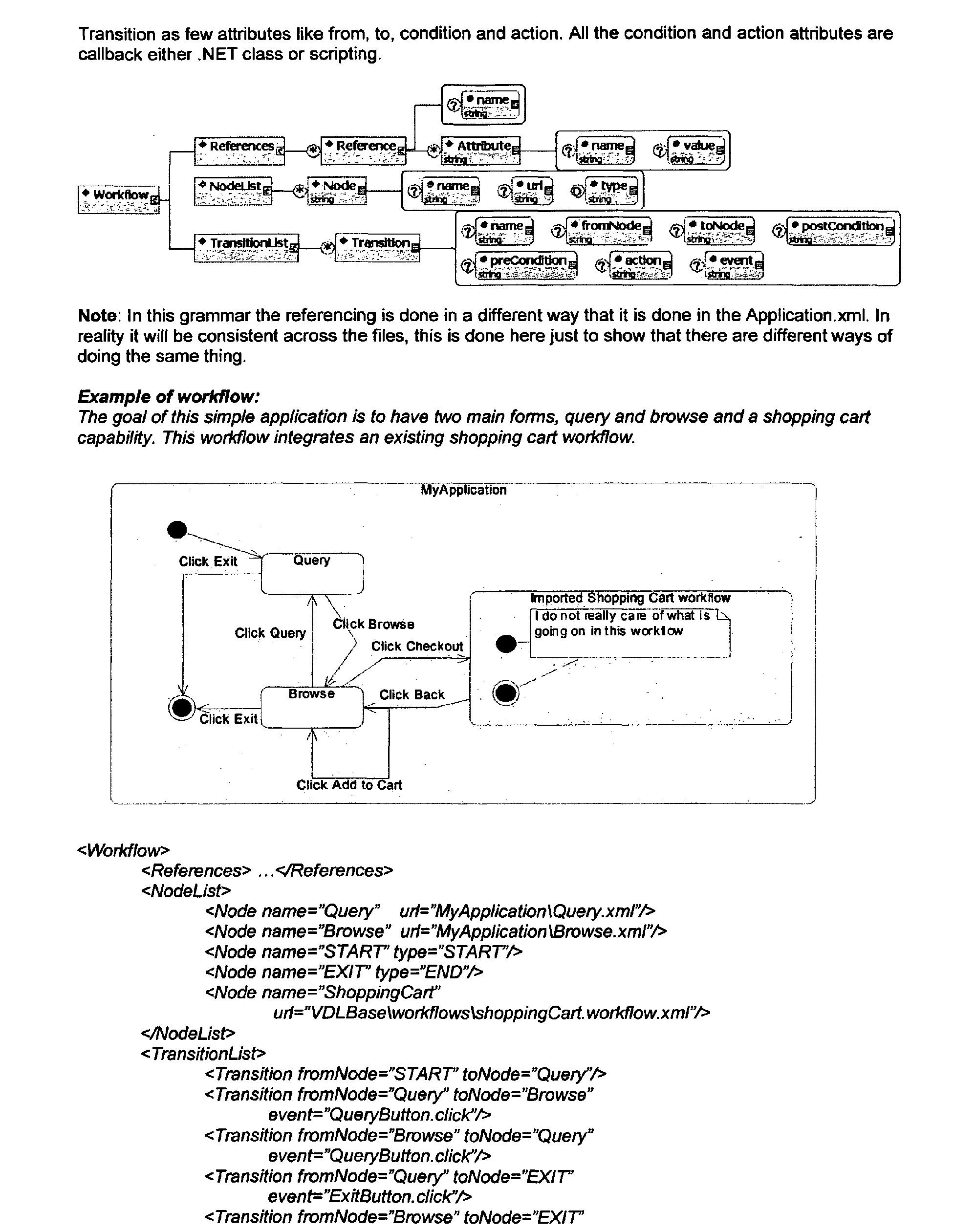

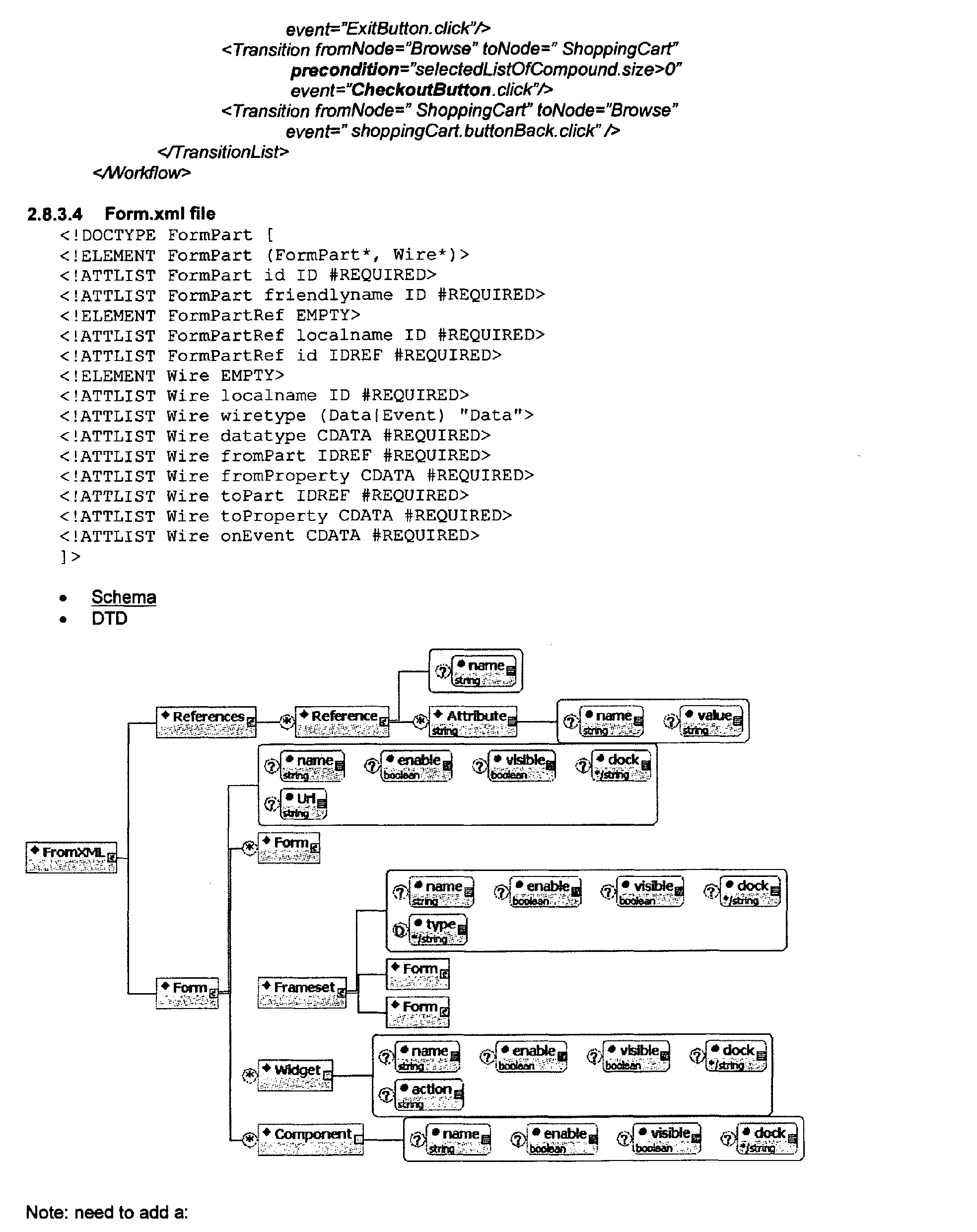

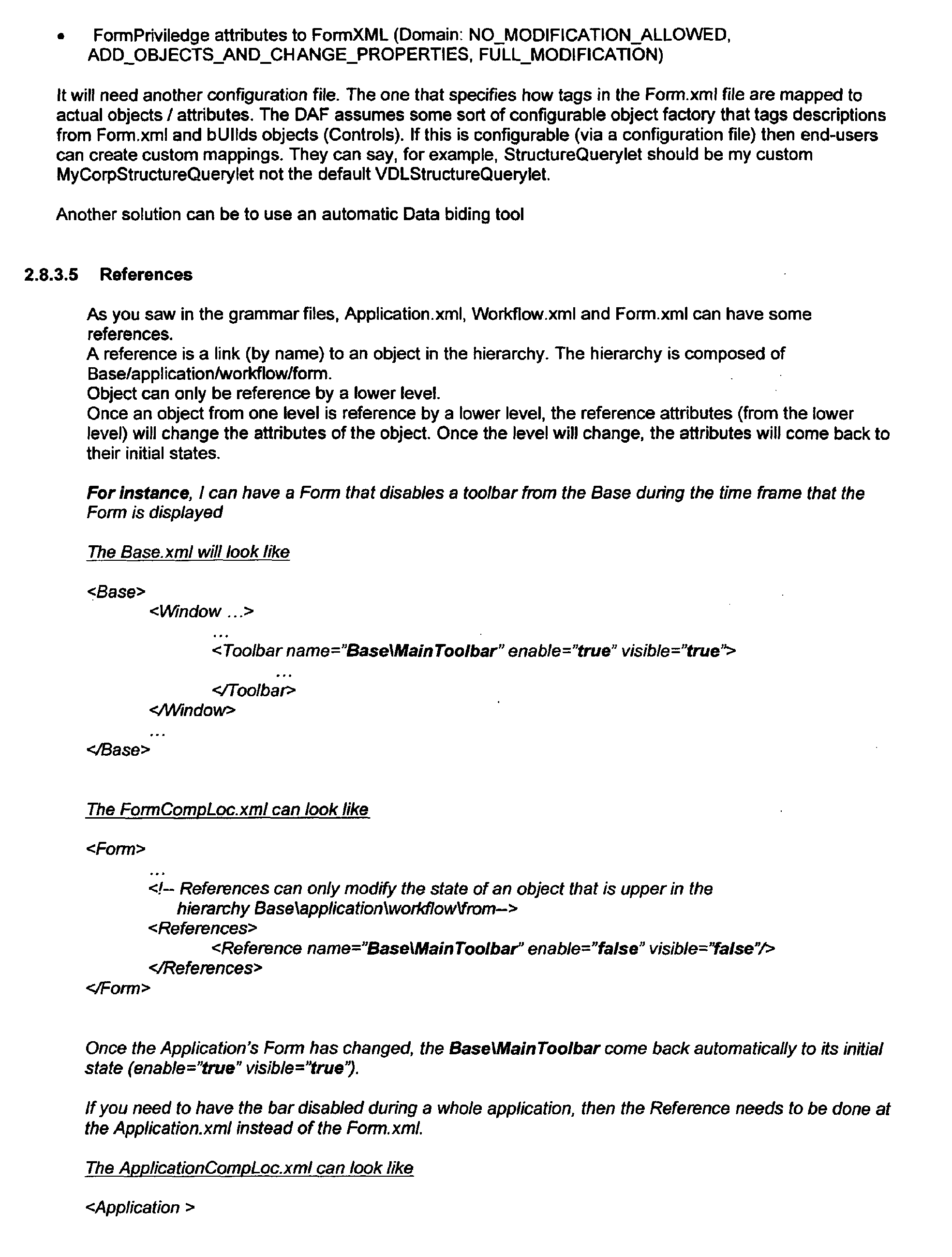

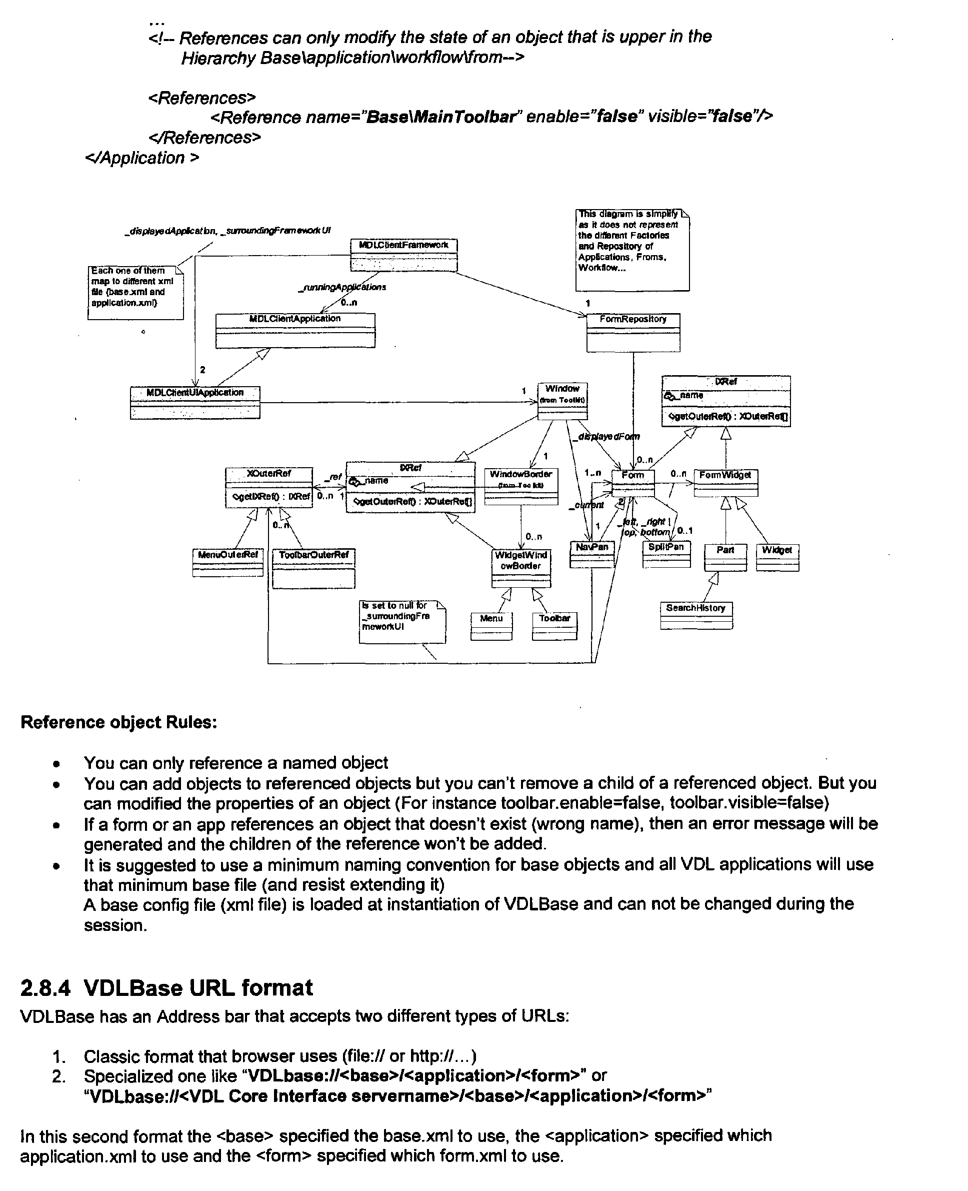

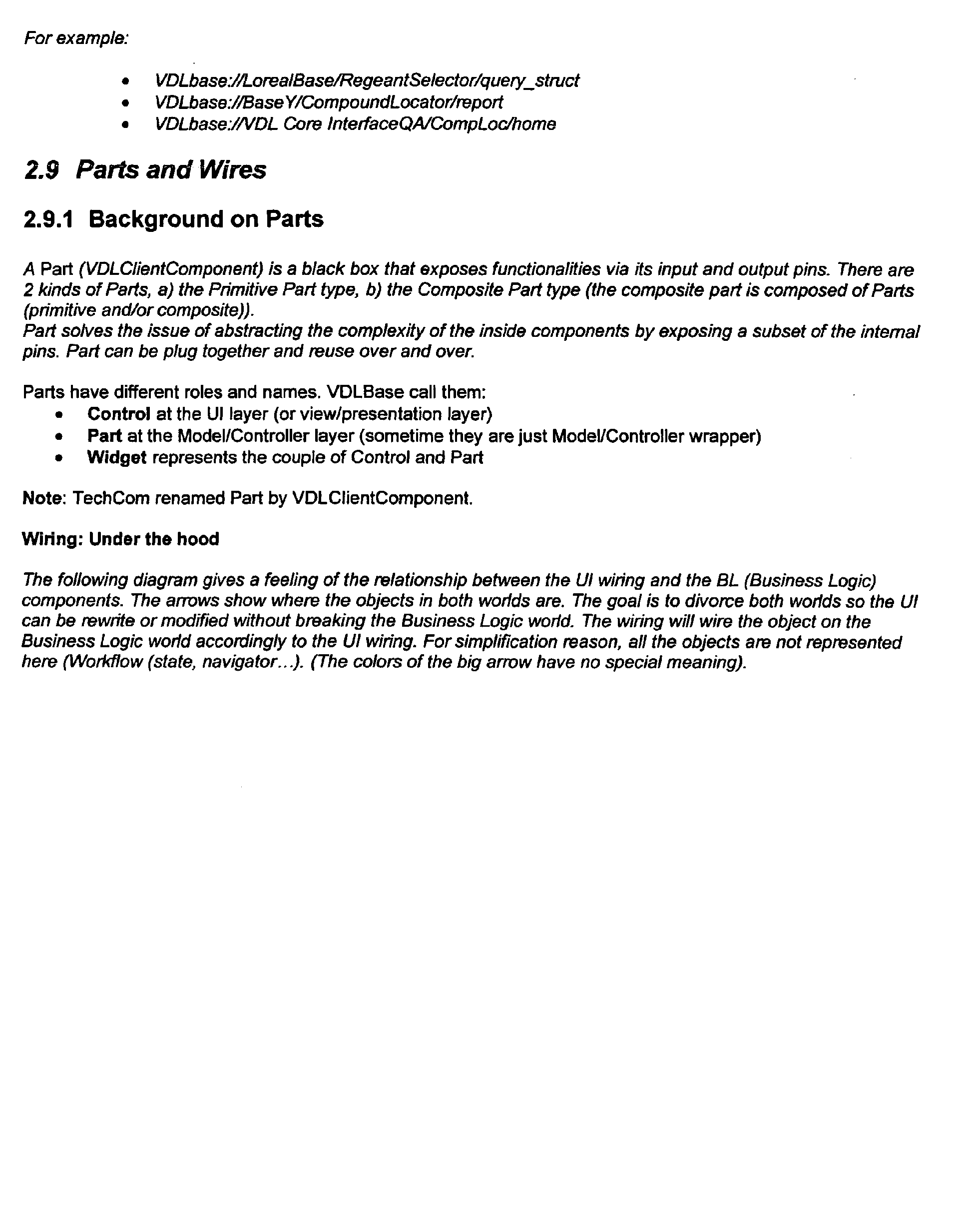

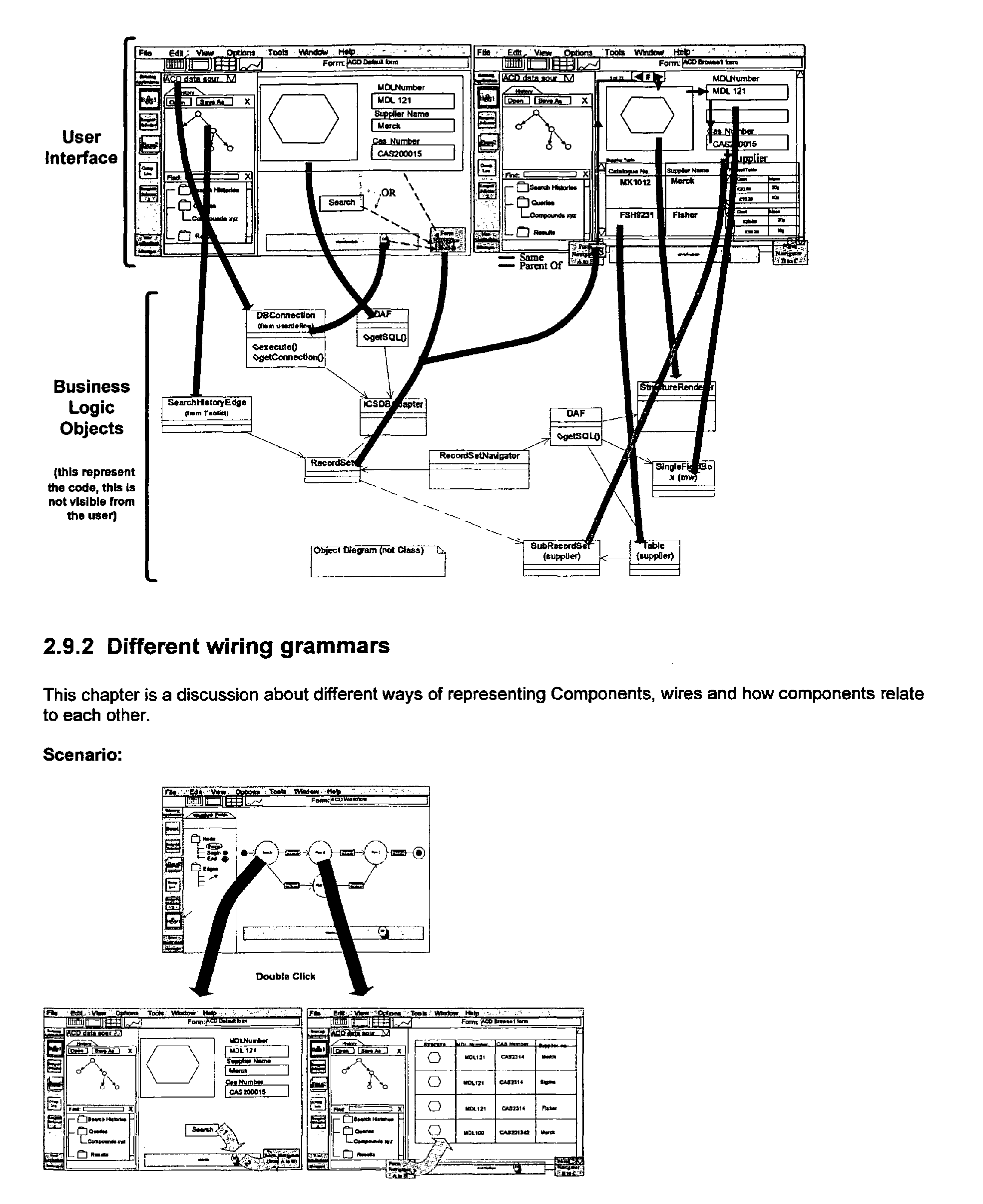

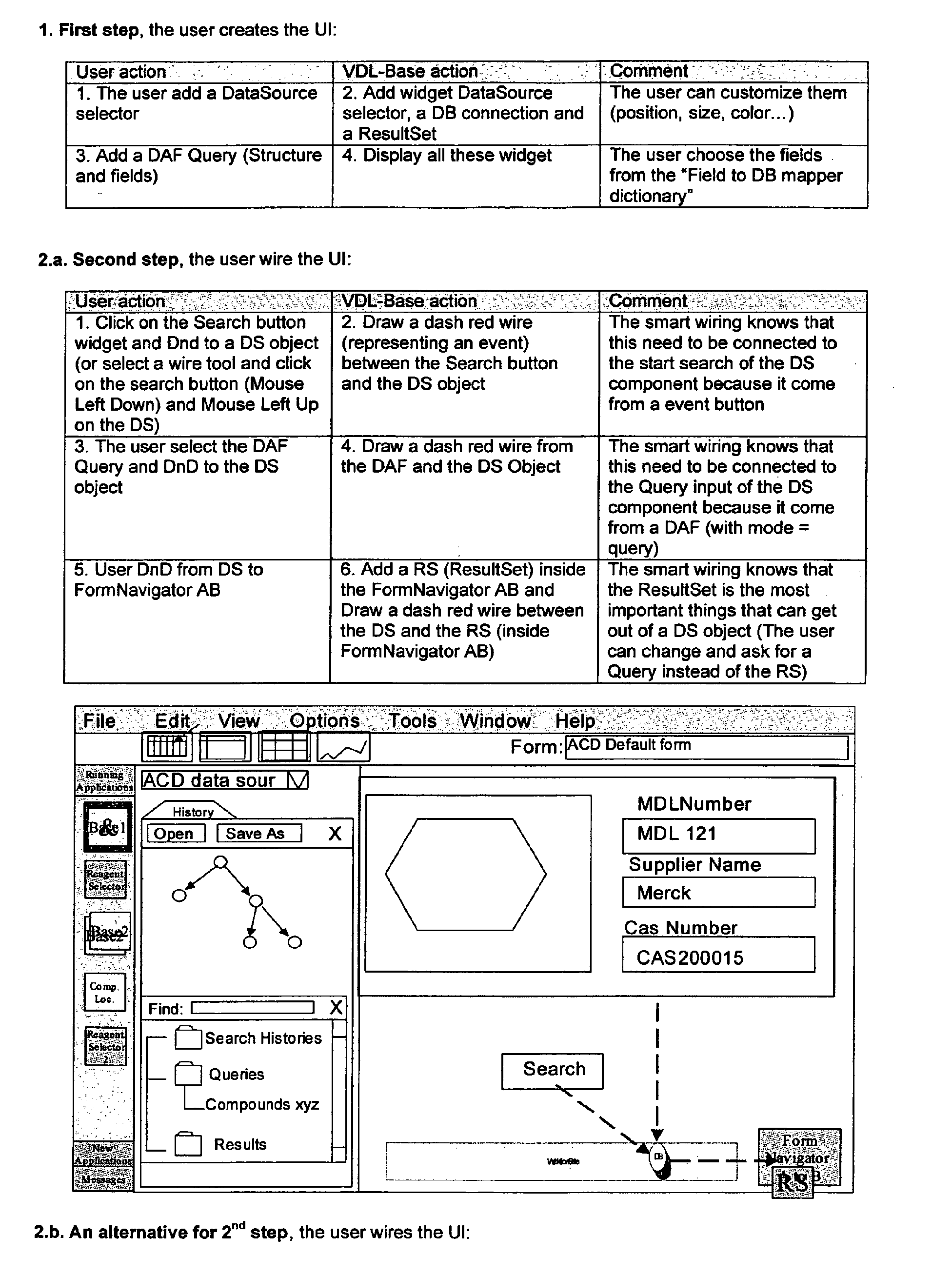

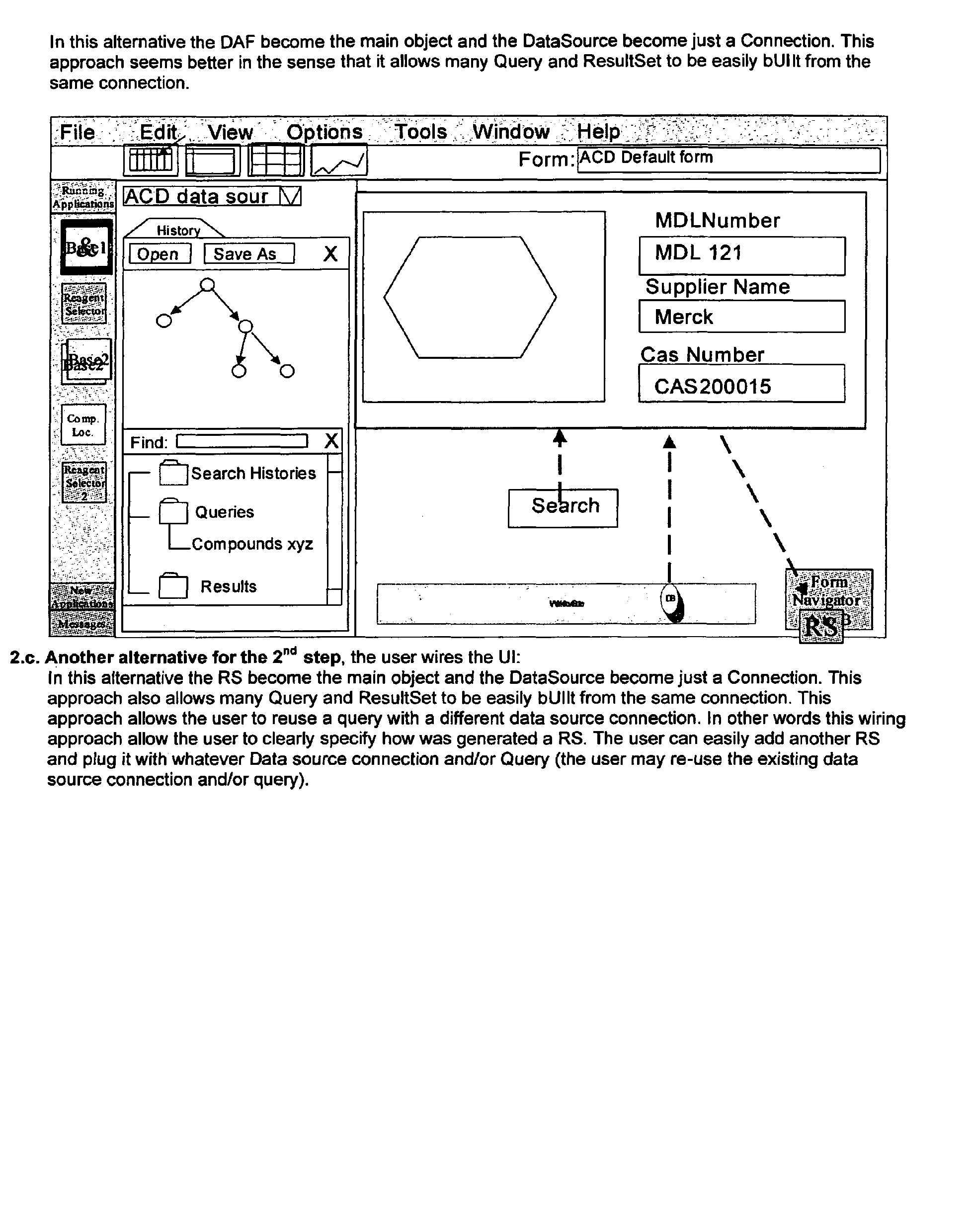

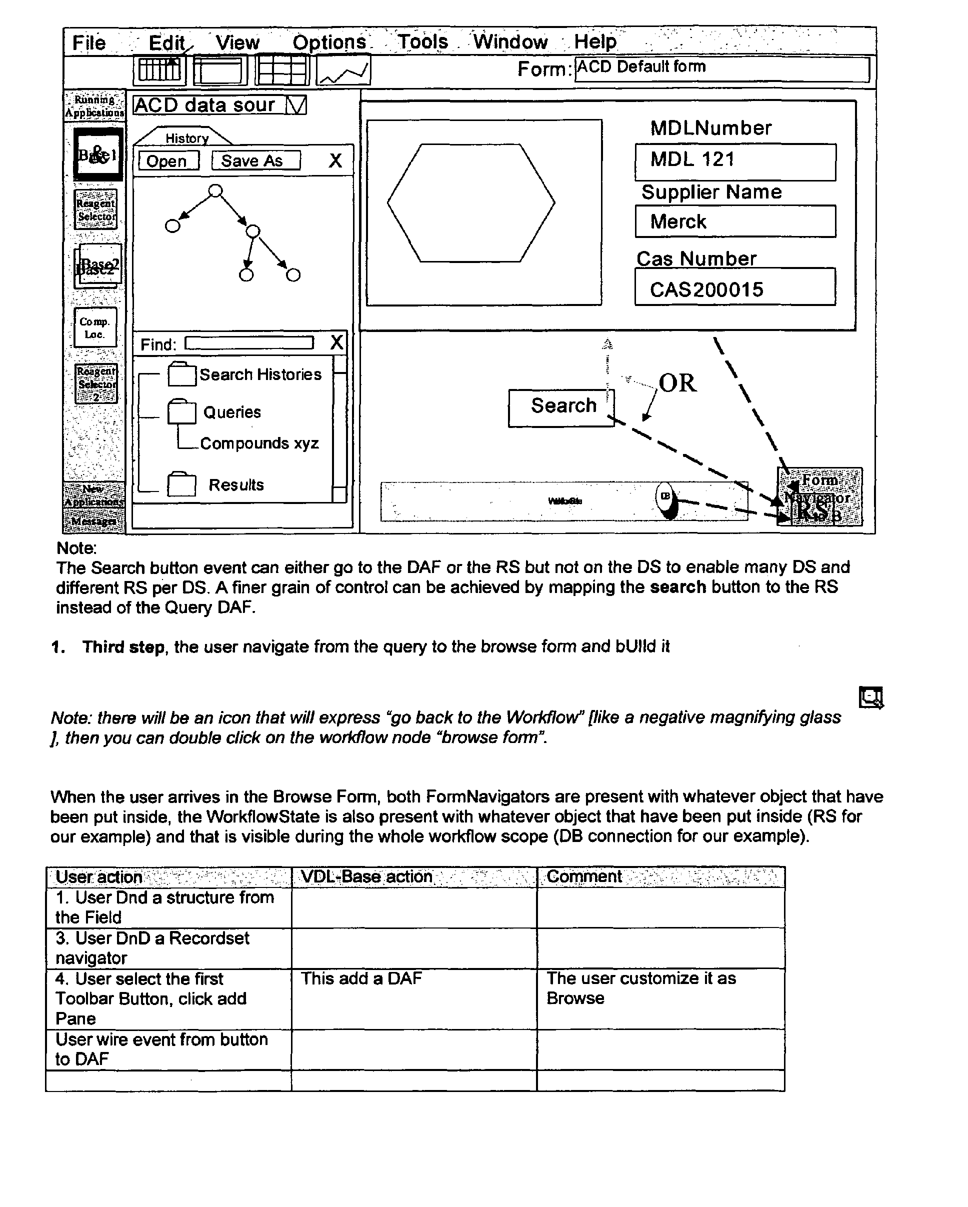

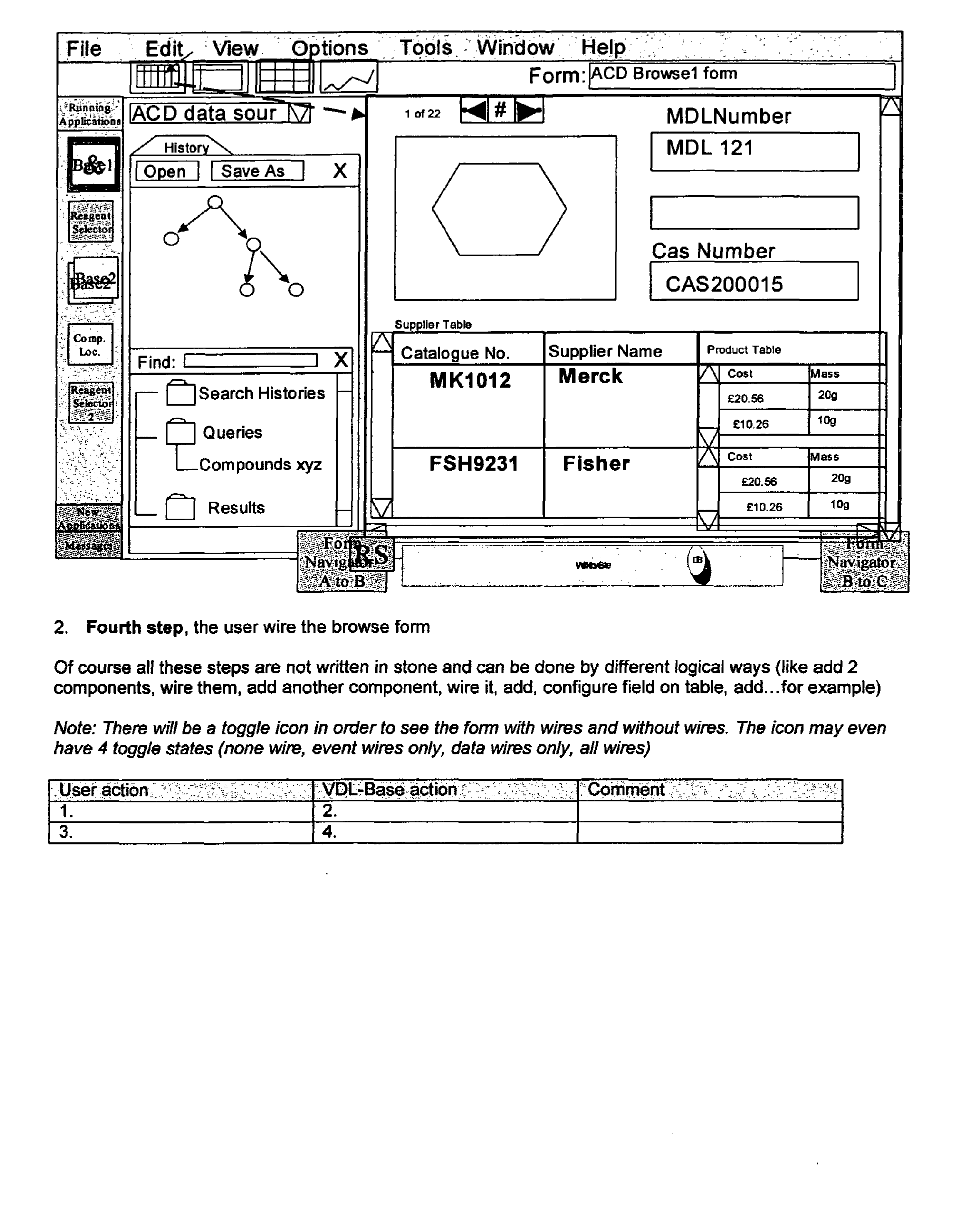

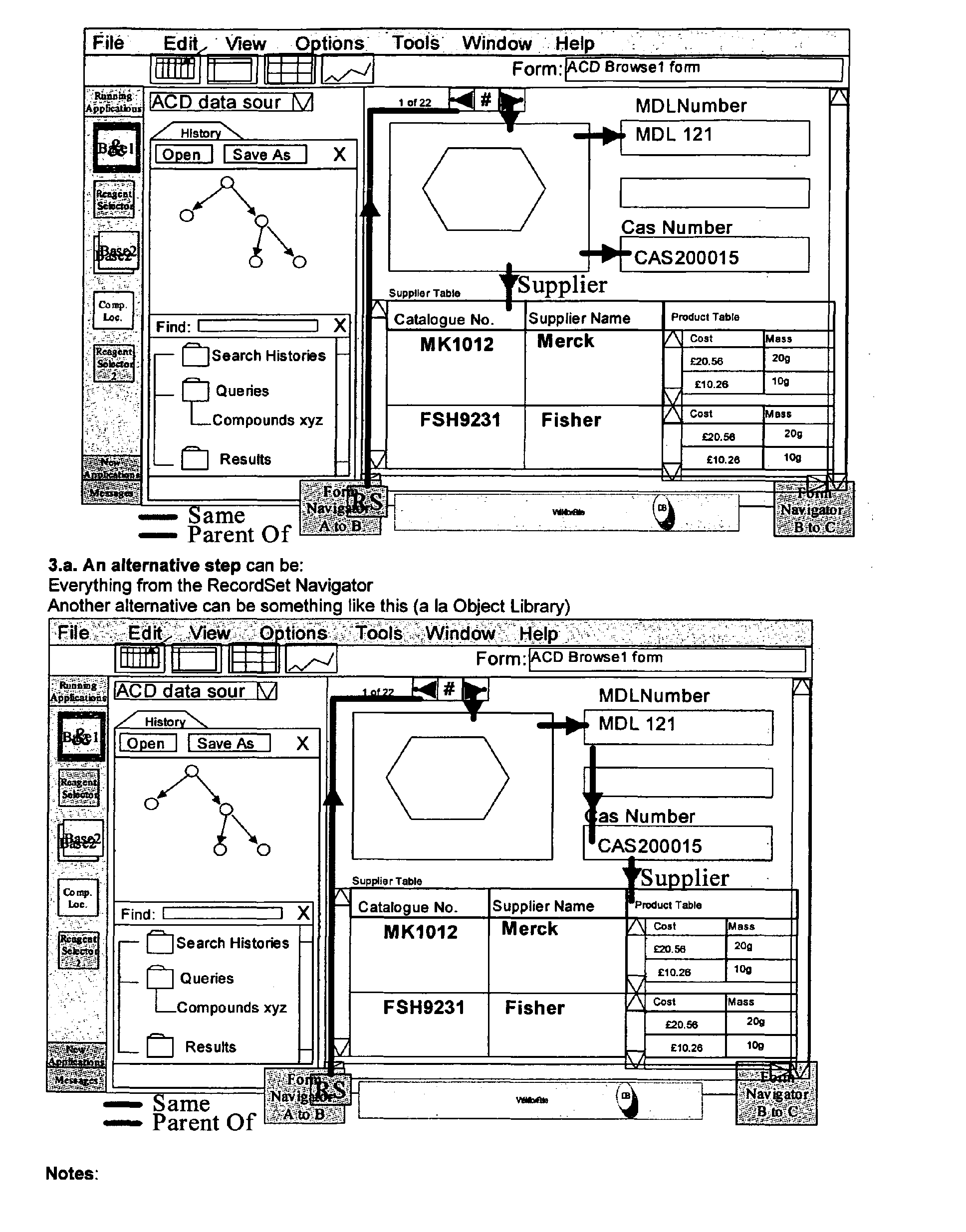

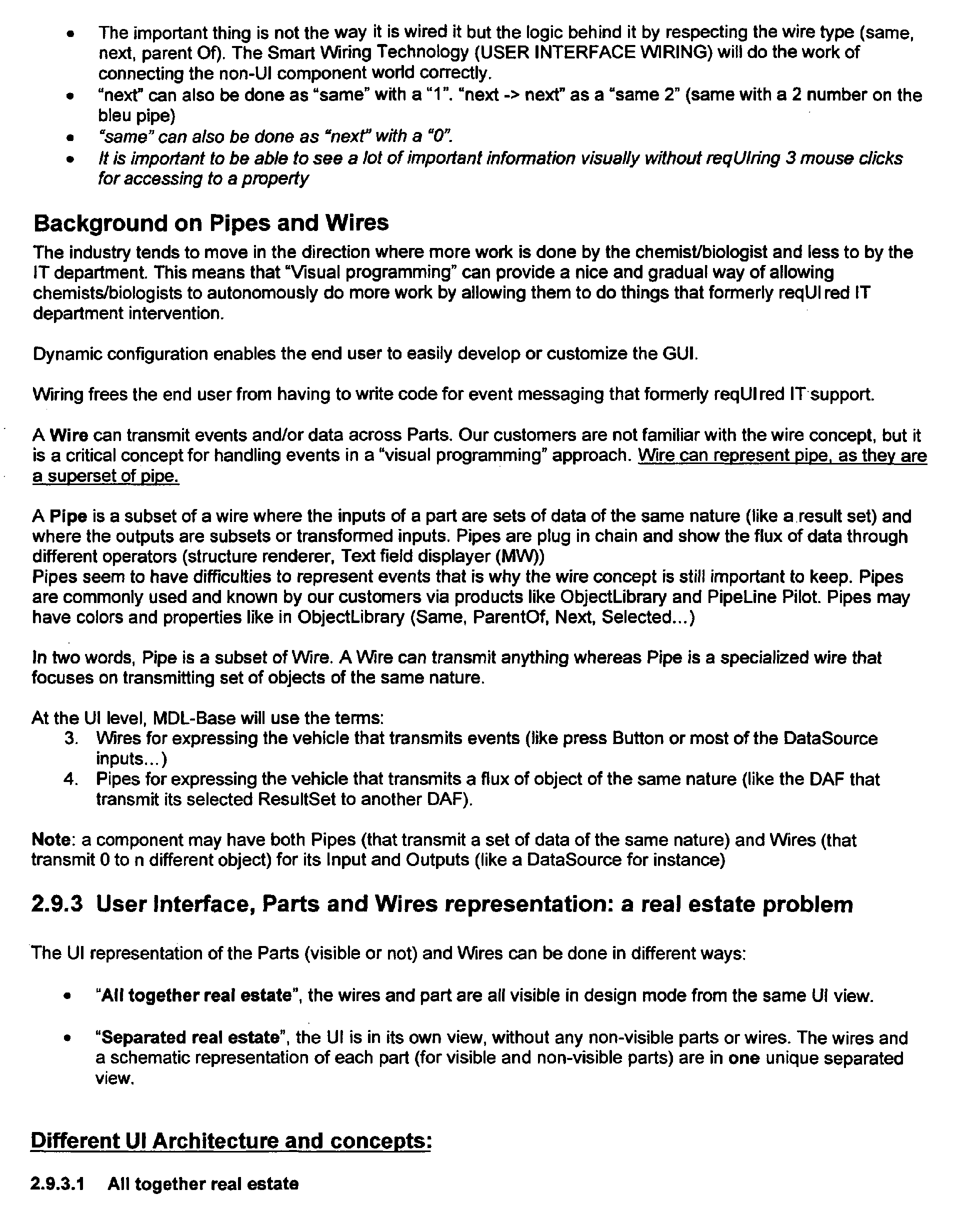

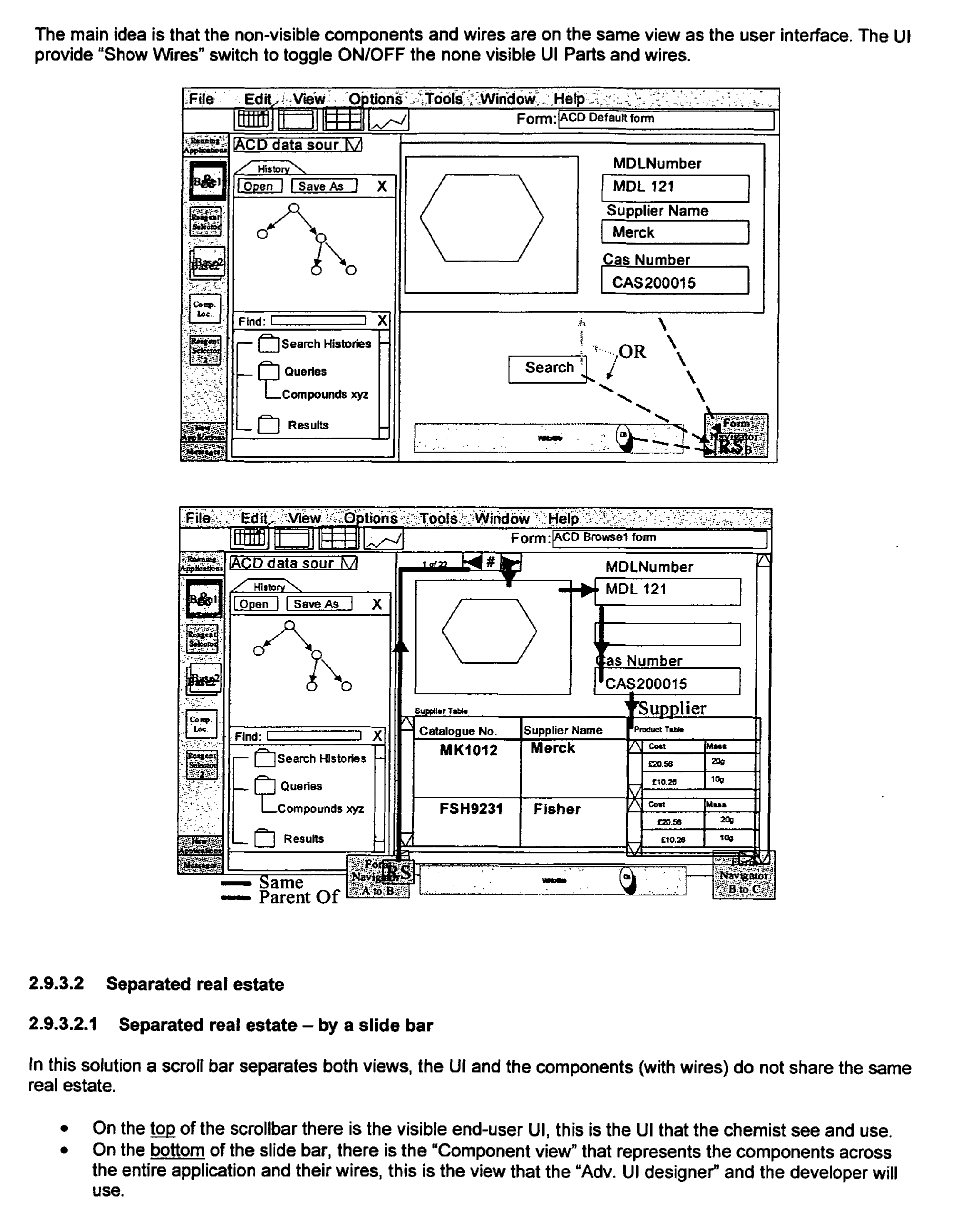

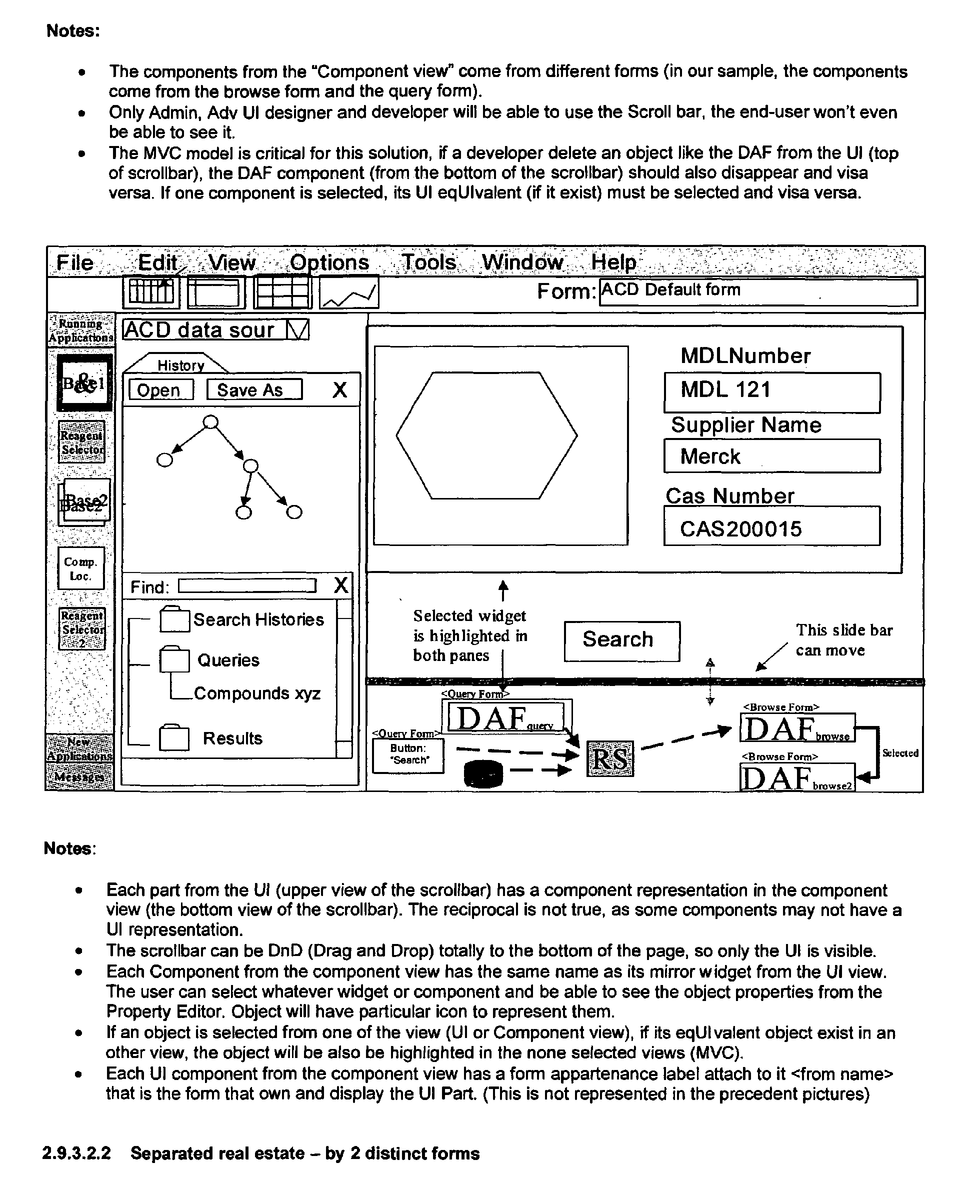

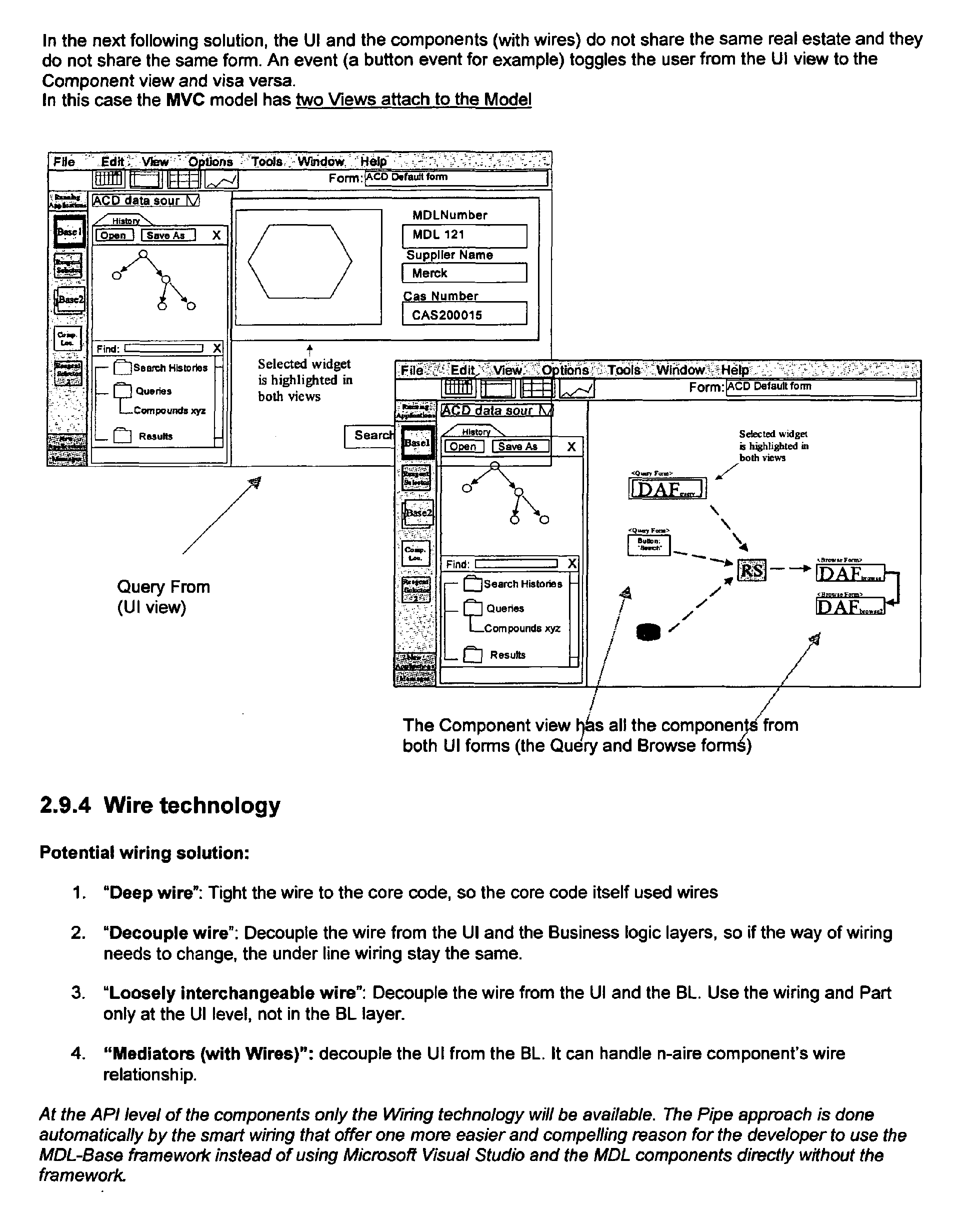

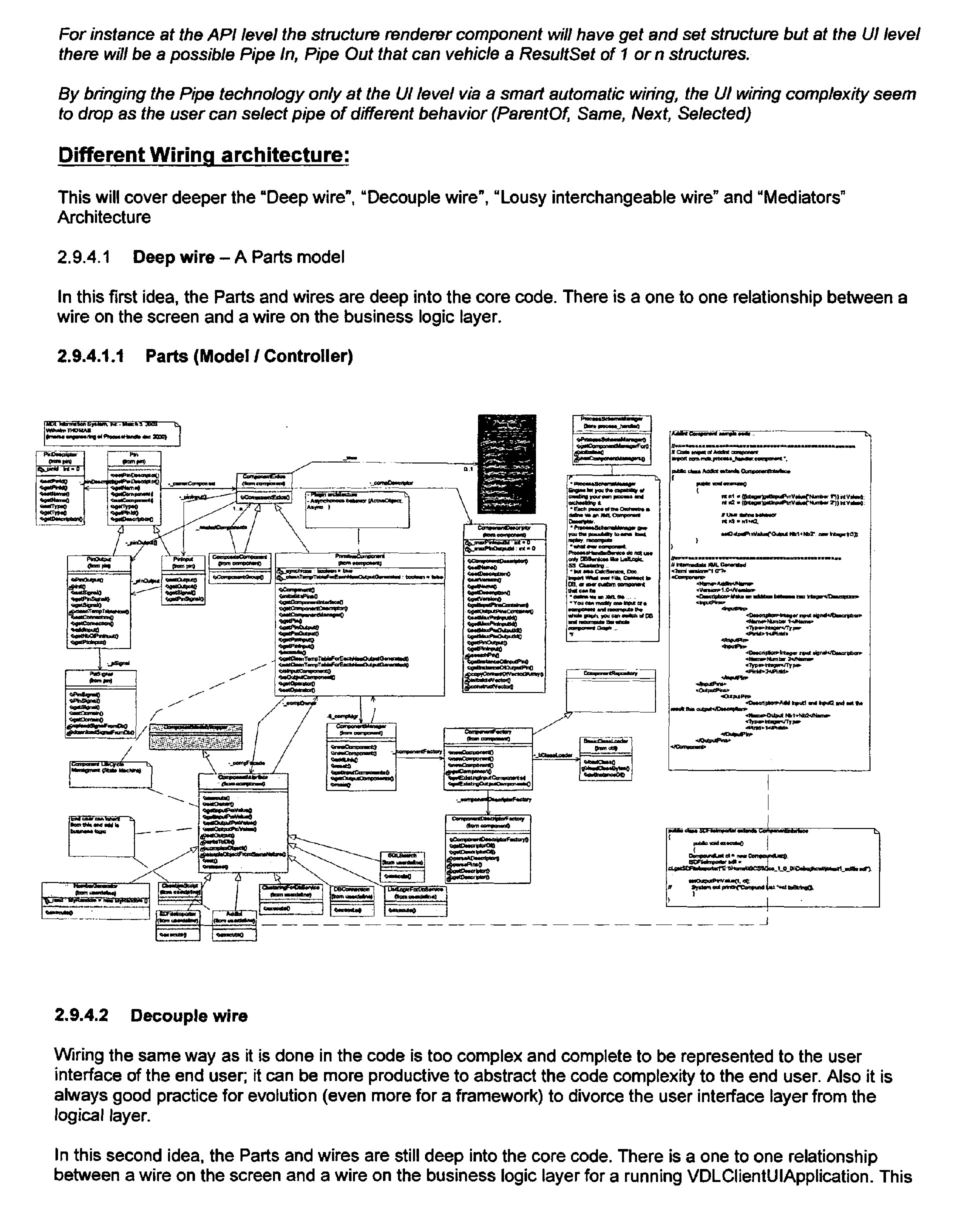

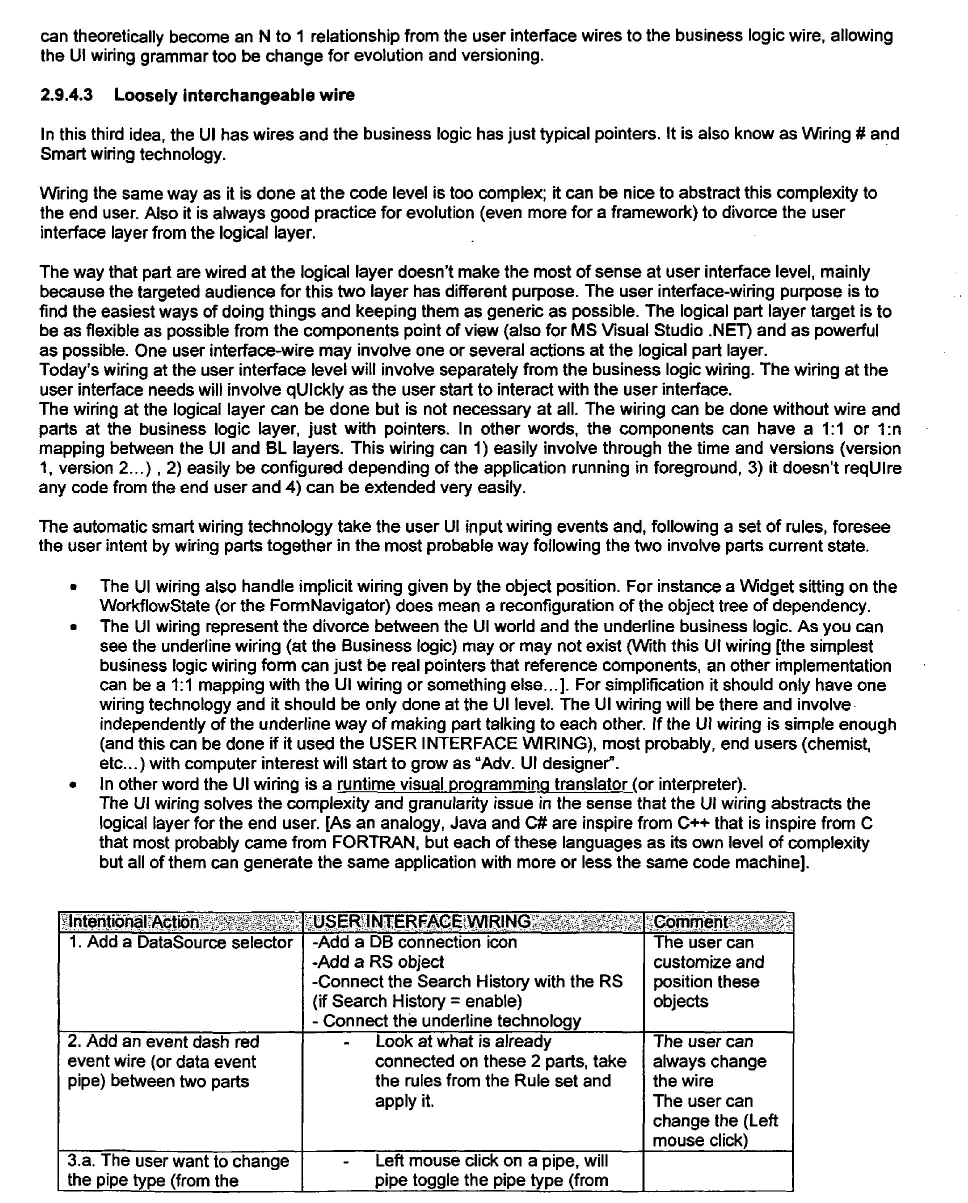

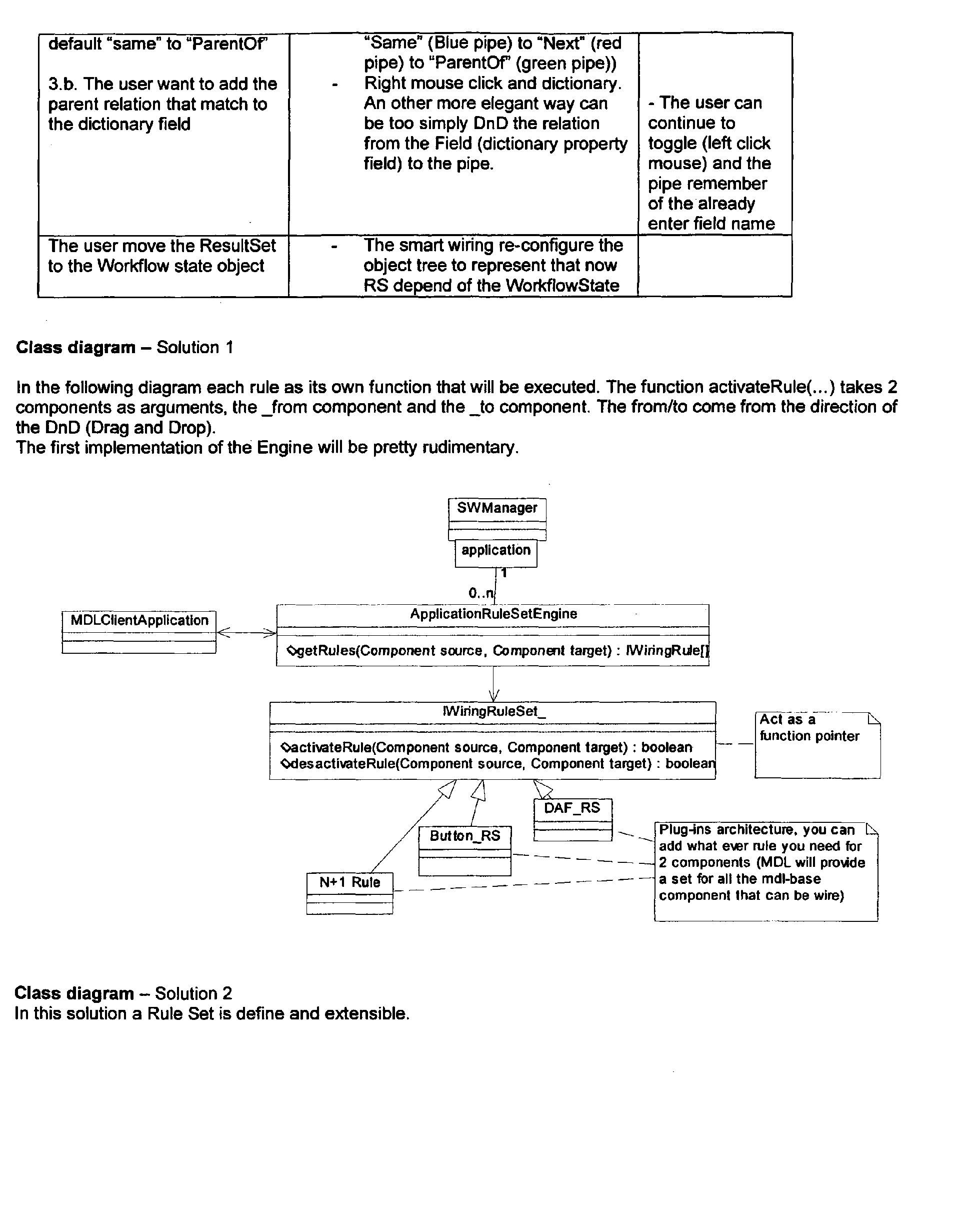

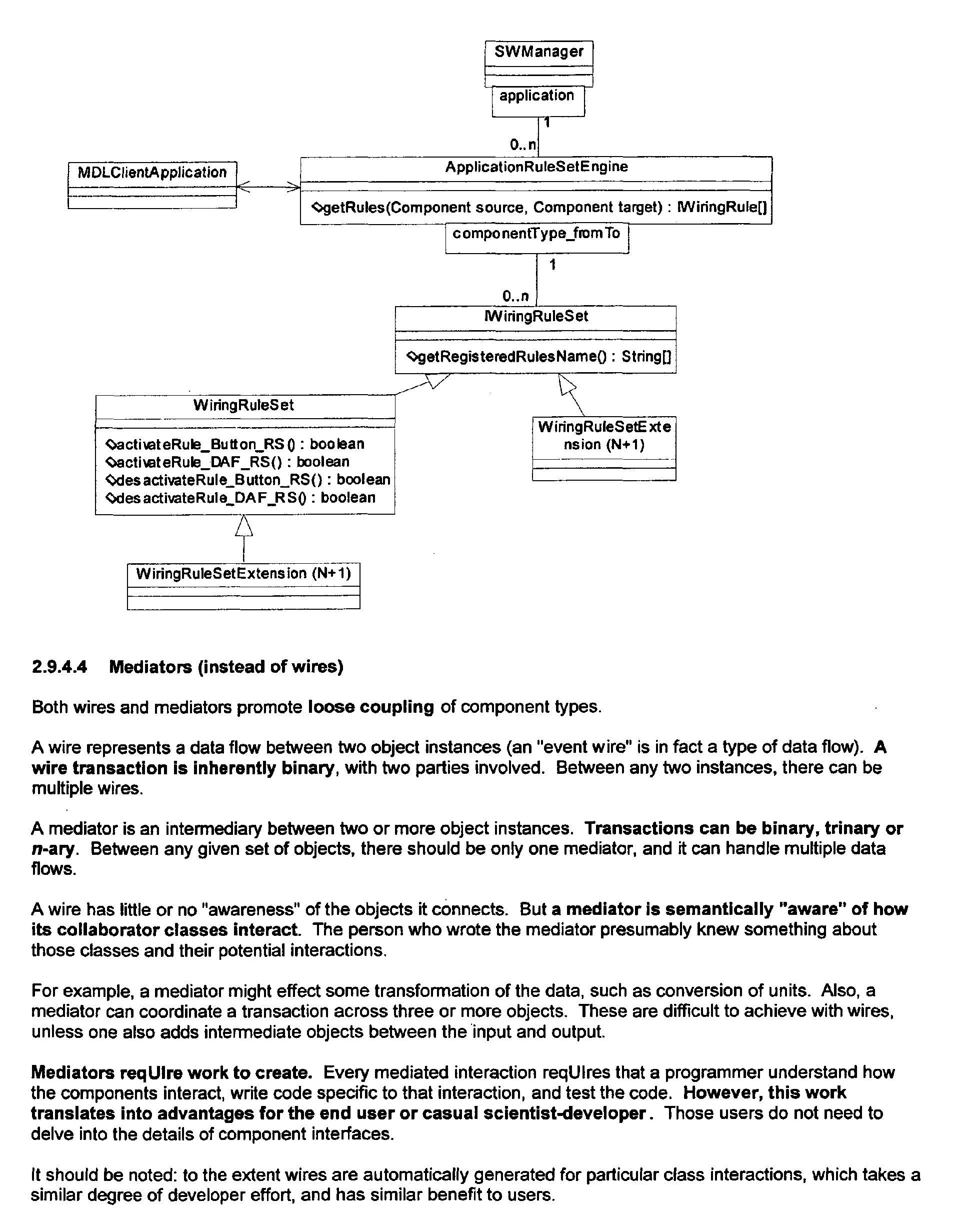

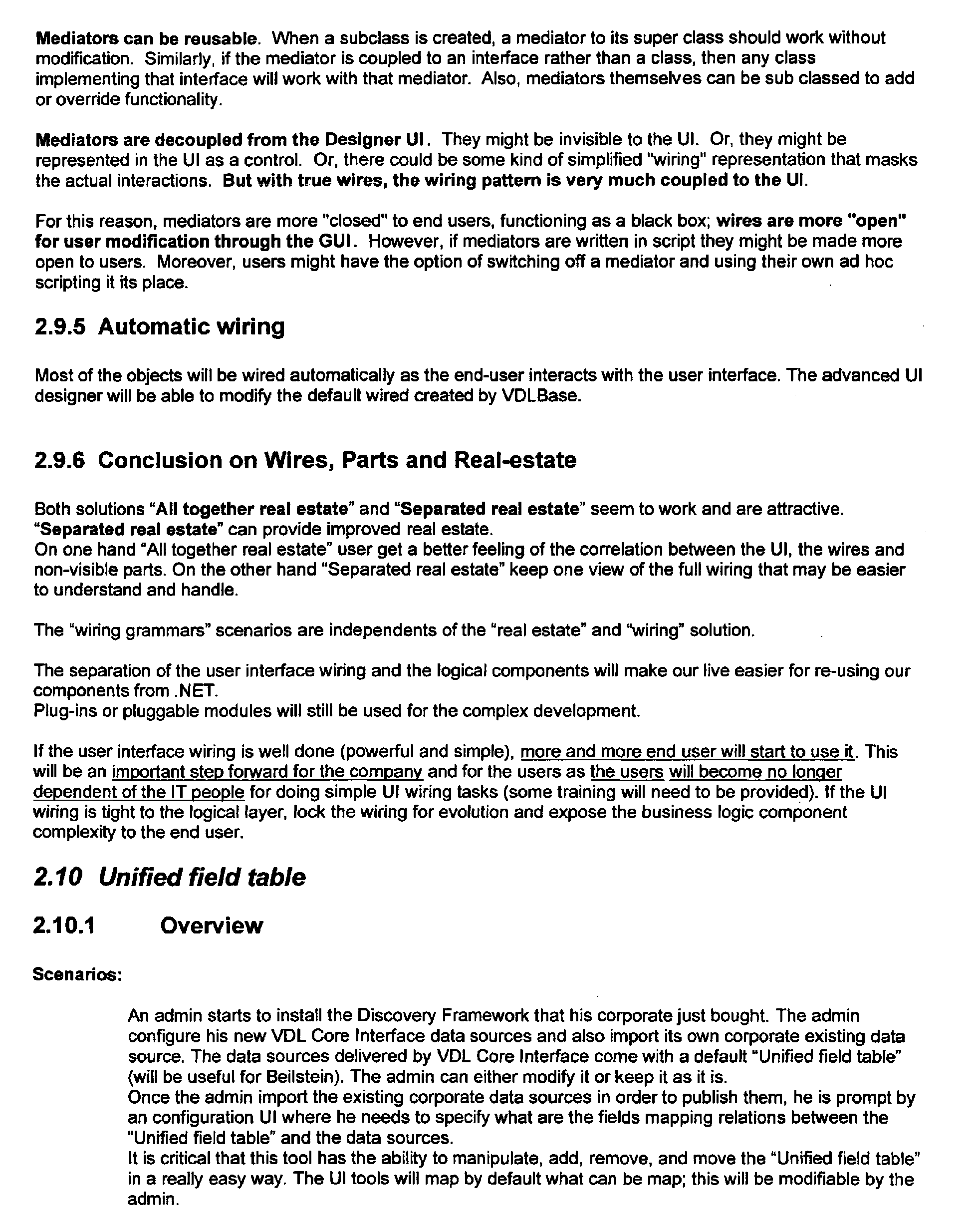

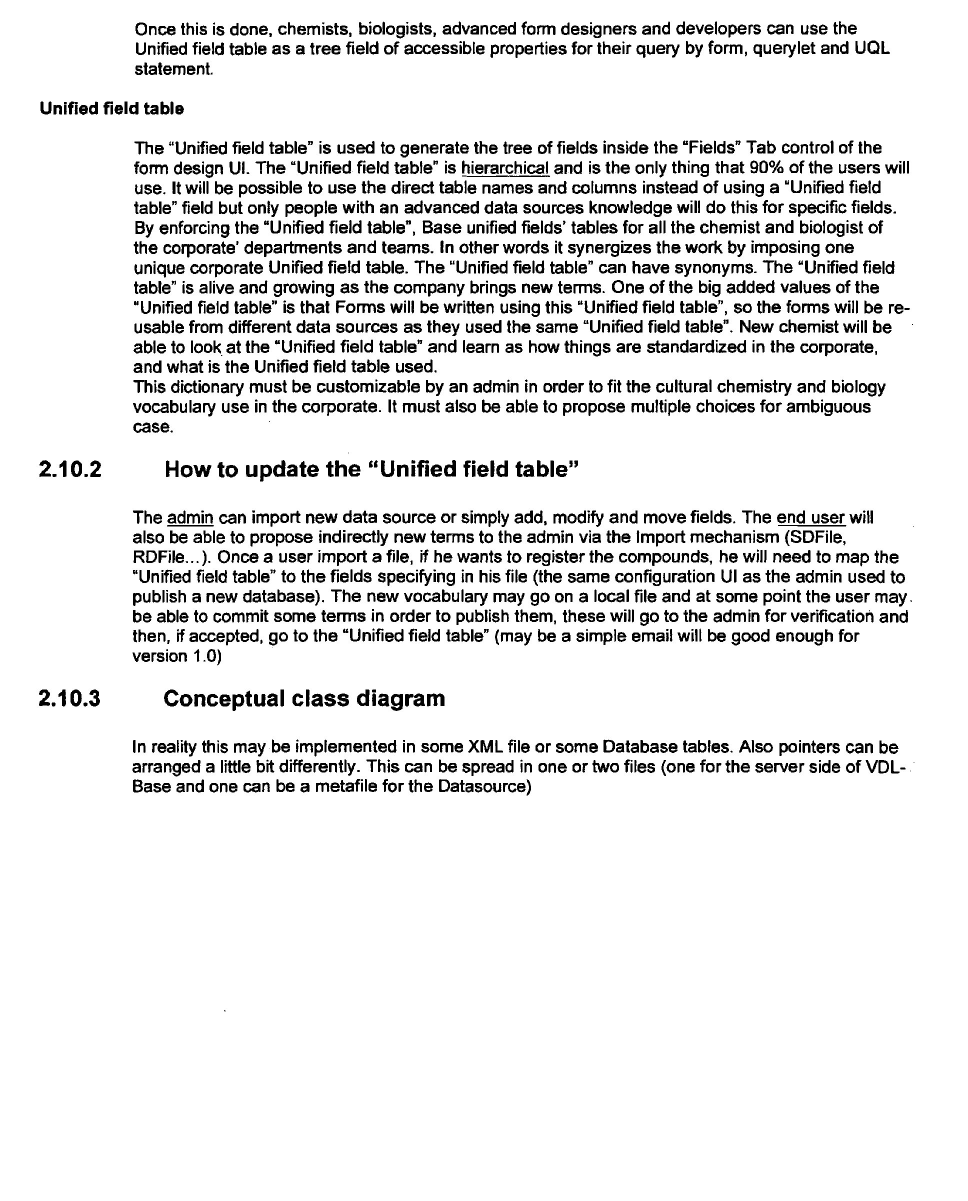

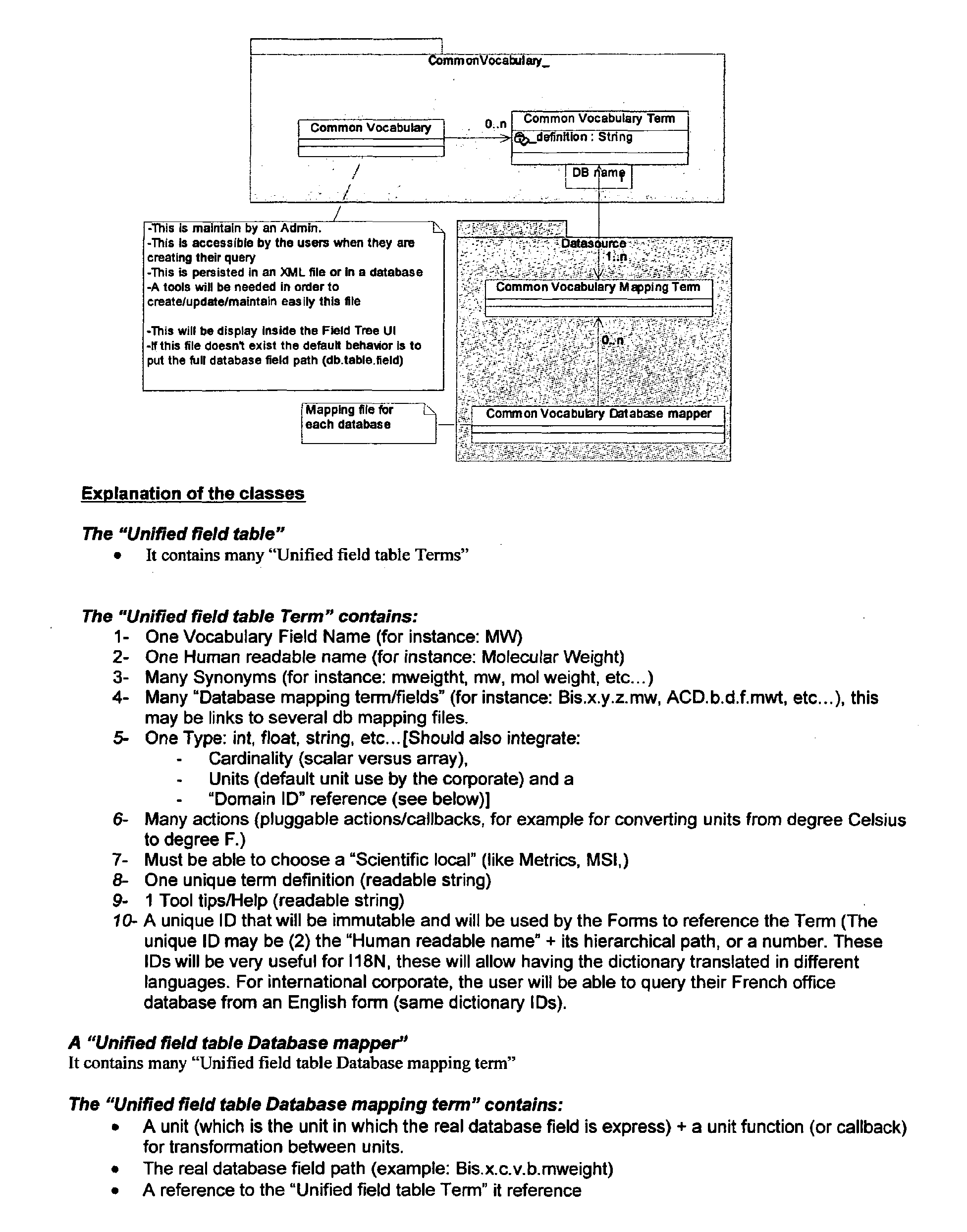

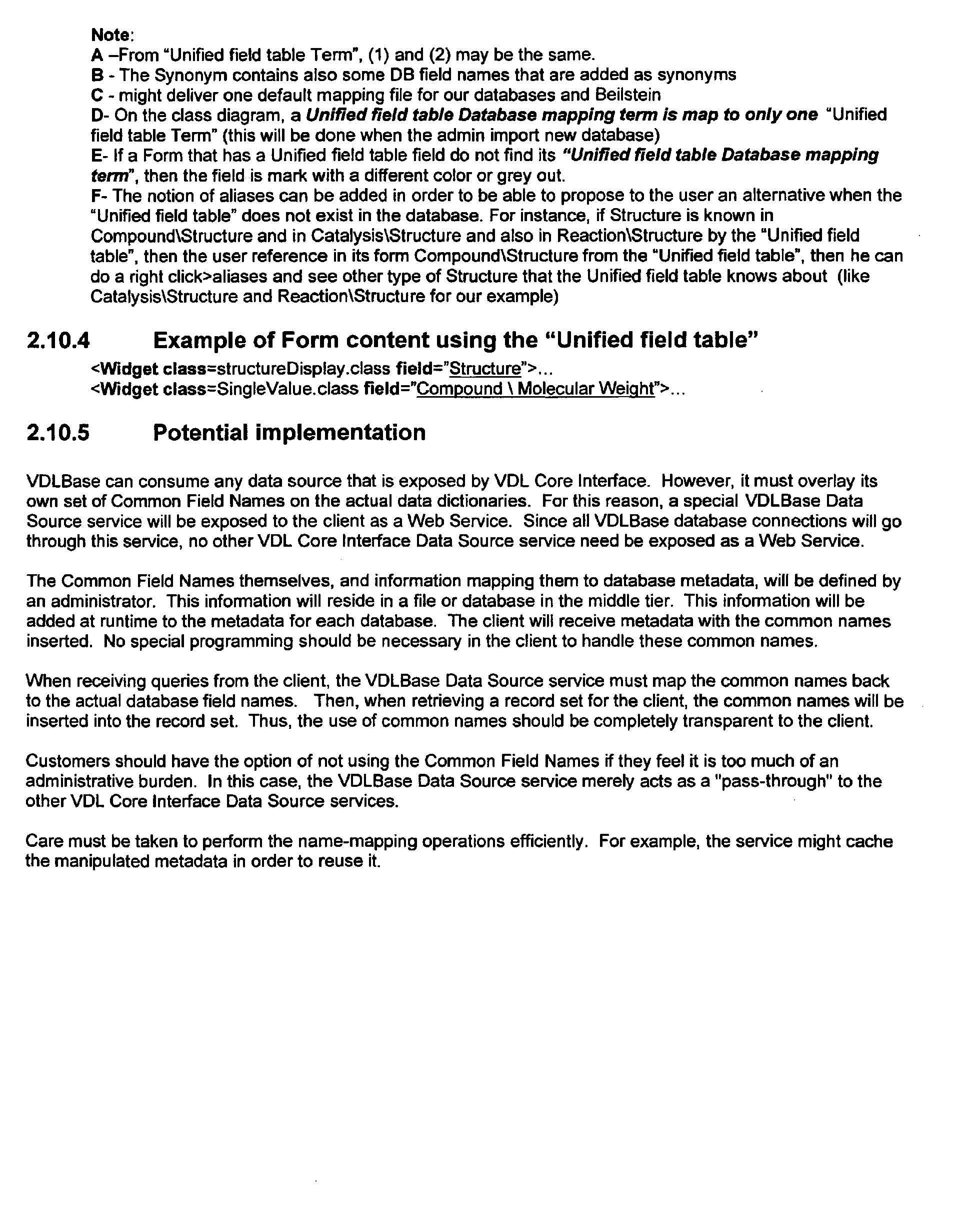

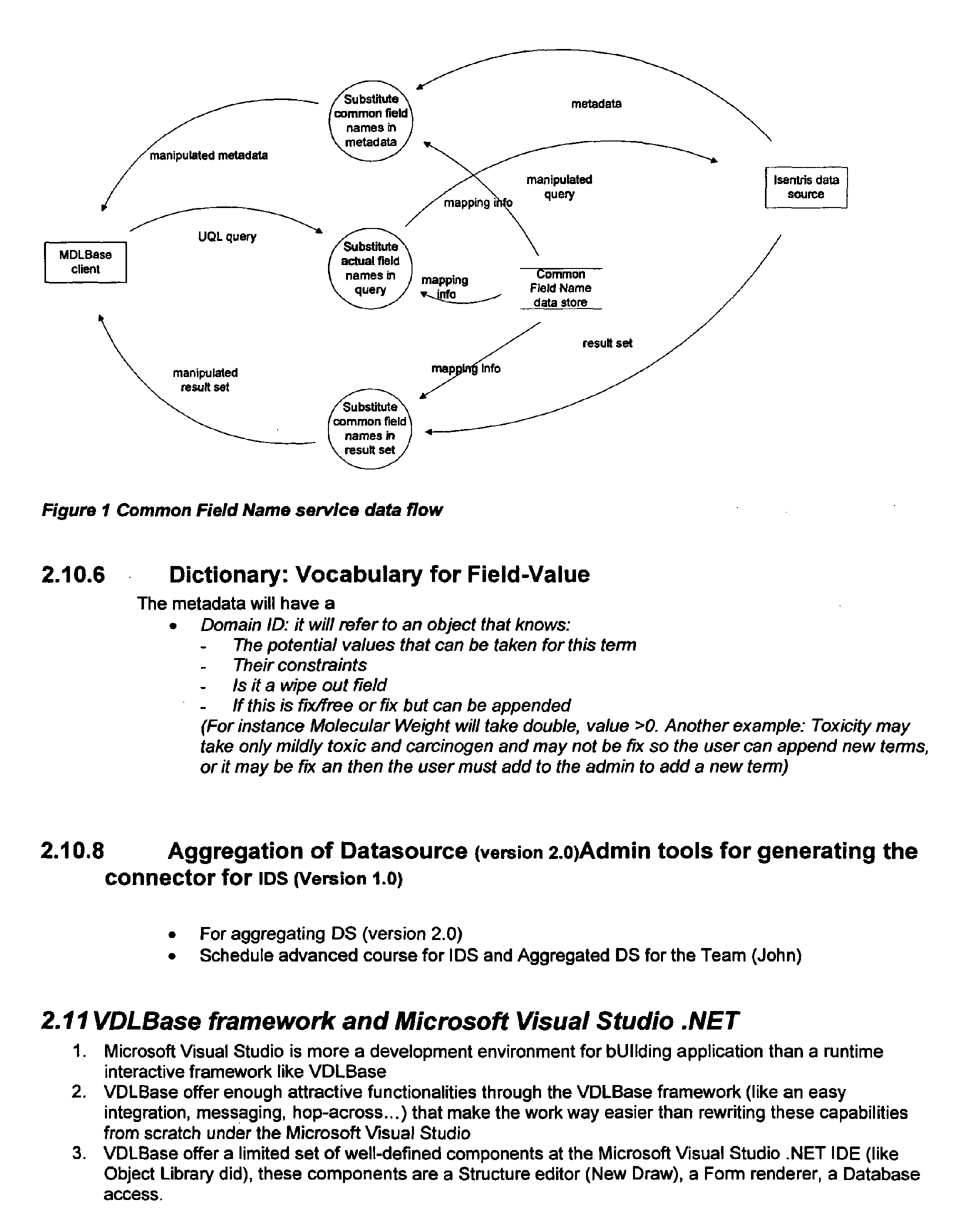

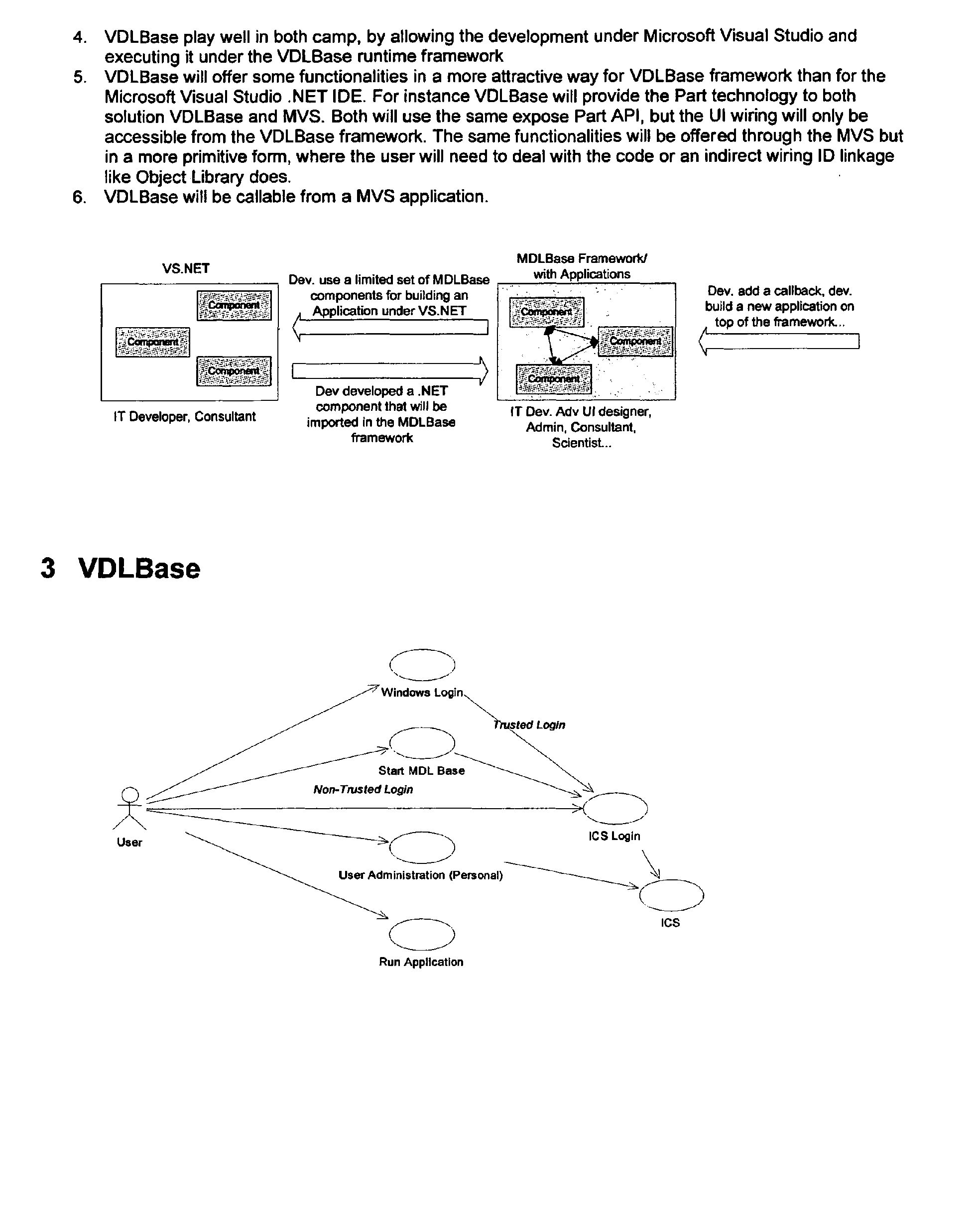

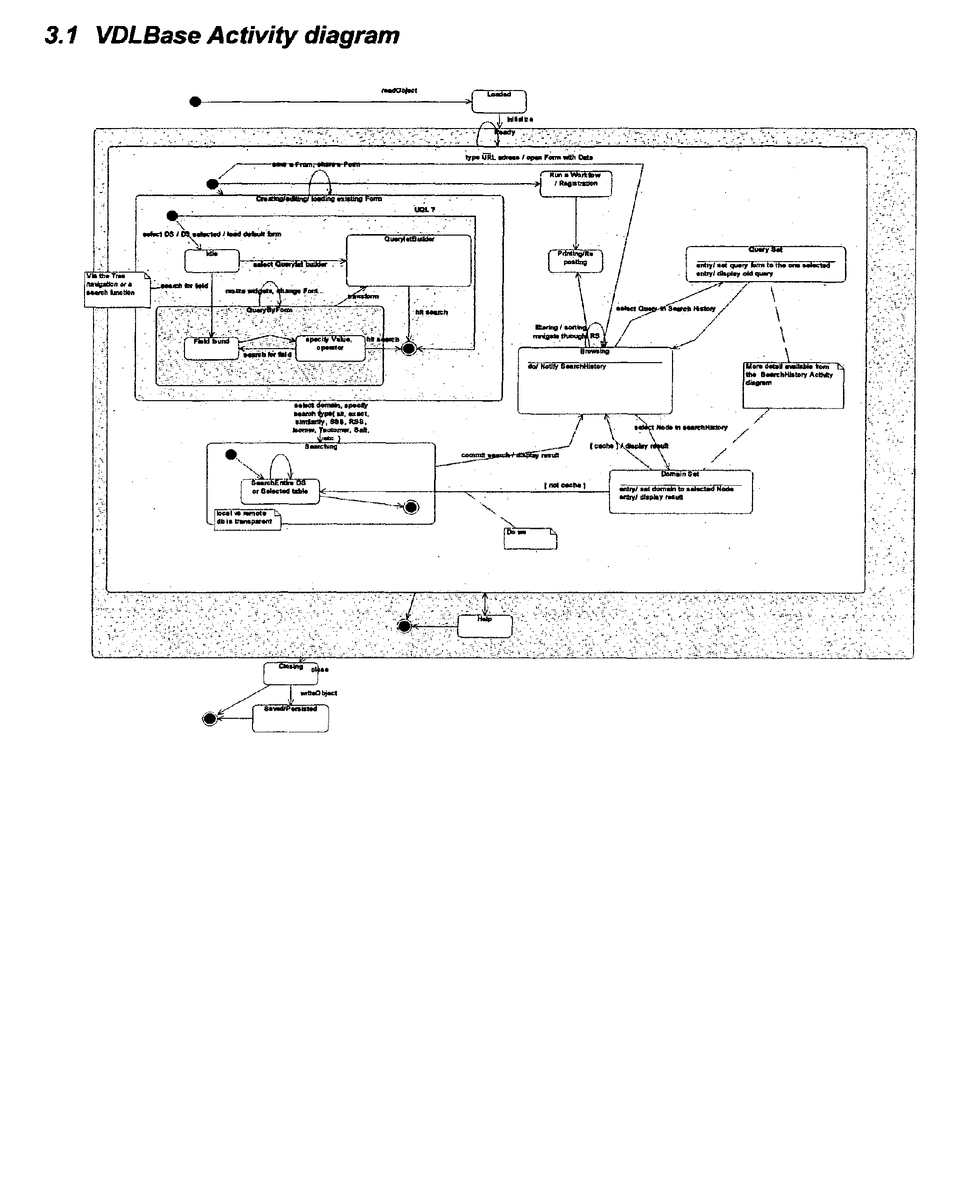

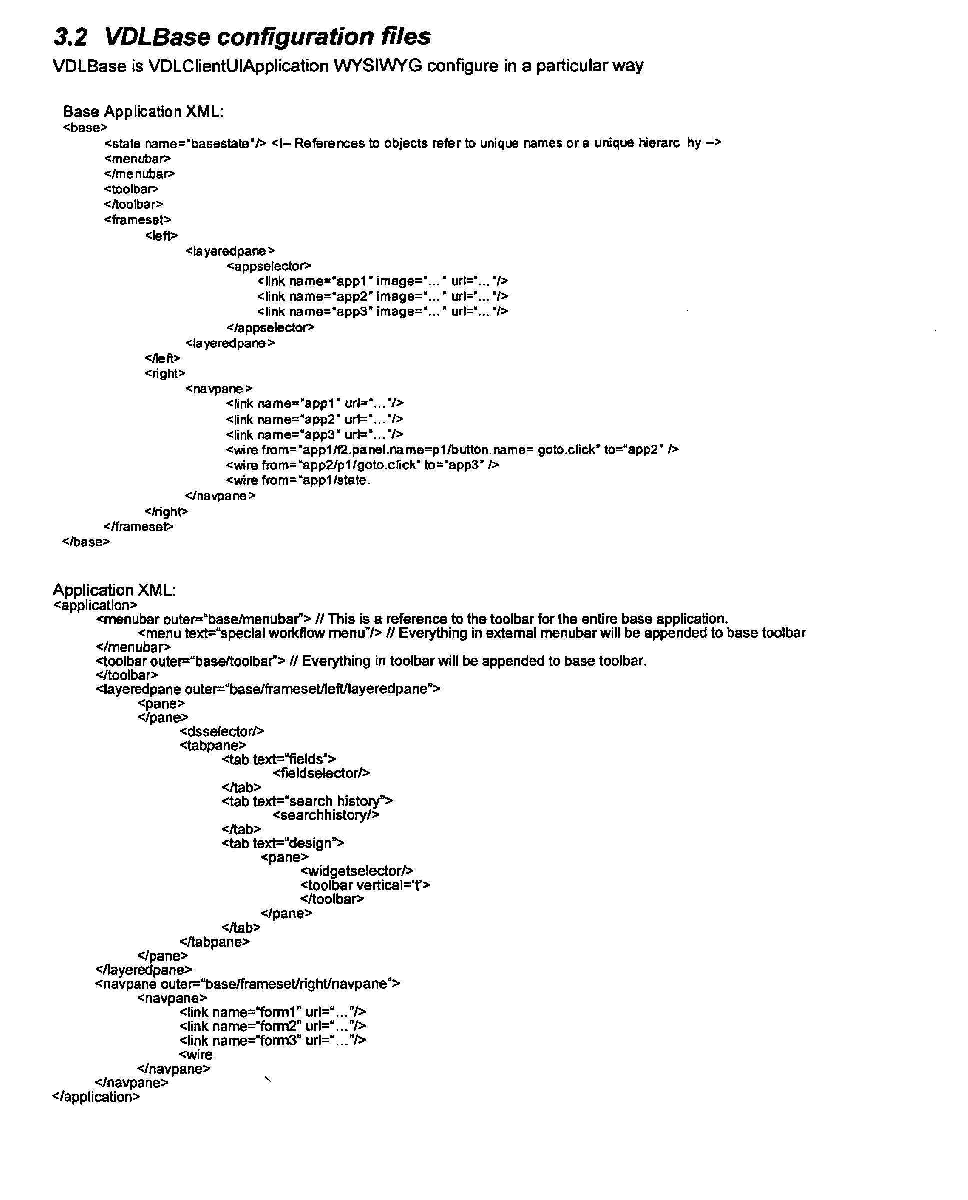

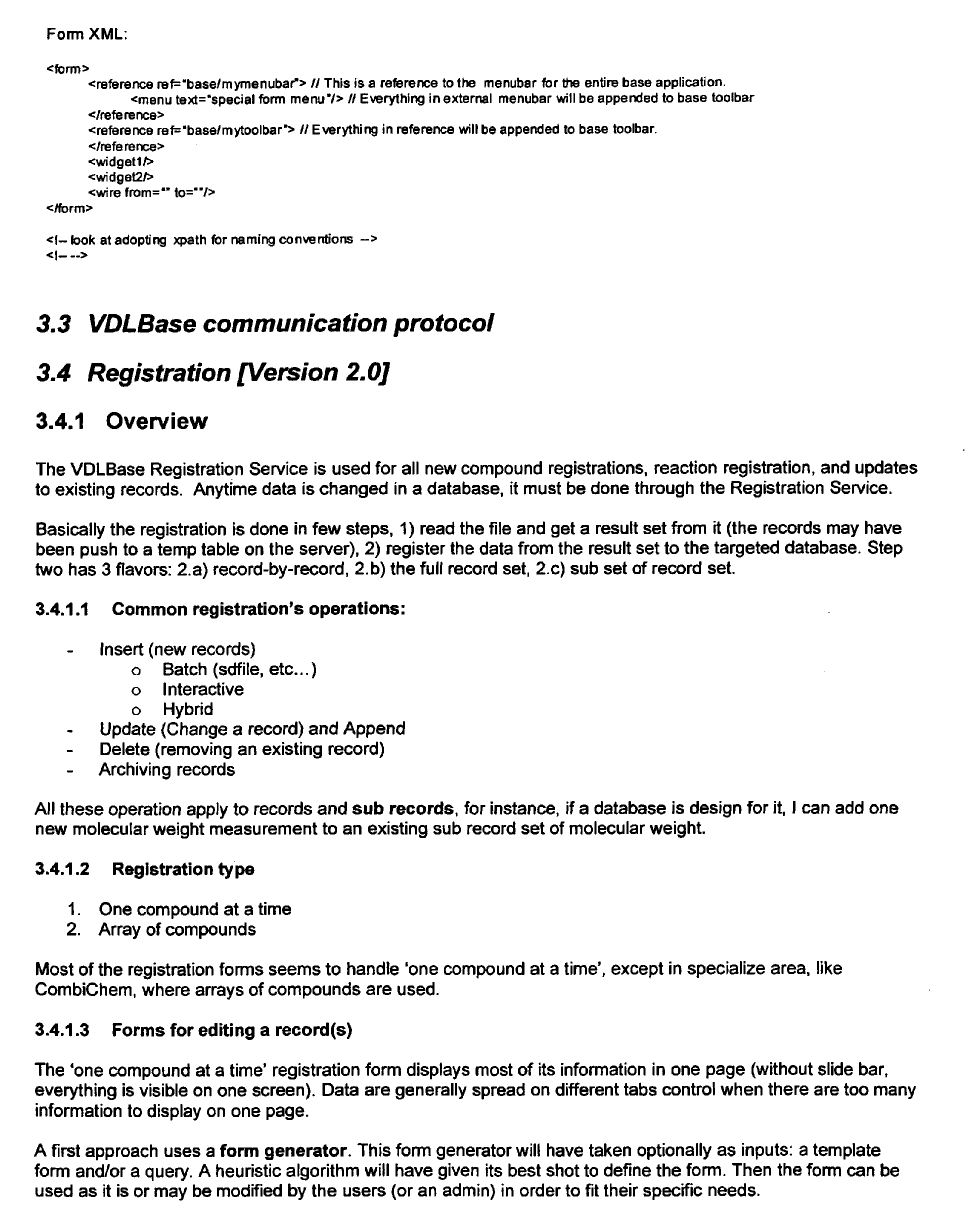

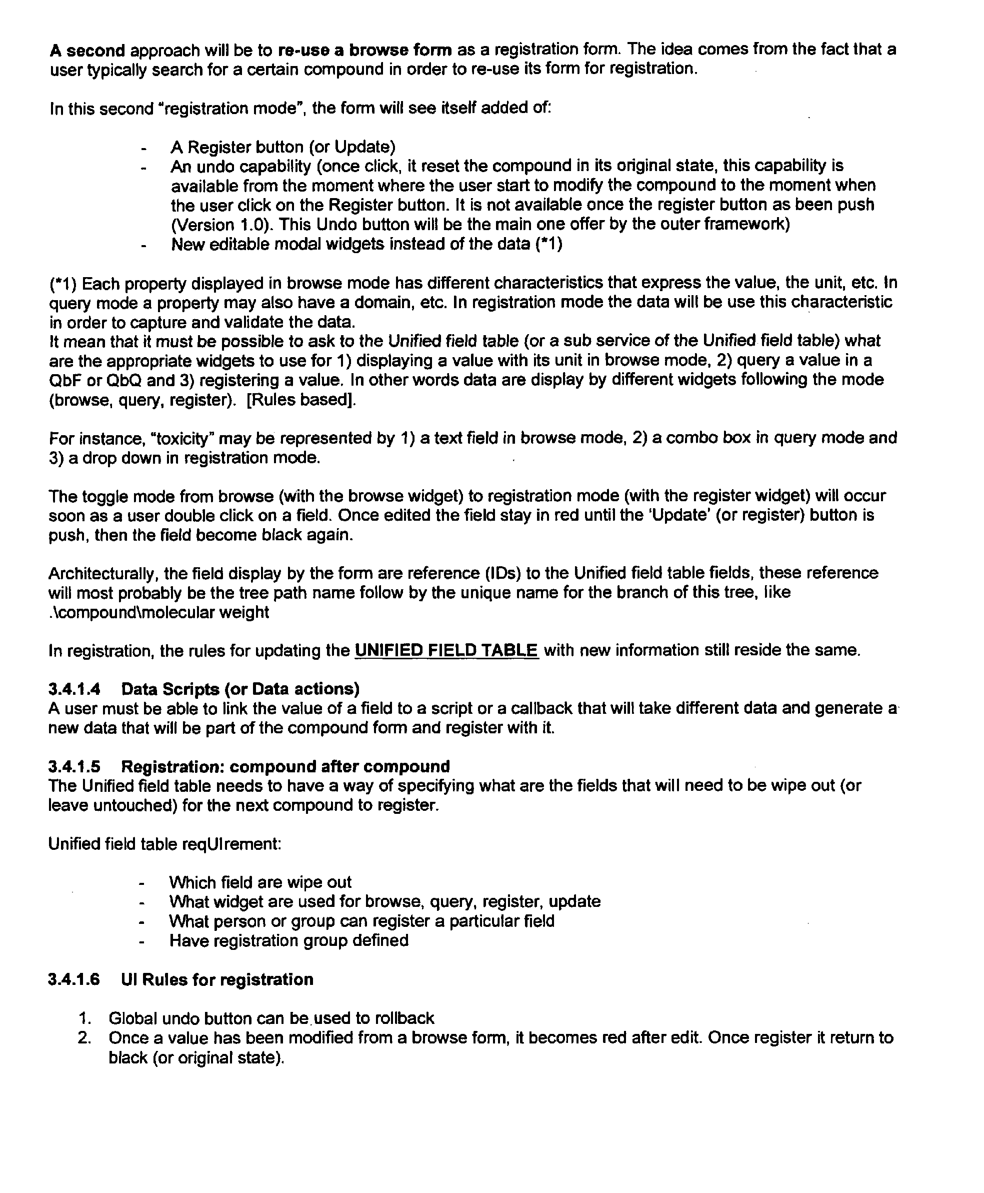

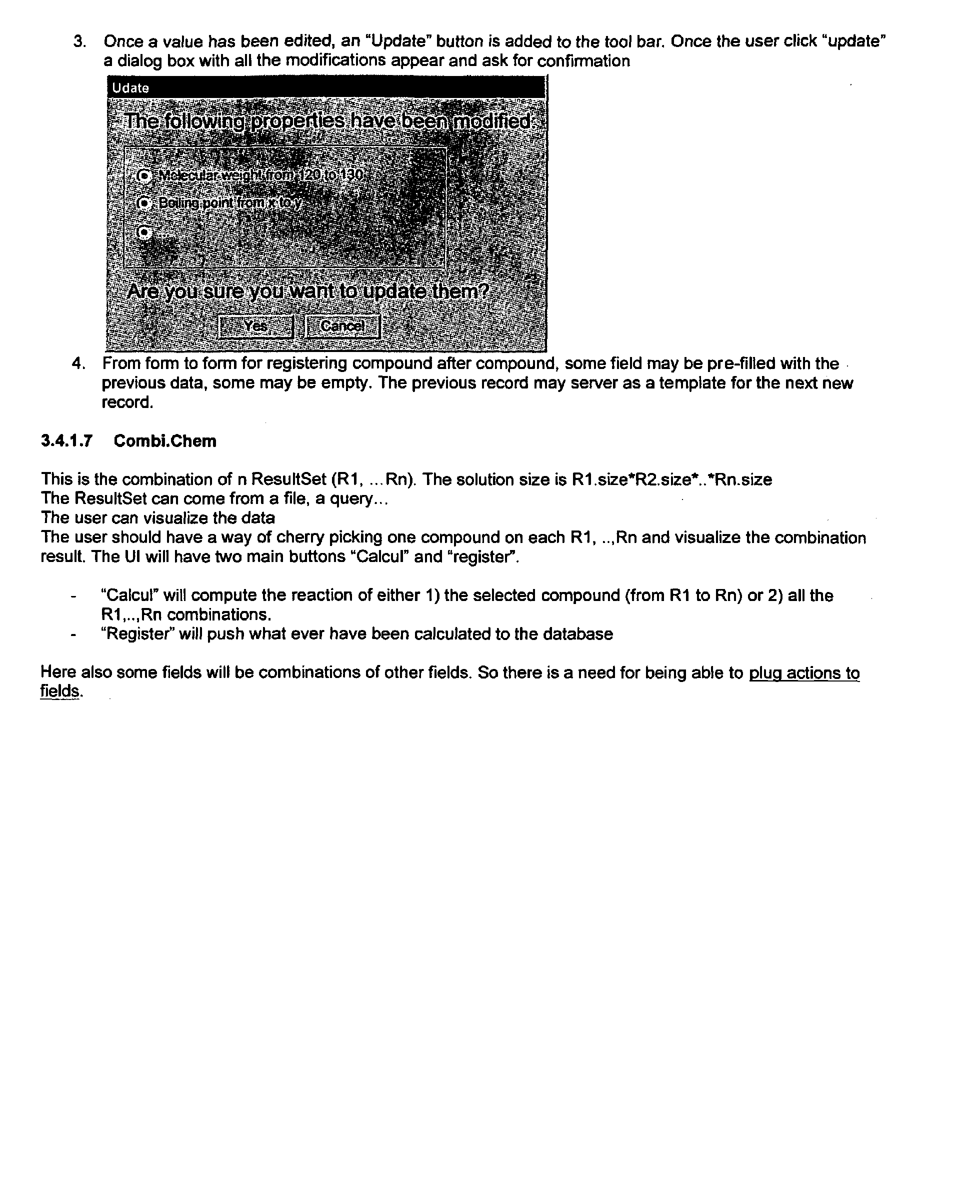

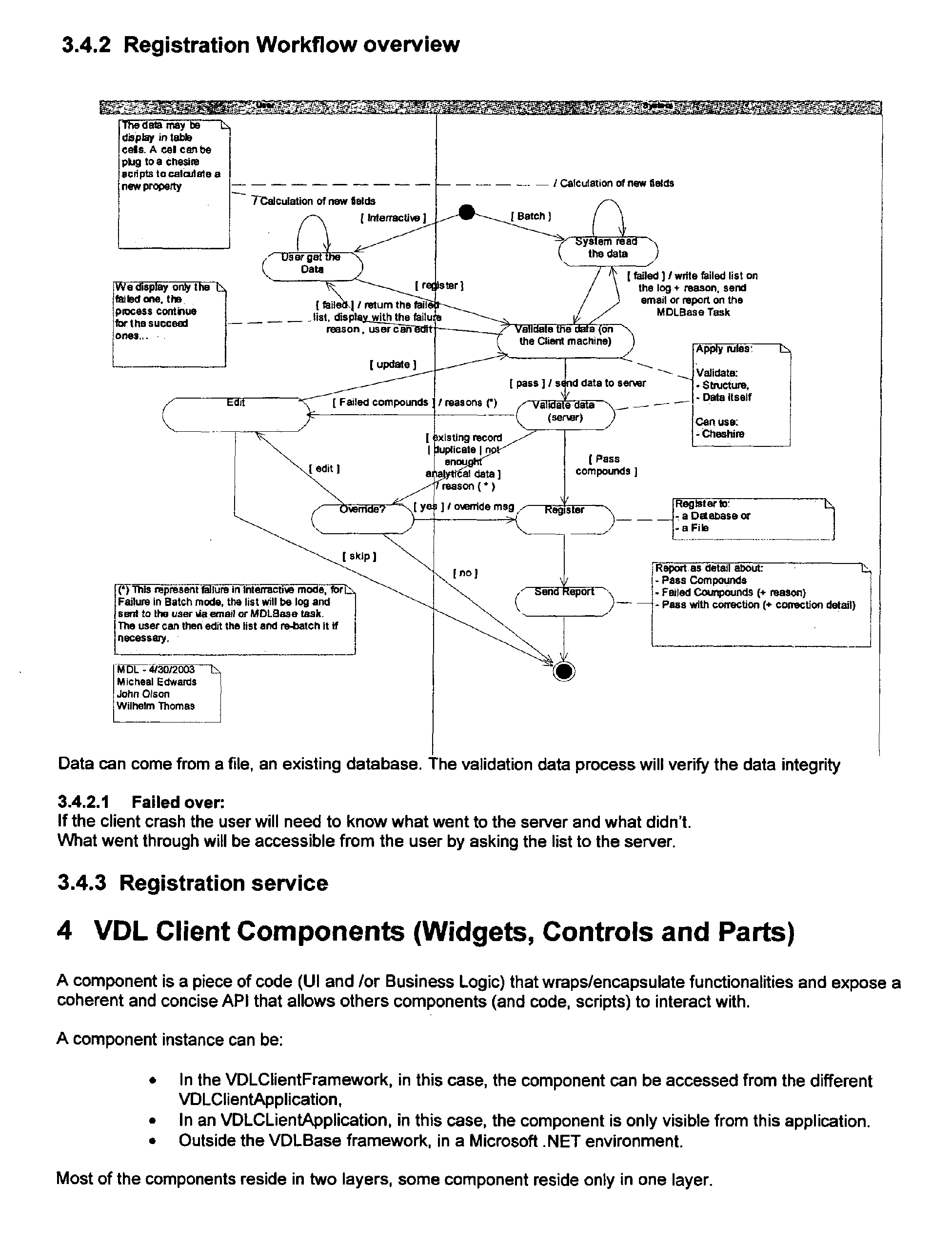

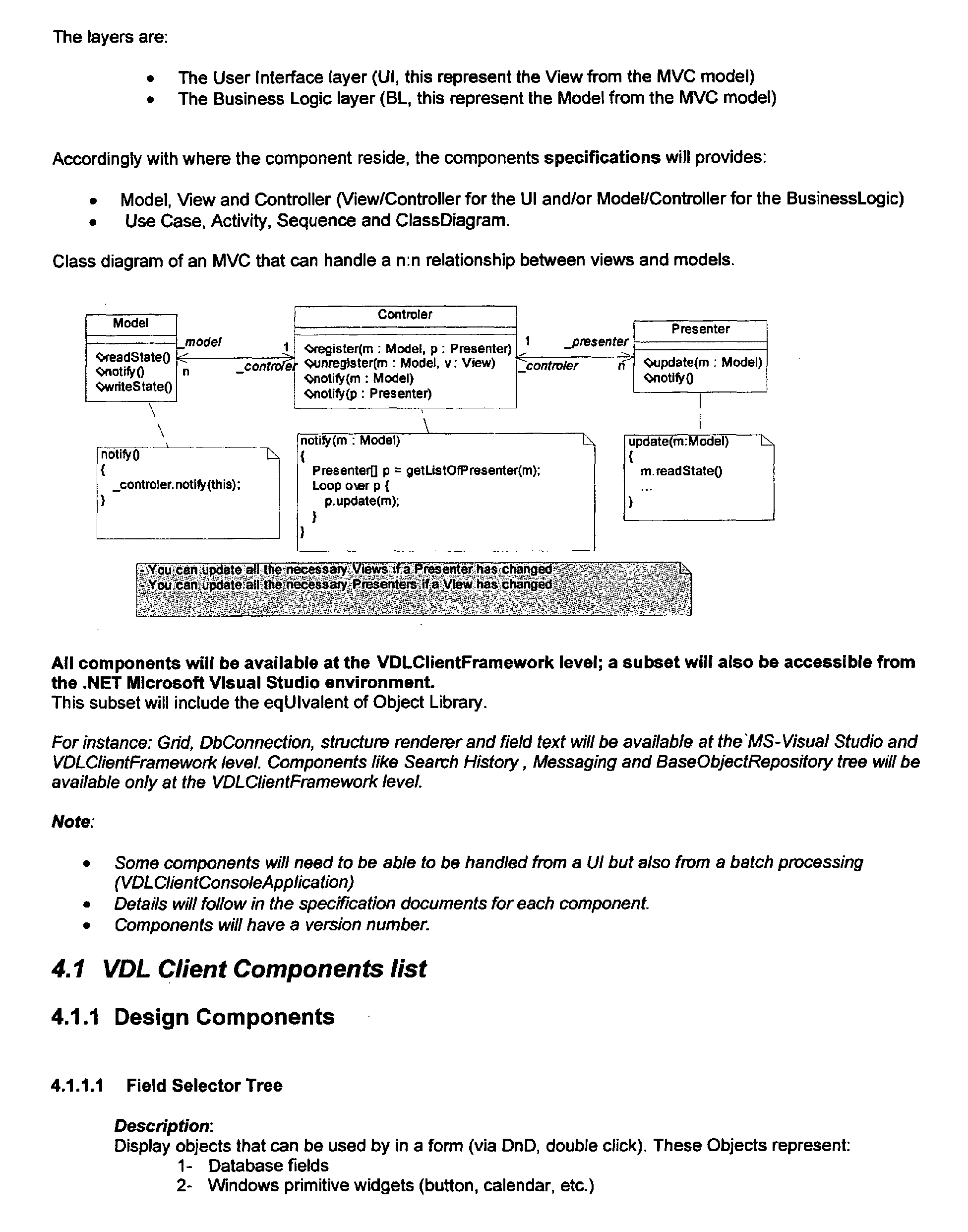

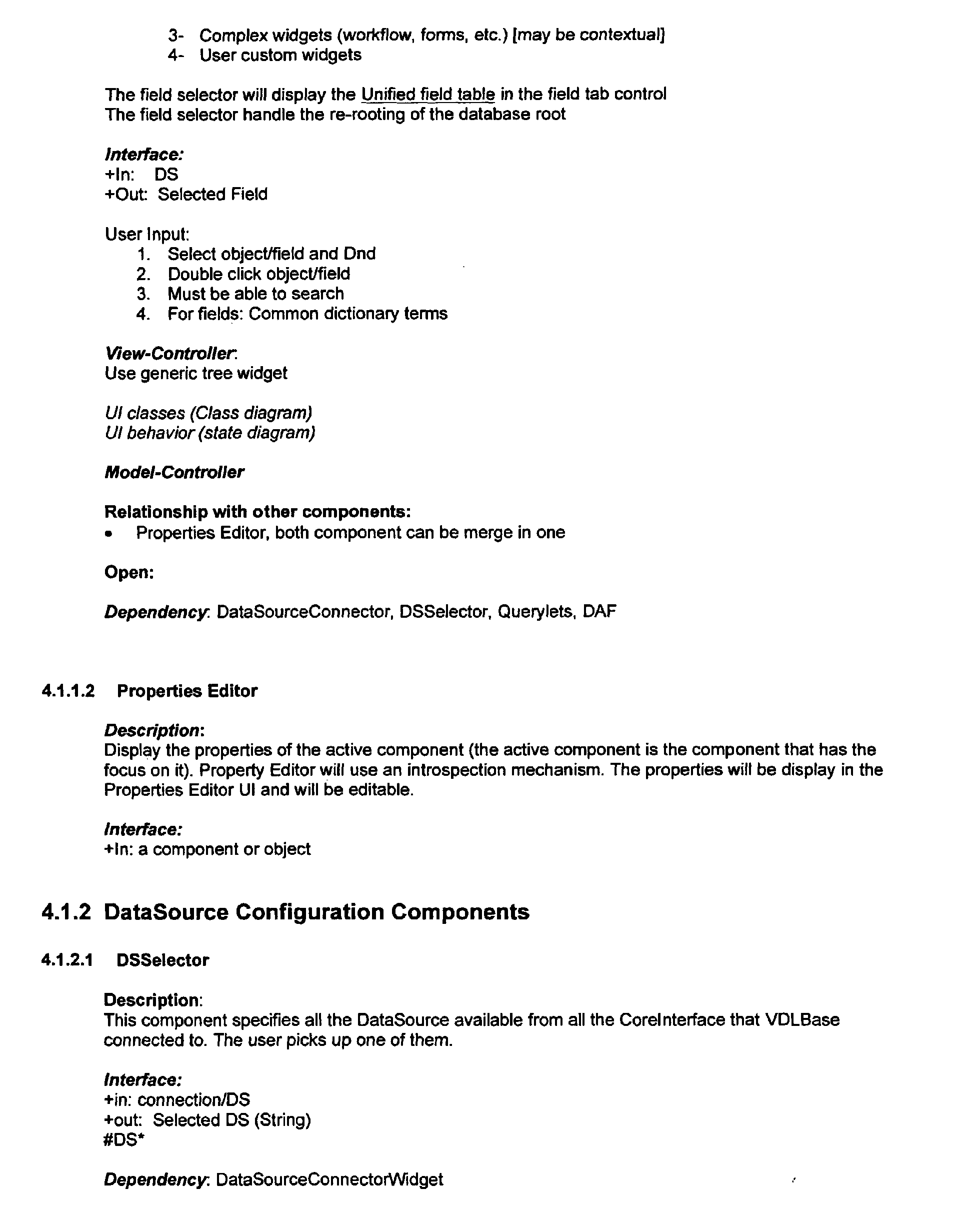

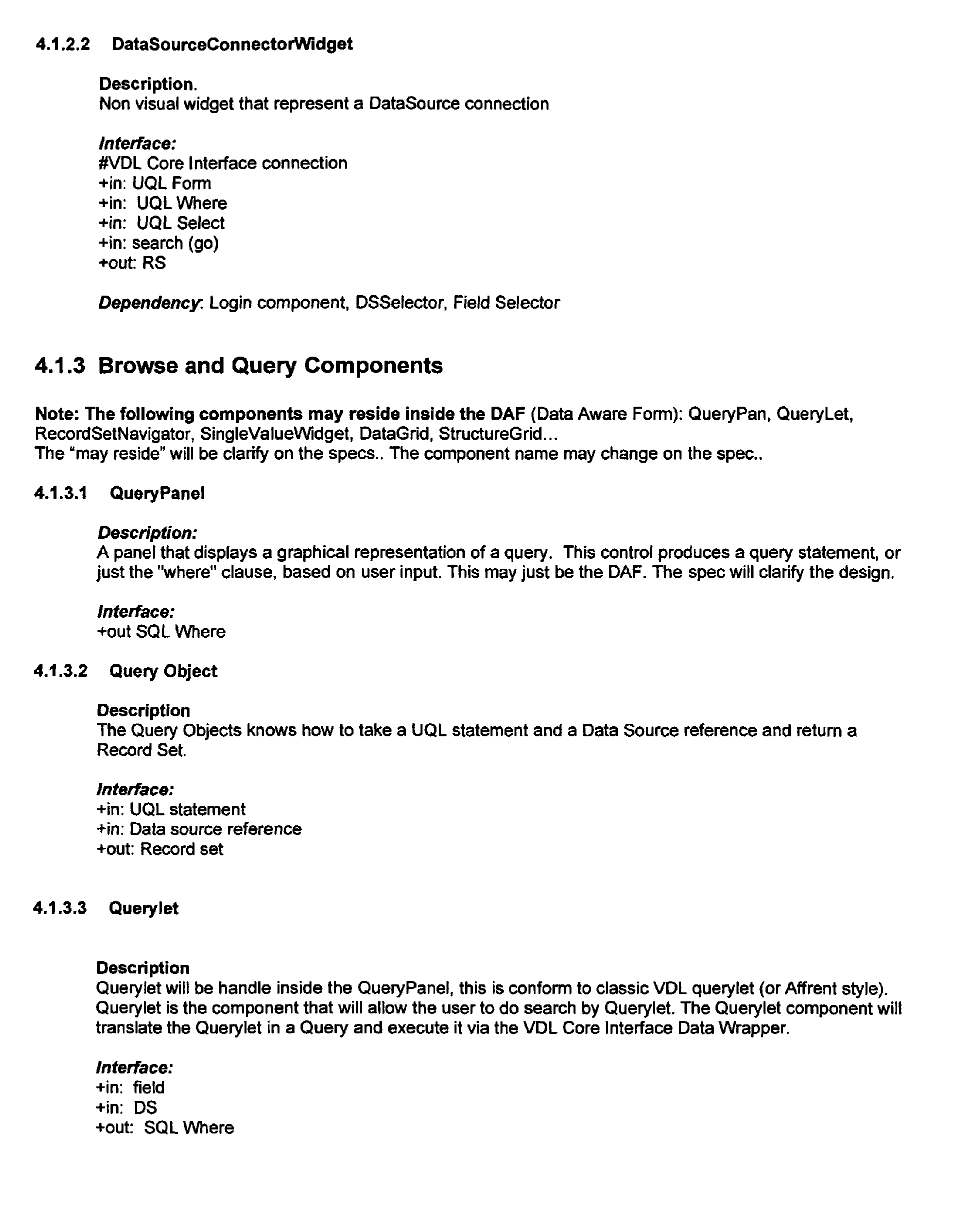

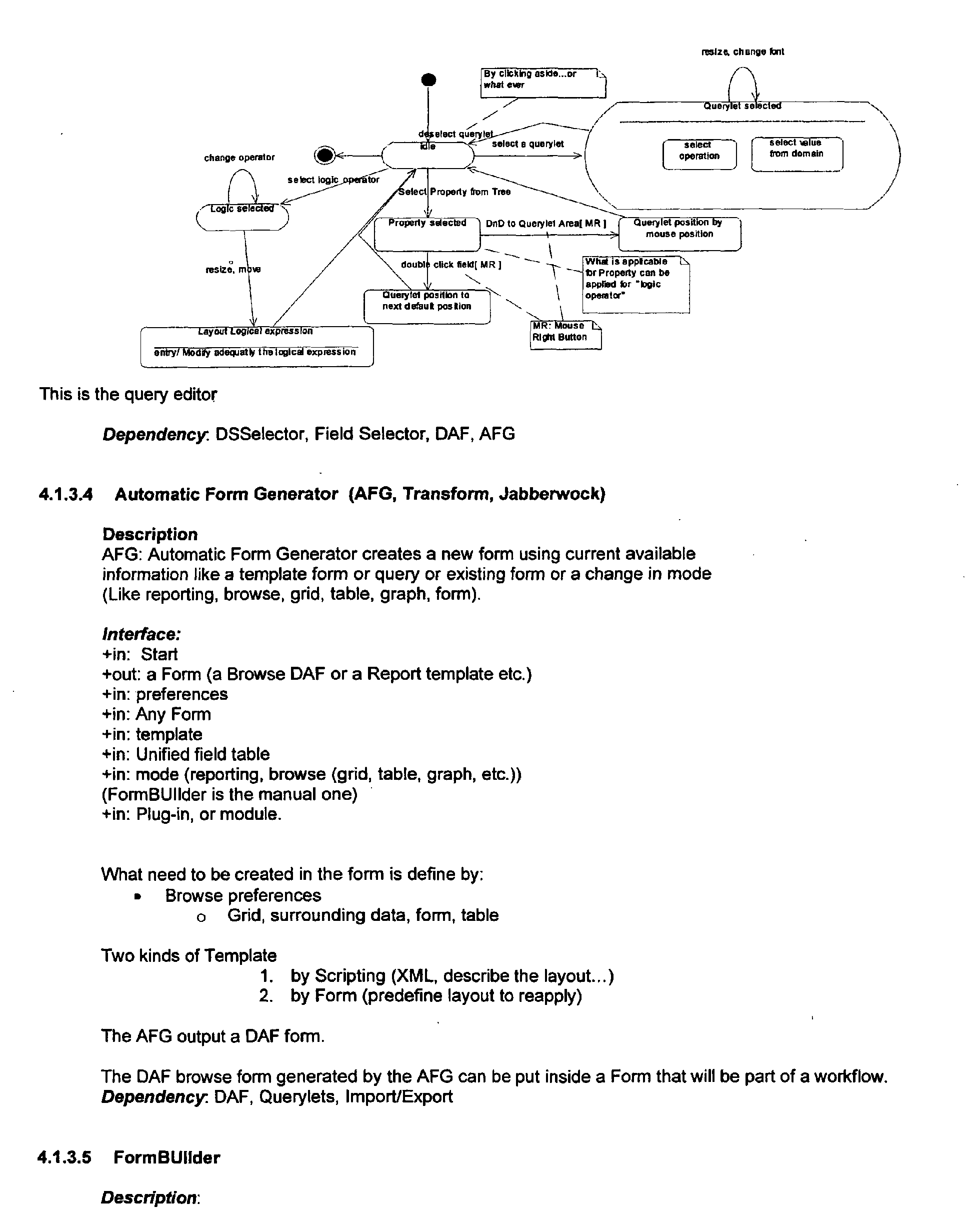

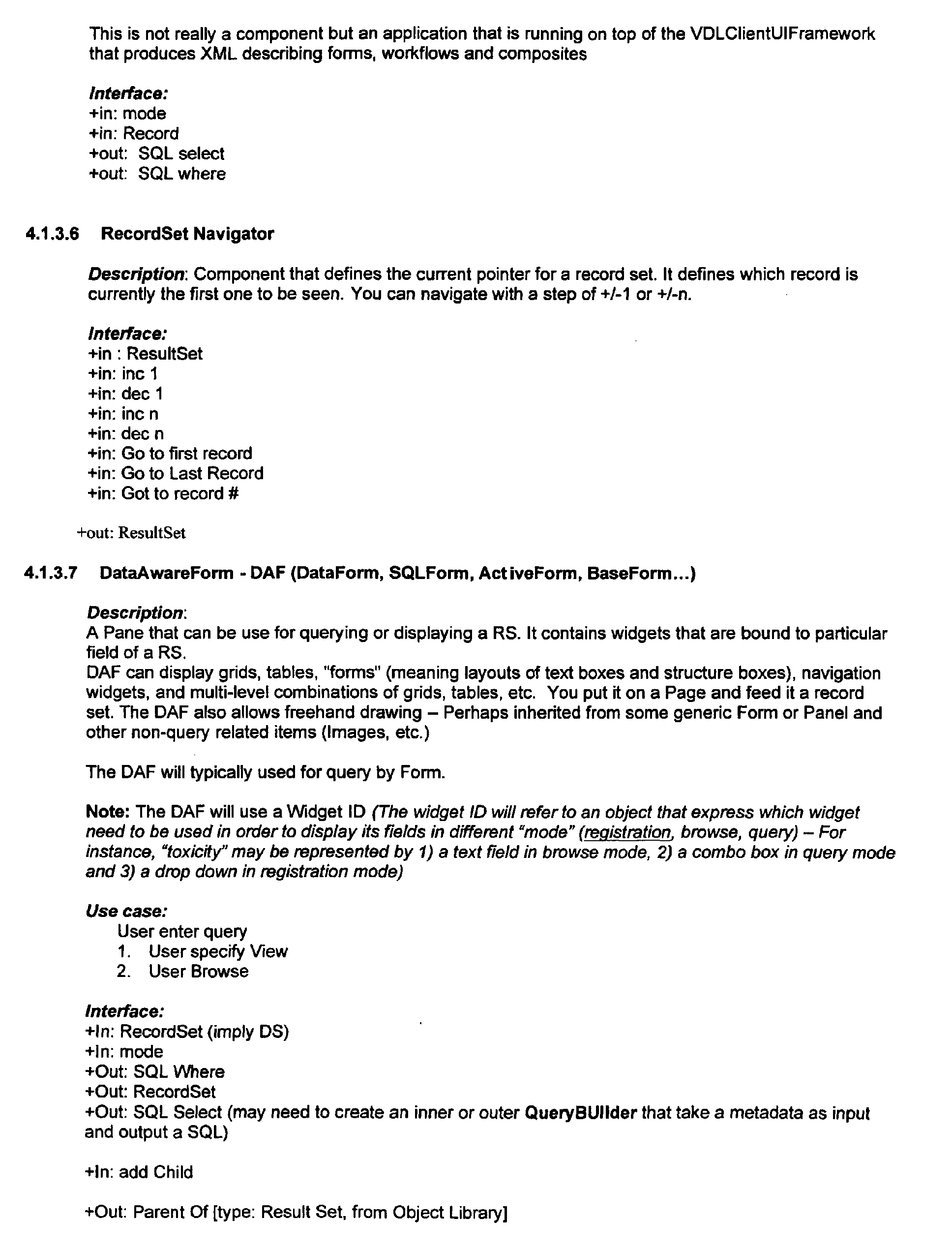

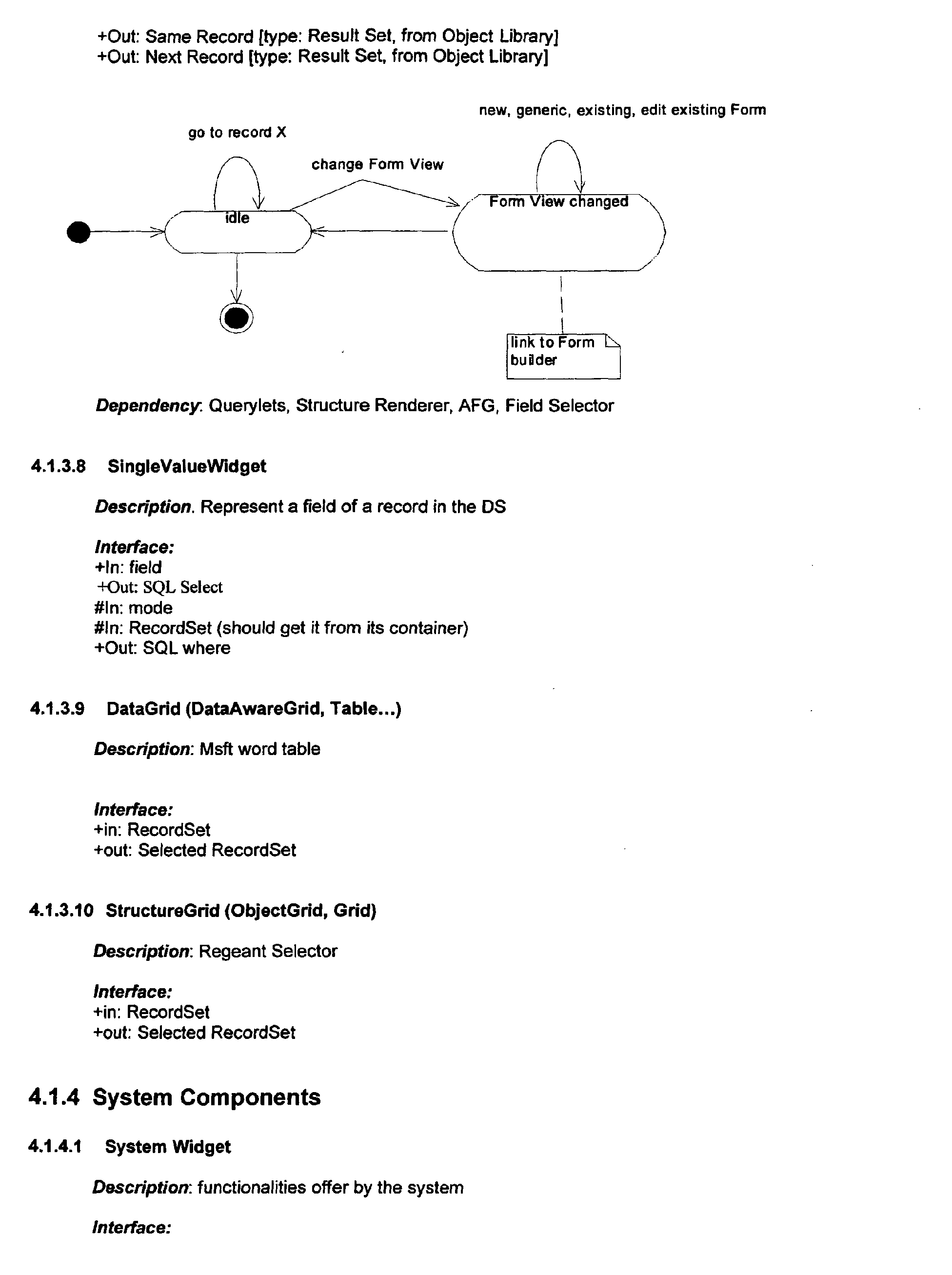

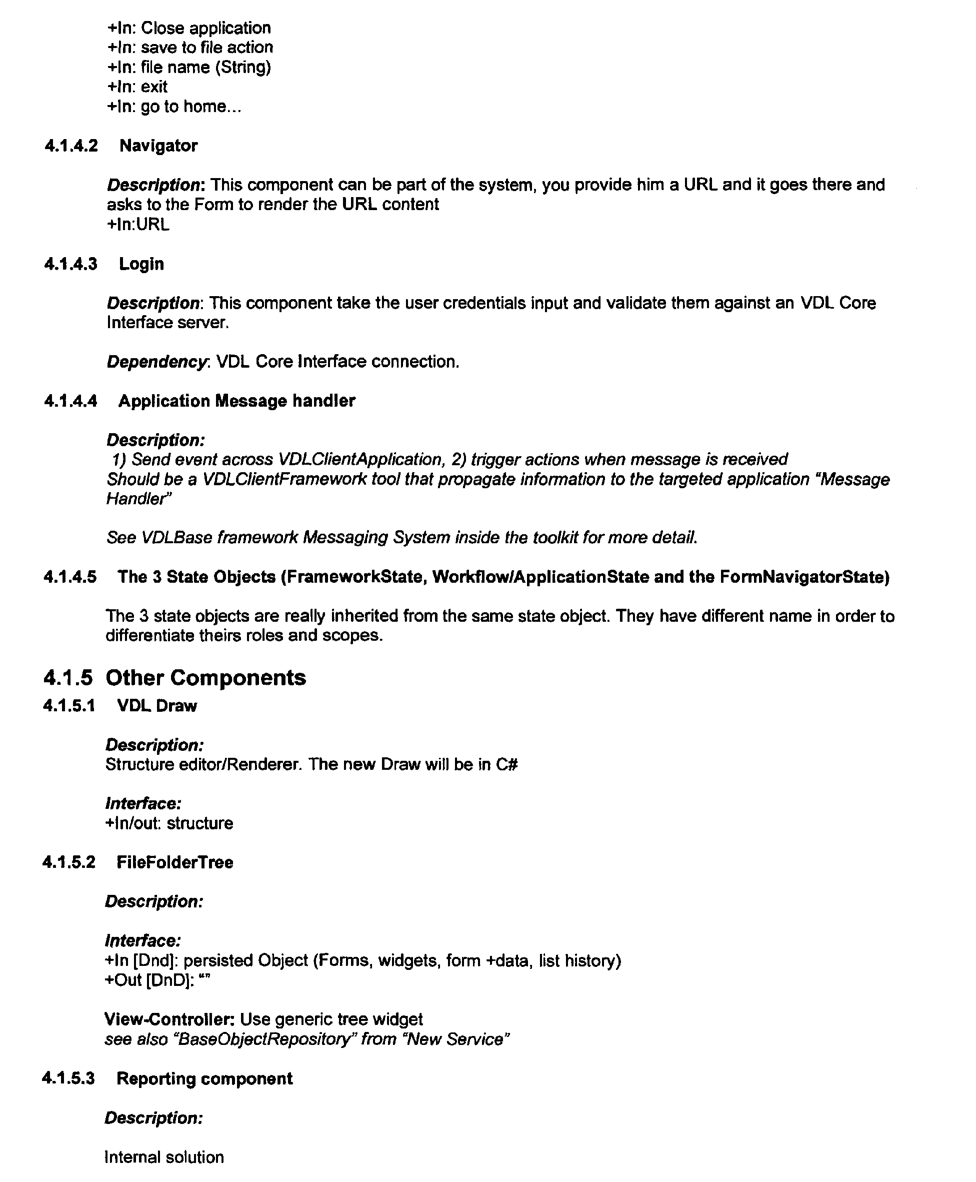

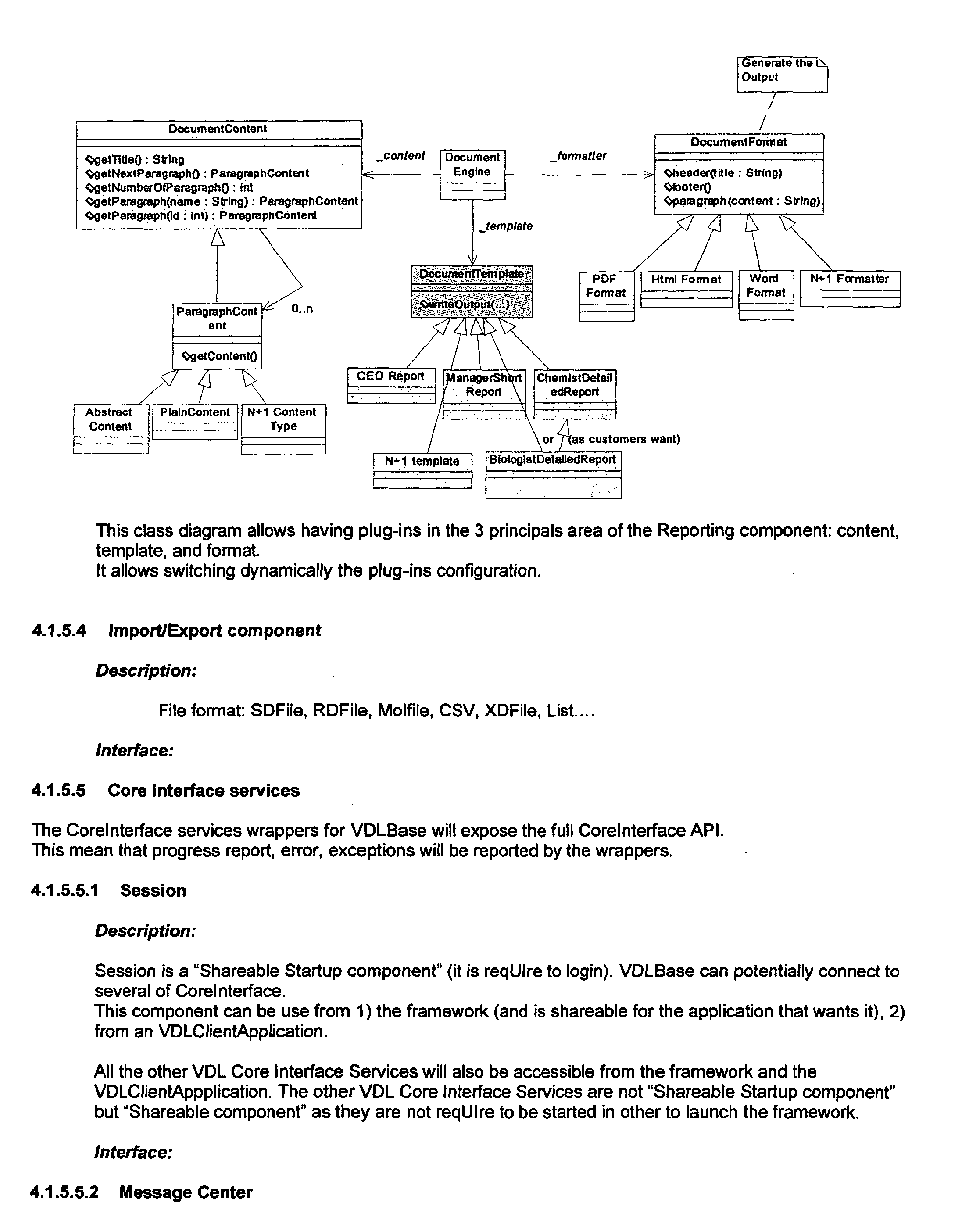

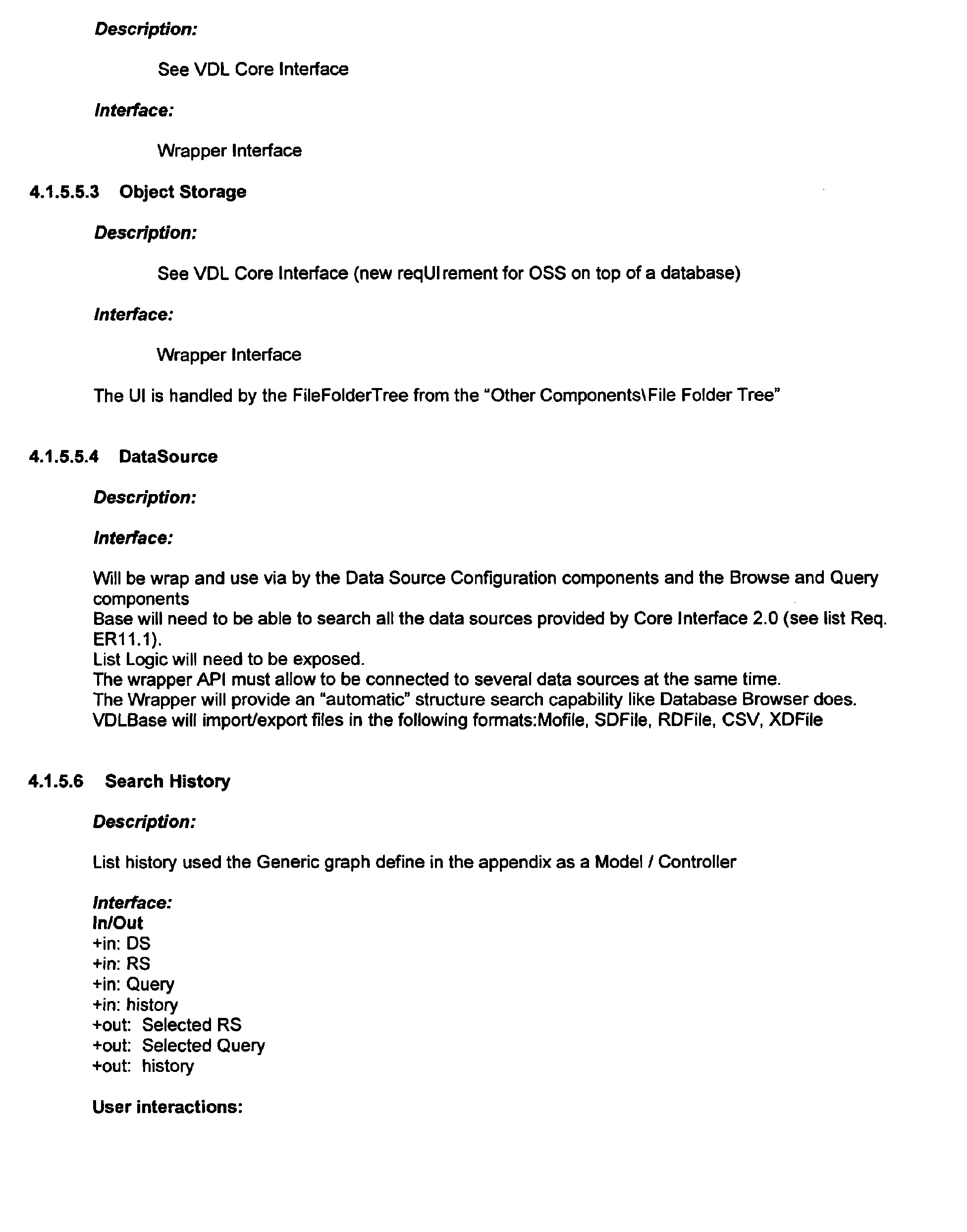

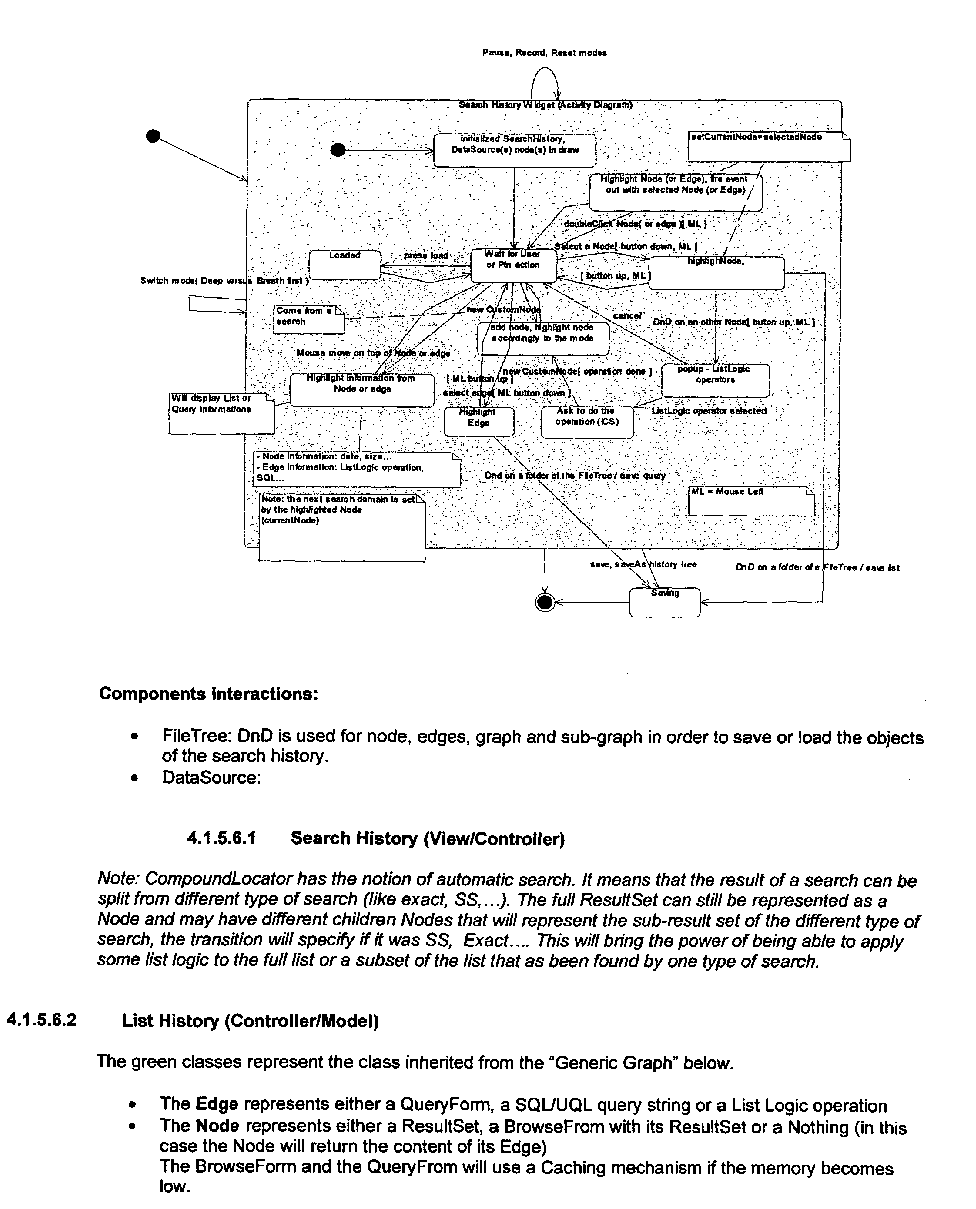

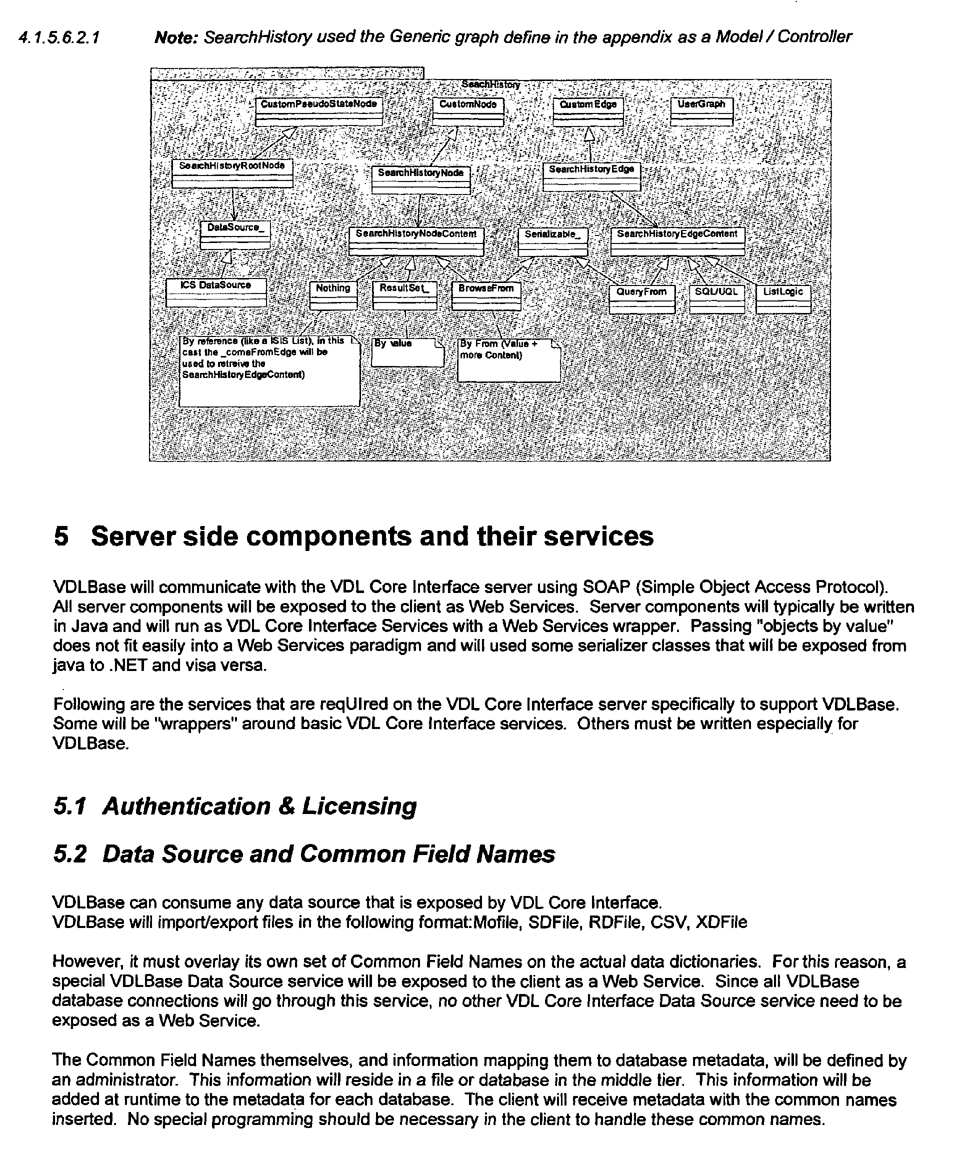

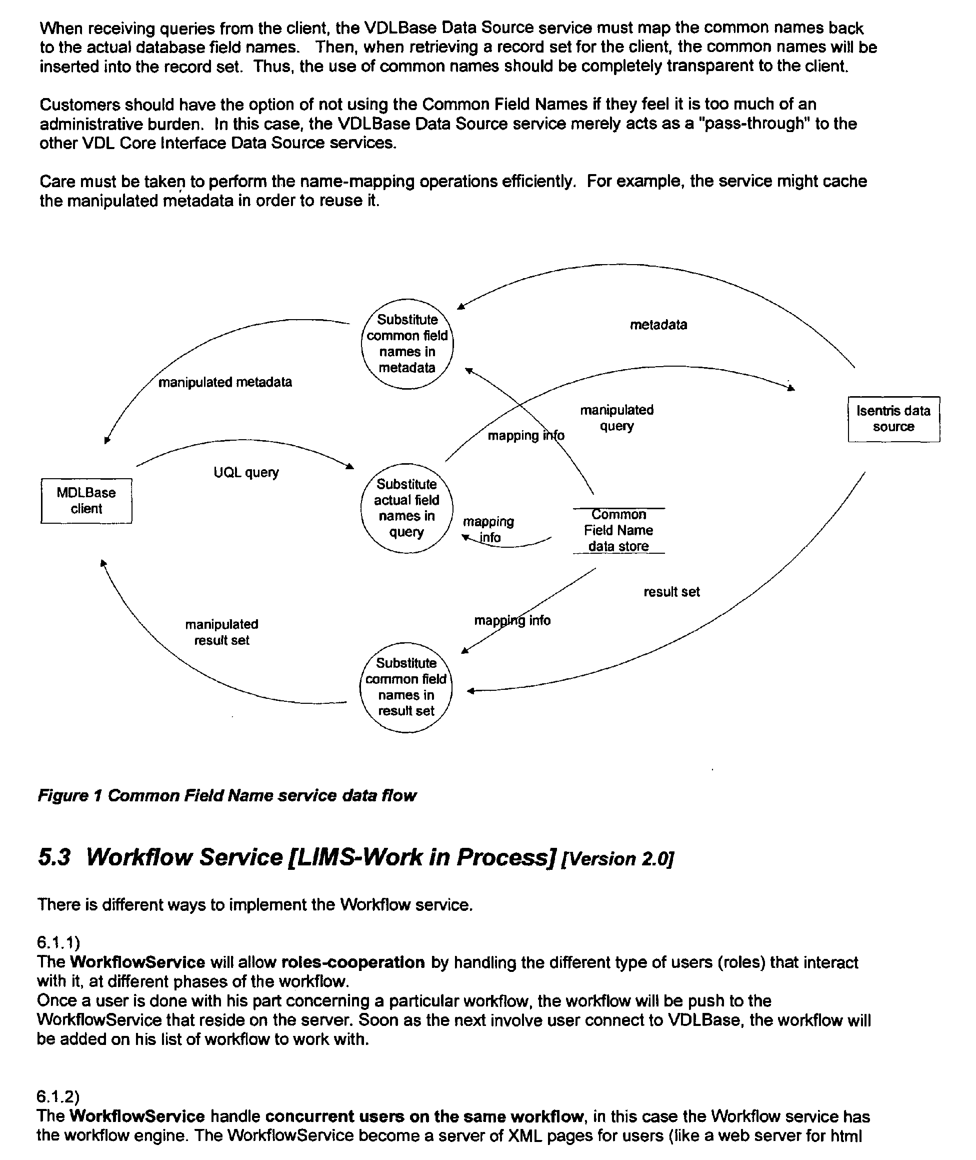

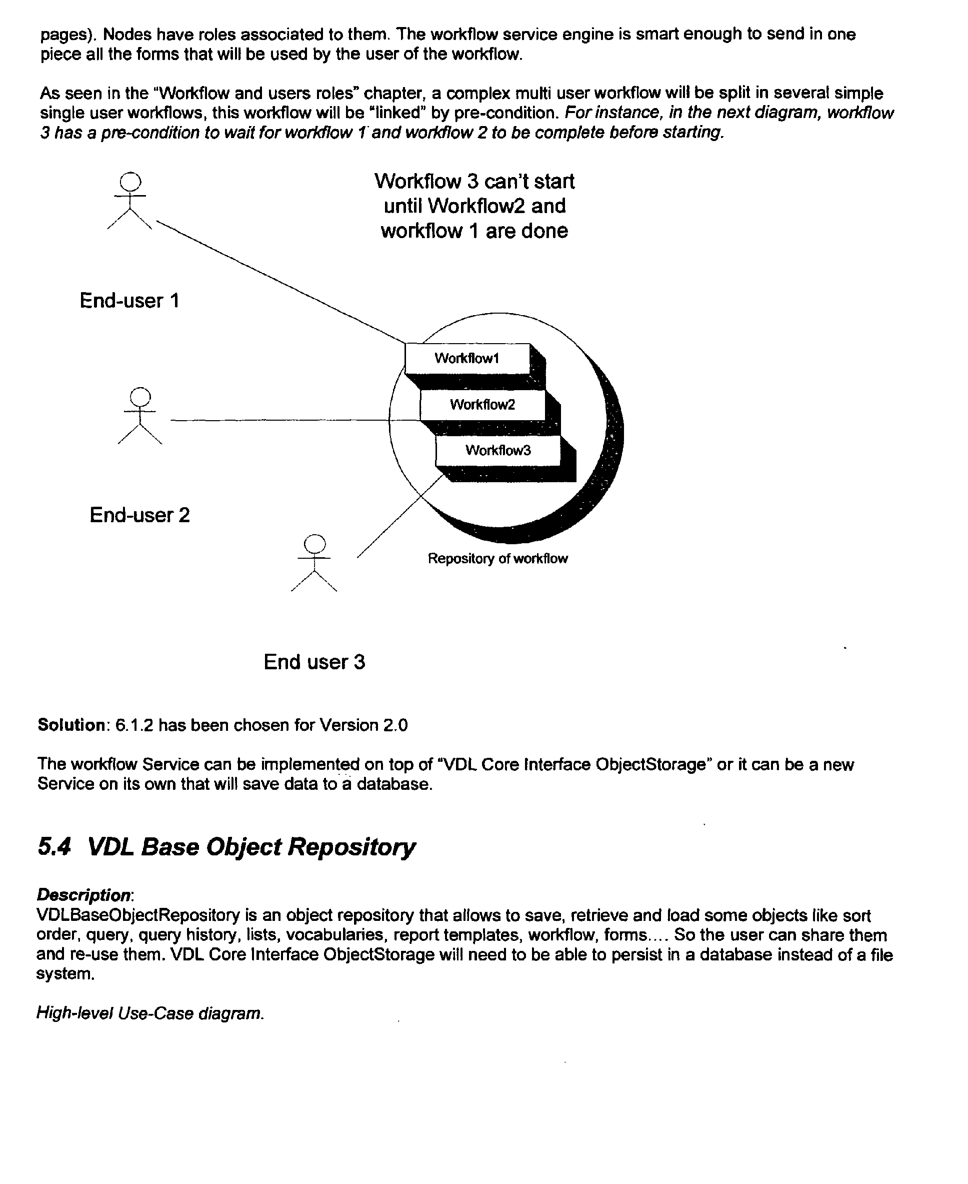

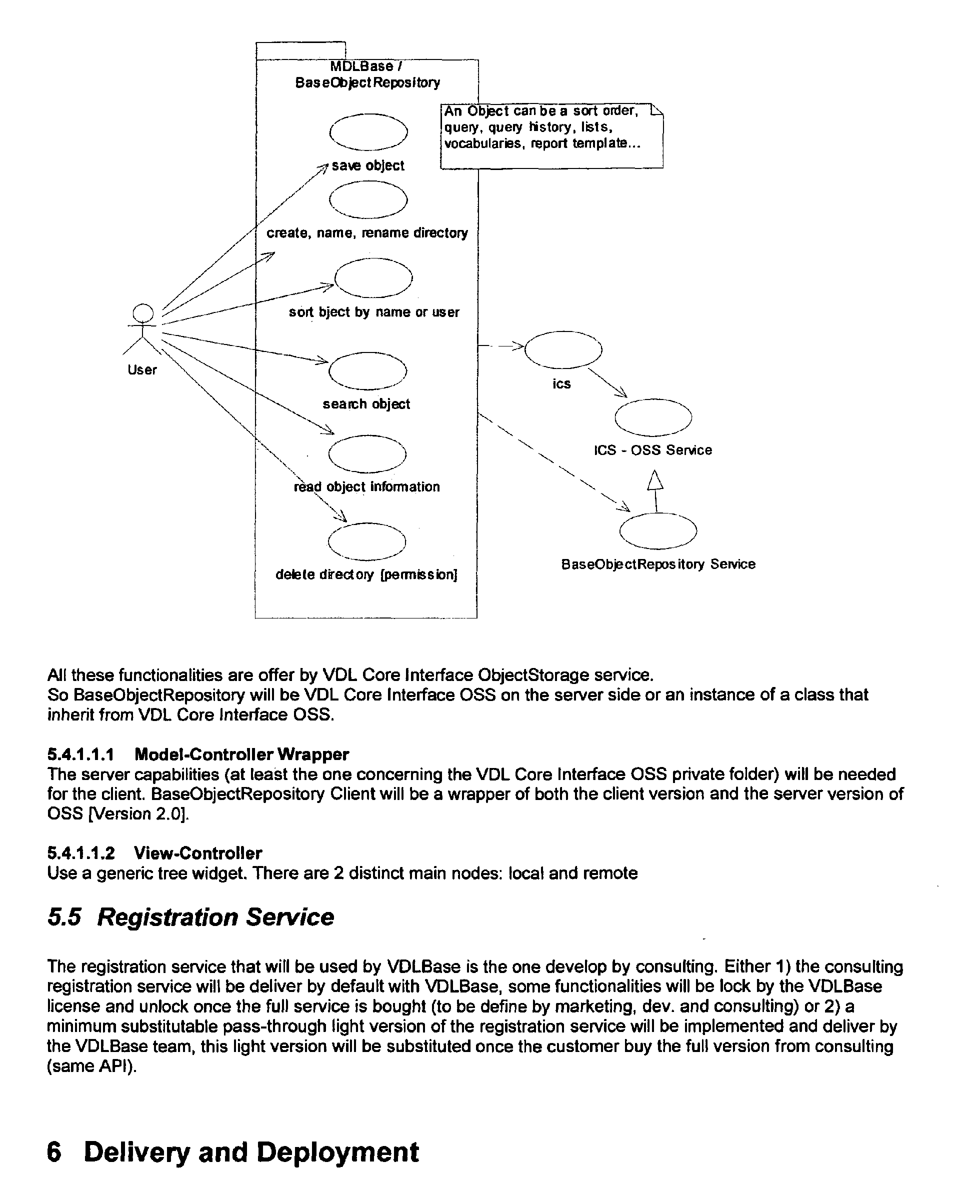

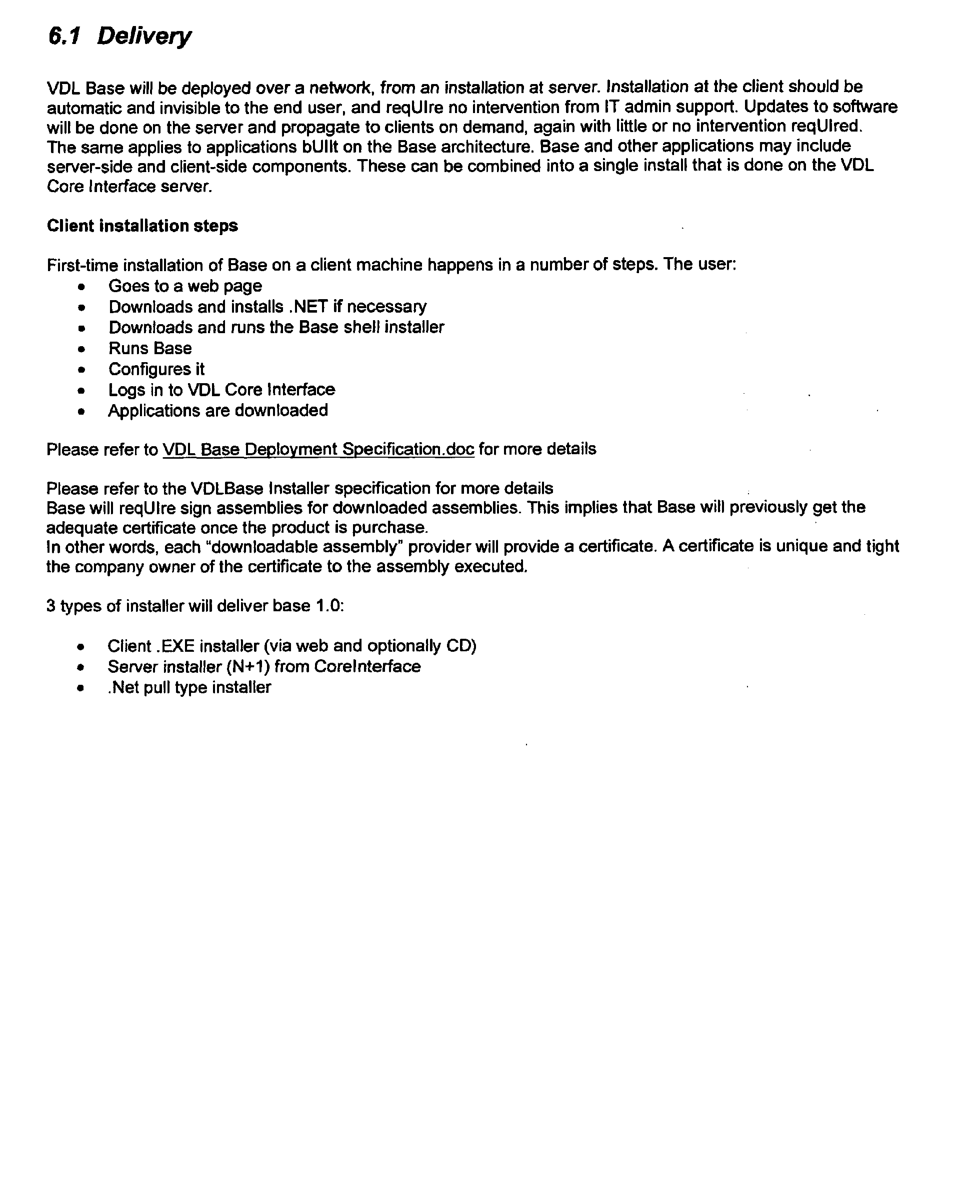

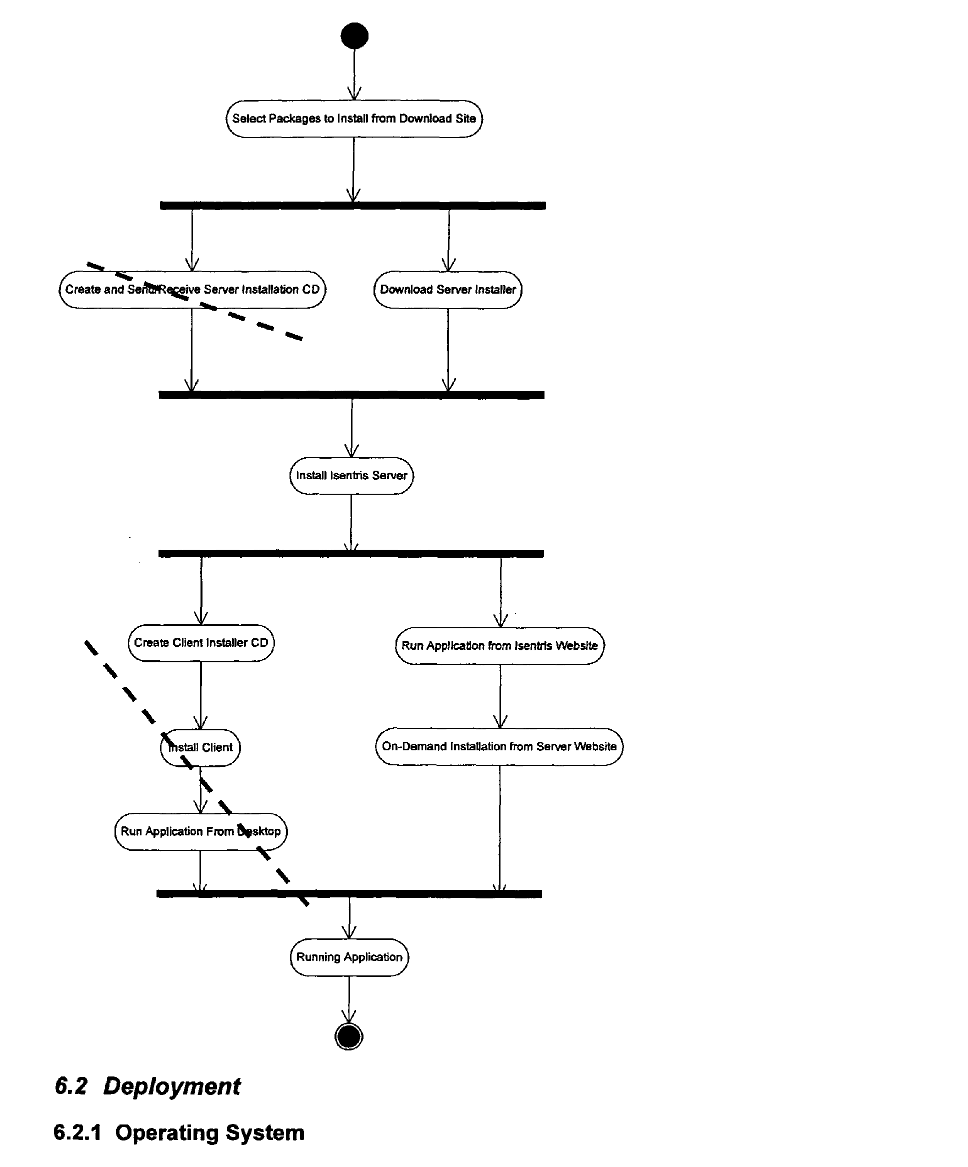

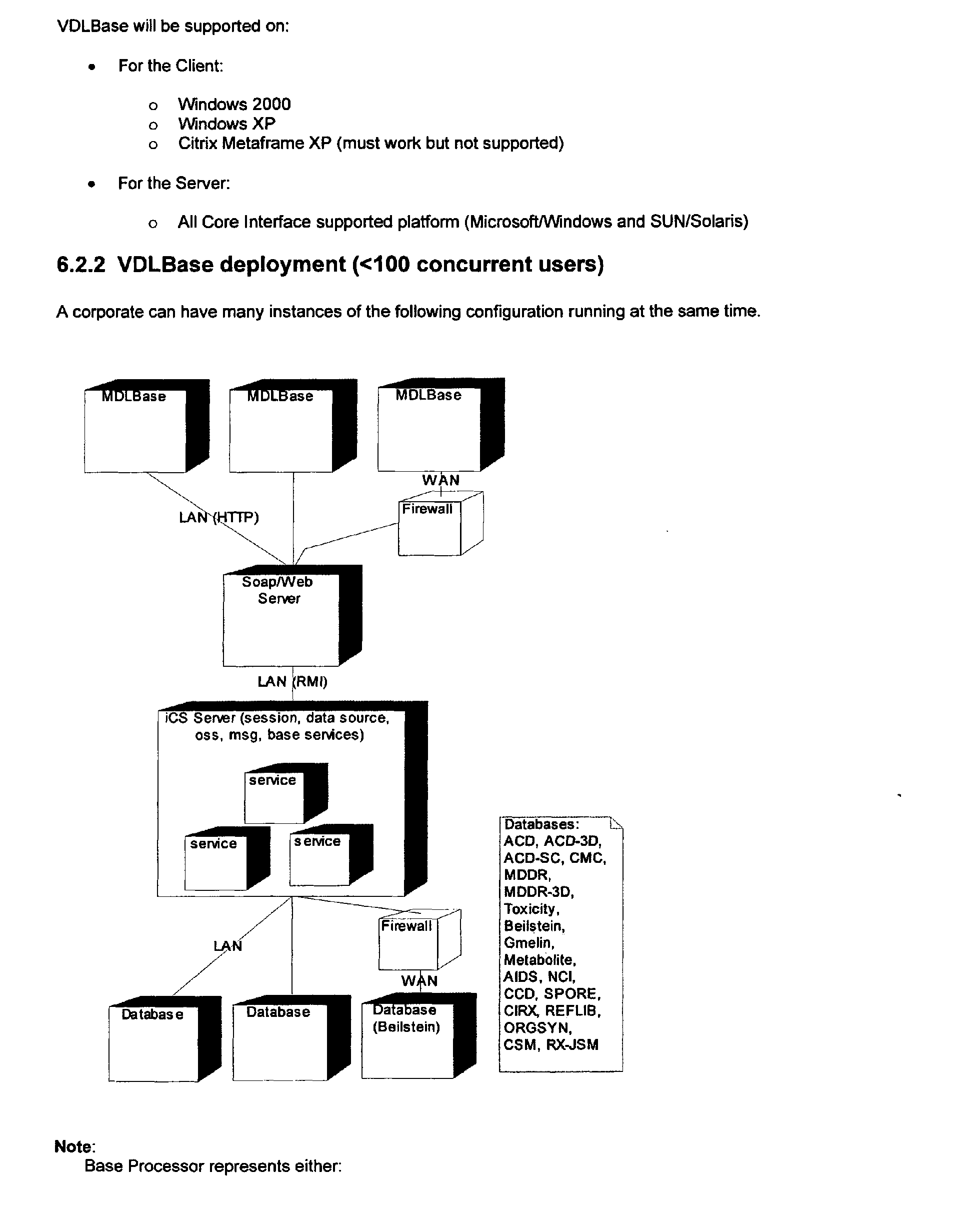

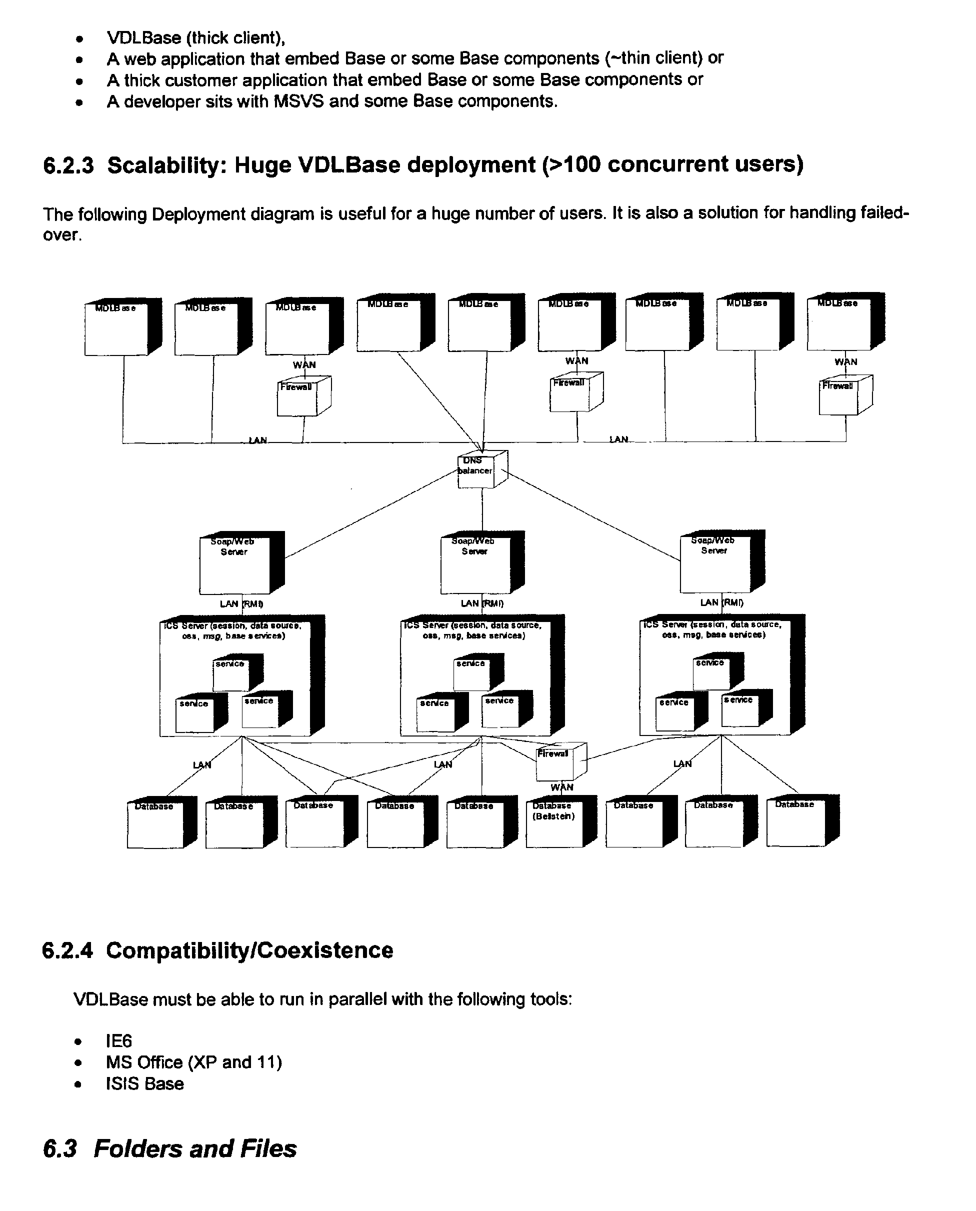

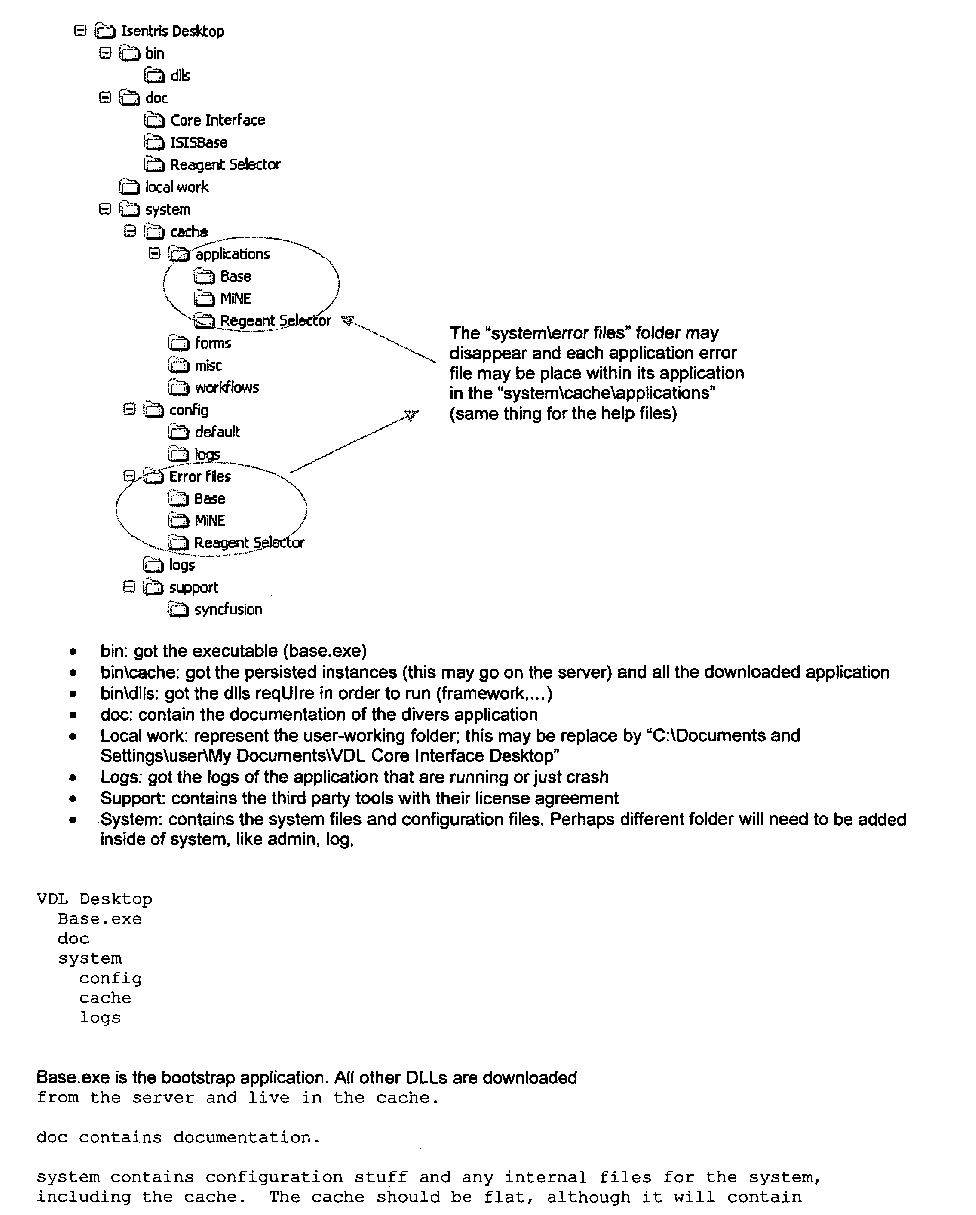

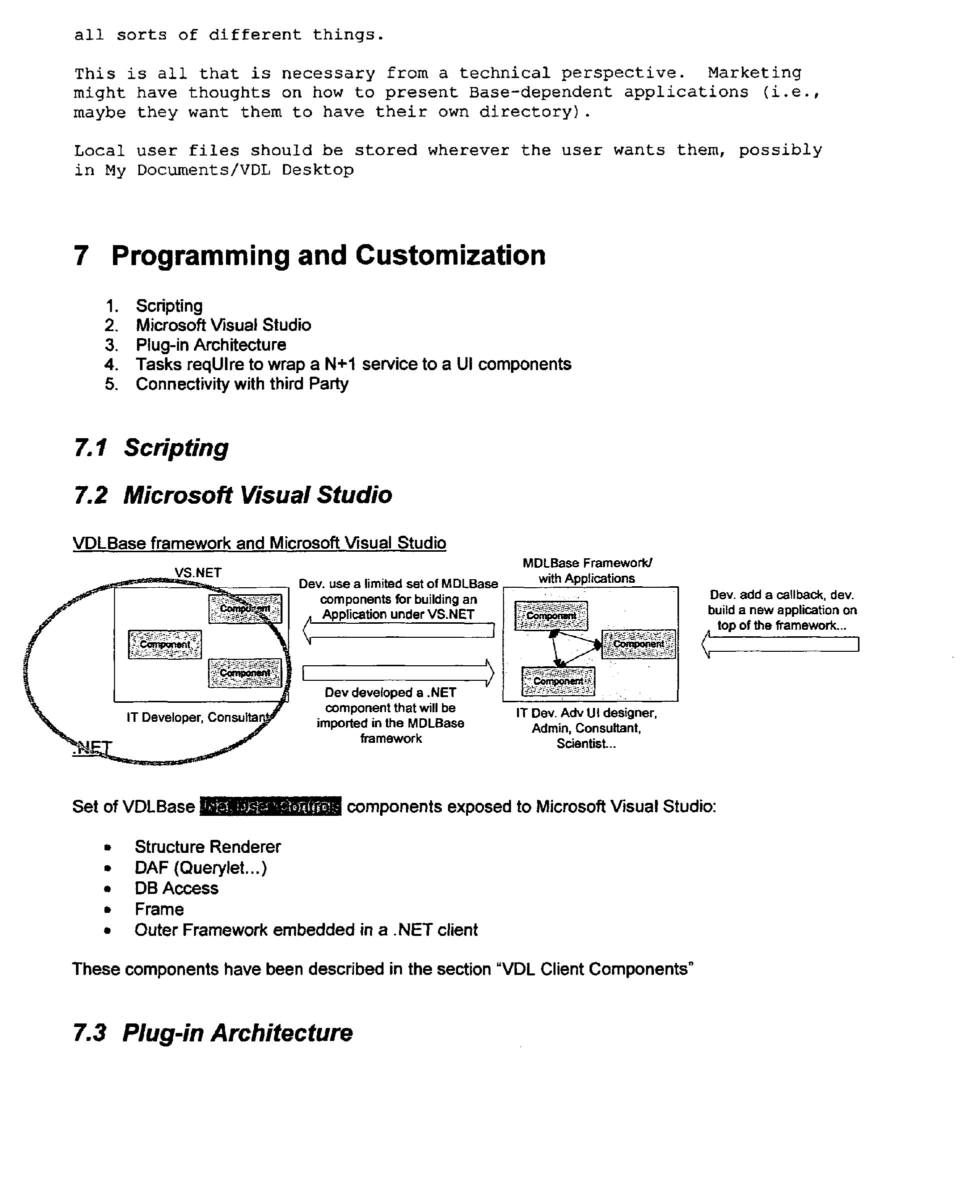

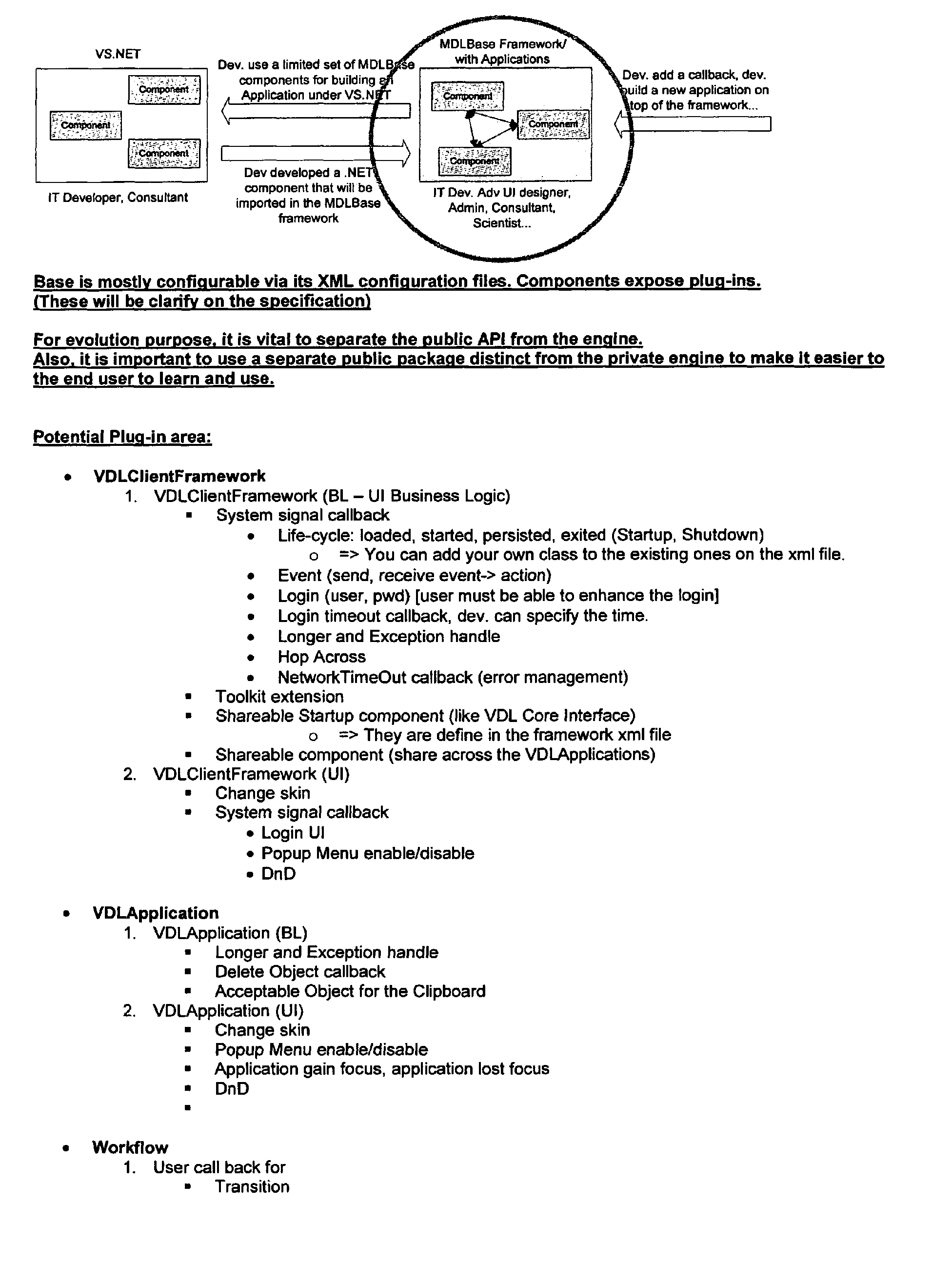

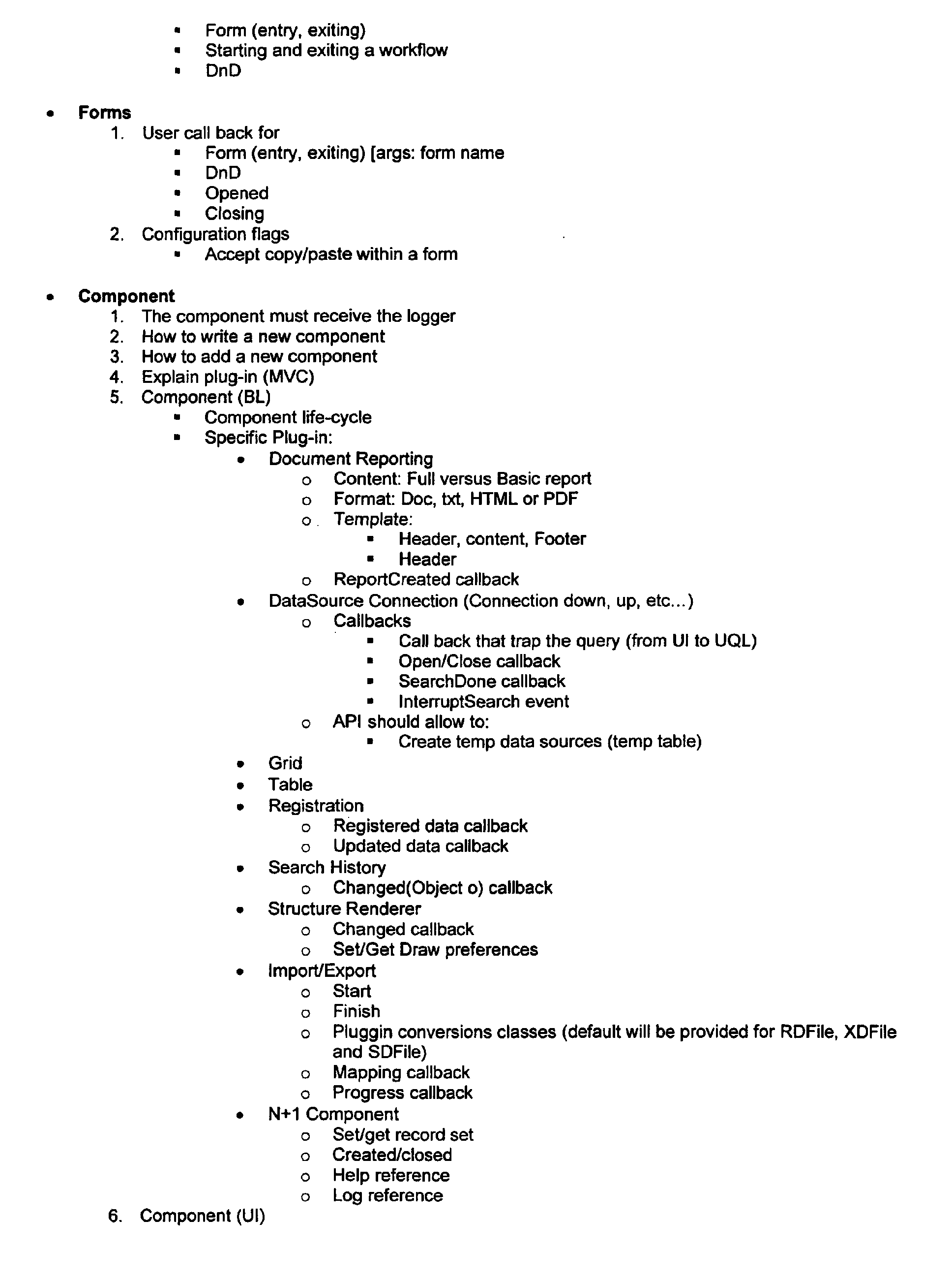

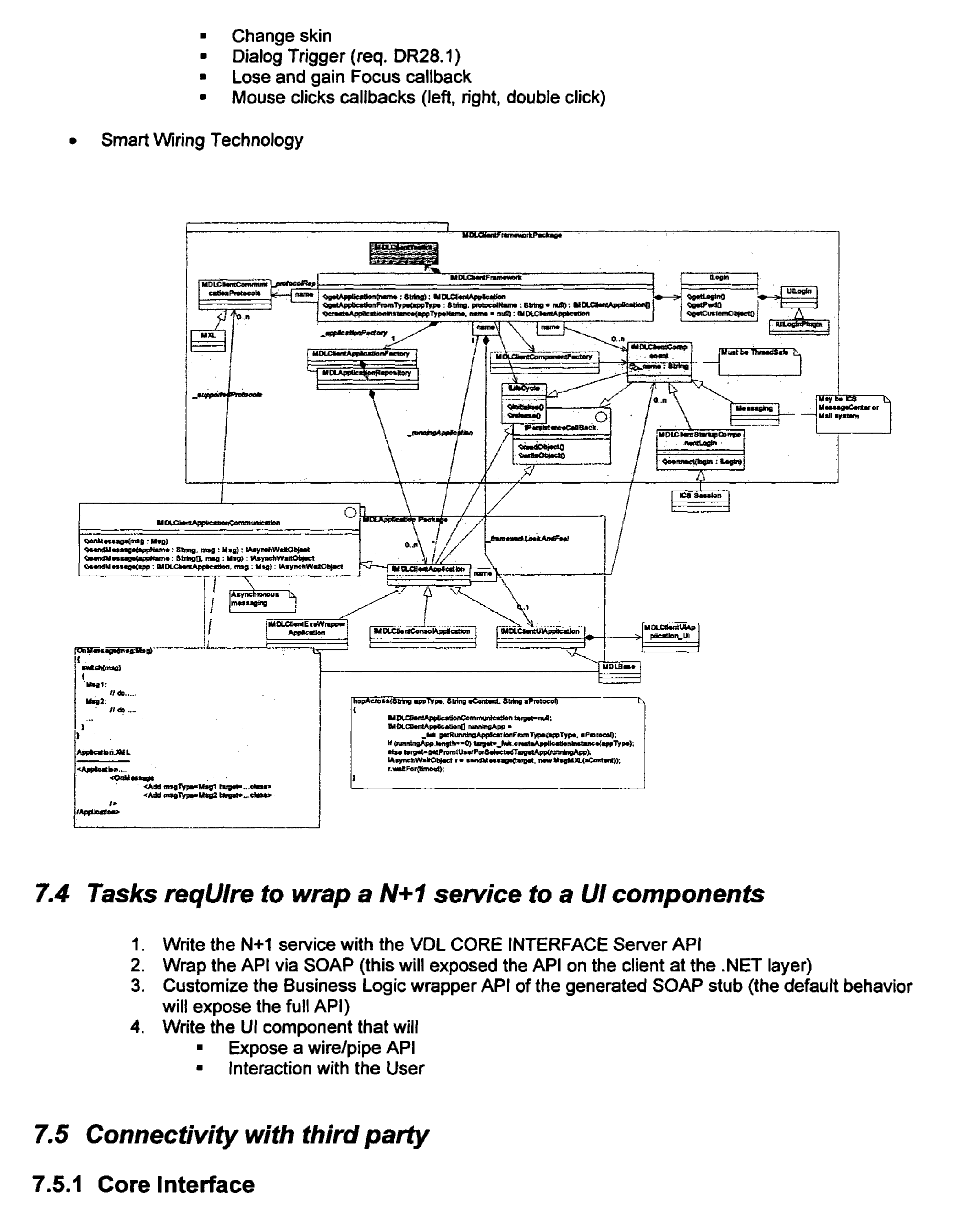

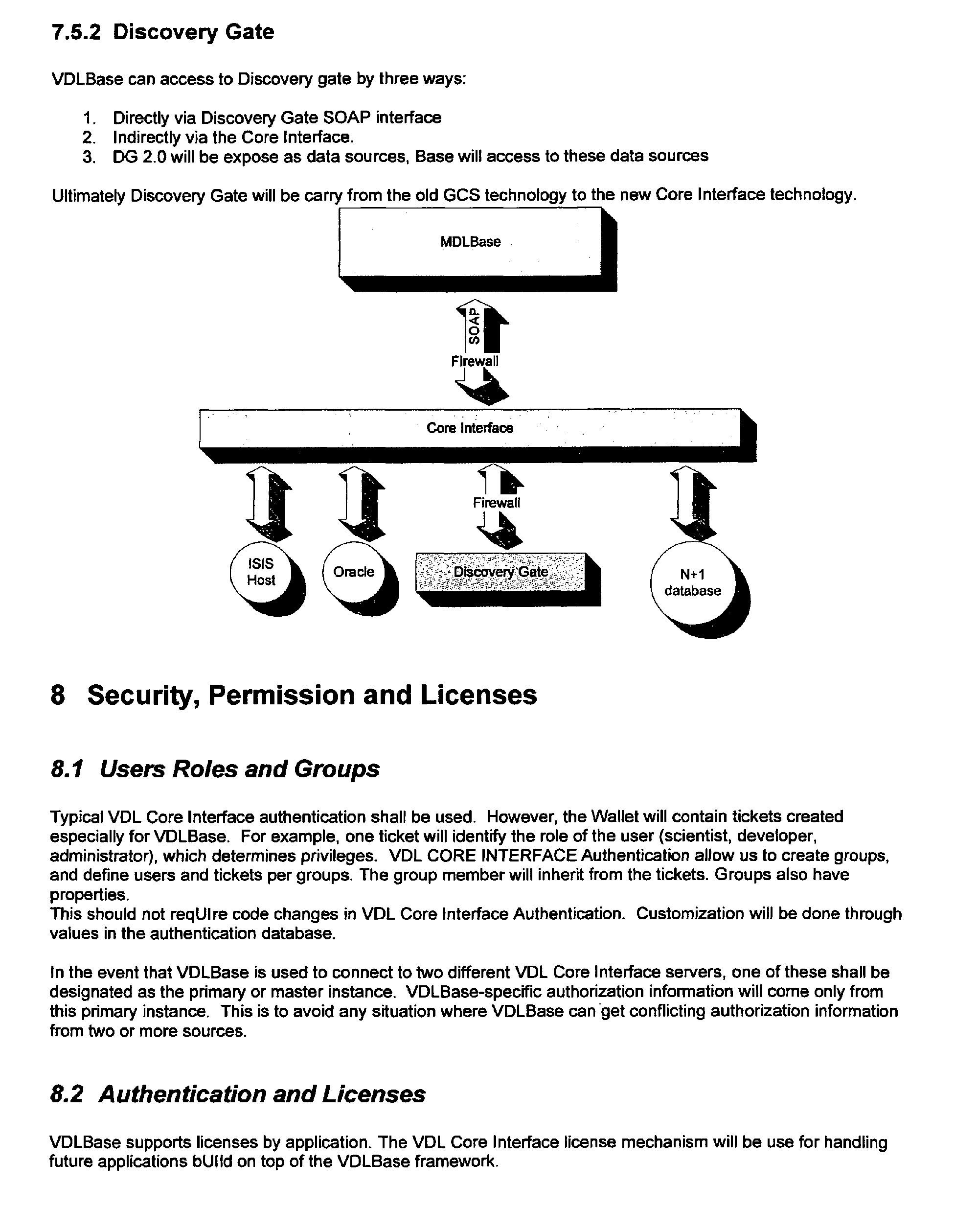

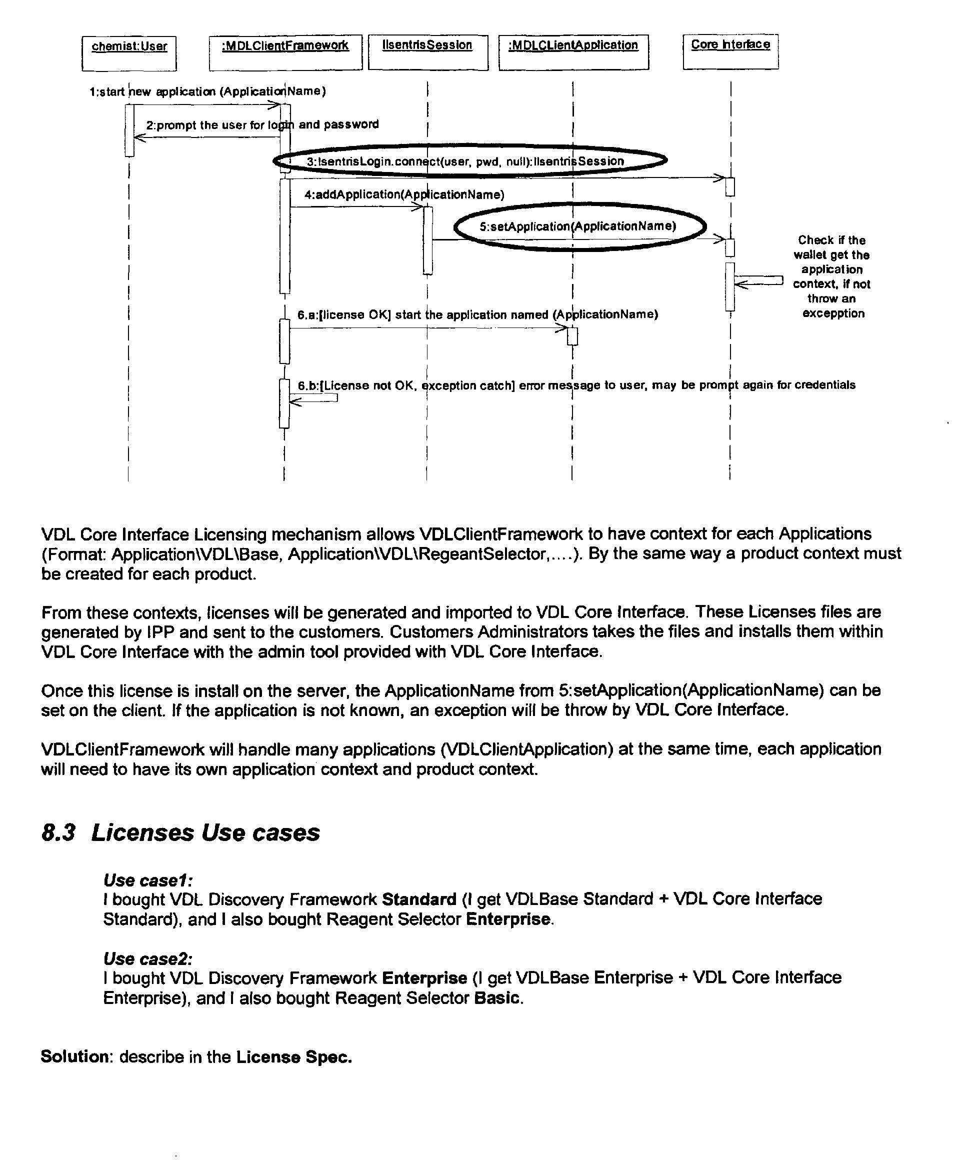

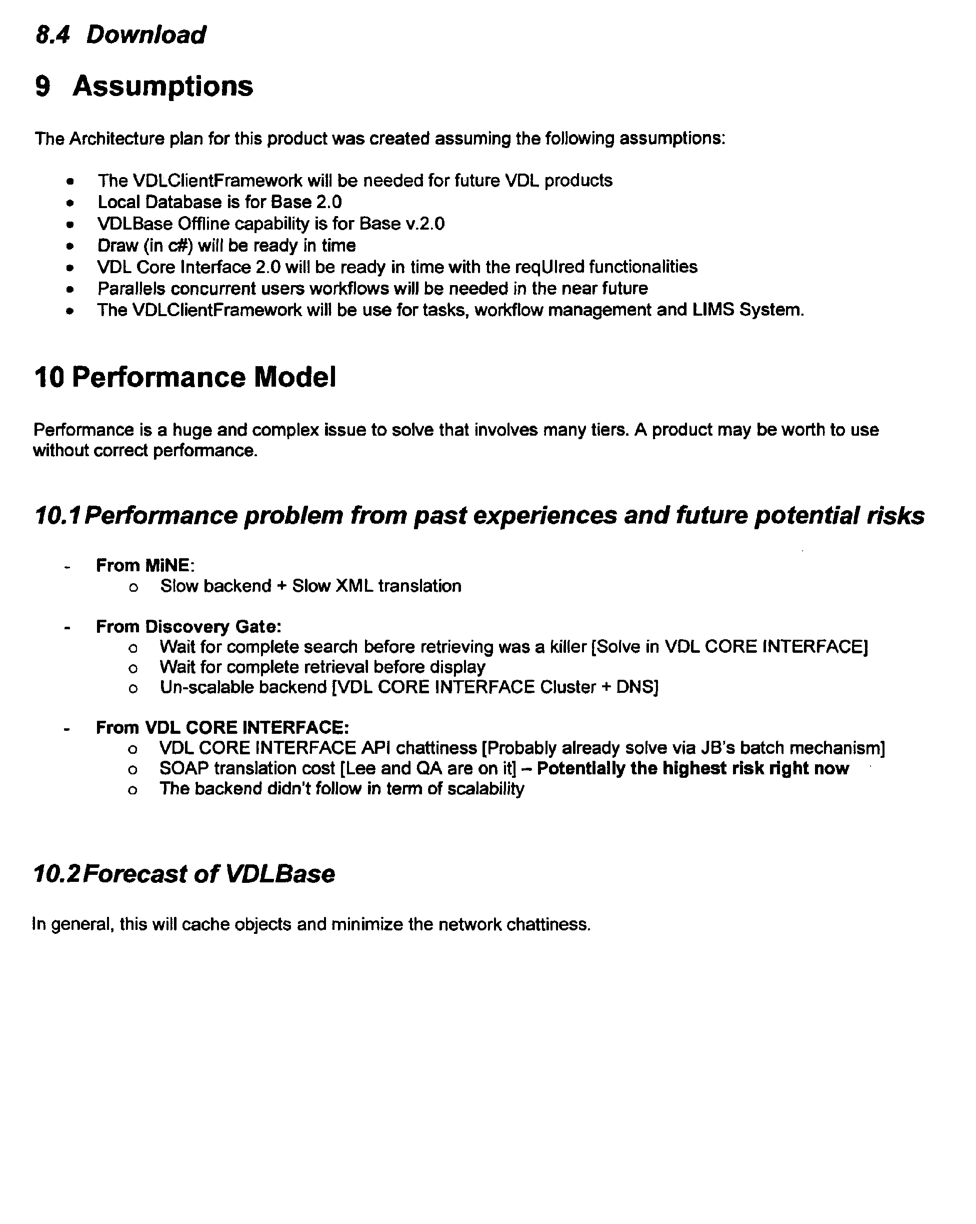

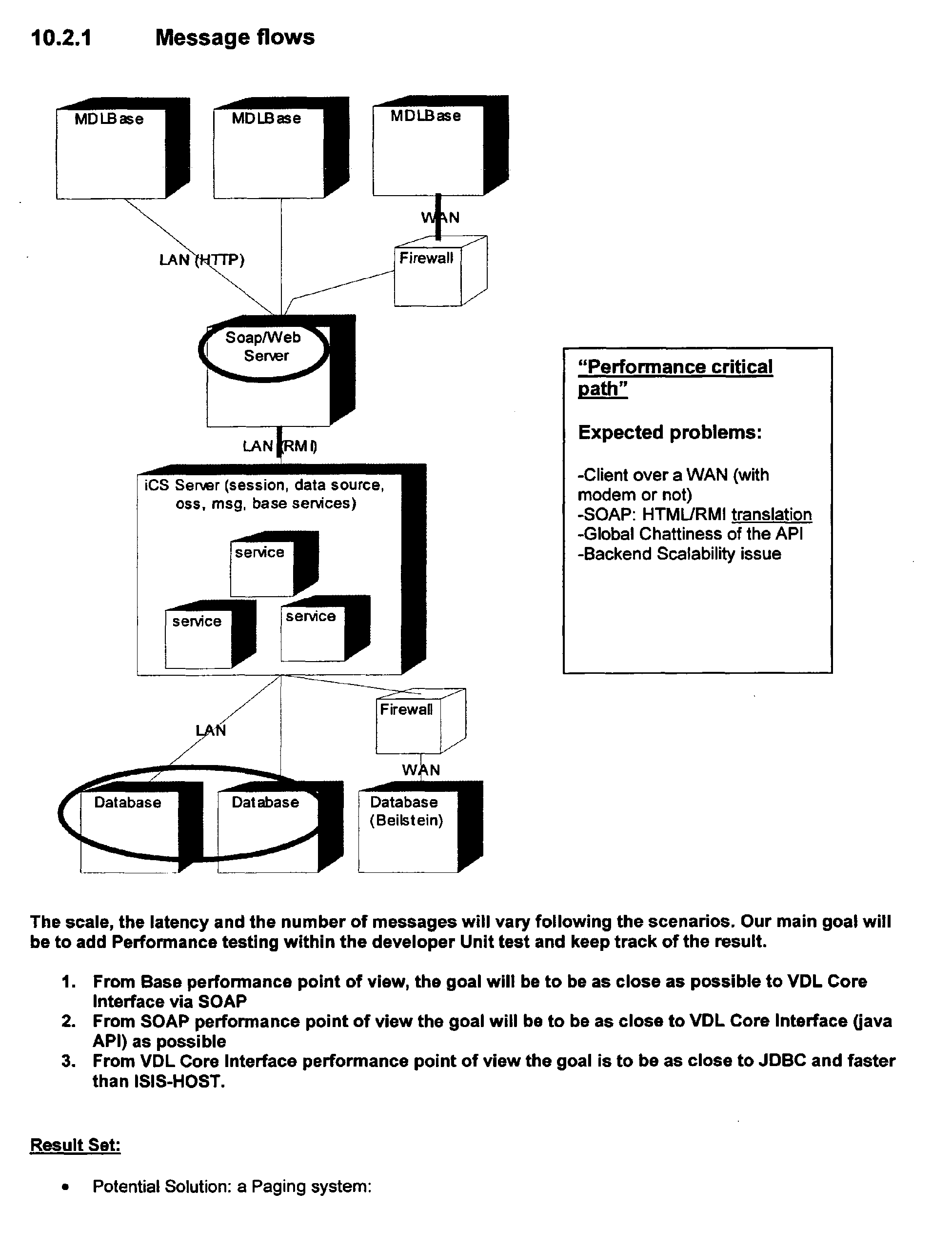

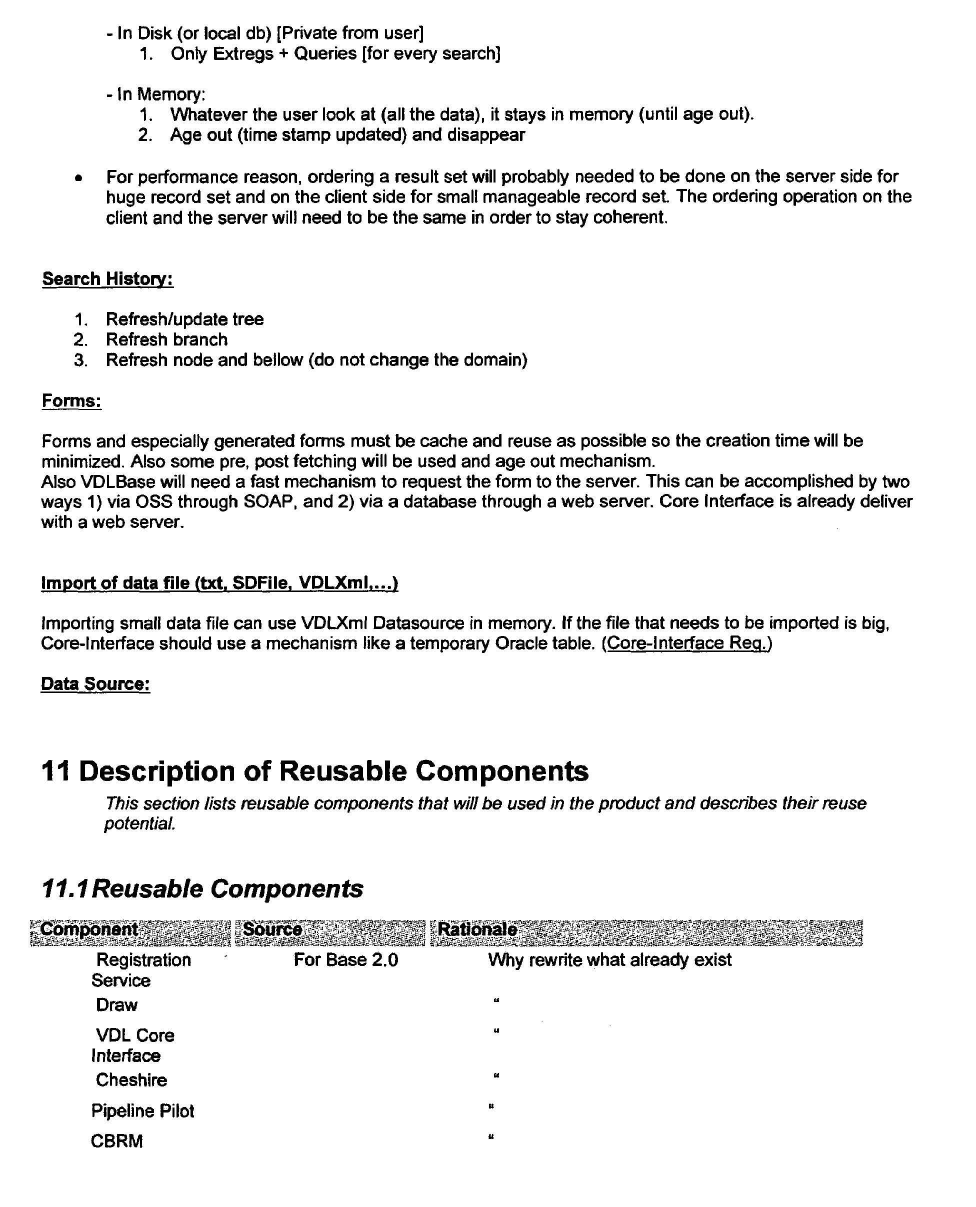

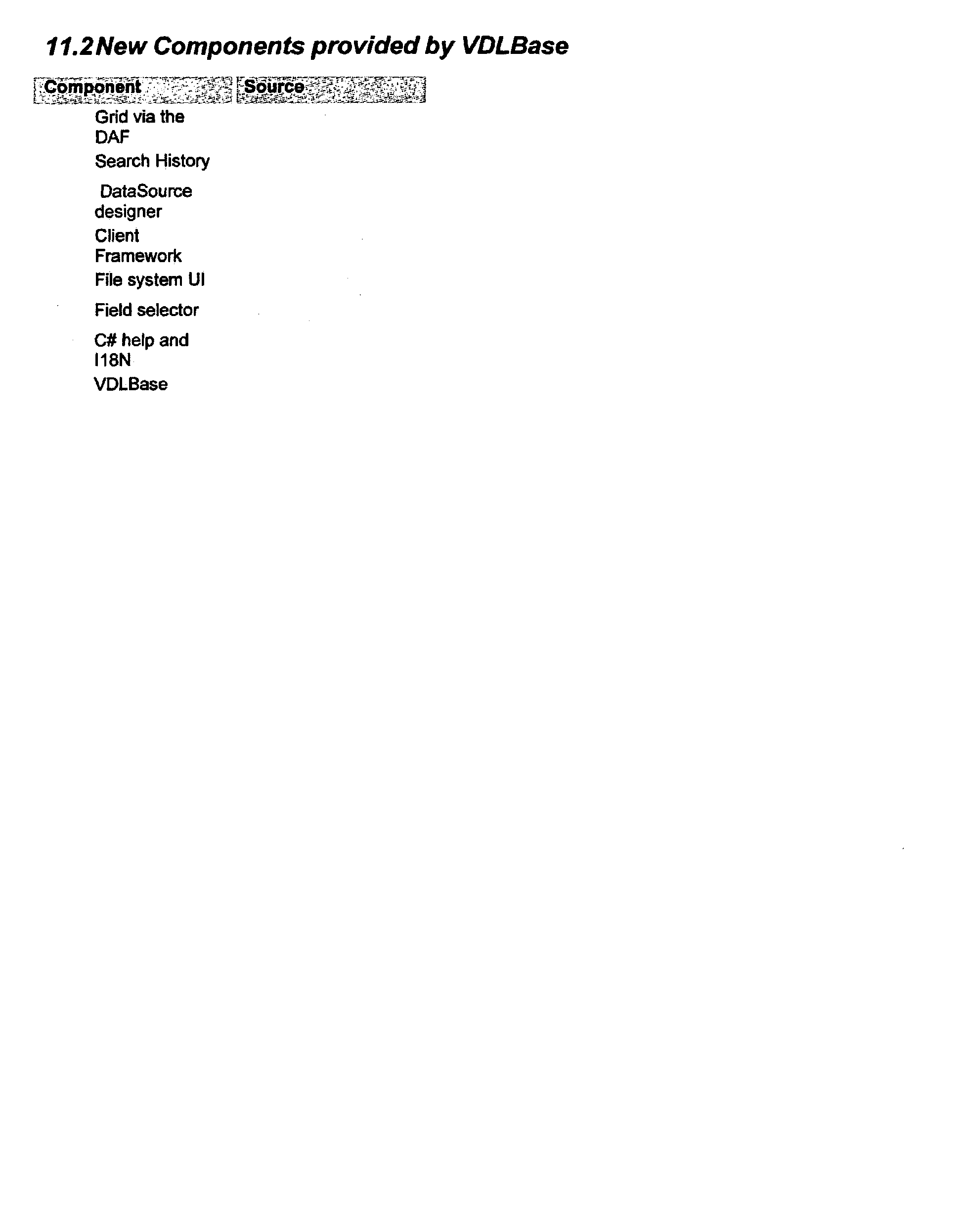

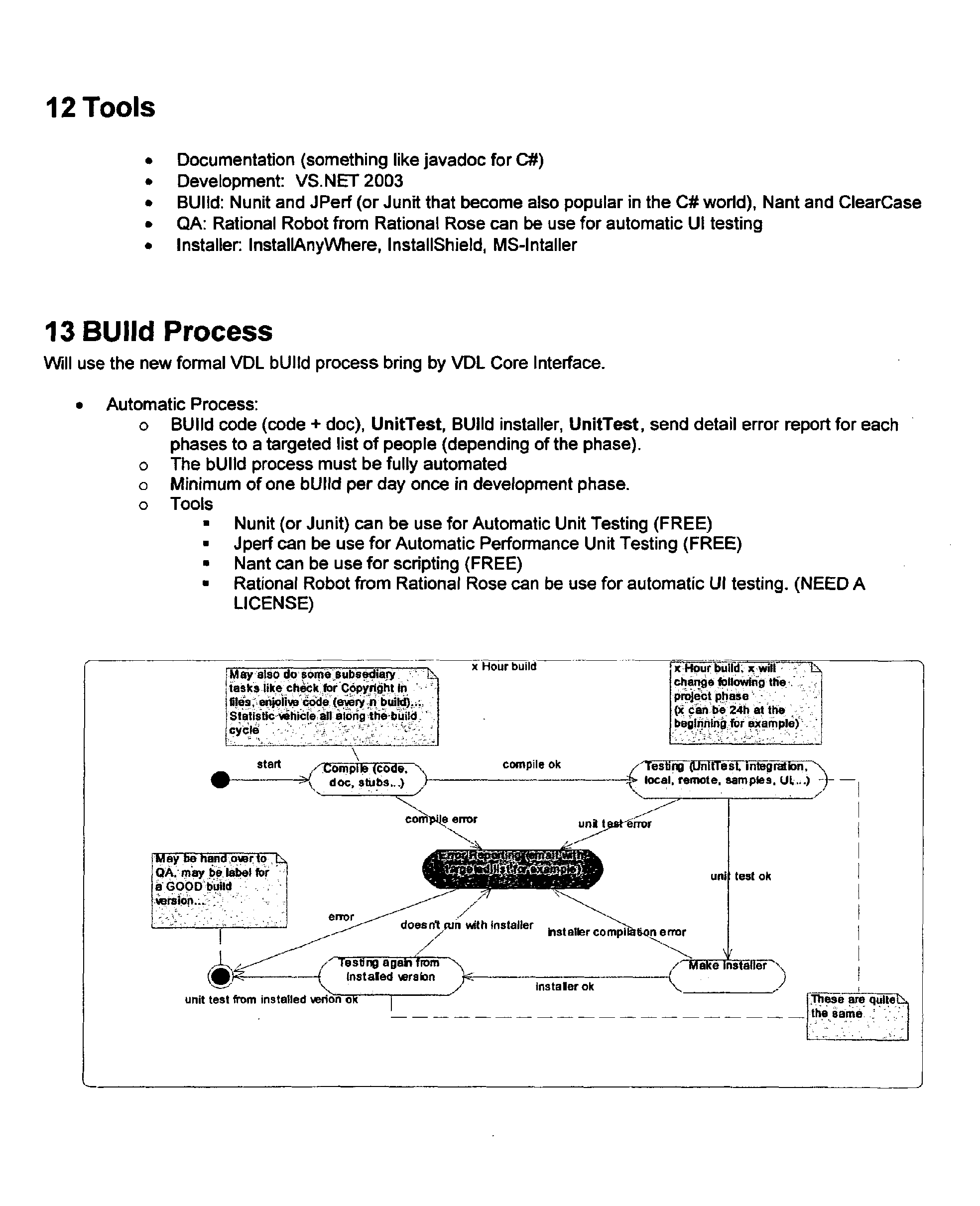

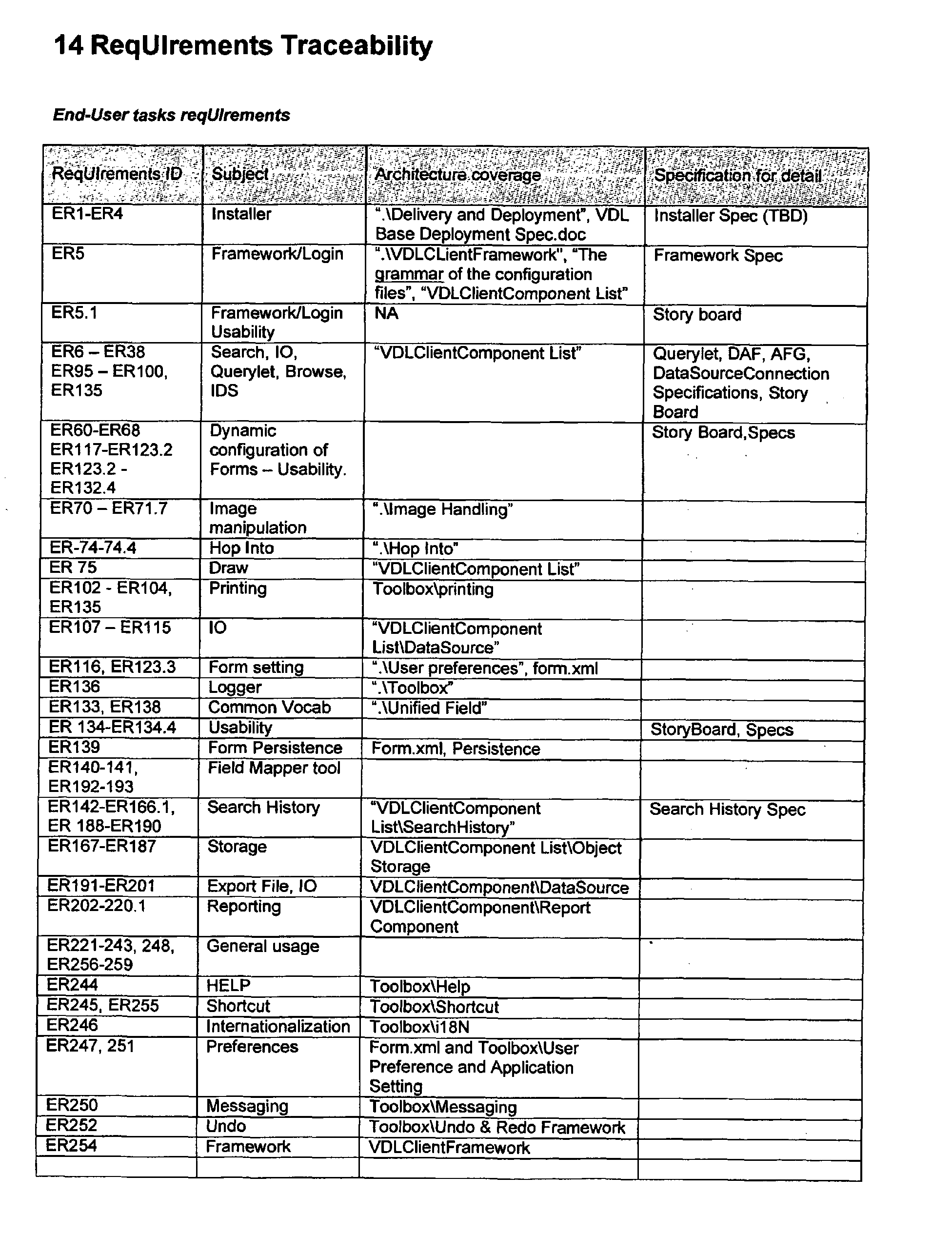

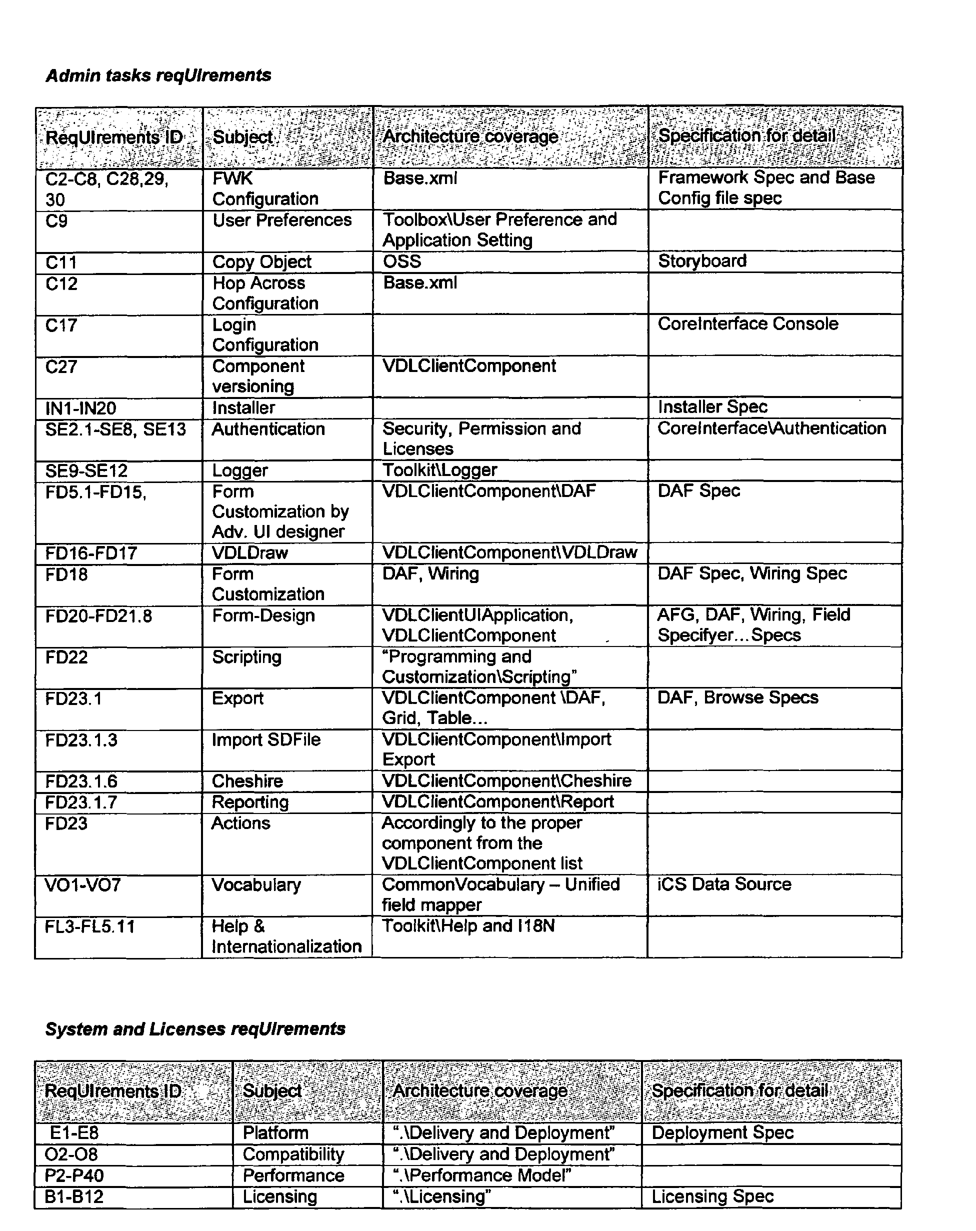

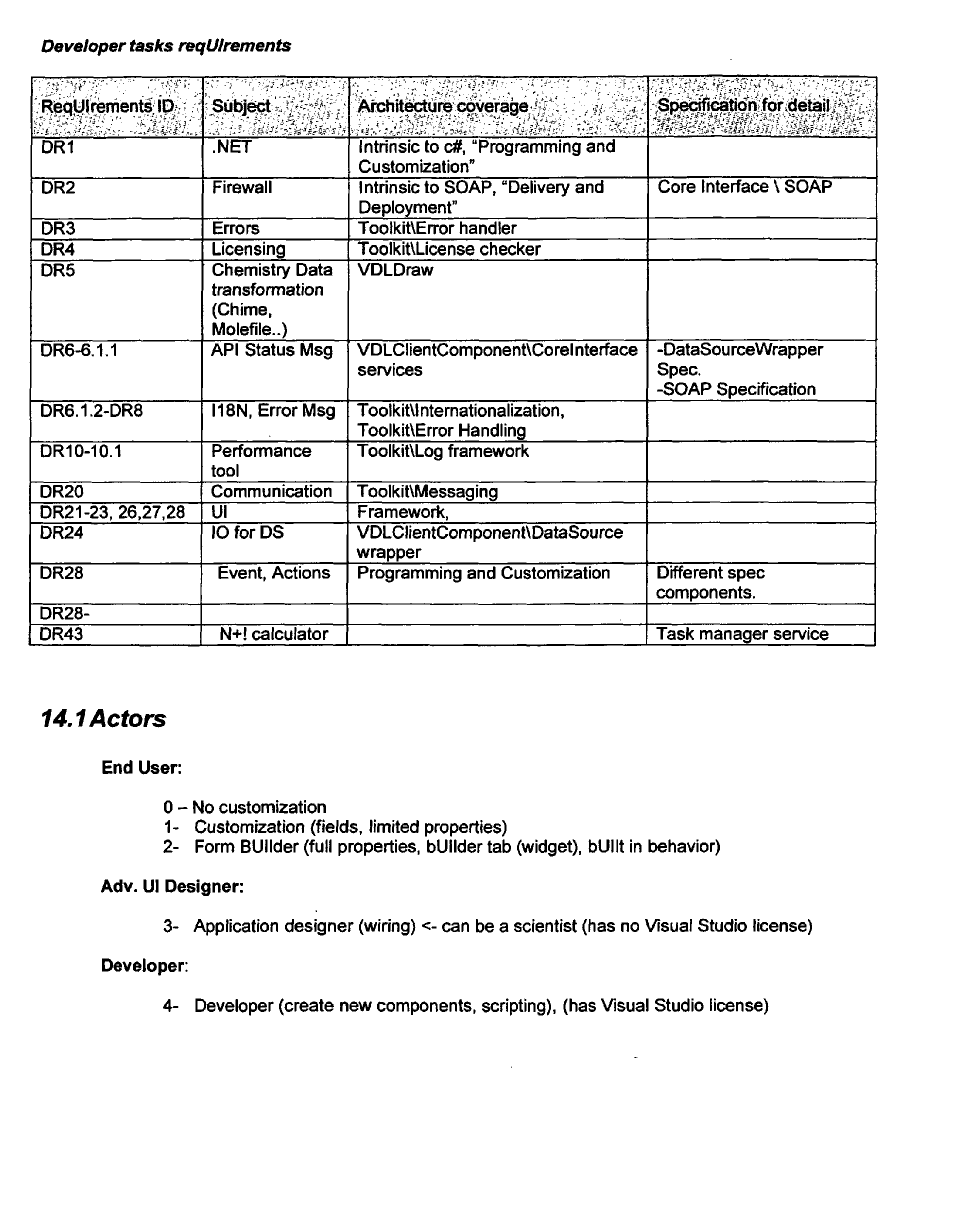

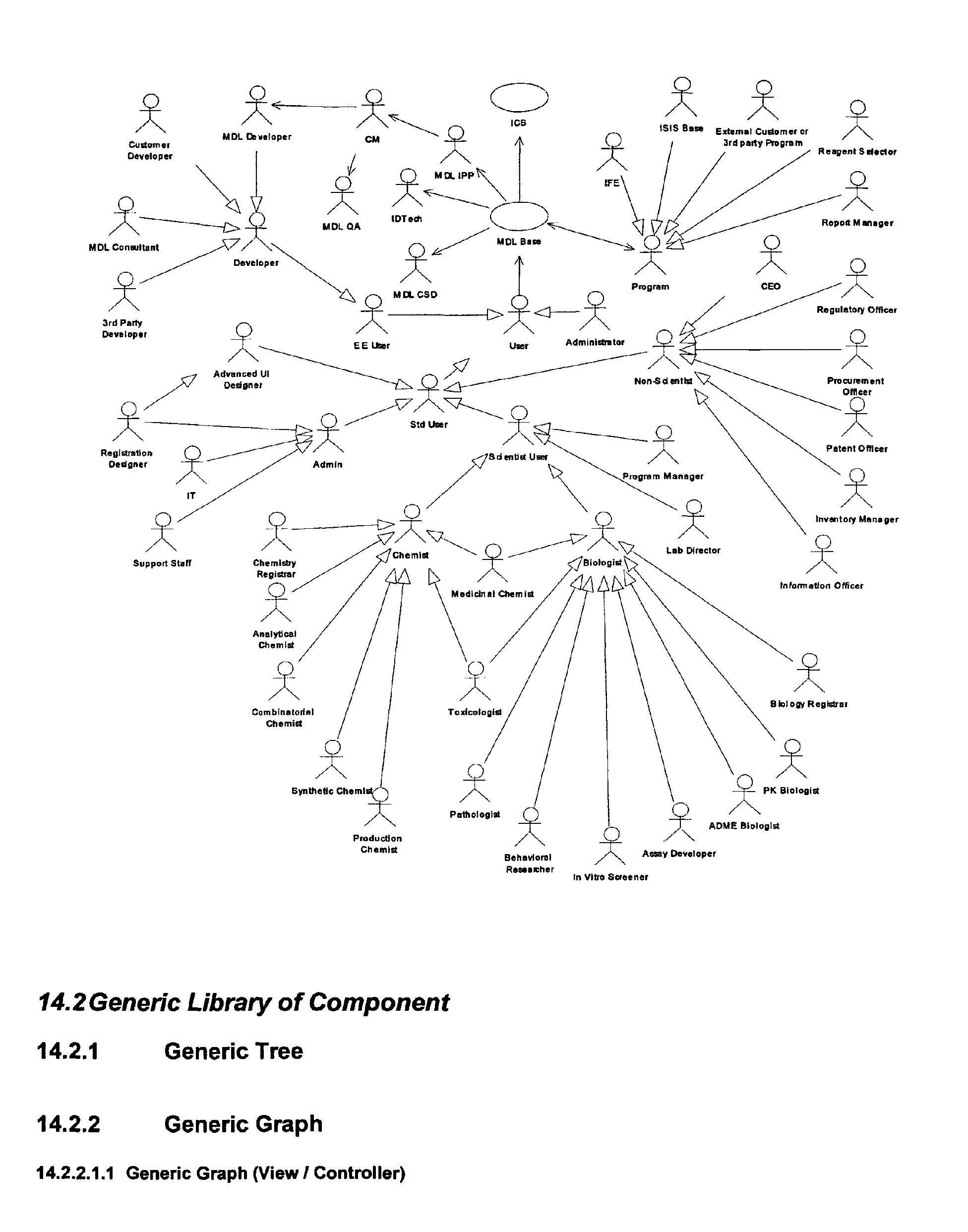

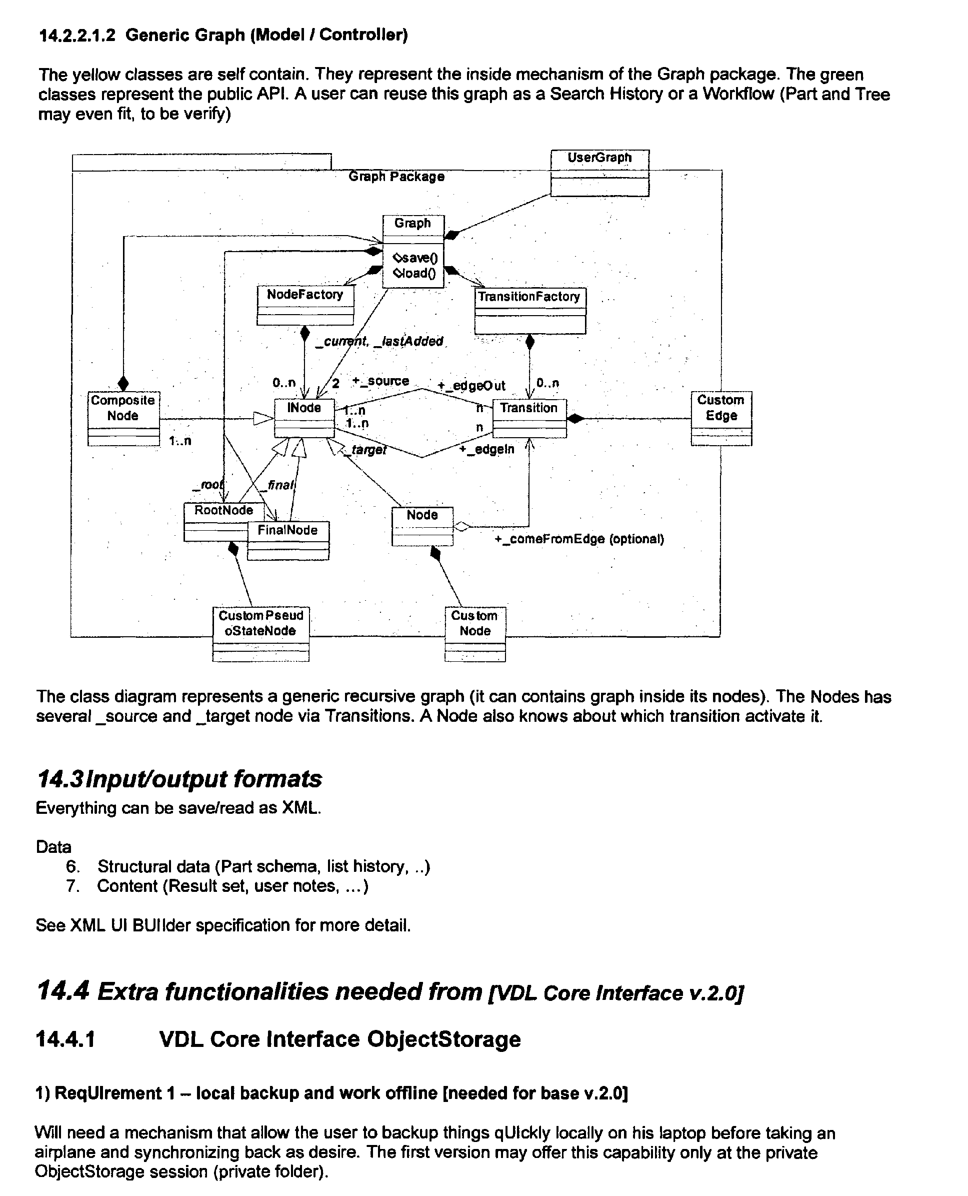

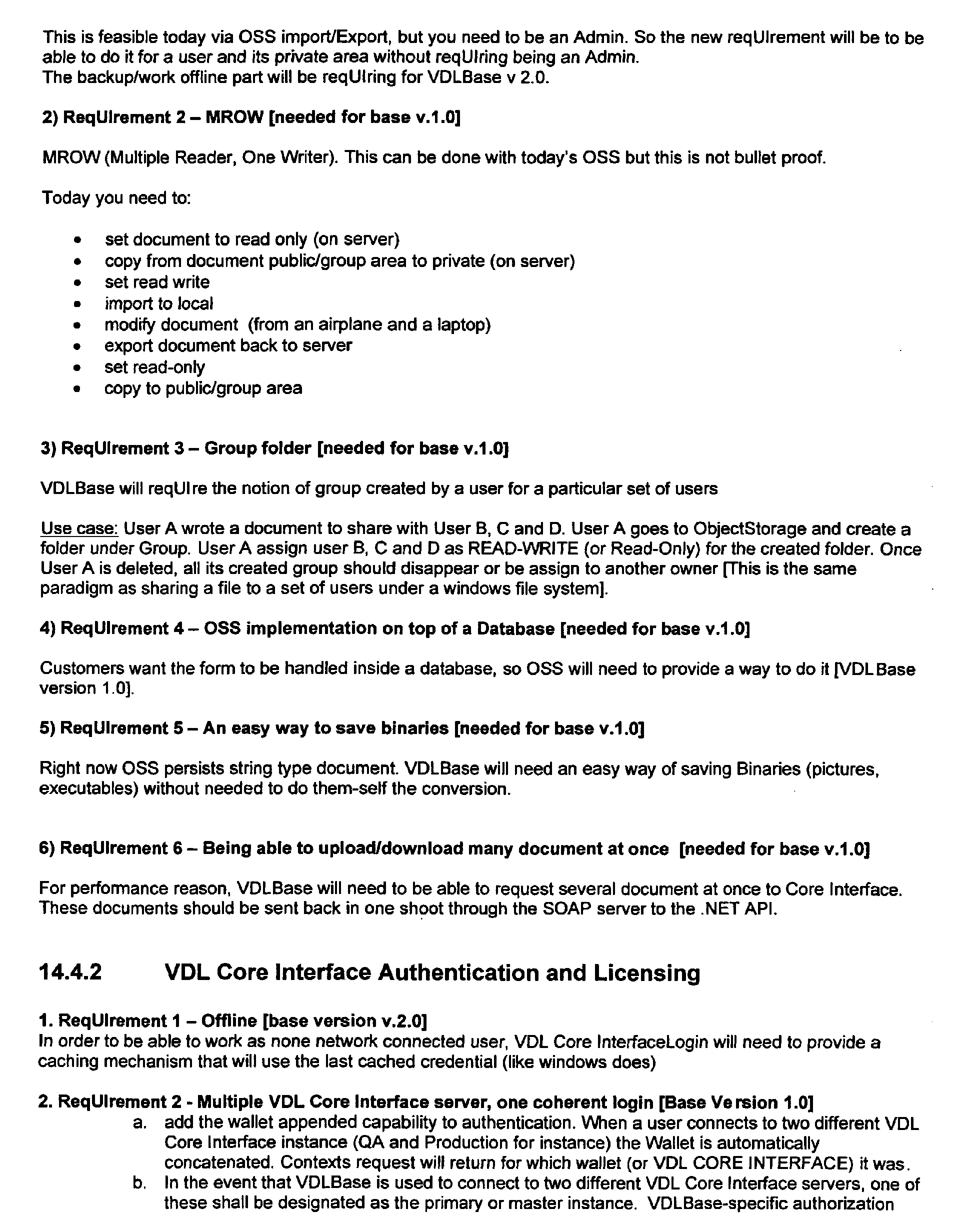

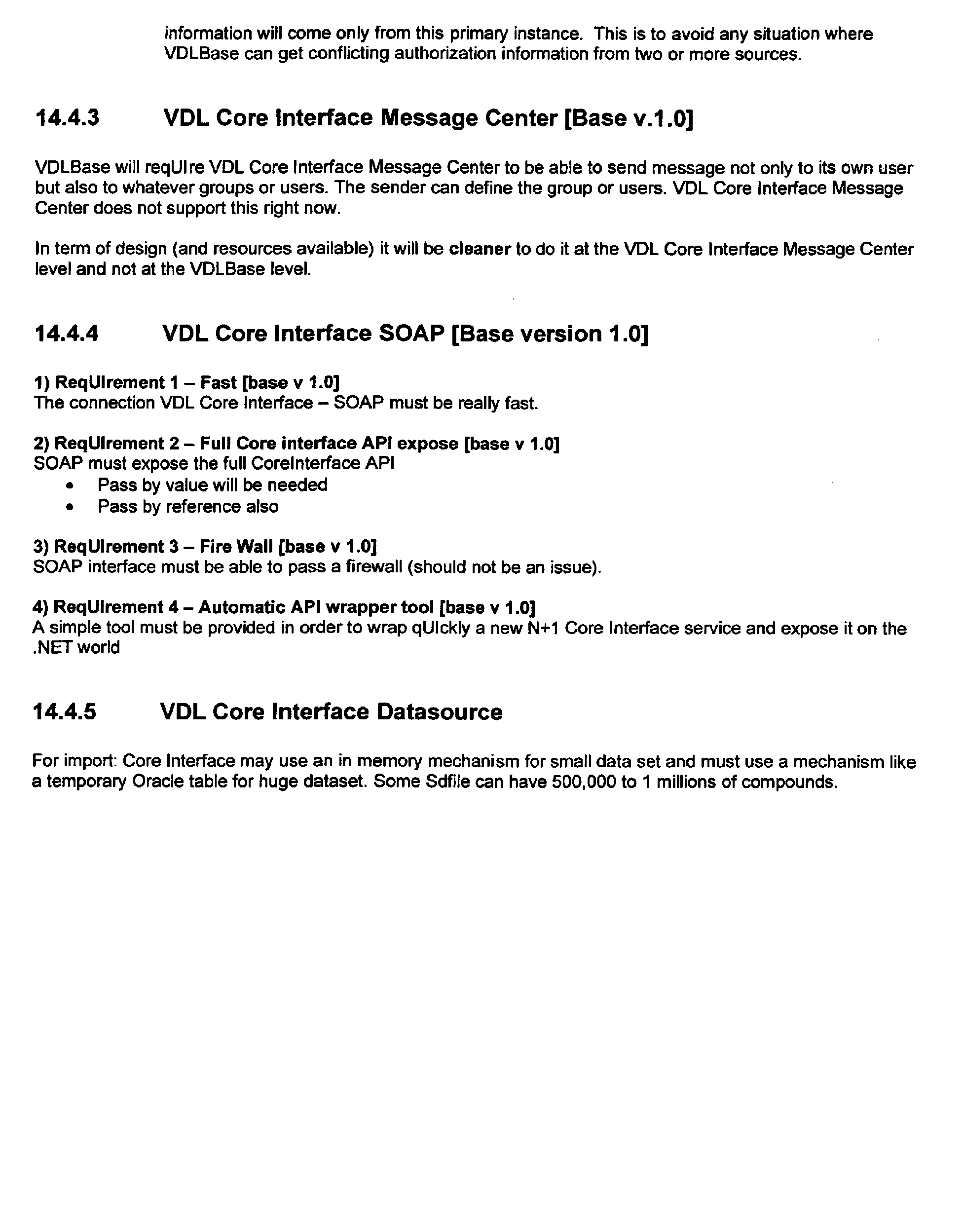

## Claims

1. A computer system comprising:
a display component operable to display a visual application design;
a first visual programming component with an exposed first programming attribute;
a second visual programming component with an exposed second programming attribute; and
a wiring component operable to automatically generate a first visual connector between first visual programming component and said second visual programming component based on one or more relationships between said first visual programming component and said second visual programming component.

2. The system of claim 1, wherein said first visual connector is a wire.

3. The system of claim 1, wherein said first visual connector is generated further based on user input data.

4. The system of claim 1, wherein said first visual connector is generated between said exposed first programming attribute and said exposed second programming attribute.

5. The system of claim 1, wherein said first visual connector is generated in response to data indicating that a user has dragged said first visual programming component onto said second visual programming component.

6. The system of claim 5, wherein said first visual connector connects said exposed first programming attribute and said exposed second programming attribute.

7. The system of claim 3, wherein said first visual connector is generated in response to data indicating that a user has dragged a mouse pointer from said first visual programming component to said second visual programming component.

8. The system of claim 7, wherein said first visual connector connects the exposed first programming attribute and the exposed second programming attribute.

9. The system of claim 3, wherein said second visual programming component has been added to the visual application design in response to user input.

10. The system of claim 1, wherein the exposed first programming attribute comprises a first component pin.

11. The system of claim 10, wherein said first component pin is displayed to a user.

12. The system of claim 10, wherein said first component pin is not displayed to a user.

13. The system of claim 1, wherein said exposed second programming attribute comprises a second component pin.

14. The system of claim 13, wherein said second component pin is displayed to a user.

15. The system of claim 13, wherein said second component pin is not displayed to a user.

16. The system of claim 1, wherein at least one of said first visual programming component and said second visual programming component is a standard component.

17. The system of claim 16, wherein said standard component is not a member of a particular class.

18. The system of claim 16, wherein said standard component is added during runtime.

19. The system of claim 1, wherein at least one of: (a) said first visual programming component, (b) said second visual programming component, and (c) said first visual connector is added during runtime.

20. The system of claim 1, further comprising a second visual connector, wherein said second visual connector connects a first user interface to at least one of the first and second visual programming components.

21. The system of claim 1, wherein each of the exposed first and exposed second programming attributes are members of an existing platform.

22. The system of claim 21, wherein the platform is .NET.

23. The system of claim 1, wherein the first visual connector is at least one of a data connector and an event connector.

24. The system of claim 1, wherein the visual application design is at least one of: (a) an application, (b) a form, and (c) a workflow comprising a plurality of forms.

25. The system of claim 1, wherein at least one of said first visual programming component and said second visual programming component is added by dragging and dropping a corresponding component from a component library onto the visual application design.

26. The system of claim 1, wherein said first programming attribute comprises at least one of: a class, system, element, control, function, and object.

27. The system of claim 1, wherein said second programming attribute comprises at least one of a class, system, element, control, function, and object.

28. The system of claim 1, further comprising a part manager component.

29. The system of claim 28, wherein said part manager component is operable to make the visual application design conform to users' expectations.

30. The system of claim 29, wherein said visual application design is made to conform to users' expectations based on heuristics.

31. The system of claim 29, wherein said part manager component is operable to allow event activations after a threshold of data has arrived at a component.

32. The system of claim 29, wherein said part manager component is operable to sequentially order events.

33. The system of claim 28, wherein said part manager is operable to manage transfer of data between components.

34. The system of claim 33, wherein said transfer comprises depth-first propagation.

35. The system of claim 33, wherein said transfer comprises breadth-first propagation.

36. The system of claim 1, wherein at least one of the first visual and second visual programming components is a bottle.

37. The system of claim 36, wherein said bottle stores a data value and provides access to said data value.

38. A system for modifying a visual application design comprising:
a first visual programming component with an exposed first programming element, wherein said first visual programming component corresponds to a member of a first class;
a second visual programming component linked to said first visual programming component, wherein said second visual programming component corresponds to a member of a second class related to said first class;
a modifying component operable to modify said first visual programming component in response to data indicating that said second visual programming component has been modified.

39. The system of claim 38, wherein, said first visual programming component is modified in response to data indicating that said second visual programming component has been modified only while the first visual programming component is in scope.

40. The system of claim 39, wherein said first visual programming component returns to an unmodified state when the first visual programming component is no longer in scope.

41. The system of claim 38, wherein said second visual programming component has been added to said virtual application design in response to data indicating that a user has dragged and dropped said second visual programming component into said visual application design.

42. The system of claim 38, wherein said first visual programming component is modified in response to data indicating a user has dragged and dropped components from a component library onto said second visual programming component.

43. The system of claim 38, wherein said modifying component is operable to modify said first visual programming component during runtime in response to data indicating that said second visual programming component.

44. The system of claim 38, wherein said visual application design is one of: (a) an application, (b) a form, and (c) a workflow comprising a plurality of forms.

45. A system for displaying database queries and results comprising:
a display component operable to display a search history tree comprising one or more nodes and one or more arrows; and
a query component operable to add a first arrow pointing to a first node to said search history tree, said first arrow representing a first search query and said first node representing results of said first search query,
wherein said first arrow and said first node are added to said search history tree in response to data indicating that a user has dragged a search element onto a second node representing results of a second search query, and
wherein said results of said first search query are based in part on (a) said search element and (b) said results of said second search query.

46. The system of claim 45, wherein the data indicating that a user has dragged a search element onto a second node comprises data indicating that a user has dragged a third node representing results of a third search query onto said second node.

47. The system of claim 46, wherein said results of said second search query and said results of said third search query are logically combined to produce said results of said first search query.

48. The system of claim 47, wherein said results of said second search query and said results of said third search query are logically combined based on data indicating that a user has selected at least one of: a logical OR, a logical AND, a logical NOT, a logical NOR, and a logical NAND.

49. The system of claim 45, wherein the data indicating that a user has dragged a search element onto a second node comprises data indicating that a user has dragged a second arrow representing a second search query onto said second node.

50. The system of claim 49, wherein said results of said second search query are modified based in part on the second search query to produce said results of said first search query.

51. The system of claim 45, wherein said search element comes from a library of search elements.

52. The system of claim 51, wherein the search element is at least one of: a filter, a query, and a search result.

53. A computer system comprising:
means for displaying a visual application design;
means for displaying a first visual programming component with an exposed first programming attribute;
means for displaying a second visual programming component with an exposed second programming attribute; and
means for automatically generating a first visual connector between first visual programming component and said second visual programming component based on one or more relationships between said first visual programming component and said second visual programming component.

54. A computer system for modifying a visual application design comprising:
means for displaying a first visual programming component with an exposed first programming element, wherein said first visual programming component corresponds to a member of a first class;
means for displaying a second visual programming component linked to said first visual programming component, wherein said second visual programming component corresponds to a member of a second class related to said first class;
means for modifying said first visual programming component in response to data indicating that said second visual programming component has been modified.

55. A computer system for displaying database queries and results comprising:
means for displaying a search history tree comprising one or more nodes and one or more arrows; and
means for adding a first arrow pointing to a first node to said search history tree, said first arrow representing a first search query and said first node representing results of said first search query,
wherein said first arrow and said first node are added to said search history tree in response to data indicating that a user has dragged a search element onto a second node representing results of a second search query, and
wherein said results of said first search query are based in part on said search element and said results of said second search query.
